# EUROPEAN PATENT APPLICATION

(11) **EP 3 686 983 A1**
(43) Date of publication of application: **29.07.2020**
(21) Application number: 18859054.1
(22) Date of filing: 21.09.2018
(51) Int. Cl.: H01M 10/0567, H01G 11/06, H01G 11/46, H01G 11/62, H01G 11/64, H01M 6/16, H01M 10/0568, H01M 10/0569

(54) **NONAQUEOUS ELECTROLYTE, NONAQUEOUS ELECTROLYTE SECONDARY BATTERY, AND ENERGY DEVICE**

(30) Priority: 22.09.2017 JP 2017182923; 22.09.2017 JP 2017182936; 22.09.2017 JP 2017182962
(71) Applicant: Mitsubishi Chemical Corporation, Tokyo 100-8251 (JP)
(72) Inventor: WATARAI, Atsushi, Tokyo 100-8251 (JP); NAKAZAWA, Eiji, Tokyo 100-8251 (JP); SAWA, Shuhei, Tokyo 100-8251 (JP)
(74) Representative: Hoffmann Eitle
(86) International application number: PCT/JP2018/035150
(87) International publication number: WO 2019/059365

(57) **Abstract**

The present invention aims at providing a nonaqueous electrolyte secondary battery that exhibits limited swelling during repeated charging and discharging. Provided is a nonaqueous electrolyte solution for use in a nonaqueous electrolyte secondary battery, the nonaqueous electrolyte secondary battery including: a positive electrode capable of absorbing and releasing metal ions; a negative electrode which is capable of absorbing and releasing metal ions and includes a negative electrode active material that contains a metal compound-based material containing a metal alloyable with Li, and a graphite; and a nonaqueous electrolyte solution containing a nonaqueous solvent and an electrolyte dissolved in the nonaqueous solvent, wherein the nonaqueous electrolyte solution contains at least one compound represented by the following Formula (A) or (B) (wherein, R¹ to R³ each independently represent an alkyl group having 1 to 10 carbon atoms which optionally has a substituent, or an aryl group having 6 to 18 carbon atoms which optionally has a substituent; X represents hydrogen, or an alkenyl or alkynyl group having 1 to 10 carbon atoms; R⁴ to R⁶ each represent a hydrocarbon group having 1 to 20 carbon atoms which optionally has a substituent; Y represents S, NH, or NR⁷; and R⁷ represents a hydrocarbon group having 1 to 20 carbon atoms):

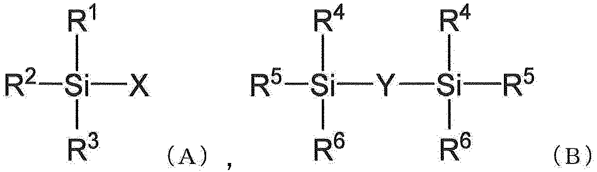

## Description

### TECHNICAL FIELD

The present invention relates to a nonaqueous electrolyte solution, a nonaqueous electrolyte secondary battery, and an energy device.

### BACKGROUND ART

Energy devices such as lithium primary batteries, lithium secondary batteries, electric double-layer capacitors, and lithium ion capacitors have been put into practical use in a wide range of applications including power sources for so-called consumer small hardware such as portable phones (e.g., smartphones) and laptop computers, as well as vehicle-mounted power sources for driving electric vehicles and the like. However, in recent years, there is an increasing demand for performance improvement in these energy devices.

Particularly, numerous means for improving the properties of a nonaqueous electrolyte secondary battery have been examined in the fields of active materials for positive and negative electrodes, as well as additives of nonaqueous electrolyte solutions.

For example, Patent Document 1 discloses a study of improving the cycle capacity retention rate by incorporating a specific silicon compound having at least two unsaturated bonds along with a fluorine-containing specific salt into a nonaqueous electrolyte solution.

Patent Document 2 discloses a study of improving the cycle characteristics and suppressing the gas generation during high-temperature storage by using a positive electrode that contains a transition metal oxide having two or more elements including at least one element selected from Co and Ni and at least one element selected from Al and Mg in combination with a nonaqueous electrolyte solution that contains a specific silicon compound having an unsaturated bond.

Patent Document 3 discloses a study of enhancing the low-temperature characteristics and improving the internal resistance increase ratio by incorporating a specific silicon compound into a nonaqueous electrolyte solution.

Patent Document 4 discloses a study of improving the cycle characteristics by using a negative electrode containing a silicon active material in combination with a nonaqueous electrolyte solution containing a specific silane compound.

Patent Document 5 discloses a study of reducing the amount of free acids in a nonaqueous electrolyte solution by incorporating a specific silane compound into the nonaqueous electrolyte solution.

Further, for example, in lithium nonaqueous electrolyte secondary batteries, nonaqueous electrolyte solutions that contain a nonaqueous solvent, such as a cyclic carbonate (e.g., ethylene carbonate or propylene carbonate), an open-chain carbonate (e.g., dimethyl carbonate, diethyl carbonate, or ethyl methyl carbonate), a cyclic carboxylic acid ester (e.g., *γ*-butyrolactone or *γ*-valerolactone), or an open-chain carboxylic acid ester (e.g., methyl acetate, ethyl acetate, or methyl propionate), and a solute (electrolyte), such as LiPF₆ or LiBF₄, are used.

In energy devices in which a nonaqueous electrolyte solution is used, such as the above-described nonaqueous electrolyte secondary batteries, since the reactivity varies depending on the composition of the nonaqueous electrolyte solution, the characteristics are greatly variable depending on the nonaqueous electrolyte solution. In order to improve the battery characteristics of energy devices, such as load characteristics, cycle characteristics and storage characteristics, and to enhance the safety of batteries in an overcharged state, various studies have been conducted on nonaqueous solvents and electrolytes that are contained in nonaqueous electrolyte solutions.

For example, Patent Document 6 discloses a technology of using an electrolyte solution containing lithium difluorophosphate to suppress decomposition of a nonaqueous electrolyte solution and improve the post-storage-test capacity retention rate.

Patent Document 7 discloses a technology of using lithium bis(fluorosulfonyl)amide for improvement of output performance.

Patent Document 8 reports that the use of lithium fluorosulfate as an electrolyte suppresses decomposition reaction of an electrolyte solution and improves the cycle characteristics.

Patent Document 9 describes that corrosion of electrochemical device members, particularly aluminum laminates, can be suppressed by using a specific salt as an additive.

### CITATION LIST

### PATENT DOCUMENTS

[Patent Document 1] Japanese Unexamined Patent Application Publication No. 2016-157679
[Patent Document 2] Japanese Unexamined Patent Application Publication No. 2009-245922
[Patent Document 3] Japanese Unexamined Patent Application Publication No. 2002-134169
[Patent Document 4] Japanese Unexamined Patent Application Publication No. 2007-123098
[Patent Document 5] Japanese Unexamined Patent Application Publication No. 2001-167792
[Patent Document 6] Japanese Unexamined Patent Application Publication No. H11-67270
[Patent Document 7] Japanese Unexamined Patent Application Publication No. 2009-129797
[Patent Document 8] Japanese Unexamined Patent Application Publication No. H7-296849
[Patent Document 9] Japanese Unexamined Patent Application Publication No. 2003-331917

### SUMMARY OF INVENTION

### Technical Problem

In recent years, improvement in the capacity has been accelerated for nonaqueous electrolyte secondary batteries used in, for example, power sources to be mounted on electric vehicles and power sources for mobile phones such as smartphones, and it has been examined to incorporate a silicon-based active material, which has a higher capacity per unit active material weight than carbon, into a negative electrode. However, in the use of a combination of carbon and a silicon compound as a negative electrode active material, there is a problem that the thickness of the negative electrode is increased by repeated charging and discharging and the battery is consequently swollen. Therefore, it is important to suppress such swelling of the negative electrode caused by charging and discharging.

However, according to the studies conducted by the present inventors, the use of the electrolyte solution disclosed in Patent Document 1 that contains a specific silicon compound having at least two unsaturated bonds has a problem in terms of suppressing an increase in the battery thickness during charging and discharging that is caused by swelling of a negative electrode which is capable of absorbing and releasing metal ions and contains a metal alloyable with Li and a graphite.

In Patent Documents 2 to 5, it was examined to improve the cycle characteristics and suppress gas generation during high-temperature storage by adding an unsaturated bond-containing specific silicon compound and/or a specific silane compound to a nonaqueous electrolyte solution. However, these Patent Documents offers no disclosure at all with regard to suppression of an increase in the battery thickness during charging and discharging that is caused by swelling of a negative electrode which is capable of absorbing and releasing metal ions and contains a metal alloyable with Li and a graphite; therefore, the problems relating to electrode swelling still need to be addressed.

A first object of the present invention is to provide a nonaqueous electrolyte solution that can solve the above-described problems.

Further, in recent years, improvement in the capacity has been accelerated for nonaqueous electrolyte secondary batteries used in, for example, power sources to be mounted on electric vehicles and power sources for mobile phones such as smartphones, and it has been examined to incorporate a transition metal oxide having a high ratio of a transition metal such as Ni into a positive electrode. Since a transition metal oxide having a high ratio of a transition metal such as Ni contains a large amount of alkaline impurities, a gas such as CO₂ is generated during high-temperature storage due to reaction between the alkaline impurities and a cyclic or open-chain carbonate contained as a component of an electrolyte solution. This consequently presents a problem of battery swelling. Therefore, in order to suppress the gas generation, it is believed important to efficiently inactivate the alkaline impurities.

However, according to the investigation of present inventors, in Patent Documents 1 to 3, an effect of combining a specific silicon compound and a transition metal oxide having a high ratio of a transition metal such as Ni is not clarified at all, and there is a problem in terms of suppressing gas generation during high-temperature storage.

In Patent Document 4, effects of combining an unsaturated bond-containing specific silicon compound and a transition metal oxide represented by lithium cobaltate are disclosed; however, an effect of combining the specific silicon compound and a transition metal oxide having a high ratio of a transition metal such as Ni is not clarified at all, and there is still a problem in terms of suppressing gas generation during high-temperature storage.

A second object of the present invention is to provide a nonaqueous electrolyte secondary battery that can solve these problems.

Moreover, there is an increasing demand for improvement in the properties of energy devices in recent years, and energy devices desirably have various performances at a high level; however, such an energy device has yet to be realized, including the technologies disclosed in the above-described Patent Documents. Particularly, there is a problem that it is difficult to allow an energy device to keep a low impedance after being left to stand at 60°C, which is considered as the upper limit temperature in practical use.

The present invention was made in view of the above-described problems. That is, a third object of the present invention is to provide an energy device that shows a low impedance after being left to stand at a high temperature.

### Solution to Problem

The present inventors intensively studied to achieve the above-described first object and consequently discovered that swelling of a negative electrode during charging and discharging, which negative electrode is capable of absorbing and releasing metal ions and includes a negative electrode active material that contains a metal alloyable with Li and a graphite, can be suppressed by using a nonaqueous electrolyte solution containing a specific silicon compound, thereby arriving at the present invention.

That is, a first embodiment of the present invention provides, for example, the following specific modes of [A1] to [A12].
[A1] A nonaqueous electrolyte solution for use in a nonaqueous electrolyte secondary battery including a positive electrode capable of absorbing and releasing metal ions; a negative electrode which is capable of absorbing and releasing metal ions and includes a negative electrode active material that contains a metal compound-based material containing a metal alloyable with Li, and a graphite; and a nonaqueous electrolyte solution containing a nonaqueous solvent and an electrolyte dissolved in the nonaqueous solvent,
   wherein the nonaqueous electrolyte solution contains at least one compound represented by the following Formula (A) or (B): 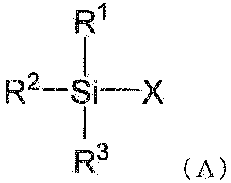 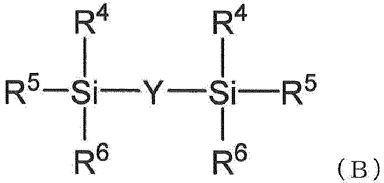 wherein, in Formula (A), R¹ to R³ each independently represent an alkyl group having 1 to 10 carbon atoms which optionally has a substituent, or an aryl group having 6 to 18 carbon atoms which optionally has a substituent, and X represents hydrogen, or an alkenyl or alkynyl group having 1 to 10 carbon atoms; and
   in Formula (B), R⁴ to R⁶ each independently represent a hydrocarbon group having 1 to 20 carbon atoms which optionally has a substituent, Y represents S, NH or NR⁷, and R⁷ represents a hydrocarbon group having 1 to 20 carbon atoms.
[A2] The nonaqueous electrolyte solution according to [A1], wherein the metal compound-based material containing a metal alloyable with Li contains at least one metal selected from the group consisting of Si, Sn, As, Sb, Al, Zn, and W.
[A3] The nonaqueous electrolyte solution according to [A1] or [A2], wherein the metal compound-based material containing a metal alloyable with Li is Si or Si metal oxide.
[A4] The nonaqueous electrolyte solution according to any one of [A1] to [A3], wherein the negative electrode active material that contains a metal compound-based material containing a metal alloyable with Li, and a graphite is a composite and/or a mixture of the metal compound-based material and the graphite.
[A5] The nonaqueous electrolyte solution according to any one of [A1] to [A4], wherein the content of the metal compound-based material containing a metal alloyable with Li is 0.1 to 25% by mass with respect to a total amount of the negative electrode active material that contains the metal compound-based material containing a metal alloyable with Li, and a graphite.
[A6] The nonaqueous electrolyte solution according to any one of [A1] to [A5], wherein
   in Formula (A), R¹ to R³ are each independently a methyl group, an ethyl group or a tert-butyl group, which optionally has a substituent, and X is hydrogen, a vinyl group or an allyl group, and
   in Formula (B), R⁴ to R⁶ are each a hydrocarbon group having 1 to 20 carbon atoms which optionally has a substituent, and Y is S.
[A7] The nonaqueous electrolyte solution according to any one of [A1] to [A6], wherein the nonaqueous electrolyte solution further contains at least one compound selected from the group consisting of a difluorophosphate, a fluorosulfonate, and a salt having a bis-fluorosulfonylimide structure.
[A8] The nonaqueous electrolyte solution according to [A7], wherein the content of the at least one compound selected from the group consisting of a difluorophosphate, a fluorosulfonate, and a salt having a bis-fluorosulfonylimide structure is 0.001% by mass to 10% by mass with respect to a total amount of the nonaqueous electrolyte solution.
[A9] The nonaqueous electrolyte solution according to any one of [A1] to [A8], wherein the positive electrode contains a transition metal oxide which is capable of absorbing and releasing metal ions and contains at least Ni and Co, and in which Ni and Co constitute not less than 50% by mole of transition metals.
[A10] The nonaqueous electrolyte solution according to [A9], wherein the transition metal oxide is represented by the following composition formula (5):

   Liₐ₁Ni_{b1}Co_{c1}M_{d1}O₂ (5)

   wherein, a1, b1, c1 and d1 represent numerical values of 0.9 ≤ a1 ≤ 1.1, 0.3 ≤ b1 ≤ 0.9, 0.1 ≤ c1 ≤ 0.5 and 0.0 ≤ d1 ≤ 0.5, satisfying 0.5 ≤ b1 + c1 and b1 + c1 + d1 = 1; and M represents at least one element selected from the group consisting of Mn, Al, Mg, Zr, Fe, Ti, and Er.
[A11] The nonaqueous electrolyte solution according to [A9] or [A10], wherein the transition metal oxide is represented by the following composition formula (6):

   Liₐ₂Ni_{b2}Co_{c2}M_{d2}O₂ (6)

   wherein, a2, b2, c2 and d2 represent numerical values of 0.9 ≤ a2 ≤ 1.1, 0.5 ≤ b2 ≤ 0.9, 0.1 ≤ c2 ≤ 0.2 and 0.0 ≤ d2 ≤ 0.3, satisfying c2 ≤ b2, 0.7 ≤ b2 + c2, and b2 + c2 + d2 = 1; and M represents at least one element selected from the group consisting of Mn, Al, Mg, Zr, Fe, Ti, and Er.
[A12] A nonaqueous electrolyte secondary battery including, at least:
   a positive electrode capable of absorbing and releasing metal ions;
   a negative electrode which is capable of absorbing and releasing metal ions and includes a negative electrode active material that contains a metal compound-based material containing a metal alloyable with Li, and a graphite; and
   a nonaqueous electrolyte solution containing a nonaqueous solvent and an electrolyte dissolved in the nonaqueous solvent,
   wherein the nonaqueous electrolyte solution is the nonaqueous electrolyte solution according to any one of [A1] to [A11].

The present inventors intensively studied to achieve the above-described second object and consequently discovered that gas generation during high-temperature storage of a specific transition metal oxide containing Ni as a transition metal can be suppressed by using a nonaqueous electrolyte solution containing a specific silicon compound, thereby arriving at the present invention.

That is, a second embodiment of the present invention provides, for example, the following specific modes of [B1] to [B7].
[B1] A nonaqueous electrolyte secondary battery including: a positive electrode; a negative electrode; and a nonaqueous electrolyte solution,
   wherein
   the positive electrode contains a metal oxide represented by the following composition formula (14):

   Liₐ₁₀₁Ni_{b101}Co_{c101}M_{d101}O₂ (14)

   wherein, a101, b101, c101 and d101 represent numerical values of 0.90 ≤ a101 ≤ 1.10, 0.50 ≤ b101 ≤ 0.98, 0.01 ≤ c101 < 0.50 and 0.01 ≤ d101 < 0.50, satisfying b101 + c101 + d101 = 1; and M represents at least one element selected from the group consisting of Mn, Al, Mg, Zr, Fe, Ti, and Er, and
   the nonaqueous electrolyte solution contains a compound represented by the following Formula (C): 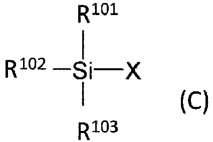 wherein, R¹⁰¹ to R¹⁰³ each independently represent an alkyl group having 1 to 10 carbon atoms which optionally has a substituent, or an aryl group having 6 to 18 carbon atoms which optionally has a substituent; and X represents hydrogen, an alkenyl group having 2 to 10 carbon atoms, or an alkynyl group having 2 to 10 carbon atoms.
[B2] The nonaqueous electrolyte secondary battery according to [B1], wherein the positive electrode contains a metal oxide represented by the following composition formula (15):

   Liₐ₁₀₂Ni_{b102}Co_{c102}M_{d102}O₂ (15)

   wherein, a102, b102, c102 and d102 represent numerical values of 0.90 ≤ a102 ≤ 1.10, 0.50 ≤ b102 ≤ 0.90, 0.05 ≤ c102 ≤ 0.30 and 0.05 ≤ d102 ≤ 0.30, satisfying b102 + c102 + d102 = 1; and M represents at least one element selected from the group consisting of Mn, Al, Mg, Zr, Fe, Ti, and Er.
[B3] The nonaqueous electrolyte secondary battery according to [B1] or [B2], wherein the content of the compound represented by Formula (C) is 0.001% by mass to 10% by mass with respect to a total amount of the nonaqueous electrolyte solution.
[B4] The nonaqueous electrolyte secondary battery according to any one of [B1] to [B3], wherein X in Formula (C) is a vinyl group, an allyl group, or a methallyl group.
[B5] The nonaqueous electrolyte secondary battery according to [B4], wherein X in Formula (C) is a vinyl group.
[B6] The nonaqueous electrolyte secondary battery according to any one of [B1] to [B5], wherein the nonaqueous electrolyte solution further contains at least one compound selected from the group consisting of a difluorophosphate, a fluorosulfonate, and a salt having a bis-fluorosulfonylimide structure.
[B7] The nonaqueous electrolyte secondary battery according to [B6], wherein the content of all compounds belonging to the group consisting of the difluorophosphate, the fluorosulfonate, and the salt having a bis-fluorosulfonylimide structure is 0.001% by mass to 10% by mass with respect to a total amount of the nonaqueous electrolyte solution.

Moreover, the present inventors intensively studied to achieve the above-described third object and consequently discovered that the above-described problems can be solved by incorporating both the below-described specific compound and specific salt into a nonaqueous electrolyte solution at the same time, thereby completing the present invention.

That is, a third embodiment of the present invention provides, for example, the following specific modes of [C1] to [C8].
[C1] A nonaqueous electrolyte solution containing the following (A) and (B):
   (A) a compound represented by the following Formula (21), and
   (B) a salt that contains an anion having at least one bond selected from an F-P-O bond, an F-S-O bond, and an F-S=O bond: 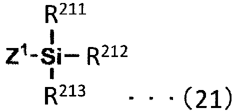 wherein, R²¹¹, R²¹² and R²¹³ each independently represent an alkyl group having not more than 10 carbon atoms which optionally has a substituent; and Z¹ represents hydrogen or an alkenyl group having not more than 5 carbon atoms.
[C2] The nonaqueous electrolyte solution according to [C1], wherein the anion is one of the following (i) to (vi): 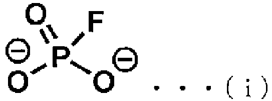 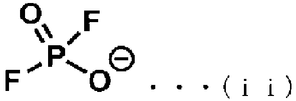 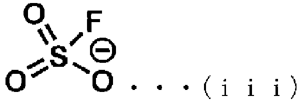 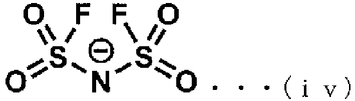 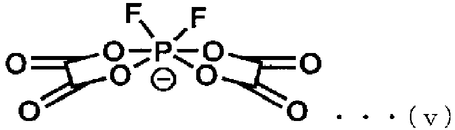 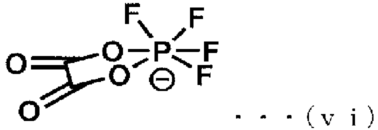
[C3] The nonaqueous electrolyte solution according to [C1] or [C2], wherein the compound represented by Formula (21) is a compound represented by the following Formula (22): 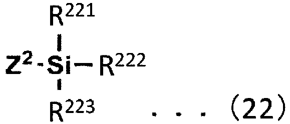 wherein, R²²¹, R²²² and R²²³ each independently represent an alkyl group having not more than 6 carbon atoms which optionally has a substituent; and Z² represents hydrogen, a vinyl group, or an allyl group.
[C4] The nonaqueous electrolyte solution according to any one of [C1] to [C3], wherein the content of the (A) is 0.001% by mass to 5% by mass with respect to a total amount of the nonaqueous electrolyte solution.
[C5] The nonaqueous electrolyte solution according to any one of [C1] to [C4], wherein the content of the (B) is 0.001% by mass to 5% by mass with respect to a total amount of the nonaqueous electrolyte solution.
[C6] The nonaqueous electrolyte solution according to any one of [C1] to [C5], wherein an amount of substance of the (B) is higher than an amount of substance of the (A).
[C7] The nonaqueous electrolyte solution according to any one of [C1] to [C6], further containing a fluorine atom-containing cyclic carbonate, a carbon-carbon unsaturated bond-containing cyclic carbonate, and a cyclic sulfonate.
[C8] An energy device, including the nonaqueous electrolyte solution according to any one of [C1] to [C7].

### Advantageous Effects of Invention

According to the first embodiment of the present invention, a nonaqueous electrolyte secondary battery that shows excellent suppression of swelling caused by charging and discharging can be obtained.

Particularly, by using a negative electrode, which is capable of absorbing and releasing metal ions and includes a negative electrode active material that contains a metal compound-based material containing a metal alloyable with Li and a graphite, in combination with a nonaqueous electrolyte solution containing a specific silicon compound, a nonaqueous electrolyte secondary battery that shows limited swelling during repeated charging and discharging can be obtained.

According to the second embodiment of the present invention, a nonaqueous electrolyte secondary battery that shows excellent suppression of gas generation during high-temperature storage can be obtained.

Particularly, by using a positive electrode composed of a specific transition metal oxide containing Ni as a transition metal in combination with a nonaqueous electrolyte solution containing a specific silicon compound, a nonaqueous electrolyte secondary battery that shows excellent suppression of gas generation during high-temperature storage can be obtained.

According to the third embodiment of the present invention, an energy device that shows a low impedance after being left to stand at a high temperature can be provided.

### DESCRIPTION OF EMBODIMENTS

### <A. First Embodiment>

The first embodiment of the present invention will now be described in detail. The below-described modes are merely examples (representative examples) of the present embodiment, and the present embodiment is not restricted thereto. Further, modifications can be arbitrarily made to carry out the present embodiment, without departing from the gist of the present embodiment.

The nonaqueous electrolyte solution of the present embodiment is a nonaqueous electrolyte solution for use in a nonaqueous electrolyte secondary battery including: a positive electrode capable of absorbing and releasing metal ions; a negative electrode which is capable of absorbing and releasing metal ions and includes a negative electrode active material that contains a metal compound-based material containing a metal alloyable with Li, and a graphite; and a nonaqueous electrolyte solution containing a nonaqueous solvent and an electrolyte dissolved in the nonaqueous solvent,
wherein the nonaqueous electrolyte solution contains at least one compound represented by the following Formula (A) or (B): 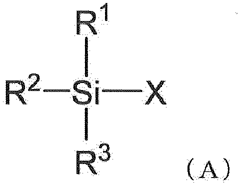 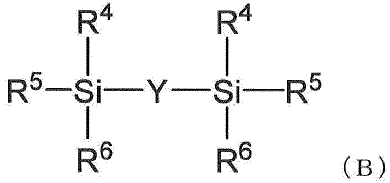 wherein, in Formula (A), R¹ to R³ each independently represent an alkyl group having 1 to 10 carbon atoms which optionally has a substituent, or an aryl group having 6 to 18 carbon atoms which optionally has a substituent, and X represents hydrogen, or an alkenyl or alkynyl group having 1 to 10 carbon atoms; and
in Formula (B), R⁴ to R⁶ each independently represent a hydrocarbon group having 1 to 20 carbon atoms which optionally has a substituent, Y represents S, NH or NR⁷, and R⁷ represents a hydrocarbon group having 1 to 20 carbon atoms.

### <A1. Nonaqueous Electrolyte Solution>

### <A1-1. Compound Represented by Formula (A) or (B)>

The nonaqueous electrolyte solution of the present invention is characterized by containing at least one compound represented by the following Formula (A) or (B):

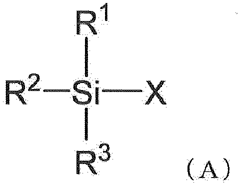

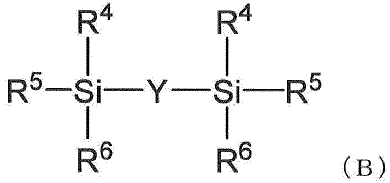

In the present invention, the "alkyl group having 1 to 10 carbon atoms" in the "alkyl group having 1 to 10 carbon atoms which optionally has a substituent" refers to an alkyl group in which a carbon chain bound only with hydrogen and/or carbon, except for a bond formed with Si bound to R¹ to R³ and a bond with a substituent, constitutes a main skeleton and which is configured such that the number of carbon atoms constituting the main skeleton is the largest, and the "substituent" refers to a group bound to this alkyl group.

In other words, for example, when the structure corresponding to -Si-R¹ is represented by -Si-(CH₂)₅-CH₂-C≡N, -(CH₂)₅-CH₂ is a moiety corresponding to the "alkyl group having 1 to 10 carbon atoms" in R¹, and -C=N is a moiety corresponding to the "substituent", while -Si-(CH₂)₅ is not regarded as a moiety corresponding to the "alkyl group having 1 to 10 carbon atoms", nor -CH₂-C≡N is regarded as a moiety corresponding to the "substituent". Further, when the structure corresponding to -Si-R¹ is represented by -Si-(CH₂)₅-CH(-C≡N)₂-CH₃, -(CH₂)₅-CH-CH₃ is a moiety corresponding to the "alkyl group having 1 to 10 carbon atoms" in R¹, and -C≡N is a moiety corresponding to the "substituent".

In the present invention, those descriptions including a phrase "which optionally has a substituent" as in "aryl group having 6 to 18 carbon atoms which optionally has a substituent" and "aryl group having 6 to 18 carbon atoms which optionally has a substituent", for example, are also defined in the same manner as the above-described "alkyl group having 1 to 10 carbon atoms which optionally has a substituent".

In Formula (A), R¹ to R³ each independently represent an alkyl group having 1 to 10 carbon atoms which optionally has a substituent, or an aryl group having 6 to 18 carbon atoms which optionally has a substituent; and X represents hydrogen, or an alkenyl or alkynyl group having 1 to 10 carbon atoms.

In Formula (B), R⁴ to R⁶ each independently represent a hydrocarbon group having 1 to 20 carbon atoms which optionally has a substituent; Y represents S, NH or NR⁷; and R⁷ represents a hydrocarbon group having 1 to 20 carbon atoms.

Examples of the substituent include a cyano group, an isocyanate group, an acyl group (-(C=O)-Ra), an acyloxy group (-O(C=O)-Ra), an alkoxycarbonyl group (-(C=O)O-Ra), a sulfonyl group (-SO₂-Ra), a sulfonyloxy group (-O(SO₂)-Ra), an alkoxysulfonyl group (-(SO₂)-O-Ra), an alkoxycarbonyloxy group (-O-(C=O)-O-Ra), an ether group (-O-Ra), an acryl group, a methacryl group, a halogen (preferably fluorine), and a trifluoromethyl group. Ra represents an alkyl group having 1 to 10 carbon atoms, an alkenyl group having 2 to 10 carbon atoms, or an alkynyl group having 2 to 10 carbon atoms. It is noted here that the number of carbon atoms in each substituent is not included in the number of carbon atoms of the respective R¹ to R³.

Among these substituents, a cyano group, an isocyanate group, an acyl group (-(C=O)-Ra), an acyloxy group (-O(C=O)-Ra), and an alkoxycarbonyl group (-(C=O)O-Ra) are preferred; a cyano group, an isocyanate group, an acyl group (-(C=O)-Ra), and an alkoxycarbonyl group (-(C=O)O-Ra) are more preferred; a cyano group, an isocyanate group, and an alkoxycarbonyl group (-(C=O)O-Ra) are particularly preferred; and a cyano group is most preferred.

Specific examples of the alkyl group relating to R¹ to R³ include a methyl group, an ethyl group, an *n*-propyl group, an iso-propyl group, an *n*-butyl group, a *tert*-butyl group, an *n*-pentyl group, a hexyl group, a heptyl group, an octyl group, a nonyl group, and a decyl group. Thereamong, for example, a methyl group, an ethyl group, an *n*-propyl group, an *n*-butyl group, a tert-butyl group, an *n*-pentyl group, and a hexyl group are preferred; a methyl group, an ethyl group, an *n*-propyl group, an *n*-butyl group, a tert-butyl group, and an *n*-pentyl group are more preferred; a methyl group, an ethyl group, an *n*-butyl group, and a tert-butyl group are still more preferred; and a methyl group, an ethyl group, and a tert-butyl group are particularly preferred. The alkyl group is preferably a methyl group or an ethyl group since this facilitates concentration of the compound (A) or (B) onto the surface of the negative electrode active material.

Specific examples of the alkenyl group relating to X include a vinyl group, an allyl group, a methallyl group, a 2-butenyl group, a 3-methyl-2-butenyl group, a 3-butenyl group, and a 4-pentenyl group. Thereamong, for example, a vinyl group, an allyl group, a methallyl group, and a 2-butenyl group are preferred; a vinyl group, an allyl group, and a methallyl group are more preferred; and a vinyl group is particularly preferred. When X is any one of these alkenyl group, a modification reaction of the negative electrode active material can be preferably controlled.

Specific examples of the alkynyl group relating to X include an ethynyl group, a 2-propynyl group, a 2-butynyl group, a 3-butynyl group, a 4-pentynyl group, and a 5-hexynyl group. Thereamong, for example, an ethynyl group, a 2-propynyl group, a 2-butynyl group, and a 3-butynyl group are preferred; a 2-propynyl group and a 3-butynyl group are more preferred; and a 2-propynyl group is particularly preferred. When X is any one of the these alkynyl group, a modification reaction of the negative electrode active material can be preferably controlled.

Specific examples of the aryl group relating to R¹ to R³ include a phenyl group, a tolyl group, a benzyl group, and a phenethyl group. Thereamong, the aryl group is preferably a phenyl group since this facilitates concentration of the compound (A) or (B) onto the negative electrode active material surface.

Specific examples of the hydrocarbon group relating to R⁴ to R⁶ and R⁷ include alkyl groups, alkenyl groups, and alkynyl groups. As specific examples of these groups, particularly those groups having 1 to 10 carbon atoms, the above-described specific examples of alkyl groups, alkenyl groups and alkynyl groups can be applied.

From the standpoint of facilitating concentration of the compound represented by Formula (A) or (B) onto the negative electrode active material surface, in Formulae (A) and (B), R¹ to R³ are each preferably a methyl group, an ethyl group or a *tert*-butyl group, more preferably a methyl group or an ethyl group, and R⁴ to R⁶ are each preferably a methyl group. It is not necessarily that all of R¹ to R³ be methyl groups as long as one of R¹ to R³ is a methyl group. For example, the following combinations are preferred: (R¹, R², R³) = (a methyl group, a methyl group, an ethyl group), (a methyl group, a methyl group, an *n*-butyl group), (a methyl group, a methyl group, a *tert*-butyl group), (a methyl group, a methyl group, a phenyl group), (a methyl group, an ethyl group, an ethyl group), and (a methyl group, a phenyl group, a phenyl group).

In Formula (A), X is preferably a hydrogen atom, a vinyl group, or an allyl group. This enhances the reaction activity of the compound (A) with the negative electrode active material, so that the negative electrode surface can be modified in a preferred manner. Further, in Formula (B), Y is preferably S (sulfur atom). This enhances the reaction activity of the compound (B) with the negative electrode active material, so that the negative electrode surface can be modified in a preferred manner.

The compound to be used in the present embodiment is a compound represented by Formula (A) or (B), and specific examples thereof include compounds having the following structures.

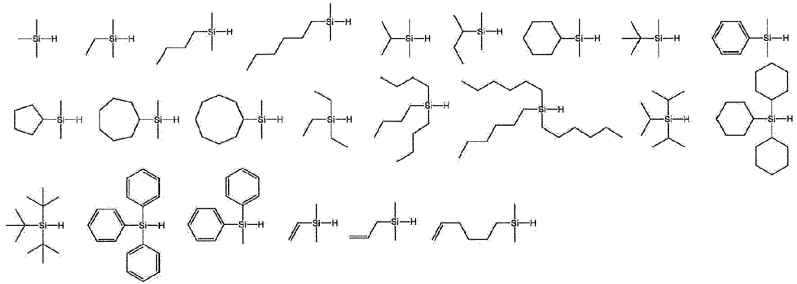

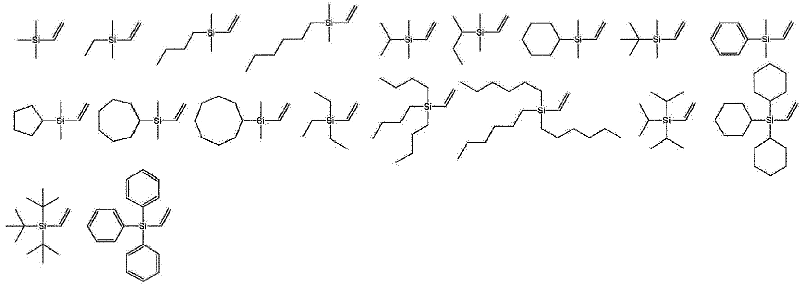

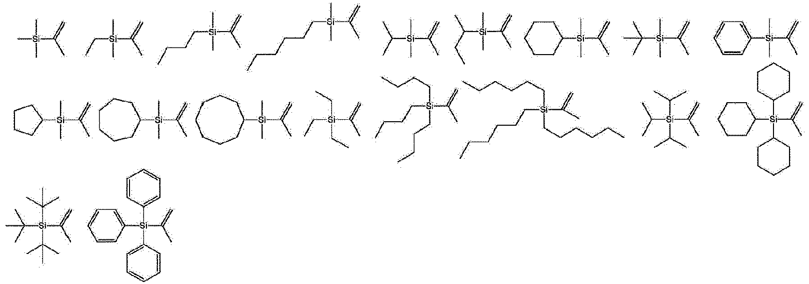

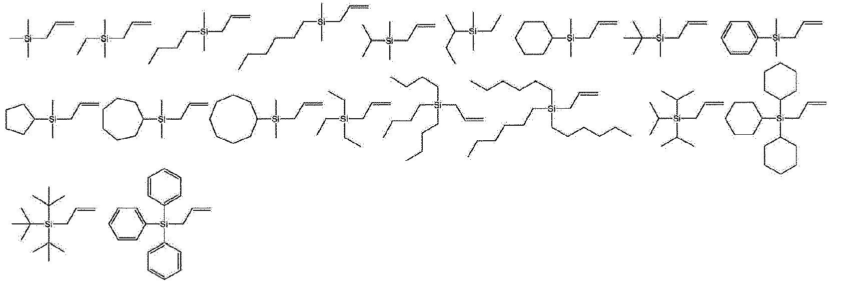

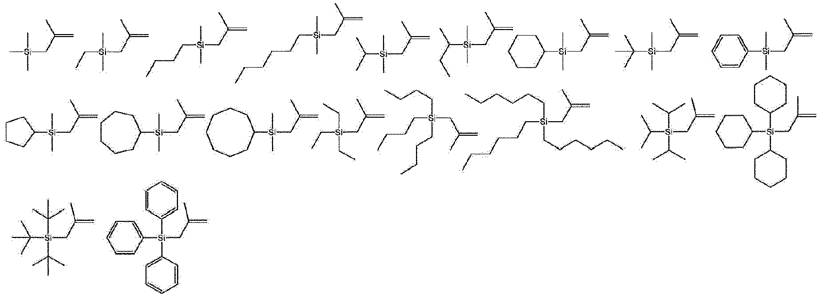

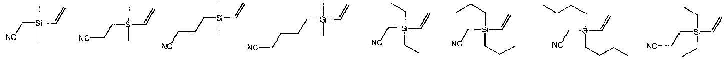

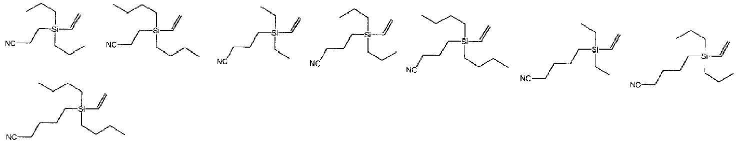

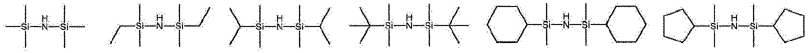

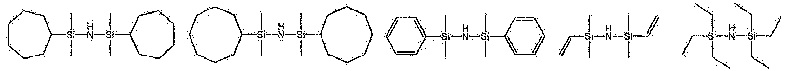

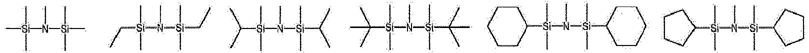

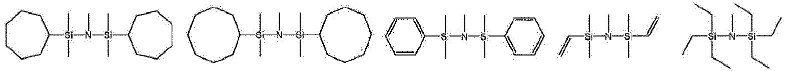

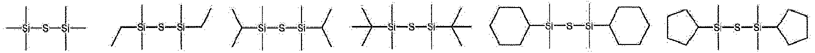

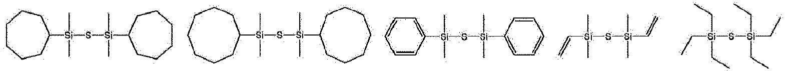

Thereamong, preferred examples include compounds having the following structures.

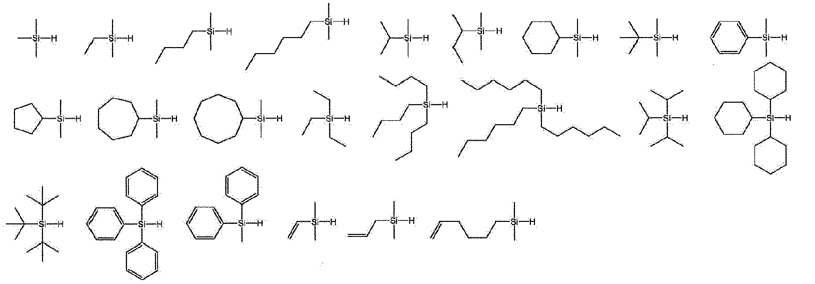

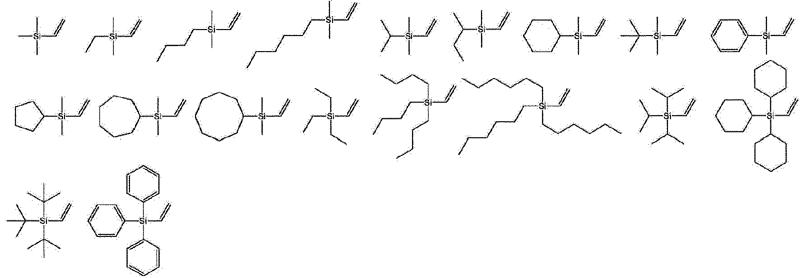

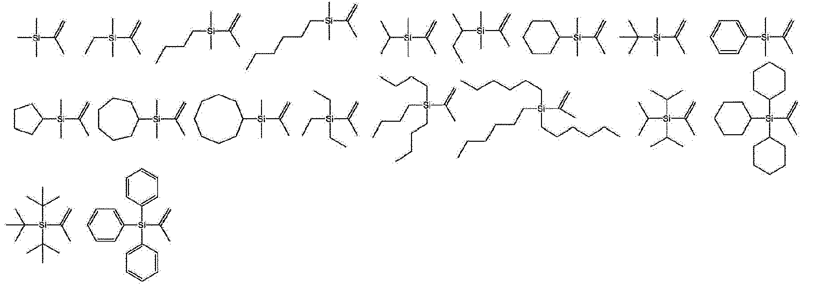

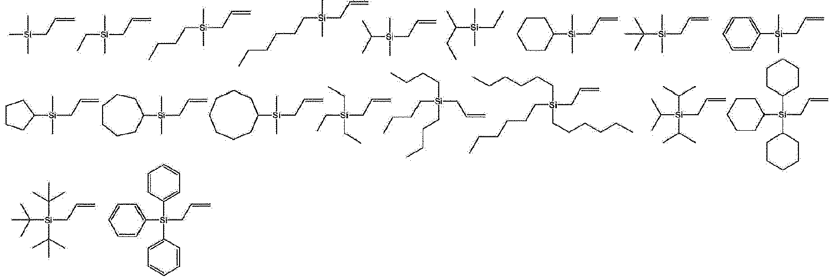

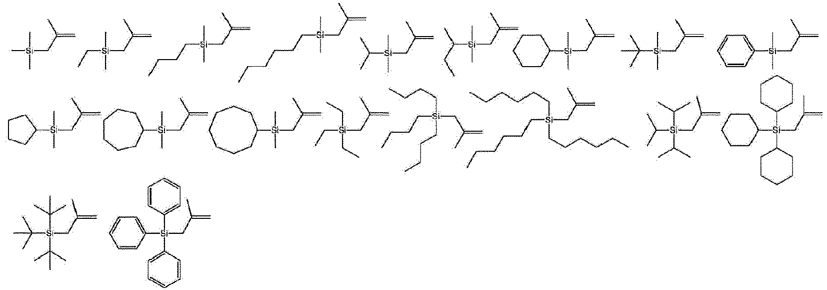

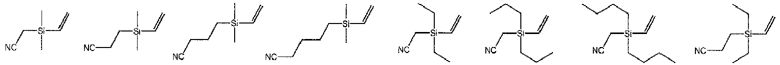

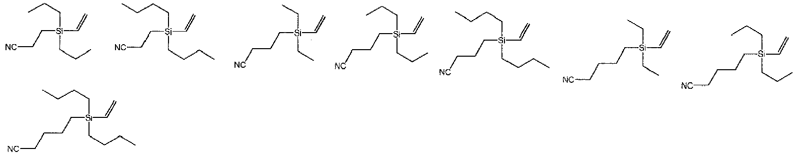

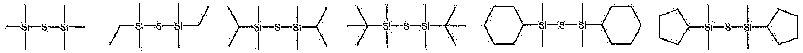

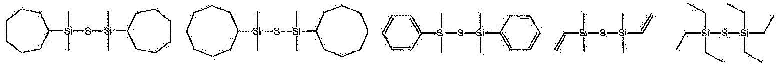

More preferred examples include compounds having the following structures. The compounds having the following structures have a preferable molecular size and thus exhibit a high concentration rate on the negative electrode surface.

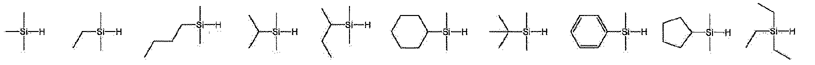

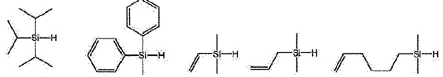

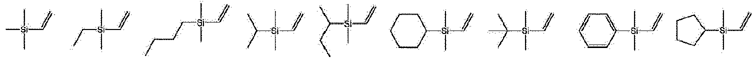

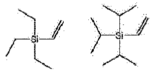

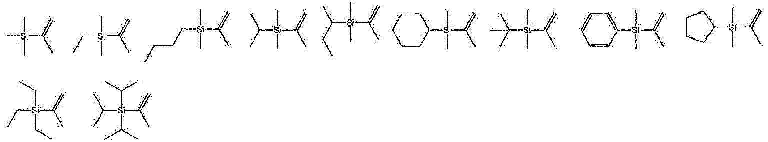

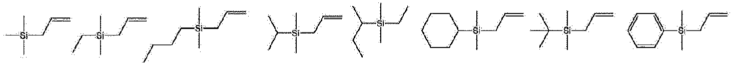

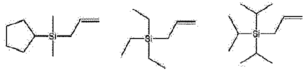

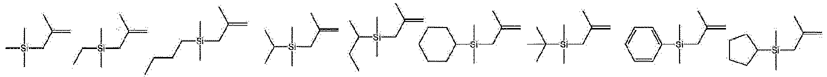

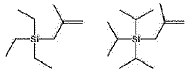

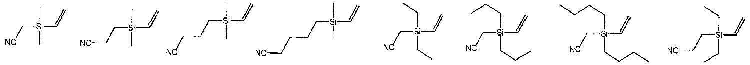

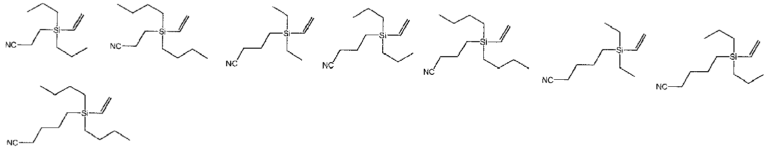

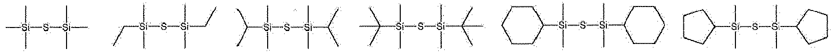

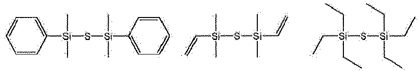

Particularly preferred examples include compounds having the following structures. Reactions of the compounds having the following structures with the negative electrode proceed in a preferred manner.

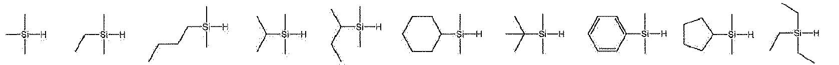

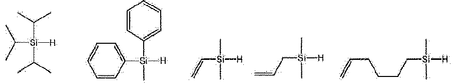

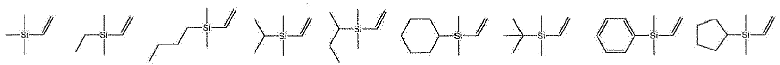

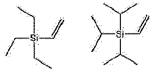

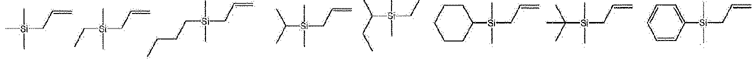

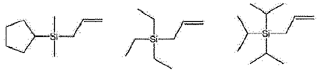

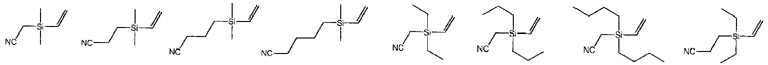

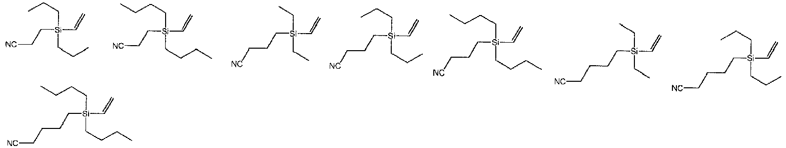

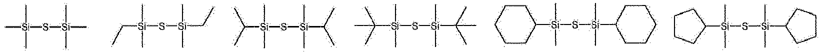

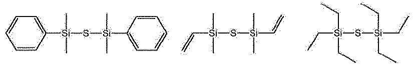

Most preferred examples include compounds having the following structures. Reactions of the compounds having the following structures with the negative electrode proceed in a preferred manner, allowing surface modification to progress most effectively.

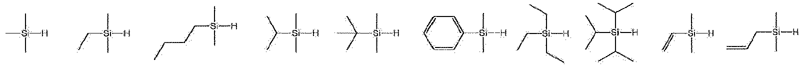

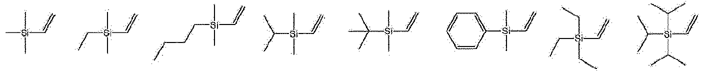

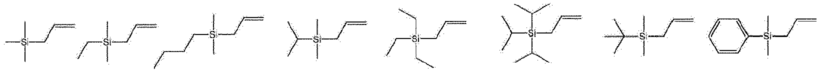

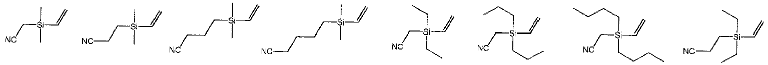

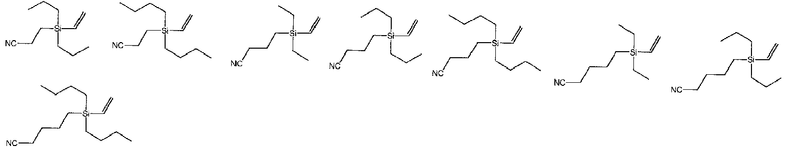

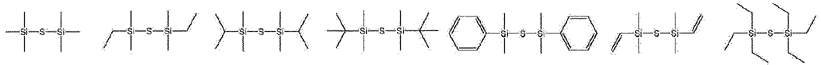

The total content the compound represented by Formula (A) or (B) with respect to a total amount of the nonaqueous electrolyte solution is usually 0.001% by mass or greater, preferably 0.01% by mass or greater, more preferably 0.1% by mass or greater, still more preferably 0.2% by mass or greater, but usually 4.5% by mass or less, preferably 4.0% by mass or less, more preferably 3.5% by mass or less, particularly preferably 3.0% by mass or less, most preferably 2.0% by mass or less.

When the total content of the compound represented by Formula (A) or (B) with respect to a total amount of the nonaqueous electrolyte solution is in this range, a modification reaction of the negative electrode active material proceeds in a preferred manner, and swelling of the negative electrode during charging and discharging is thus suppressed, so that a battery unlikely to be swollen can be produced.

In the nonaqueous electrolyte solution, it is preferred to use at least one compound selected from the group consisting of the below-described difluorophosphates, fluorosulfonates, and salts having a bis-fluorosulfonylimide structure in addition to the compound represented by Formula (A) or (B), since this further suppresses swelling of the negative electrode caused by charging and discharging, so that a battery unlikely to be swollen can be produced.

The mechanism in which swelling of the negative electrode during charging and discharging is suppressed by incorporating the compound of Formula (A) or (B) is presumed as follows.

When fully charged, a carbon active material and an Si-based active material (e.g., Si) have a volume change of 10% and 300%, respectively. In a fully-charged state, a negative electrode in which carbon and Si are blended has a problem in that, due to swelling of Si in the negative electrode, carbon adjacent thereto is pushed out, and the electrode is consequently swollen more prominently and the thickness of the battery itself is thereby increased as compared to a case where carbon or Si is used alone as an active material. In addition, in an Si-based active material, particles thereof are pulverized by repeated charging and discharging, and this causes highly active newly-formed surfaces (dangling bonds) to be exposed. Reactions between these exposed surfaces and an electrolyte solution induce modification of the active material surface and, at the same time, presents a problem that the Si particles, which is an active material, are swollen by repeated charging and discharging as compared to before the repeated charging and discharging.

To address this problem, in the present embodiment, a compound represented by Formula (A) or (B) is incorporated into the electrolyte solution. The structure of the compound represented by Formula (A) or (B) has a moiety showing a high reaction activity with the Si-based active material, such as X or Y; therefore, the compound represented by Formula (A) or (B) reacts with and thereby modifies the surface of the Si-based active material in a preferred manner.

On the other hand, when two or more active moieties such as X and Y exist in the structure, swelling of the active material cannot be suppressed since the moieties that do not fully react with the active material surface undergo a reaction with the electrolyte solution or a reductive decomposition product of the electrolyte solution.

From the above, it is believed that the compound represented by Formula (A) or (B) contributes to suppression of a change in the battery thickness since it reduces swelling of the negative electrode active material caused by repeated charging and discharging.

A method of incorporating the compound represented by Formula (A) or (B) into the electrolyte solution is not particularly restricted. Examples thereof include a method of directly adding the compound to the electrolyte solution, and a method of generating the compound in the battery or the electrolyte solution.

The "content of the compound represented by Formula (A) or (B)" means the content at any one of the time points when a nonaqueous electrolyte solution is produced, when the nonaqueous electrolyte solution is injected into a battery, and when the battery is shipped out as a product.

### <A1-2. Difluorophosphate>

A counter cation of the difluorophosphate is not particularly restricted, and examples thereof include lithium, sodium, potassium, rubidium, cesium, magnesium, calcium, barium, and ammonium represented by NR¹³R¹⁴R¹⁵R¹⁶ (wherein, R¹³ to R¹⁶ each independently represent a hydrogen atom or an organic group having 1 to 12 carbon atoms).

The organic group having 1 to 12 carbon atoms that is represented by R¹³ to R¹⁶ of the above-described ammonium is not particularly restricted, and examples thereof include alkyl groups optionally substituted with a halogen atom, cycloalkyl groups optionally substituted with a halogen atom or an alkyl group, aryl groups optionally substituted with a halogen atom or an alkyl group, and nitrogen atom-containing heterocyclic groups optionally having a substituent. Thereamong, R¹³ to R¹⁶ are preferably each independently a hydrogen atom, an alkyl group, a cycloalkyl group, or a nitrogen atom-containing heterocyclic group.

Specific examples of the difluorophosphate include lithium difluorophosphate, sodium difluorophosphate and potassium difluorophosphate, among which lithium difluorophosphate is preferred.

Any of these difluorophosphates may be used singly, or two or more thereof may be used in any combination at any ratio. Further, the amount of the difluorophosphate(s) to be incorporated is not particularly restricted and may be set arbitrarily as long as the effects of the invention according to the present embodiment are not markedly impaired.

In 100% by mass of the nonaqueous electrolyte solution, the difluorophosphate(s) is/are incorporated in an amount of usually 0.001% by mass or greater, preferably 0.01% by mass or greater, more preferably 0.1% by mass or greater, but usually 10% by mass or less, preferably 5% by mass or less, more preferably 3% by mass or less, still more preferably 2% by mass or less, most preferably 1% by mass or less.

When the amount of the difluorophosphate(s) is in this range, swelling of the nonaqueous electrolyte secondary battery caused by charging and discharging can be preferably suppressed.

### <A1-3. Fluorosulfonate>

A counter cation of the fluorosulfonate is not particularly restricted, and examples thereof include lithium, sodium, potassium, rubidium, cesium, magnesium, calcium, barium, and ammonium represented by NR¹³R¹⁴R¹⁵R¹⁶ (wherein, R¹³ to R¹⁶ each independently represent a hydrogen atom or an organic group having 1 to 12 carbon atoms).

Specific examples of the fluorosulfonate include lithium fluorosulfonate, sodium fluorosulfonate, potassium fluorosulfonate, rubidium fluorosulfonate and cesium fluorosulfonate, among which lithium fluorosulfonate is preferred.

Any of these fluorosulfonates may be used singly, or two or more thereof may be used in any combination at any ratio. Further, the amount of the fluorosulfonate(s) to be incorporated is not particularly restricted and may be set arbitrarily as long as the effects of the invention according to the present embodiment are not markedly impaired.

In 100% by mass of the nonaqueous electrolyte solution, the fluorosulfonate(s) is/are incorporated in an amount of usually 0.001% by mass or greater, preferably 0.01% by mass or greater, more preferably 0.1% by mass or greater, but usually 10% by mass or less, preferably 5% by mass or less, more preferably 3% by mass or less, still more preferably 2% by mass or less, most preferably 1% by mass or less.

When the amount of the fluorosulfonate(s) is in this range, swelling of the nonaqueous electrolyte secondary battery caused by charging and discharging can be preferably suppressed.

### <A1-4. Salt Having Bis-Fluorosulfonylimide Structure>

A counter cation of the salt having a bis-fluorosulfonylimide structure is not particularly restricted, and examples thereof include lithium, sodium, potassium, rubidium, cesium, magnesium, calcium, barium, and ammonium represented by NR¹³R¹⁴R¹⁵R¹⁶ (wherein, R¹³ to R¹⁶ each independently represent a hydrogen atom or an organic group having 1 to 12 carbon atoms).

Examples of the salt having a bis-fluorosulfonylimide structure include lithium bis-fluorosulfonylimide, sodium bis-fluorosulfonylimide and potassium bis-fluorosulfonylimide, among which lithium bis-fluorosulfonylimide is preferred.

In 100% by mass of the nonaqueous electrolyte solution, the salt having a bis-fluorosulfonylimide structure is incorporated at a concentration of usually 0.001% by mass or higher, preferably 0.01% by mass or higher, more preferably 0.1% by mass or higher, but usually 10% by mass or lower, preferably 5% by mass or lower, more preferably 3% by mass or lower.

When the concentration of the salt having a bis-fluorosulfonylimide structure is in this range, swelling of the nonaqueous electrolyte secondary battery caused by charging and discharging can be preferably suppressed.

### <A1-5. Electrolyte>

### <Lithium Salt>

As an electrolyte contained in the nonaqueous electrolyte solution, a lithium salt is usually used. The lithium salt is not particularly restricted as long as it is known to be used for this application, and any lithium salt, specific examples of which include the followings, can be used.

Specific examples of the lithium salt include: inorganic lithium salts, such as LiBF₄, LiClO₄, LiAlF₄, LiSbF₆, LiTaF₆, and LiWF₇; lithium fluorophosphates, such as LiPF₆; lithium tungstates, such as LiWOFs; lithium carboxylate, such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, and CF₃CF₂CF₂CF₂CO₂Li; lithium sulfonates, such as CH₃SO₃Li; lithium imide salts, such as LiN(FCO₂)₂, LiN(FCO)(FSO₂), LiN(FSO₂)₂, LiN(FSO₂)(CF₃SO₂), LiN(CF₃SO₂)₂, LiN(C₂F₅SO₂)₂, lithium cyclic 1,2-perfluoroethane disulfonylimide, lithium cyclic 1,3-perfluoropropane disulfonylimide, and LiN(CF₃SO₂)(C₄F₉SO₂); lithium methide salts, such as LiC(FSO₂)₃, LiC(CF₃SO₂)₃, and LiC(C₂F₅SO₂)₃; lithium oxalate salts, such as lithium difluorooxalatoborate, lithium bis(oxalato)borate, lithium tetrafluorooxalatophosphate, lithium difluorobis(oxalato)phosphate, and lithium tris(oxalato)phosphate; and fluorine-containing organic lithium salt, such as LiPF₄(CF₃)₂, LiPF₄(C₂F₅)₂, LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, and LiBF₂(C₂F₅SO₂)₂.

From the standpoint of further enhancing the effects of improving the charge-discharge rate characteristics and the impedance characteristics in addition to the gas generation-suppressing effect in high-temperature storage, the lithium salt is preferably one selected from inorganic lithium salts, lithium fluorophosphates, lithium sulfonates, lithium imide salts, and lithium oxalate salts.

Among these lithium salts, for example, LiPF₆, LiBF₄, LiSbF₆, LiTaF₆, LiN(FSO₂)₂, LiN(FSO₂)(CF₃SO₂), LiN(CF₃SO₂)₂, LiN(C₂F₅SO₂)₂, lithium cyclic 1,2-perfluoroethane disulfonylimide, lithium cyclic 1,3-perfluoropropane disulfonylimide, LiC(FSO₂)₃, LiC(CF₃SO₂)₃, LiC(C₂F₅SO₂)₃, lithium difluorooxalatoborate, lithium bis(oxalato)borate, lithium tetrafluorooxalatophosphate, lithium difluorobis(oxalato)phosphate, and lithium tris(oxalato)phosphate are particularly preferred because of their effects of improving the low-temperature output characteristics, the high-rate charge-discharge characteristics, the impedance characteristics, the high-temperature storage characteristics, the cycle characteristics and other characteristics. The above-described electrolyte salts may be used singly, or in combination of two or more thereof.

A total concentration of these electrolytes in the nonaqueous electrolyte solution is not particularly restricted; however, it is usually 8% by mass or higher, preferably 8.5% by mass or higher, more preferably 9% by mass or higher, but usually 18% by mass or lower, preferably 17% by mass or lower, more preferably 16% by mass or lower, with respect to a total amount of the nonaqueous electrolyte solution. When the total concentration of the electrolytes is in this range, since the electric conductivity is appropriate for the battery operation, sufficient output characteristics tend to be attained.

### <A1-6. Nonaqueous Solvent>

The nonaqueous electrolyte solution usually contains, as its main component, a nonaqueous solvent that dissolves the above-described electrolyte, similarly to a general nonaqueous electrolyte solution. The nonaqueous solvent used in the present embodiment is not particularly restricted, and any known organic solvent can be used. The organic solvent may be, for example, but not particularly limited to: a saturated cyclic carbonate, an open-chain carbonate, an ether-based compound, or a sulfone-based compound. These organic solvents may be used singly, or in combination of two or more thereof.

### <A1-6-1. Saturated Cyclic Carbonate>

Examples of the saturated cyclic carbonate usually include alkylene groups having 2 to 4 carbon atoms and, from the standpoint of attaining an improvement in the battery characteristics attributed to an increase in the degree of lithium ion dissociation, a saturated cyclic carbonate having 2 or 3 carbon atoms is preferably used.

Examples of the saturated cyclic carbonate include ethylene carbonate, propylene carbonate, and butylene carbonate. Thereamong, ethylene carbonate and propylene carbonate are preferred, and ethylene carbonate that is unlikely to be oxidized or reduced is more preferred. Any of these saturated cyclic carbonates may be used singly, or two or more thereof may be used in any combination at any ratio.

The content of the saturated cyclic carbonate is not particularly restricted and may be set arbitrarily as long as the effects of the invention according to the present embodiment are not markedly impaired; however, when a single saturated cyclic carbonate is used alone, the lower limit of the content is usually 3% by volume or higher, preferably 5% by volume or higher, with respect to a total solvent amount of the nonaqueous electrolyte solution. By controlling the content of the saturated cyclic carbonate to be in this range, a decrease in the electrical conductivity caused by a reduction in the dielectric constant of the nonaqueous electrolyte solution is avoided, so that the high-current discharge characteristics, the stability to the negative electrode, and the cycle characteristics of the nonaqueous electrolyte secondary battery are all likely to be in a favorable range. Further, the content of the saturated cyclic carbonate is usually 90% by volume or less, preferably 85% by volume or less, more preferably 80% by volume or less. By controlling the content of the saturated cyclic carbonate to be in this range, the resistance of the nonaqueous electrolyte solution to oxidation and reduction is improved, so that the stability during high-temperature storage tends to be improved.

It is noted here that, in the present embodiment, "% by volume" means a volume at 25°C and 1 atm.

### <A1-6-2. Linear Carbonate>

As the open-chain carbonate, one having 3 to 7 carbon atoms is usually used and, for the purpose of adjusting the viscosity of the electrolyte solution to be in an appropriate range, an open-chain carbonate having 3 to 5 carbon atoms is preferably used.

Specific examples of the open-chain carbonate include dimethyl carbonate, diethyl carbonate, di-*n*-propyl carbonate, diisopropyl carbonate, *n*-propyl isopropyl carbonate, ethyl methyl carbonate, methyl-n-propyl carbonate, *n*-butyl methyl carbonate, isobutyl methyl carbonate, *t*-butyl methyl carbonate, ethyl-*n*-propyl carbonate, *n*-butyl ethyl carbonate, isobutyl ethyl carbonate, and *t*-butyl ethyl carbonate.

Thereamong, dimethyl carbonate, diethyl carbonate, di-*n*-propyl carbonate, diisopropyl carbonate, *n*-propyl isopropyl carbonate, ethyl methyl carbonate and methyl-n-propyl carbonate are preferred, and dimethyl carbonate, diethyl carbonate and ethyl methyl carbonate are particularly preferred.

Further, a fluorine atom-containing open-chain carbonate (hereinafter, may be simply referred to as "fluorinated open-chain carbonate") can be preferably used as well. The number of fluorine atoms in the fluorinated open-chain carbonate is not particularly restricted as long as it is one or more; however, it is usually 6 or less, preferably 4 or less. When the fluorinated open-chain carbonate has plural fluorine atoms, the fluorine atoms may be bound to the same carbon, or may be bound to different carbons. Examples of the fluorinated open-chain carbonate include fluorinated dimethyl carbonate derivatives, fluorinated ethyl methyl carbonate derivatives, and fluorinated diethyl carbonate derivatives.

Examples of the fluorinated dimethyl carbonate derivatives include fluoromethyl methyl carbonate, difluoromethyl methyl carbonate, trifluoromethyl methyl carbonate, bis(fluoromethyl)carbonate, bis(difluoro)methyl carbonate, and bis(trifluoromethyl)carbonate.

Examples of the fluorinated ethyl methyl carbonate derivatives include 2-fluoroethyl methyl carbonate, ethyl fluoromethyl carbonate, 2,2-difluoroethyl methyl carbonate, 2-fluoroethyl fluoromethyl carbonate, ethyl difluoromethyl carbonate, 2,2,2-trifluoroethyl methyl carbonate, 2,2-difluoroethyl fluoromethyl carbonate, 2-fluoroethyl difluoromethyl carbonate, and ethyl trifluoromethyl carbonate.

Examples of the fluorinated diethyl carbonate derivatives include ethyl-(2-fluoroethyl)carbonate, ethyl-(2,2-difluoroethyl)carbonate, bis(2-fluoroethyl)carbonate, ethyl-(2,2,2-trifluoroethyl)carbonate, 2,2-difluoroethyl-2'-fluoroethyl carbonate, bis(2,2-difluoroethyl)carbonate, 2,2,2-trifluoroethyl-2'-fluoroethyl carbonate, 2,2,2-trifluoroethyl-2',2'-difluoroethyl carbonate, and bis(2,2,2-trifluoroethyl)carbonate.

Any of the above-described open-chain carbonates may be used singly, or two or more thereof may be used in any combination at any ratio.

The content of the open-chain carbonate is not particularly restricted; however, it is usually 15% by volume or higher, preferably 20% by volume or higher, more preferably 25% by volume or higher, but usually 90% by volume or less, preferably 85% by volume or less, more preferably 80% by volume or less, with respect to a total solvent amount of the nonaqueous electrolyte solution. By controlling the content of the open-chain carbonate to be in this range, the viscosity of the nonaqueous electrolyte solution is adjusted to be in an appropriate range and a reduction in the ionic conductivity is suppressed, as a result of which the output characteristics of the nonaqueous electrolyte secondary battery are likely to be controlled in a favorable range.

Moreover, the battery performance can be markedly improved by using a specific open-chain carbonate(s) in combination with ethylene carbonate in a specific amount.

For example, when dimethyl carbonate and ethyl methyl carbonate are selected as the specific open-chain carbonates, the content of ethylene carbonate is not particularly restricted and may be set arbitrarily as long as the effects of the invention according to the present embodiment are not markedly impaired; however, it is usually 15% by volume or higher, preferably 20% by volume or higher, but usually 45% by volume or less, preferably 40% by volume or less, with respect to a total solvent amount of the nonaqueous electrolyte solution. The content of dimethyl carbonate is usually 20% by volume or higher, preferably 30% by volume or higher, but usually 50% by volume or less, preferably 45% by volume or less, with respect to a total solvent amount of the nonaqueous electrolyte solution, and the content of ethyl methyl carbonate is also usually 20% by volume or higher, preferably 30% by volume or higher, but usually 50% by volume or less, preferably 45% by volume or less. By controlling these content values to be in the above-described respective ranges, excellent high-temperature stability is attained, and gas generation tends to be suppressed.

### <A1-6-3. Ether-Based Compound>

As the ether-based compound, open-chain ethers having 3 to 10 carbon atoms and cyclic ethers having 3 to 6 carbon atoms are preferred.

Examples of the open-chain ethers having 3 to 10 carbon atoms include diethyl ether, di(2-fluoroethyl)ether, di(2,2-difluoroethyl)ether, di(2,2,2-trifluoroethyl)ether, ethyl(2-fluoroethyl)ether, ethyl(2,2,2-trifluoroethyl)ether, ethyl(1,1,2,2-tetrafluoroethyl)ether, (2-fluoroethyl)(2,2,2-trifluoroethyl)ether, (2-fluoroethyl)(1,1,2,2-tetrafluoroethyl)ether, (2,2,2-trifluoroethyl)(1,1,2,2-tetrafluoroethyl)ether, ethyl-n-propyl ether, ethyl(3-fluoro-*n*-propyl)ether, ethyl(3,3,3-trifluoro-*n*-propyl)ether, ethyl(2,2,3,3-tetrafluoro-*n*-propyl)ether, ethyl(2,2,3,3,3-pentafluoro-*n*-propyl)ether, 2-fluoroethyl-*n*-propyl ether, (2-fluoroethyl)(3-fluoro-*n*-propyl)ether, (2-fluoroethyl)(3,3,3-trifluoro-*n*-propyl)ether, (2-fluoroethyl)(2,2,3,3-tetrafluoro-*n*-propyl)ether, (2-fluoroethyl)(2,2,3,3,3-pentafluoro-*n*-propyl)ether, 2,2,2-trifluoroethyl-*n*-propyl ether, (2,2,2-trifluoroethyl)(3-fluoro-*n*-propyl)ether, (2,2,2-trifluoroethyl)(3,3,3-trifluoro-*n*-propyl)ether, (2,2,2-trifluoroethyl)(2,2,3,3-tetrafluoro-*n*-propyl)ether, (2,2,2-trifluoroethyl)(2,2,3,3,3-pentafluoro-*n*-propyl)ether, 1,1,2,2-tetrafluoroethyl-*n*-propyl ether, (1,1,2,2-tetrafluoroethyl)(3-fluoro-*n*-propyl)ether, (1,1,2,2-tetrafluoroethyl)(3,3,3-trifluoro-*n*-propyl)ether, (1,1,2,2-tetrafluoroethyl)(2,2,3,3-tetrafluoro-*n*-propyl)ether, (1,1,2,2-tetrafluoroethyl)(2,2,3,3,3-pentafluoro-*n*-propyl)ether, di-*n*-propyl ether, (*n*-propy1)(3-fluoro-*n*-propyl)ether, (*n*-propyl)(3,3,3-trifluoro-*n*-propyl)ether, (*n*-propyl)(2,2,3,3-tetrafluoro-*n*-propyl)ether, (*n*-propyl)(2,2,3,3,3-pentafluoro-*n*-propyl)ether, di(3-fluoro-*n*-propyl)ether, (3-fluoro-*n*-propyl)(3,3,3-trifluoro-*n*-propyl)ether, (3-fluoro-*n*-propyl)(2,2,3,3-tetrafluoro-*n*-propyl)ether, (3-fluoro-*n*-propyl)(2,2,3,3,3-pentafluoro-*n*-propyl)ether, di(3,3,3-trifluoro-*n*-propyl)ether, (3,3,3-trifluoro-*n*-propyl)(2,2,3,3-tetrafluoro-*n*-propyl)ether, (3,3,3-trifluoro-*n*-propyl)(2,2,3,3,3-pentafluoro-*n*-propyl)ether, di(2,2,3,3-tetrafluoro-*n*-propyl)ether, (2,2,3,3-tetrafluoro-*n*-propyl)(2,2,3,3,3-pentafluoro-*n*-propyl)ether, di(2,2,3,3,3-pentafluoro-*n*-propyl)ether, di-*n*-butyl ether, dimethoxymethane, methoxyethoxymethane, methoxy(2-fluoroethoxy)methane, methoxy(2,2,2-trifluoroethoxy)methane, methoxy(1,1,2,2-tetrafluoroethoxy)methane, diethoxymethane, ethoxy(2-fluoroethoxy)methane, ethoxy(2,2,2-trifluoroethoxy)methane, ethoxy(1,1,2,2-tetrafluoroethoxy)methane, di(2-fluoroethoxy)methane, (2-fluoroethoxy)(2,2,2-trifluoroethoxy)methane, (2-fluoroethoxy)(1,1,2,2-tetrafluoroethoxy)methane, di(2,2,2-trifluoroethoxy)methane, (2,2,2-trifluoroethoxy)(1,1,2,2-tetrafluoroethoxy)methane, di(1,1,2,2-tetrafluoroethoxy)methane, dimethoxyethane, methoxyethoxyethane, methoxy(2-fluoroethoxy)ethane, methoxy(2,2,2-trifluoroethoxy)ethane, methoxy(1,1,2,2-tetrafluoroethoxy)ethane, diethoxyethane, ethoxy(2-fluoroethoxy)ethane, ethoxy(2,2,2-trifluoroethoxy)ethane, ethoxy(1,1,2,2-tetrafluoroethoxy)ethane, di(2-fluoroethoxy)ethane, (2-fluoroethoxy)(2,2,2-trifluoroethoxy)ethane, (2-fluoroethoxy)(1,1,2,2-tetrafluoroethoxy)ethane, di(2,2,2-trifluoroethoxy)ethane, (2,2,2-trifluoroethoxy)(1,1,2,2-tetrafluoroethoxy)ethane, di(1,1,2,2-tetrafluoroethoxy)ethane, ethylene glycol di-*n*-propyl ether, ethylene glycol di-*n*-butyl ether, and diethylene glycol dimethyl ether.

Thereamong, dimethoxymethane, diethoxymethane, ethoxymethoxymethane, ethylene glycol di-*n*-propyl ether, ethylene glycol di-*n*-butyl ether, and diethylene glycol dimethyl ether are preferred since they have a high solvating capacity with lithium ions and thus improve the ion dissociation. Particularly preferred are dimethoxymethane, diethoxymethane, and ethoxymethoxymethane since they have a low viscosity and provide a high ionic conductivity.

Examples of the cyclic ethers having 3 to 6 carbon atoms include tetrahydrofuran, 2-methyltetrahydrofuran, 3-methyltetrahydrofuran, 1,3-dioxane, 2-methyl-1,3-dioxane, 4-methyl-1,3-dioxane, 1,4-dioxane, and fluorinated compounds thereof.

The content of the ether-based compound is not particularly restricted and may be set arbitrarily as long as the effects of the invention according to the present embodiment are not markedly impaired; however, it is usually 1% by volume or higher, preferably 2% by volume or higher, more preferably 3% by volume or higher, but usually 30% by volume or less, preferably 25% by volume or less, more preferably 20% by volume or less, with respect to 100% by volume of the nonaqueous solvent. When the content of the ether-based compound is in this preferred range, an ionic conductivity-improving effect of ether, which is attributed to an increase in the degree of lithium ion dissociation and a reduction in the viscosity, is likely to be ensured. In addition, when the negative electrode active material is a carbonaceous material, the phenomenon of co-intercalation of an open-chain ether thereto along with lithium ions can be suppressed; therefore, the input-output characteristics and the charge-discharge rate characteristics can be attained in appropriate ranges.

### <A1-6-4. Sulfone-Based Compound>

The sulfone-based compound is not particularly restricted regardless of whether it is a cyclic sulfone or an open-chain sulfone. In the case of a cyclic sulfone, the number of its carbon atoms is usually 3 to 6, preferably 3 to 5, while in the case of an open-chain sulfone, the number of its carbon atoms is usually 2 to 6, preferably 2 to 5. The number of sulfonyl groups in one molecule of the sulfone-based compound is also not particularly restricted; however, it is usually 1 or 2.

Examples of the cyclic sulfone include: monosulfone compounds, such as trimethylene sulfones, tetramethylene sulfones, and hexamethylene sulfones; and disulfone compounds, such as trimethylene disulfones, tetramethylene disulfones, and hexamethylene disulfones. Thereamong, from the standpoints of the dielectric constant and the viscosity, tetramethylene sulfones, tetramethylene disulfones, hexamethylene sulfones and hexamethylene disulfones are more preferred, and tetramethylene sulfones (sulfolanes) are particularly preferred.

As the sulfolanes, sulfolane and sulfolane derivatives (hereinafter, may be simply referred to as "sulfolanes", including sulfolane) are preferred. As the sulfolane derivatives, those in which one or more hydrogen atoms bound to the carbon atoms constituting the sulfolane ring are substituted with a fluorine atom or an alkyl group are preferred.

Thereamong, for example, 2-methyl sulfolane, 3-methyl sulfolane, 2-fluorosulfolane, 3-fluorosulfolane, 2,2-difluorosulfolane, 2,3-difluorosulfolane, 2,4-difluorosulfolane, 2,5-difluorosulfolane, 3,4-difluorosulfolane, 2-fluoro-3-methyl sulfolane, 2-fluoro-2-methyl sulfolane, 3-fluoro-3-methyl sulfolane, 3-fluoro-2-methyl sulfolane, 4-fluoro-3-methyl sulfolane, 4-fluoro-2-methyl sulfolane, 5-fluoro-3-methyl sulfolane, 5-fluoro-2-methyl sulfolane, 2-fluoromethyl sulfolane, 3-fluoromethyl sulfolane, 2-difluoromethyl sulfolane, 3-difluoromethyl sulfolane, 2-trifluoromethyl sulfolane, 3-trifluoromethyl sulfolane, 2-fluoro-3-(trifluoromethyl)sulfolane, 3-fluoro-3-(trifluoromethyl)sulfolane, 4-fluoro-3-(trifluoromethyl)sulfolane, and 5-fluoro-3-(trifluoromethyl)sulfolane are preferred from the standpoint of attaining a high ionic conductivity and a high input/output.

Examples of the open-chain sulfone include dimethyl sulfone, ethyl methyl sulfone, diethyl sulfone, *n*-propyl methyl sulfone, *n*-propyl ethyl sulfone, di-*n*-propyl sulfone, isopropyl methyl sulfone, isopropyl ethyl sulfone, diisopropyl sulfone, *n*-butyl methyl sulfone, *n*-butyl ethyl sulfone, *t*-butyl methyl sulfone, *t*-butyl ethyl sulfone, monofluoromethyl methyl sulfone, difluoromethyl methyl sulfone, trifluoromethyl methyl sulfone, monofluoroethyl methyl sulfone, difluoroethyl methyl sulfone, trifluoroethyl methyl sulfone, pentafluoroethyl methyl sulfone, ethylmonofluoromethyl sulfone, ethyldifluoromethyl sulfone, ethyltrifluoromethyl sulfone, perfluoroethyl methyl sulfone, ethyltrifluoroethyl sulfone, ethylpentafluoroethyl sulfone, di(trifluoroethyl)sulfone, perfluorodiethyl sulfone, fluoromethyl-*n*-propyl sulfone, difluoromethyl-*n*-propyl sulfone, trifluoromethyl-*n*-propyl sulfone, fluoromethylisopropyl sulfone, difluoromethylisopropyl sulfone, trifluoromethylisopropyl sulfone, trifluoroethyl-*n*-propyl sulfone, trifluoroethylisopropyl sulfone, pentafluoroethyl-*n*-propyl sulfone, pentafluoroethylisopropyl sulfone, trifluoroethyl-*n*-butyl sulfone, trifluoroethyl-*t*-butyl sulfone, pentafluoroethyl-*n*-butyl sulfone, and pentafluoroethyl-*t*-butyl sulfone.

Thereamong, for example, dimethyl sulfone, ethyl methyl sulfone, diethyl sulfone, *n*-propyl methyl sulfone, isopropyl methyl sulfone, *n*-butyl methyl sulfone, *t*-butyl methyl sulfone, monofluoromethyl methyl sulfone, difluoromethyl methyl sulfone, trifluoromethyl methyl sulfone, monofluoroethyl methyl sulfone, difluoroethyl methyl sulfone, trifluoroethyl methyl sulfone, pentafluoroethyl methyl sulfone, ethylmonofluoromethyl sulfone, ethyldifluoromethyl sulfone, ethyltrifluoromethyl sulfone, ethyltrifluoroethyl sulfone, ethylpentafluoroethyl sulfone, trifluoromethyl-*n*-propyl sulfone, trifluoromethylisopropyl sulfone, trifluoroethyl-*n*-butyl sulfone, trifluoroethyl-*t*-butyl sulfone, trifluoromethyl-*n*-butyl sulfone, and trifluoromethyl-*t*-butyl sulfone are preferred from the standpoint of improving the high-temperature storage stability of the electrolyte solution.

The content of the sulfone-based compound is not particularly restricted and may be set arbitrarily as long as the effects of the invention according to the present embodiment are not markedly impaired; however, it is usually 0.3% by volume or higher, preferably 0.5% by volume or higher, more preferably 1% by volume or higher, but usually 40% by volume or less, preferably 35% by volume or less, more preferably 30% by volume or less, with respect to a total solvent amount of the nonaqueous electrolyte solution. When the content of the sulfone-based compound is in this range, an electrolyte solution having excellent high-temperature storage stability tends to be obtained.

### <A1-7. Auxiliary Agents>

The nonaqueous electrolyte solution may also contain the following auxiliary agent(s) within a range that allows the effects of the invention according to the present embodiment to be exerted.

### <A1-7-1. Unsaturated Bond-Containing Cyclic Carbonate Compound>

A carbon-carbon unsaturated bond-containing cyclic carbonate (hereinafter, may be referred to as "unsaturated cyclic carbonate") is not particularly restricted as long as it is a cyclic carbonate having a carbon-carbon double bond or a carbon-carbon triple bond, and any such unsaturated carbonate can be used. It is noted here that the unsaturated cyclic carbonate also encompasses an aromatic ring-containing cyclic carbonate.

Examples of the unsaturated cyclic carbonate include: vinylene carbonates; ethylene carbonates substituted with a substituent having an aromatic ring, a carbon-carbon double bond, or a carbon-carbon triple bond; phenyl carbonates; vinyl carbonates; allyl carbonates; and catechol carbonates.

Examples of the vinylene carbonates include vinylene carbonate, methylvinylene carbonate, 4,5-dimethylvinylene carbonate, phenylvinylene carbonate, 4,5-diphenylvinylene carbonate, vinylvinylene carbonate, 4,5-vinylvinylene carbonate, 4,5-divinylvinylene carbonate, allylvinylene carbonate, 4,5-diallylvinylene carbonate, 4-fluorovinylene carbonate, 4-fluoro-5-methylvinylene carbonate, 4-fluoro-5-phenylvinylene carbonate, 4-fluoro-5-vinylvinylene carbonate, and 4-allyl-5-fluorovinylene carbonate.

Specific examples of the ethylene carbonates substituted with a substituent having an aromatic ring, a carbon-carbon double bond, or a carbon-carbon triple bond include vinylethylene carbonate, 4,5-divinylethylene carbonate, 4-methyl-5-vinylethylene carbonate, 4-allyl-5-vinylethylene carbonate, ethynylethylene carbonate, 4,5-diethynylethylene carbonate, 4-methyl-5-ethynylethylene carbonate, 4-vinyl-5-ethynylethylene carbonate, 4-allyl-5-ethynylethylene carbonate, phenylethylene carbonate, 4,5-diphenylethylene carbonate, 4-phenyl-5-vinylethylene carbonate, 4-allyl-5-phenylethylene carbonate, allylethylene carbonate, 4,5-diallylethylene carbonate, and 4-methyl-5-allylethylene carbonate.

Thereamong, preferred examples of the unsaturated cyclic carbonate include vinylene carbonate, methylvinylene carbonate, 4,5-dimethylvinylene carbonate, vinylvinylene carbonate, 4,5-vinylvinylene carbonate, allylvinylene carbonate, 4,5-diallylvinylene carbonate, vinylethylene carbonate, 4,5-divinylethylene carbonate, 4-methyl-5-vinylethylene carbonate, 4-allyl-5-vinylethylene carbonate, ethynylethylene carbonate, 4,5-diethynylethylene carbonate, 4-methyl-5-ethynylethylene carbonate, 4-vinyl-5-ethynylethylene carbonate, allylethylene carbonate, 4,5-diallylethylene carbonate, and 4-methyl-5-allylethylene carbonate.

Further, vinylene carbonate, vinylethylene carbonate, and ethynylethylene carbonate are particularly preferred since these carbonates form a more stable interface protective film.

The molecular weight of the unsaturated cyclic carbonate is not particularly restricted and may be set arbitrarily as long as the effects of the invention according to the present embodiment are not markedly impaired. The molecular weight is preferably 80 to 250. When the molecular weight of the unsaturated cyclic carbonate is in this range, the solubility of the unsaturated cyclic carbonate in the nonaqueous electrolyte solution is likely to be ensured, so that the effects of the invention according to the present embodiment are likely to be exerted sufficiently. The molecular weight of the unsaturated cyclic carbonate is more preferably 85 to 150. A method of producing the unsaturated cyclic carbonate is not particularly restricted, and the unsaturated cyclic carbonate can be produced by selecting any known method.

Any of the above-described unsaturated cyclic carbonates may be used singly, or two or more thereof may be used in any combination at any ratio. Further, the amount of the unsaturated cyclic carbonate(s) to be incorporated is not particularly restricted and may be set arbitrarily as long as the effects of the invention according to the present embodiment are not markedly impaired. In 100% by mass of the nonaqueous electrolyte solution, the unsaturated cyclic carbonate(s) is/are incorporated in an amount of usually 0.001% by mass or greater, preferably 0.01% by mass or greater, more preferably 0.1% by mass or greater, still more preferably 0.5% by mass or greater, particularly preferably 1% by mass or greater, but usually 10% by mass or less, preferably 5% by mass or less, more preferably 3% by mass or less, particularly preferably 2% by mass or less. When the amount of the unsaturated cyclic carbonate(s) is in this range, the nonaqueous electrolyte secondary battery is likely to exhibit a sufficient cycle characteristics-improving effect, and a situation where the high-temperature storage characteristics are deteriorated, the gas generation is increased and the discharge capacity retention rate is reduced is likely to be avoided.

### <A1-7-2. Halogenated Cyclic Carbonate>

As examples of a halogen atom-containing cyclic carbonate compound, acid anhydrides substituted with a fluorine atom are mainly exemplified below; however, the exemplified compounds also encompass those acid anhydrides obtained by substituting some or all of their fluorine atoms with a chlorine atom, a bromine atom or an iodine atom.

Examples of the halogen atom-containing cyclic carbonate compound include fluorinated products of cyclic carbonates having an alkylene group having 2 to 6 carbon atoms and derivatives thereof, such as fluorinated ethylene carbonates and derivatives thereof. Examples of the derivatives of fluorinated ethylene carbonates include fluorinated products of ethylene carbonates substituted with an alkyl group (e.g., an alkyl group having 1 to 4 carbon atoms). Thereamong, ethylene carbonates having 1 to 8 fluorine atoms and derivatives thereof are preferred.

Specific examples thereof include monofluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate, and 4,4-difluoro-5,5-dimethylethylene carbonate.

Thereamong, at least one selected from the group consisting of monofluoroethylene carbonate, 4,4-difluoroethylene carbonate and 4,5-difluoroethylene carbonate is preferred from the standpoints of imparting a high ionic conductivity and favorably forming an interface protective film.

Any of the above-described fluorine atom-containing cyclic carbonate compounds may be used singly, or two or more thereof may be used in any combination at any ratio.

The amount of a halogenated cyclic carbonate to be incorporated with respect to the whole nonaqueous electrolyte solution is not particularly restricted and may be set arbitrarily as long as the effects of the invention according to the present embodiment are not markedly impaired; however, in 100% by mass of the nonaqueous electrolyte solution, the amount of the halogenated cyclic carbonate is usually 0.001% by mass or greater, preferably 0.01% by mass or greater, more preferably 0.1% by mass or greater, still more preferably 0.5% by mass or greater, particularly preferably 1% by mass or greater, but usually 10% by mass or less, preferably 7% by mass or less, more preferably 5% by mass or less, still more preferably 3% by mass or less. It is noted here that monofluoroethylene carbonate may be used as a solvent and, in such a case, the amount thereof is not restricted to the above-described range.

### <A1-7-3. Cyano Group-Containing Compound>

The type of a cyano group-containing compound that can be used in the nonaqueous electrolyte solution is not particularly restricted as long as it is a compound having a cyano group in the molecule; however, the cyano group-containing compound is more preferably a compound represented by the following Formula (11). A method of producing the cyano group-containing compound is not particularly restricted, and the cyano group-containing compound can be produced by selecting any known method. 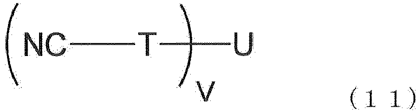 (wherein, T represents an organic group composed of atoms selected from the group consisting of a carbon atom, a nitrogen atom, an oxygen atom, a sulfur atom and a phosphorus atom; U represents a V-valent organic group having 1 to 10 carbon atoms which optionally has a substituent; V represents an integer of 1 or larger; and when V is 2 or larger, Ts may be the same or different from each other).

The molecular weight of the cyano group-containing compound is not particularly restricted and may be set arbitrarily as long as the effects of the invention according to the present embodiment are not markedly impaired. The molecular weight of the cyano group-containing compound is usually 40 or higher, preferably 45 or higher, more preferably 50 or higher, but usually 200 or lower, preferably 180 or lower, more preferably 170 or lower. When the molecular weight is in this range, the solubility of the cyano group-containing compound in the nonaqueous electrolyte solution is likely to be ensured, so that the effects of the invention according to the present embodiment are likely to be expressed.

Specific examples of the compound represented by Formula (11) include: compounds having one cyano group, such as acetonitrile, propionitrile, butyronitrile, isobutyronitrile, valeronitrile, isovaleronitrile, lauronitrile, 2-methylbutyronitrile, trimethylacetonitrile, hexanenitrile, cyclopentanecarbonitrile, cyclohexanecarbonitrile, acrylonitrile, methacrylonitrile, crotononitrile, 3-methylcrotononitrile, 2-methyl-2-butenenitrile, 2-pentenenitrile, 2-methyl-2-pentenenitrile, 3-methyl-2-pentenenitrile, 2-hexenenitrile, fluoroacetonitrile, difluoroacetonitrile, trifluoroacetonitrile, 2-fluoropropionitrile, 3-fluoropropionitrile, 2,2-difluoropropionitrile, 2,3-difluoropropionitrile, 3,3 -difluoropropionitrile, 2,2,3 -trifluoropropionitrile, 3,3,3 -trifluoropropionitrile, 3,3'-oxydipropionitrile, 3,3'-thiodipropionitrile, 1,2,3-propanetricarbonitrile, 1,3,5-pentanetricarbonitrile, and pentafluoropropionitrile;
compounds having two cyano groups, such as malononitrile, succinonitrile, glutaronitrile, adiponitrile, pimelonitrile, suberonitrile, azelanitrile, sebaconitrile, undecanedinitrile, dodecanedinitrile, methylmalononitrile, ethylmalononitrile, isopropylmalononitrile, *tert*-butylmalononitrile, methylsuccinonitrile, 2,2-dimethylsuccinonitrile, 2,3-dimethylsuccinonitrile, trimethylsuccinonitrile, tetramethylsuccinonitrile, 3,3'-(ethylenedioxy)dipropionitrile, and 3,3'-(ethylenedithio)dipropionitrile;
compounds having three cyano groups, such as 1,2,3-tris(2-cyanoethoxy)propane and tris(2-cyanoethyl)amine;
cyanate compounds, such as methyl cyanate, ethyl cyanate, propyl cyanate, butyl cyanate, pentyl cyanate, hexyl cyanate, and heptyl cyanate;
sulfur-containing compounds, such as methyl thiocyanate, ethyl thiocyanate, propyl thiocyanate, butyl thiocyanate, pentyl thiocyanate, hexyl thiocyanate, heptyl thiocyanate, methanesulfonyl cyanide, ethanesulfonyl cyanide, propanesulfonyl cyanide, butanesulfonyl cyanide, pentanesulfonyl cyanide, hexanesulfonyl cyanide, heptanesulfonyl cyanide, methyl sulfurocyanidate, ethyl sulfurocyanidate, propyl sulfurocyanidate, butyl sulfurocyanidate, pentyl sulfurocyanidate, hexyl sulfurocyanidate, and heptyl sulfurocyanidate; and
phosphorus-containing compounds, such as cyanodimethyl phosphine, cyanodimethyl phosphine oxide, methyl cyanodimethylphosphinate, methyl cyanomethylphosphinite, dimethylphosphinic cyanide, dimethylphosphinous cyanide, dimethyl cyanophosphonate, dimethyl cyanophosphonite, cyanomethyl methyl phosphonate, cyanomethyl methyl phosphinite, cyanodimethyl phosphate, and cyanodimethyl phosphite.

Thereamong, acetonitrile, propionitrile, butyronitrile, isobutyronitrile, valeronitrile, isovaleronitrile, lauronitrile, crotononitrile, 3-methylcrotononitrile, malononitrile, succinonitrile, glutaronitrile, adiponitrile, pimelonitrile, suberonitrile, azelanitrile, sebaconitrile, undecanedinitrile, and dodecanedinitrile are preferred from the standpoint of improving the storage characteristics, and compounds having two cyano groups, such as malononitrile, succinonitrile, glutaronitrile, adiponitrile, pimelonitrile, suberonitrile, azelanitrile, sebaconitrile, undecanedinitrile and dodecanedinitrile, are more preferred.

Any of the above-described cyano group-containing compounds may be used singly, or two or more thereof may be used in any combination at any ratio. The amount of the cyano group-containing compound(s) to be incorporated with respect to the whole nonaqueous electrolyte solution is not particularly restricted and may be set arbitrarily as long as the effects of the invention according to the present embodiment are not markedly impaired; however, in the nonaqueous electrolyte solution, the cyano group-containing compound(s) is/are incorporated in an amount of usually 0.001% by mass or greater, preferably 0.01% by mass or greater, more preferably 0.1% by mass or greater, still more preferably 0.3% by mass or greater, but usually 10% by mass or less, preferably 5% by mass or less, more preferably 3% by mass or less. When this range is satisfied, the low-temperature output characteristics, the charge-discharge rate characteristics, the cycle characteristics, the high-temperature storage characteristics and the like are further improved.

### <A1-7-4. Diisocyanate Compound>

In the nonaqueous electrolyte solution, as a diisocyanate compound, a compound represented by the following Formula (12), which has two isocyanate groups in the molecule and has a nitrogen atom only in the respective isocyanate groups, can be preferably used.

NCO-Y-NCO (12)

In Formula (12), Y represents an organic group that contains a cyclic structure and has 1 to 15 carbon atoms. The number of carbon atoms of Y is usually 2 or more, preferably 3 or more, more preferably 4 or more, but usually 14 or less, preferably 12 or less, more preferably 10 or less, still more preferably 8 or less.

In Formula (12), Y is particularly preferably an organic group having 4 to 15 carbon atoms, which contains at least one cycloalkylene group having 4 to 6 carbon atoms or an aromatic hydrocarbon group. In this case, a hydrogen atom on the cycloalkylene group may be substituted with a methyl group or an ethyl group. The above-described diisocyanate compound having a cyclic structure is a sterically bulky molecule and is thus unlikely to cause a side reaction on the positive electrode, as a result of which the cycle characteristics and the high-temperature storage characteristics are improved.

The binding site of a group bound the cycloalkylene group or the aromatic hydrocarbon group is not particularly restricted, and may be any of the *meta*-position, the *para*-position, and the *ortho*-position; however, it is preferably the *meta*-position or the *para*-position since this makes the cross-linking distance between coating films appropriate and an advantageous lithium ion conductivity is thereby attained, as a result of which the resistance is thus likely to be reduced. In addition, the cycloalkylene group is preferably a cyclopentylene group or a cyclohexylene group from the standpoint of making the diisocyanate compound itself unlikely to cause a side reaction, and the cycloalkylene group is more preferably a cyclohexylene group since this is likely to result in a reduction in the resistance because of the effect of molecular mobility.

Further, the diisocyanate compound preferably has an alkylene group having 1 to 3 carbon atoms between the cycloalkylene group or the aromatic hydrocarbon group and an isocyanate group. Since the presence of the alkylene group makes the diisocyanate compound sterically bulky, a side reaction is unlikely to occur on the positive electrode. Moreover, as long as the number of carbon atoms of the alkylene group is 1 to 3, the ratio of isocyanate groups with respect to the total molecular weight is not largely modified; therefore, the effects of the invention according to the present embodiment are likely to be expressed prominently.

The molecular weight of the diisocyanate compound represented by Formula (12) is not particularly restricted and may be set arbitrarily as long as the effects of the invention according to the present embodiment are not markedly impaired. The molecular weight of the diisocyanate compound is usually 80 or higher, preferably 115 or higher, more preferably 170 or higher, but usually 300 or lower, preferably 230 or lower. When the molecular weight is in this range, the solubility of the diisocyanate compound in the nonaqueous electrolyte solution is likely to be ensured, so that the effects of the invention according to the present embodiment are likely to be expressed.

Specific examples of the diisocyanate compound include: cycloalkane ring-containing diisocyanates, such as 1,2-diisocyanatocyclopentane, 1,3-diisocyanatocyclopentane, 1,2-diisocyanatocyclohexane, 1,3-diisocyanatocyclohexane, 1,4-diisocyanatocyclohexane, 1,2-bis(isocyanatomethyl)cyclohexane, 1,3-bis(isocyanatomethyl)cyclohexane, 1,4-bis(isocyanatomethyl)cyclohexane, dicyclohexylmethane-2,2'-diisocyanate, dicyclohexylmethane-2,4'-diisocyanate, dicyclohexylmethane-3,3'-diisocyanate, and dicyclohexylmethane-4,4'-diisocyanate; and

aromatic ring-containing diisocyanates, such as 1,2-phenylene diisocyanate, 1,3-phenylene diisocyanate, 1,4-phenylene diisocyanate, tolylene-2,3-diisocyanate, tolylene-2,4-diisocyanate, tolylene-2,5-diisocyanate, tolylene-2,6-diisocyanate, tolylene-3,4-diisocyanate, tolylene-3,5-diisocyanate, 1,2-bis(isocyanatomethyl)benzene, 1,3-bis(isocyanatomethyl)benzene, 1,4-bis(isocyanatomethyl)benzene, 2,4-diisocyanatobiphenyl, 2,6-diisocyanatobiphenyl, 2,2'-diisocyanatobiphenyl, 3,3'-diisocyanatobiphenyl, 4,4'-diisocyanato-2-methylbiphenyl, 4,4'-diisocyanato-3-methylbiphenyl, 4,4'-diisocyanato-3,3'-dimethylbiphenyl, 4,4'-diisocyanatodiphenylmethane, 4,4'-diisocyanato-2-methyldiphenylmethane, 4,4'-diisocyanato-3-methyldiphenylmethane, 4,4'-diisocyanato-3,3'-dimethyldiphenylmethane, 1,5-diisocyanatonaphthalene, 1,8-diisocyanatonaphthalene, 2,3-diisocyanatonaphthalene, 1,5-bis(isocyanatomethyl)naphthalene, 1,8-bis(isocyanatomethyl)naphthalene, and 2,3-bis(isocyanatomethyl)naphthalene.

Thereamong, 1,2-diisocyanatocyclopentane, 1,3-diisocyanatocyclopentane, 1,2-diisocyanatocyclohexane, 1,3 -diisocyanatocyclohexane, 1,4-diisocyanatocyclohexane, 1,2-bis(isocyanatomethyl)cyclohexane, 1,3-bis(isocyanatomethyl)cyclohexane, 1,4-bis(isocyanatomethyl)cyclohexane, 1,2-phenylene diisocyanate, 1,3-phenylene diisocyanate, 1,4-phenylene diisocyanate, 1,2-bis(isocyanatomethyl)benzene, 1,3-bis(isocyanatomethyl)benzene, 1,4-bis(isocyanatomethyl)benzene, 2,4-diisocyanatobiphenyl, and 2,6-diisocyanatobiphenyl are preferred since these diisocyanate compounds form a more compact composite layer on the negative electrode, and the battery durability is consequently improved.

Among these diisocyanate compounds, 1,3-bis(isocyanatomethyl)cyclohexane, 1,4-bis(isocyanatomethyl)cyclohexane, 1,3-phenylene diisocyanate, 1,4-phenylene diisocyanate, 1,2-bis(isocyanatomethyl)benzene, 1,3-bis(isocyanatomethyl)benzene, and 1,4-bis(isocyanatomethyl)benzene are more preferred since these diisocyanate compounds, because of their molecular symmetry, form a coating film advantageous for lithium ion conductivity on the negative electrode, and the battery characteristics such as low-temperature output characteristics and cycle characteristics are consequently further improved.

Any of the above-described diisocyanate compounds may be used singly, or two or more thereof may be used in any combination at any ratio.

The amount of the diisocyanate compound(s) that can be incorporated into the nonaqueous electrolyte solution is not particularly restricted and may be set arbitrarily as long as the effects of the invention according to the present embodiment are not markedly impaired; however, in the nonaqueous electrolyte solution, the diisocyanate compound(s) is/are incorporated in an amount of usually 0.001% by mass or greater, preferably 0.01% by mass or greater, more preferably 0.1% by mass or greater, still more preferably 0.3% by mass or greater, but usually 5% by mass or less, preferably 4% by mass or less, more preferably 3% by mass or less, still more preferably 2% by mass or less. When the amount is in this range, the battery characteristics such as low-temperature output and cycle characteristics tend to be further improved.

A method of producing the diisocyanate compound is not particularly restricted, and the diisocyanate compound can be produced by selecting any known method. Further, a commercially available product may be used as well.

### <A1-7-5. Carboxylic Acid Anhydride>

In the nonaqueous electrolyte solution, as a carboxylic acid anhydride, a compound represented by the following Formula (13) can be preferably used. A method of producing the carboxylic acid anhydride is not particularly restricted, and the carboxylic acid anhydride can be produced by selecting any known method. 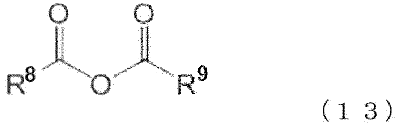 (wherein, R⁸ and R⁹ each independently represent a hydrocarbon group having 1 to 15 carbon atoms which optionally has a substituent; and R⁸ and R⁹ are optionally bound with each other to form a cyclic structure)

The types of R⁸ and R⁹ are not particularly restricted as long as they are monovalent hydrocarbon groups. For example, R⁸ and R⁹ may each be an aliphatic hydrocarbon group, an aromatic hydrocarbon group, or a group constituted by an aliphatic hydrocarbon group and an aromatic hydrocarbon group that are bound with each other. The aliphatic hydrocarbon group may be a saturated hydrocarbon group, or may contain an unsaturated bond (a carbon-carbon double bond or a carbon-carbon triple bond). In addition, the aliphatic hydrocarbon group may be open-chain or cyclic and, when the aliphatic hydrocarbon group is open-chain, it may have a straight chain or a branched chain. Further, the aliphatic hydrocarbon group may be constituted by an open-chain group and a cyclic group that are bound with each other. It is noted here that R⁸ and R⁹ may be the same or different from each other.

When R⁸ and R⁹ are bound with each other to form a cyclic structure, the hydrocarbon group constituted by R⁸ and R⁹ that are bound with each other is divalent. The type of this divalent hydrocarbon group is not particularly restricted. In other words, the divalent hydrocarbon group may be an aliphatic group, an aromatic group, or a group constituted by an aliphatic group and an aromatic group that are bound with each other. When the divalent hydrocarbon group is an aliphatic group, it may be a saturated group or an unsaturated group. In addition, the aliphatic group may be an open-chain group or a cyclic group and, when the aliphatic group is an open-chain group, it may be a straight-chain group or a branched-chain group. Further, the aliphatic group may be constituted by an open-chain group and a cyclic group that are bound with each other.

When the hydrocarbon groups of R⁸ and R⁹ have a substituent, the type of the substituent is not particularly restricted unless it conflicts with the gist of the invention according to the present embodiment, and examples of the substituent include halogen atoms such as a fluorine atom, a chlorine atom, a bromine atom, and an iodine atom, among which a fluorine atom is preferred. Examples of the substituent other than a halogen atom include substituents having a functional group, such as an ester group, a cyano group, a carbonyl group and an ether group, among which a cyano group and a carbonyl group are preferred. The hydrocarbon groups of R³ and R⁴ may have only one of these substituents, or may have two or more of these substituents. When the hydrocarbon groups of R³ and R⁴ have two or more substituents, these substituents may be the same or different from one another.

The number of carbon atoms in each hydrocarbon group of R⁸ and R⁹ is usually 1 or more, but usually 15 or less, preferably 12 or less, more preferably 10 or less, still more preferably 9 or less. When R⁸ and R⁹ are bound with each other to form a divalent hydrocarbon group, the number of carbon atoms of the divalent hydrocarbon group is usually 1 or more, but usually 15 or less, preferably 13 or less, more preferably 10 or less, still more preferably 8 or less. It is noted here that, when the hydrocarbon groups of R⁸ and R⁹ have a carbon atom-containing substituent, the total number of carbon atoms of R⁸ and R⁹ including the substituent preferably satisfy the above-described range.

Next, specific examples of the acid anhydride represented by Formula (13) will be described. In the following examples, the term "analogue" refers to an acid anhydride obtained by replacing a part of the structure of an exemplified acid anhydride with another structure within a range that does not conflict with the gist of the invention according to the present embodiment, and examples thereof include: dimers, trimers and tetramers that are constituted by plural acid anhydrides; structural isomers that have the same number of carbon atoms of a substituent but have different branched chains; and acid anhydrides in which a substituent binds at different sites.

First, specific examples of the acid anhydride wherein R⁸ and R⁹ are the same will be described.

Examples of the acid anhydride wherein R⁸ and R⁹ are both an open-chain alkyl group include acetic acid anhydride, propionic acid anhydride, butanoic acid anhydride, 2-methylpropionic acid anhydride, 2,2-dimethylpropionic acid anhydride, 2-methylbutanoic acid anhydride, 3-methylbutanoic acid anhydride, 2,2-dimethylbutanoic acid anhydride, 2,3-dimethylbutanoic acid anhydride, 3,3-dimethylbutanoic acid anhydride, 2,2,3-trimethylbutanoic acid anhydride, 2,3,3-trimethylbutanoic acid anhydride, 2,2,3,3-teramethylbutanoic acid anhydride, and 2-ethylbutanoic acid anhydride, as well as analogues of these acid anhydrides.

Examples of the acid anhydride wherein R⁸ and R⁹ are both a cyclic alkyl group include cyclopropane carboxylic acid anhydride, cyclopentane carboxylic acid anhydride, and cyclohexane carboxylic acid anhydride, as well as analogues of these acid anhydrides.

Examples of the acid anhydride wherein R⁸ and R⁹ are both an alkenyl group include acrylic acid anhydride, 2-methylacrylic acid anhydride, 3-methylacrylic acid anhydride, 2,3-dimethylacrylic acid anhydride, 3,3-dimethylacrylic acid anhydride, 2,3,3-trimethylacrylic acid anhydride, 2-phenylacrylic acid anhydride, 3-phenylacrylic acid anhydride, 2,3-diphenylacrylic acid anhydride, 3,3-diphenylacrylic acid anhydride, 3-butenoic acid anhydride, 2-methyl-3-butenoic acid anhydride, 2,2-dimethyl-3-butenoic acid anhydride, 3-methyl-3-butenoic acid anhydride, 2-methyl-3-methyl-3-butenoic acid anhydride, 2,2-dimethyl-3-methyl-3-butenoic acid anhydride, 3-pentenoic acid anhydride, 4-pentenoic acid anhydride, 2-cyclopentenecarboxylic acid anhydride, 3-cyclopentenecarboxylic acid anhydride, and 4-cyclopentenecarboxylic acid anhydride, as well as analogues of these acid anhydrides.

Examples of the acid anhydride wherein R⁸ and R⁹ are both an alkynyl group include propynoic acid anhydride, 3-phenylpropynoic acid anhydride, 2-butynoic acid anhydride, 2-pentynoic acid anhydride, 3-butynoic acid anhydride, 3-pentynoic acid anhydride, and 4-pentynoic acid anhydride, as well as analogues of these acid anhydrides.

Specific examples of the acid anhydride wherein R⁸ and R⁹ are both an aryl group include benzoic acid anhydride, 4-methylbenzoic acid anhydride, 4-ethylbenzoic acid anhydride, 4-*tert*-butylbenzoic acid anhydride, 2-methylbenzoic acid anhydride, 2,4,6-trimethylbenzoic acid anhydride, 1-naphthalenecarboxylic acid anhydride, and 2-naphthalenecarboxylic acid anhydride, as well as analogues of these acid anhydrides.

Further, as examples of the acid anhydride wherein R⁸ and R⁹ are both substituted with a halogen atom, acid anhydrides wherein R⁸ and R⁹ are both substituted with a fluorine atom are mainly exemplified below; however, the exemplified compounds also encompass those acid anhydrides obtained by substituting some or all of their fluorine atoms with a chlorine atom, a bromine atom or an iodine atom.

Examples of the acid anhydride wherein R⁸ and R⁹ are both an open-chain alkyl group substituted with a halogen atom include fluoroacetic acid anhydride, difluoroacetic acid anhydride, trifluoroacetic acid anhydride, 2-fluoropropionic acid anhydride, 2,2-difluoropropionic acid anhydride, 2,3-difluoropropionic acid anhydride, 2,2,3-trifluoropropionic acid anhydride, 2,3,3-trifluoropropionic acid anhydride, 2,2,3,3-tetrapropionic acid anhydride, 2,3,3,3-tetrapropionic acid anhydride, 3-fluoropropionic acid anhydride, 3,3-difluoropropionic acid anhydride, 3,3,3-trifluoropropionic acid anhydride, and perfluoropropionic acid anhydride, as well as analogues of these acid anhydrides.

Examples of the acid anhydride wherein R⁸ and R⁹ are both a cyclic alkyl group substituted with a halogen atom include 2-fluorocyclopentanecarboxylic acid anhydride, 3-fluorocyclopentanecarboxylic acid anhydride, and 4-fluorocyclopentanecarboxylic acid anhydride, as well as analogues of these acid anhydrides.

Examples of the acid anhydride wherein R⁸ and R⁹ are both an alkenyl group substituted with a halogen atom include 2-fluoroacrylic acid anhydride, 3-fluoroacrylic acid anhydride, 2,3-difluoroacrylic acid anhydride, 3,3-difluoroacrylic acid anhydride, 2,3,3-trifluoroacrylic acid anhydride, 2-(trifluoromethyl)acrylic acid anhydride, 3-(trifluoromethyl)acrylic acid anhydride, 2,3-bis(trifluoromethyl)acrylic acid anhydride, 2,3,3-tris(trifluoromethyl)acrylic acid anhydride, 2-(4-fluorophenyl)acrylic acid anhydride, 3-(4-fluorophenyl)acrylic acid anhydride, 2,3-bis(4-fluorophenyl)acrylic acid anhydride, 3,3-bis(4-fluorophenyl)acrylic acid anhydride, 2-fluoro-3-butenoic acid anhydride, 2,2-difluoro-3-butenoic acid anhydride, 3-fluoro-2-butenoic acid anhydride, 4-fluoro-3-butenoic acid anhydride, 3,4-difluoro-3-butenoic acid anhydride, and 3,3,4-trifluoro-3-butenoic acid anhydride, as well as analogues of these acid anhydrides.

Examples of the acid anhydride wherein R⁸ and R⁹ are both an alkynyl group substituted with a halogen atom include 3-fluoro-2-propynoic acid anhydride, 3-(4-fluorophenyl)-2-propynoic acid anhydride, 3-(2,3,4,5,6-pentafluorophenyl)-2-propynoic acid anhydride, 4-fluoro-2-butynoic acid anhydride, 4,4-difluoro-2-butynoic acid anhydride, and 4,4,4-trifluoro-2-butynoic acid anhydride, as well as analogues of these acid anhydrides.

Examples of the acid anhydride wherein R⁸ and R⁹ are both an aryl group substituted with a halogen atom include 4-fluorobenzoic acid anhydride, 2,3,4,5,6-pentafluorobenzoic acid anhydride, and 4-trifluoromethylbenzoic acid anhydride, as well as analogues of these acid anhydrides.

Examples of the acid anhydride wherein R⁸ and R⁹ are both have a substituent containing a functional group, such as ester group, a nitrile group, a ketone group or an ether group, include methoxyformic acid anhydride, ethoxyformic acid anhydride, methyloxalic acid anhydride, ethyloxalic acid anhydride, 2-cyanoacetic acid anhydride, 2-oxopropionic acid anhydride, 3-oxobutanoic acid anhydride, 4-acetylbenzoic acid anhydride, methoxyacetic acid anhydride and 4-methoxybenzoic acid anhydride, as well as analogues of these acid anhydrides.

Next, specific examples of the acid anhydride wherein R⁸ and R⁹ are different from each other will be described.

As R⁸ and R⁹, all combinations of the above-described examples and analogues thereof are considered, and representative examples are described below.

Examples of a combination of open-chain alkyl groups include acetic propionic anhydride, acetic butanoic anhydride, butanoic propionic anhydride, and acetic 2-methylpropionic anhydride.

Examples of a combination of an open-chain alkyl group and a cyclic alkyl group include acetic cyclopentanoic anhydride, acetic cyclohexanoic anhydride, and cyclopentanoic propionic anhydride.

Examples of a combination of an open-chain alkyl group and an alkenyl group include acetic acrylic anhydride, acetic 3-methylacrylic anhydride, acetic 3-butenoic anhydride, and acrylic propionic anhydride.

Examples of a combination of an open-chain alkyl group and an alkynyl group include acetic propynoic anhydride, acetic 2-butynoic anhydride, acetic 3-butynoic anhydride, acetic 3-phenylpropynoic anhydride, and propionic propynoic anhydride.

Examples of a combination of an open-chain alkyl group and an aryl group include acetic benzoic anhydride, acetic 4-methylbenzoic anhydride, acetic 1-naphthalenecarboxylic anhydride, and benzoic propionic anhydride.

Examples of a combination of an open-chain alkyl group and a hydrocarbon group having a functional group include acetic fluoroacetic anhydride, acetic trifluoroacetic anhydride, acetic 4-fluorobenzoic anhydride, fluoroacetic propionic anhydride, acetic alkyloxalic anhydride, acetic 2-cyanoacetic anhydride, acetic 2-oxopropionic anhydride, acetic methoxyacetic anhydride, and methoxyacetic propionic anhydride.

Examples of a combination of cyclic alkyl groups include cyclopentanoic cyclohexanoic anhydride.

Examples of a combination of a cyclic alkyl group and an alkenyl group include acrylic cyclopentanoic anhydride, 3-methylacrylic cyclopentanoic anhydride, 3-butenoic cyclopentanoic anhydride, and acrylic cyclohexanoic anhydride.

Examples of a combination of a cyclic alkyl group and an alkynyl group include propynoic cyclopentanoic anhydride, 2-butynoic cyclopentanoic anhydride, and propynoic cyclohexanoic anhydride.

Examples of a combination of a cyclic alkyl group and an aryl group include benzoic cyclopentanoic anhydride, 4-methylbenzoic cyclopentanoic anhydride, and benzoic cyclohexanoic anhydride.

Examples of a combination of a cyclic alkyl group and a hydrocarbon group having a functional group include fluoroacetic cyclopentanoic anhydride, cyclopentanoic trifluoroacetic anhydride, cyclopentanoic 2-cyanoacetic anhydride, cyclopentanoic methoxyacetic anhydride, and cyclohexanoic fluoroacetic anhydride.

Examples of a combination of alkenyl groups include acrylic 2-methylacrylic anhydride, acrylic 3-methylacrylic anhydride, acrylic 3-butenoic anhydride, and 2-methylacrylic 3-methylacrylic anhydride.

Examples of a combination of an alkenyl group and an alkynyl group include acrylic propynoic anhydride, acrylic 2-butynoic anhydride, and 2-methylacrylic propynoic anhydride.

Examples of a combination of an alkenyl group and an aryl group include acrylic benzoic anhydride, acrylic 4-methylbenzoic anhydride, and 2-methylacrylic benzoic anhydride.

Examples of a combination of an alkenyl group and a hydrocarbon group having a functional group include acrylic fluoroacetic anhydride, acrylic trifluoroacetic anhydride, acrylic 2-cyanoacetic anhydride, acrylic methoxyacetic anhydride, and 2-methylacrylic fluoroacetic anhydride.

Examples of a combination of alkynyl groups include propynoic 2-butynoic anhydride, propynoic 3-butynoic anhydride, and 2-butynoic 3-butynoic anhydride.

Examples of a combination of an alkynyl group and an aryl group include benzoic propynoic anhydride, 4-methylbenzoic propynoic anhydride, and benzoic 2-butynoic anhydride.

Examples of a combination of an alkynyl group and a hydrocarbon group having a functional group include propynoic fluoroacetic anhydride, propynoic trifluoroacetic anhydride, propynoic 2-cyanoacetic anhydride, propynoic methoxyacetic anhydride, and 2-butynoic fluoroacetic anhydride.

Examples of a combination of aryl groups include benzoic 4-methylbenzoic anhydride, benzoic 1-naphthalenecarboxylic anhydride, and 4-methylbenzoic 1-naphthalenecarboxylic anhydride.

Examples of a combination of an aryl group and a hydrocarbon group having a functional group include benzoic fluoroacetic anhydride, benzoic trifluoroacetic anhydride, benzoic 2-cyanoacetic anhydride, benzoic methoxyacetic anhydride, and 4-methylbenzoic fluoroacetic anhydride.

Examples of a combination of hydrocarbon groups having a functional group include fluoroacetic trifluoroacetic anhydride, fluoroacetic 2-cyanoacetic anhydride, fluoroacetic methoxyacetic anhydride, and trifluoroacetic 2-cyanoacetic anhydride.

Among the above-described acid anhydrides forming an open-chain structure, acetic acid anhydride, propionic acid anhydride, 2-methylpropionic acid anhydride, cyclopentanecarboxylic acid anhydride, cyclohexanecarboxylic acid anhydride, acrylic acid anhydride, 2-methylacrylic acid anhydride, 3-methylacrylic acid anhydride, 2,3-dimethylacrylic acid anhydride, 3,3-dimethylacrylic acid anhydride, 3-butenoic acid anhydride, 2-methyl-3-butenoic acid anhydride, propynoic acid anhydride, 2-butynoic acid anhydride, benzoic acid anhydride, 2-methylbenzoic acid anhydride, 4-methylbenzoic acid anhydride, 4-*tert*-butylbenzoic acid anhydride, trifluoroacetic acid anhydride, 3,3,3-trifluoropropionic acid anhydride, 2-(trifluoromethyl)acrylic acid anhydride, 2-(4-fluorophenyl)acrylic acid anhydride, 4-fluorobenzoic acid anhydride, 2,3,4,5,6-pentafluorobenzoic acid anhydride, methoxyformic acid anhydride, and ethoxyformic acid anhydride are preferred, and acrylic acid anhydride, 2-methylacrylic acid anhydride, 3-methylacrylic acid anhydride, benzoic acid anhydride, 2-methylbenzoic acid anhydride, 4-methylbenzoic acid anhydride, 4-*tert*-butylbenzoic acid anhydride, 4-fluorobenzoic acid anhydride, 2,3,4,5,6-pentafluorobenzoic acid anhydride, methoxyformic acid anhydride, and ethoxyformic acid anhydride are more preferred.

These compounds are preferred since they are capable of improving particularly the charge-discharge rate characteristics, the low-temperature output characteristics and the impedance characteristics after a durability test by appropriately forming a bond with lithium oxalate and thereby generating a coating film having excellent durability.

Next, specific examples of the acid anhydride wherein R⁸ and R⁹ are bound with each other to form a cyclic structure will be described.

First, examples of the acid anhydride wherein R⁸ and R⁹ are bound with each other to form a 5-membered ring structure include succinic acid anhydride, 4-methylsuccinic acid anhydride, 4,4-dimethylsuccinic acid anhydride, 4,5-dimethylsuccinic acid anhydride, 4,4,5-trimethylsuccinic acid anhydride, 4,4,5,5-tetramethylsuccinic acid anhydride, 4-vinylsuccinic acid anhydride, 4,5-divinylsuccinic acid anhydride, 4-phenylsuccinic acid anhydride, 4,5-diphenylsuccinic acid anhydride, 4,4-diphenylsuccinic acid anhydride, citraconic acid anhydride, maleic acid anhydride, 4-methylmaleic acid anhydride, 4,5-dimethylmaleic acid anhydride, 4-phenylmaleic acid anhydride, 4,5-diphenylmaleic acid anhydride, itaconic acid anhydride, 5-methylitaconic acid anhydride, 5,5-dimethylitaconic acid anhydride, phthalic acid anhydride, and 3,4,5,6-tetrahydrophthalic acid anhydride, as well as analogues of these acid anhydrides.

Examples of the acid anhydride wherein R⁸ and R⁹ are bound with each other to form a 6-membered ring structure include cyclohexane-1,2-dicarboxylic acid anhydride, 4-cyclohexene-1,2-dicarboxylic acid anhydride, and glutaric acid anhydride, as well as analogues of these acid anhydrides.

Examples of the acid anhydride wherein R⁸ and R⁹ are bound with each other to form other cyclic structure include 5-norbornene-2,3-dicarboxylic acid anhydride, cyclopentanetetracarboxylic acid dianhydride, pyromellitic anhydride, and diglycolic acid anhydride, as well as analogues of these acid anhydrides.

Examples of the acid anhydride wherein R⁸ and R⁹ are bound with each other to form other cyclic structure and substituted with a halogen atom include 4-fluorosuccinic acid anhydride, 4,4-difluorosuccinic acid anhydride, 4,5-difluorosuccinic acid anhydride, 4,4,5-trifluorosuccinic acid anhydride, 4,4,5,5-tetrafluorosuccinic acid anhydride, 4-fluoromaleic acid anhydride, 4,5-difluoromaleic acid anhydride, 5-fluoroitaconic acid anhydride, and 5,5-difluoroitaconic acid anhydride, as well as analogues of these acid anhydrides.

The above-described examples of acid anhydrides substituted with a halogen atom are mainly acid anhydrides substituted with a fluorine atom; however, the exemplified compounds also encompass those acid anhydrides obtained by substituting some or all of their fluorine atoms with a chlorine atom, a bromine atom or an iodine atom.

Among the above-described acid anhydrides wherein R⁸ and R⁹ are bound with each other, succinic acid anhydride, 4-methylsuccinic acid anhydride, 4-vinylsuccinic acid anhydride, 4-phenylsuccinic acid anhydride, citraconic acid anhydride, maleic acid anhydride, 4-methylmaleic acid anhydride, 4-phenylmaleic acid anhydride, itaconic acid anhydride, 5-methylitaconic acid anhydride, glutaric acid anhydride, phthalic acid anhydride, cyclohexane-1,2-dicarboxylic acid anhydride, 5-norbornene-2,3-dicarboxylic acid anhydride, cyclopentanetetracarboxylic acid dianhydride, pyromellitic acid anhydride, 4-fluorosuccinic acid anhydride, 4-fluoromaleic acid anhydride, and 5-fluoroitaconic acid anhydride are preferred, and succinic acid anhydride, 4-methylsuccinic acid anhydride, 4-vinylsuccinic acid anhydride, citraconic acid anhydride, cyclohexane-1,2-dicarboxylic acid anhydride, 5-norbornene-2,3-dicarboxylic acid anhydride, cyclopentanetetracarboxylic acid dianhydride, pyromellitic acid anhydride, and 4-fluorosuccinic acid anhydride are more preferred. These compounds are preferred since they particularly improve the capacity retention rate after a durability test by appropriately forming a bond with lithium oxalate and thereby generating a coating film having excellent durability.

The molecular weight of the carboxylic acid anhydride is not restricted and may be set arbitrarily as long as the effects of the invention according to the present embodiment are not markedly impaired; however, it is usually 90 or higher, preferably 95 or higher, but usually 300 or lower, preferably 200 or lower. When the molecular weight of the carboxylic acid anhydride is in this range, an increase in the viscosity of the electrolyte solution can be suppressed and the coating film density is optimized; therefore, the durability can be appropriately improved without reducing the low-temperature output.

A method of producing the carboxylic acid anhydride is also not particularly restricted, and the carboxylic acid anhydride can be produced by selecting any known method. In the nonaqueous electrolyte solution, any of the above-exemplified carboxylic acid anhydrides may be incorporated singly, or two or more thereof may be incorporated in any combination at any ratio.

The content of the carboxylic acid anhydride(s) in the nonaqueous electrolyte solution is not particularly restricted and may be set arbitrarily as long as the effects of the invention according to the present embodiment are not markedly impaired; however, in the nonaqueous electrolyte solution, the carboxylic acid anhydride(s) is/are desirably incorporated at a concentration of usually 0.01% by mass or higher, preferably 0.1% by mass or higher, but usually 5% by mass or lower, preferably 3% by mass or lower. When the content of the carboxylic acid anhydride(s) is in this range, not only a cycle characteristics-improving effect is likely to be exerted and a suitable reactivity is attained; therefore, the battery characteristics are likely to be improved.

### <A1-7-6. Overcharge Inhibitor>

In the nonaqueous electrolyte solution, an overcharge inhibitor can be used for the purpose of effectively inhibiting rupture and ignition of the nonaqueous electrolyte secondary battery in an overcharged state and the like.

Examples of the overcharge inhibitor include: aromatic compounds, such as biphenyl, alkylbiphenyls, terphenyl, partially hydrogenated terphenyl, cyclohexylbenzene, *t*-butylbenzene, *t*-amylbenzene, diphenyl ether, dibenzofuran, diphenylcyclohexane, and 1,1,3-trimethyl-3-phenylindane; partially fluorinated products of these aromatic compounds, such as 2-fluorobiphenyl, *o*-cyclohexylfluorobenzene, and *p*-cyclohexylfluorobenzene; fluorine-containing anisole compounds, such as 2,4-difluoroanisole, 2,5-difluoroanisole, 2,6-difluoroanisole, and 3,5-difluoroanisole; aromatic acetates, such as 3-propylphenyl acetate, 2-ethylphenyl acetate, benzylphenyl acetate, methylphenyl acetate, benzyl acetate, and phenethylphenyl acetate; and aromatic carbonates, such as diphenyl carbonate and methylphenyl carbonate. Thereamong, biphenyl, alkylbiphenyls, terphenyl, partially hydrogenated terphenyl, cyclohexylbenzene, *t*-butylbenzene, *t*-amylbenzene, diphenyl ether, dibenzofuran, diphenylcyclohexane, 1,1,3-trimethyl-3-phenylindane, 3-propylphenyl acetate, 2-ethylphenyl acetate, benzylphenyl acetate, methylphenyl acetate, benzyl acetate, phenethylphenyl acetate, diphenyl carbonate, and methylphenyl carbonate are preferred. These overcharge inhibitors may be used singly, or in combination of two or more thereof. In the case of using two or more overcharge inhibitors in combination, from the standpoint of the balance between the overcharge-inhibiting properties and the high-temperature storage characteristics, it is preferred to use a combination of cyclohexylbenzene and *t*-butylbenzene or *t*-amylbenzene, or a combination of at least one selected from oxygen-free aromatic compounds, such as biphenyl, alkylbiphenyls, terphenyl, partially hydrogenated terphenyl, cyclohexylbenzene, *t*-butylbenzene and *t*-amylbenzene, and at least one selected from oxygen-containing aromatic compounds, such as diphenyl ether and dibenzofuran.

The amount of the overcharge inhibitor to be incorporated is not particularly restricted and may be set arbitrarily as long as the effects of the invention according to the present embodiment are not markedly impaired. The overcharge inhibitor is incorporated in an amount of usually 0.1% by mass or greater, preferably 0.2% by mass or greater, more preferably 0.3% by mass or greater, still more preferably 0.5% by mass or greater, but usually 5% by mass or less, preferably 4.8% by mass or less, more preferably 4.5% by mass or less, with respect to a total amount of the nonaqueous electrolyte solution. When the amount of the overcharge inhibitor is in this range, the effect of the overcharge inhibitor is likely to be expressed sufficiently, and the battery characteristics such as high-temperature storage characteristics are improved.

### <A1-7-7. Other Auxiliary Agents>

In the nonaqueous electrolyte solution, known other auxiliary agents can be used. Examples of other auxiliary agents include:
carbonate compounds, such as erythritan carbonate, spiro-bis-dimethylene carbonate, and methoxyethyl methyl carbonate; triple bond-containing compounds, such as methyl-2-propynyl oxalate, ethyl-2-propynyl oxalate, bis(2-propynyl)oxalate, 2-propynyl acetate, 2-propynyl formate, 2-propynyl methacrylate, di(2-propynyl)glutarate, methyl-2-propynyl carbonate, ethyl-2-propynyl carbonate, bis(2-propynyl)carbonate, 2-butyne-1,4-diyl-dimethane sulfonate, 2-butyne-1,4-diyl-diethane sulfonate, 2-butyne-1,4-diyl-diformate, 2-butyne-1,4-diyl-diacetate, 2-butyne-1,4-diyl-dipropionate, 4-hexadiyne-1,6-diyl-dimethane sulfonate, 2-propynyl-methane sulfonate, 1-methyl-2-propynyl-methane sulfonate, 1,1-dimethyl-2-propynyl-methane sulfonate, 2-propynyl-ethane sulfonate, 2-propynyl-vinyl sulfonate, 2-propynyl-2-(diethoxyphosphoryl)acetate, 1-methyl-2-propynyl-2-(diethoxyphosphoryl)acetate, and 1,1-dimethyl-2-propynyl-2-(diethoxyphosphoryl)acetate; spiro compounds, such as 2,4,8,10-tetraoxaspiro[5.5]undecane and 3,9-divinyl-2,4,8,10-tetraoxaspiro[5.5]undecane; sulfur-containing compounds, such as ethylene sulfite, methyl fluorosulfonate, ethyl fluorosulfonate, methyl methanesulfonate, ethyl methanesulfonate, busulfan, sulfolene, ethylene sulfate, vinylene sulfate, diphenyl sulfone, *N*,*N-*dimethylmethane sulfonamide, *N*,*N*-diethylmethane sulfonamide, trimethylsilyl methyl sulfate, trimethylsilyl ethyl sulfate, and 2-propynyl-trimethylsilyl sulfate; isocyanate compounds, such as 2-isocyanatoethyl acrylate, 2-isocyanatoethyl methacrylate, 2-isocyanatoethyl crotonate, 2-(2-isocyanatoethoxy)ethyl acrylate, 2-(2-isocyanatoethoxy)ethyl methacrylate, and 2-(2-isocyanatoethoxy)ethyl crotonate; nitrogen-containing compounds, such as 1-methyl-2-pyrrolidinone, 1-methyl-2-piperidone, 3-methyl-2-oxazolidinone, 1,3-dimethyl-2-imidazolidinone, and *N*-methylsuccinimide; hydrocarbon compounds, such as heptane, octane, nonane, decane, and cycloheptane; fluorine-containing aromatic compounds, such as fluorobenzene, difluorobenzene, hexafluorobenzene, benzotrifluoride, o-fluorotoluene, *m*-fluorotoluene, *p*-fluorotoluene, 1,2-bis(trifluoromethyl)benzene, 1-trifluoromethyl-2-difluoromethylbenzene, 1,3-bis(trifluoromethyl)benzene, 1-trifluoromethyl-3-difluoromethylbenzene, 1,4-bis(trifluoromethyl)benzene, 1-trifluoromethyl-4-difluoromethylbenzene, 1,3,5 -tris(trifluoromethyl)benzene, pentafluorophenylmethane sulfonate, pentafluorophenyltrifluoromethane sulfonate, pentafluorophenyl acetate, pentafluorophenyl trifluoroacetate, and methylpentafluorophenyl carbonate; silane compounds, such as tris(trimethylsilyl)borate, tris(trimethoxysilyl)borate, tris(trimethylsilyl)phosphate, tris(trimethoxysilyl)phosphate, dimethoxyaluminoxytrimethoxysilane, diethoxyaluminoxytriethoxysilane, dipropoxyaluminoxytriethoxysilane, dibutoxyaluminoxytrimethoxysilane, dibutoxyaluminoxytriethoxysilane, titanium tetrakis(trimethylsiloxide), and titanium tetrakis(triethylsiloxide); ester compounds, such as 2-propynyl 2-(methanesulfonyloxy)propionate, 2-methyl 2-(methanesulfonyloxy)propionate, 2-ethyl 2-(methanesulfonyloxy)propionate, 2-propynyl methanesulfonyloxyacetate, 2-methyl methanesulfonyloxyacetate, and 2-ethyl methanesulfonyloxyacetate; and lithium salts, such as lithium ethylmethyloxycarbonyl phosphonate, lithium ethylethyloxycarbonyl phosphonate, lithium ethyl-2-propynyloxycarbonyl phosphonate, lithium ethyl-1-methyl-2-propynyloxycarbonyl phosphonate, and lithium ethyl-1,1-dimethyl-2-propynyloxycarbonyl phosphonate. These other auxiliary agents may be used singly, or in combination of two or more thereof. By adding these auxiliary agents, the capacity retention characteristics after high-temperature storage and the cycle characteristics can be improved.

The amount of the other auxiliary agent(s) to be incorporated is not particularly restricted and may be set arbitrarily as long as the effects of the invention according to the present embodiment are not markedly impaired. The other auxiliary agent(s) is/are incorporated in an amount of usually 0.01% by mass or greater, preferably 0.1% by mass or greater, more preferably 0.2% by mass or greater, but usually 5% by mass or less, preferably 3% by mass or less, more preferably 1% by mass or less, with respect to a total amount of the nonaqueous electrolyte solution. When the amount of the other auxiliary agent(s) is in this range, the effects of the other auxiliary agent(s) are likely to be expressed sufficiently, so that the high-temperature storage stability tends to be improved.

### <A2. Nonaqueous Electrolyte Secondary Battery>

The nonaqueous secondary battery according to another embodiment of the present invention is a nonaqueous electrolyte secondary battery including, at least:
a positive electrode capable of absorbing and releasing metal ions;
a negative electrode which is capable of absorbing and releasing metal ions and includes a negative electrode active material that contains a metal compound-based material containing a metal alloyable with Li, and a graphite; and
a nonaqueous electrolyte solution containing a nonaqueous solvent and an electrolyte dissolved in the nonaqueous solvent,
wherein the nonaqueous electrolyte solution is the above-described nonaqueous electrolyte solution.

### <A2-1. Battery Configuration>

The nonaqueous electrolyte secondary battery has the same configuration as that of a conventionally known nonaqueous electrolyte secondary battery, except for the above-described nonaqueous electrolyte solution. The nonaqueous electrolyte secondary battery usually has a form in which the positive electrode and the negative electrode are laminated via a porous membrane (separator) impregnated with the nonaqueous electrolyte solution, and these components are housed in a casing (outer package). Accordingly, the shape of the nonaqueous electrolyte secondary battery is not particularly restricted and may be any of, for example, a cylindrical shape, a prismatic shape, a laminated shape, a coin shape, and a large-sized shape.

### <A2-2. Nonaqueous Electrolyte Solution>

As the nonaqueous electrolyte solution, the above-described nonaqueous electrolyte solution is used. It is noted here, however, that other nonaqueous electrolyte solution can also be added to the nonaqueous electrolyte solution within a range that does not depart from the gist of the invention according to the present embodiment.

### <A2-3. Negative Electrode>

The negative electrode has a negative electrode active material layer on a current collector, and the negative electrode active material layer is capable of absorbing and releasing metal ions since it contains a negative electrode active material that is capable of electrochemically absorbing and releasing metal ions. The negative electrode active material will now be described.

As the negative electrode active material, a material that is capable of electrochemically absorbing and releasing metal ions, such as lithium ions, is used. Specific examples thereof include a carbonaceous material, a metal compound-based material and a lithium-containing metal composite oxide material, and the carbonaceous material preferably contains a graphite. Any of these materials may be used singly, or two or more thereof may be used in any combination.

### <A2-3-1. Carbonaceous Material>

The carbonaceous material used as the negative electrode active material is preferably one selected from the following (1) to (4) from the standpoint of attaining a good balance of the initial irreversible capacity and the high-current-density charge-discharge characteristics:
(1) natural graphite;
(2) a carbonaceous material obtained by heat-treating an artificial carbonaceous substance and an artificial graphitic substance in a range of 400 to 3,200°C one or more times;
(3) a carbonaceous material yielding a negative electrode active material layer that is composed of at least two carbonaceous substances different in crystallinity and/or has an interface where the carbonaceous substances different in crystallinity are in contact with each other; and
(4) a carbonaceous material yielding a negative electrode active material layer that is composed of at least two carbonaceous substances different in orientation and/or has an interface where the carbonaceous substances different in orientation are in contact with each other.

Any of these carbonaceous materials (1) to (4) may be used singly, or two or more thereof may be used in any combination at any ratio.

Specific examples of the artificial carbonaceous substance and the artificial graphitic substance of (2) include: natural graphite; coal-based coke; petroleum coke; coal-based pitch, petroleum pitch, and oxidation products of these pitches; needle coke, pitch coke, and carbon materials obtained by partial graphitization of these cokes; pyrolysis products of organic substances, such as furnace black, acetylene black, and pitch-based carbon fibers; carbonizable organic substances and carbonization products thereof; and solutions obtained by dissolving a carbonizable organic substance in a low-molecular-weight organic solvent, such as benzene, toluene, xylene, quinoline or *n*-hexane, and carbonization products thereof.

### <A2-3-2. Constitution, Physical Properties, and Preparation Method of Carbonaceous Negative Electrode>

With regard to the properties of the carbonaceous material, as well as the negative electrode containing the carbonaceous material, a method of producing the electrode, a current collector and a nonaqueous electrolyte secondary battery, it is desired that one or more of the following items (1) to (13) be satisfied at the same time.

### (1) X-ray Parameter

The value of d (interlayer distance) of lattice planes ((002) planes) of the carbonaceous material, which is determined by X-ray diffractometry in accordance with the method of the Japan Society for the Promotion of Science, is usually 0.335 to 0.340 nm, 0.335 to 0.338 nm in particular, and especially preferably 0.335 to 0.337 nm. Further, the crystallite size (Lc), which is determined by X-ray diffractometry in accordance with the method of the Japan Society for the Promotion of Science, is usually 1.0 nm or larger, preferably 1.5 nm or larger, particularly preferably 2 nm or larger.

### (2) Volume-Based Average Particle Size

The volume-based average particle size (median diameter d50) of the carbonaceous material is not particularly restricted; however, it is usually 1 µm or larger, preferably 3 µm or larger, more preferably 5 µm or larger, particularly preferably 7 µm or larger, but usually 100 µm or smaller, preferably 50 µm or smaller, more preferably 40 µm or smaller, still more preferably 30 µm or smaller, particularly preferably 25 µm or smaller.

The average particle size (d50) can be determined by a laser diffraction-scattering particle size distribution analysis method or the like.

The volume-based average particle size is measured by dispersing carbon powder in a 0.2%-by-mass aqueous solution (about 10 mL) of polyoxyethylene (20) sorbitan monolaurate, which is a surfactant, using a laser diffraction-scattering particle size distribution analyzer (e.g., LA-700 manufactured by HORIBA, Ltd.). The median diameter d50 determined by this measurement is defined as the volume-based average particle size of the carbonaceous material of the present embodiment.

### (3) Raman R Value and Raman Half- Value Width

The Raman R value of the carbonaceous material, which is determined by argon ion laser Raman spectrometry, is usually 0.01 or larger, preferably 0.03 or larger, more preferably 0.1 or larger, but usually 1.5 or smaller, preferably 1.2 or smaller, more preferably 1 or smaller, particularly preferably 0.5 or smaller.

When the Raman R value is smaller than the above-described range, the number of sites for Li intercalation between layers associated with charging and discharging may be reduced due to an excessively high crystallinity of the particle surface. In other words, the charge acceptability may be deteriorated. In addition, in cases where the carbonaceous material is applied to a current collector and the density of the resulting negative electrode is increased by subsequent pressing, crystals are likely to be oriented in the direction parallel to the electrode plate, and this may deteriorate the load characteristics. Meanwhile, when the Raman R value is larger than the above-described range, the crystallinity of the particle surface is reduced and the reactivity of the particle surface with the nonaqueous electrolyte solution is increased, which may result in a reduction in the efficiency and an increase in the gas generation.

The Raman half-value width of the carbonaceous material around 1,580 cm⁻¹ is not particularly restricted; however, it is usually 10 cm⁻¹ or greater, preferably 15 cm⁻¹ or greater, but usually 100 cm⁻¹ or less, preferably 80 cm⁻¹ or less, more preferably 60 cm⁻¹ or less, particularly preferably 40 cm⁻¹ or less.

When the Raman half-value width is less than the above-described range, the number of sites for Li intercalation between layers associated with charging and discharging may be reduced due to an excessively high crystallinity of the particle surface. In other words, the charge acceptability may be deteriorated. In addition, in cases where the carbonaceous material is applied to a current collector and the density of the resulting negative electrode is increased by subsequent pressing, crystals are likely to be oriented in the direction parallel to the electrode plate, and this may deteriorate the load characteristics. Meanwhile, when the Raman half-value width is greater than the above-described range, the crystallinity of the particle surface is reduced and the reactivity of the particle surface with the nonaqueous electrolyte solution is increased, which may result in a reduction in the efficiency and an increase in the gas generation.

A Raman spectrum is measured using a Raman spectrometer (e.g., a Raman spectrometer manufactured by JASCO Corporation) in which a sample is allowed to free-fall and thereby loaded to a measuring cell, and the measurement is performed while irradiating the surface of the sample in the cell with an argon-ion laser beam and rotating the cell in a plane perpendicular to the laser beam. For the thus obtained Raman spectrum, the intensity IA of a peak PA around 1,580 cm⁻¹ and the intensity IB of a peak PB around 1,360 cm⁻¹ are determined, and the intensity ratio R (R = IB/IA) is calculated. The thus calculated Raman R value is defined as the Raman R value of the carbonaceous material in the present embodiment. Further, the full width at half maximum of the peak PA around 1,580 cm⁻¹ of the thus obtained Raman spectrum is measured, and this is defined as the Raman half-value width of the carbonaceous material in the present embodiment.

The conditions for the above-described Raman spectrometry are as follows.
- Argon-ion laser wavelength: 514.5 nm
- Laser power on sample: 15 to 25 mW
- Resolution: 10 to 20 cm⁻¹
- Measurement range: 1,100 cm⁻¹ to 1,730 cm⁻¹
- Raman R value and Raman half-value width analysis: background processing
- Smoothing : simple average, 5-point convolution

### (4) BET Specific Surface Area

The BET specific surface area of the carbonaceous material, which is determined by a BET method, is usually 0.1 m²·g⁻¹ or larger, preferably 0.7 m²·g⁻¹ or larger, more preferably 1.0 m²·g⁻¹ or larger, particularly preferably 1.5 m²·g⁻¹ or larger, but usually 100 m²·g⁻¹ or smaller, preferably 25 m²·g⁻¹ or smaller, more preferably 15 m²·g⁻¹ or smaller, particularly preferably 10 m²·g⁻¹ or smaller.

With the value of the BET specific surface area being smaller than this range, when the carbonaceous material is used as a negative electrode material, the lithium acceptability in charging is likely to be poor and lithium is thus readily precipitated on the electrode surface, which can deteriorate the stability. Meanwhile, with the value of the BET specific surface area being larger than the above-described range, when the carbonaceous material is used as a negative electrode material, its reactivity with the nonaqueous electrolyte solution is increased and this is likely to result in an increase in the gas generation, making it difficult to obtain a preferred battery in some cases.

The determination of the specific surface area by the BET method is performed by a gas-flowing nitrogen adsorption single-point BET method where a sample is preliminary dried at 350°C for 15 minutes in a nitrogen stream, and the specific surface area thereof is subsequently measured using a surface area meter (e.g., a fully automatic surface area analyzer manufactured by Ohkura Riken Co., Ltd.) with a nitrogen-helium mixed gas precisely adjusted to have a relative nitrogen pressure value of 0.3 with respect to the atmospheric pressure. The thus determined specific surface area is defined as the BET specific surface area of the carbonaceous material in the present embodiment.

### (5) Circularity

When the circularity of the carbonaceous material is measured in terms of the degree of sphericity, the value thereof preferably falls in the below-described range. It is noted here that the circularity is defined as "Circularity = (Circumferential length of equivalent circle having the same area as projected particle shape)/(actual circumferential length of projected particle shape)", and the carbonaceous material is theoretically true-spherical when the circularity is 1.

The circularity of the carbonaceous material having a particle size in range of 3 to 40 µm is desirably as close to being 1 as possible, and the circularity is preferably 0.1 or higher, more preferably 0.5 or higher, still more preferably 0.8 or higher, particularly preferably 0.85 or higher, most preferably 0.9 or higher.

The high-current-density charge-discharge characteristics are improved as the circularity increases. Accordingly, when the circularity is lower than the above-described range, the packing property of the negative electrode active material is deteriorated and the resistance between the particles is increased, as a result of which the short-term high-current-density charge-discharge characteristics may be deteriorated.

The circularity is measured using a flow-type particle image analyzer (e.g., FPIA manufactured by Sysmex Corporation). About 0.2 g of a sample is dispersed in a 0.2%-by-mass aqueous solution (about 50 mL) of polyoxyethylene (20) sorbitan monolaurate, which is a surfactant, and irradiated with 28-kHz ultrasonic waves for 1 minute at an output of 60 W, after which the detection range is designated to be 0.6 to 400 µm, and the measurement is performed for those particles having a particle size in a range of 3 to 40 µm. The thus determined circularity is defined as the circularity of the carbonaceous material in the present embodiment.

A method of improving the circularity is not particularly restricted; however, the carbonaceous material is preferably allowed to have a spherical shape by a spheroidization treatment since this makes the shape of interparticle voids more uniform when an electrode is produced from the carbonaceous material. Examples of the spheroidization treatment include a method in which a shearing force or a compressive force is applied so as to mechanically make the shape of particles close to being spherical, and a mechanical/physical treatment method in which plural fine particles are granulated by means of a binder or the adhesive force of the fine particles themselves.

### (6) Tap Density

The tap density of the carbonaceous material is usually 0.1 g·cm⁻³ or higher, preferably 0.5 g·cm⁻³ or higher, more preferably 0.7 g·cm⁻³ or higher, particularly preferably 1 g·cm⁻³ or higher, but usually 2 g·cm⁻³ or lower, preferably 1.8 g·cm⁻³ or lower, particularly preferably 1.6 g·cm⁻³ or lower.

With the tap density being lower than the above-described range, it is difficult to increase the packing density when the carbonaceous material is used as the negative electrode, and a high-capacity battery cannot be obtained in some cases. Meanwhile, when the tap density is higher than the above-described range, the amount of interparticle voids in the electrode is excessively small and conductivity between the particles is thus unlikely to be ensured, making it difficult to attain preferred battery characteristics in some cases.

As for the measurement of the tap density, after filling a 20-cm³ tapping cell with a sample up to the upper end of the cell by dropping the sample thereto through a sieve having a mesh size of 300 µm, the cell is tapped 1,000 times at a stroke length of 10 mm using a powder density meter (e.g., TAP DENSER manufactured by Seishin Enterprise Co., Ltd.), and the tap density is calculated from the resulting volume and the mass of the sample. The thus calculated tap density is defined as the tap density of the carbonaceous material in the present embodiment.

### (7) Orientation Ratio

The orientation ratio of the carbonaceous material is usually 0.005 or higher, preferably 0.01 or higher, more preferably 0.015 or higher, but usually 0.67 or lower. When the orientation ratio is lower than this range, the high-density charge-discharge characteristics may be deteriorated. It is noted here that the upper limit of this range is a theoretical upper limit value of the orientation ratio of the carbonaceous material.

The orientation ratio is measured by X-ray diffractometry for a sample that has been pressure-molded. The sample in an amount of 0.47 g is loaded to a molding machine of 17 mm in diameter and compressed at 58.8 MN·m⁻², and the resulting molded product is set using clay so as to be on the same plane as the surface of a measurement sample holder, followed by measurement of X-ray diffraction. From the thus obtained peak intensities of (110) diffraction and (004) diffraction of carbon, a ratio represented by "(110) diffraction peak intensity/(004) diffraction peak intensity" is calculated. The thus calculated orientation ratio is defined as the orientation ratio of the carbonaceous material in the present embodiment.

The conditions for the X-ray diffractometry are as follows. It is noted here that "2θ" represents a diffraction angle.
- Target: Cu (Kα rays) graphite monochromator
- Slits:
   Divergence slit = 0.5°
   Receiving slit = 0.15 mm
   Scattering slit = 0.5°
- Measurement range and step angle/measuring time:
   (110) plane: 75° ≤ 2θ ≤ 80°, 1°/60 sec
   (004) plane: 52° ≤ 2θ ≤ 57°, 1°/60 sec

### (8) Aspect Ratio (Powder)

The aspect ratio of the carbonaceous material is usually 1 or higher, but usually 10 or lower, preferably 8 or lower, more preferably 5 or lower. When the aspect ratio is higher than this range, a uniform coating surface cannot be obtained due to streaking in the electrode plate formation, and this may lead to deterioration of the high-current-density charge-discharge characteristics. It is noted here that the lower limit of this range is a theoretical lower limit value of the aspect ratio of the carbonaceous material.

The aspect ratio is measured by observing the particles of the carbonaceous material at a magnification under a scanning electron microscope. Fifty graphite particles immobilized on the end surface of a metal having a thickness of 50 µm or less are selected arbitrarily and, for each of the particles of the carbonaceous material observed in a three-dimensional manner, the largest diameter (P) and the smallest diameter (Q) perpendicular to the diameter (P) are measured while rotating and tilting a stage on which the sample is immobilized, after which the average value of P/Q is determined. The thus determined aspect ratio (P/Q) is defined as the aspect ratio of the carbonaceous material in the present embodiment.

### (9) Production of Electrode

For the production of the negative electrode, any known method can be employed as long as it does not markedly limit the effects of the invention according to the present embodiment. For example, a binder, a solvent and, as required, a thickening agent, a conductive material, a filler and the like are added to the negative electrode active material to prepare a slurry, and this slurry is subsequently coated and dried onto a current collector, followed by pressing of the resultant, whereby a negative electrode can be formed.

The thickness of the negative electrode active material layer on one side immediately before the step of injecting the nonaqueous electrolyte solution in the battery is usually 15 µm or greater, preferably 20 µm or greater, more preferably 30 µm or greater, but usually 150 µm or less, preferably 120 µm or less, more preferably 100 µm or less. When the thickness of the negative electrode active material layer is greater than this range, the high-current-density charge-discharge characteristics may be deteriorated since the nonaqueous electrolyte solution is unlikely to permeate to the vicinity of the current collector interface. Meanwhile, when the thickness is less than this range, the battery capacity may be reduced due to an increase in the volume ratio of the current collector with respect to the negative electrode active material. The negative electrode active material may be roll-molded into a sheet electrode, or compression-molded into a pellet electrode.

### (10) Current Collector

As the current collector on which the negative electrode active material is retained, any known current collector can be used. Examples of the current collector of the negative electrode include metal materials such as copper, nickel, stainless steel, and nickel-plated steel, among which copper is particularly preferred because of its processability and cost.

When the current collector is a metal material, the current collector may have any shape of, for example, a metal foil, a metal cylinder, a metal coil, a metal sheet, a metal thin film, an expanded metal, a punched metal, and a foamed metal. Thereamong, the current collector is preferably a metal thin film, more preferably a copper foil, still more preferably a rolled copper foil obtained by a rolling method or an electrolytic copper foil obtained by an electrolytic method, either of which can be used as the current collector.

In the case of a copper foil having a thickness of less than 25 µm, a copper alloy (e.g., phosphor bronze, titanium copper, Corson alloy, or Cu-Cr-Zr alloy) that has a higher strength than pure copper can be used.

The current collector may have any thickness; however, the thickness is usually 1 µm or greater, preferably 3 µm or greater, more preferably 5 µm or greater, but usually 1 mm or less, preferably 100 µm or less, more preferably 50 µm or less. When the thickness of the metal coating film is less than 1 µm, a reduction in the strength makes it difficult to perform coating in some cases. Meanwhile, when the thickness is greater than 1 mm, the shape of the electrode, such as a rolled shape, may be deformed. The current collector may be in the form of a mesh as well.

### (11) Thickness Ratio of Current Collector and Negative Electrode Active Material Layer

The thickness ratio of the current collector and the negative electrode active material layer is not particularly restricted; however, the value of "(Thickness of negative electrode active material layer on one side immediately before injection of nonaqueous electrolyte solution)/(Thickness of current collector)" is usually 150 or smaller, preferably 20 or smaller, more preferably 10 or smaller, but usually 0.1 or larger, preferably 0.4 or larger, more preferably 1 or larger.

When the thickness ratio of the current collector and the negative electrode active material layer is higher than the above-described range, the current collector may generate heat due to Joule's heat during high-current-density charging/discharging. Meanwhile, when the thickness ratio is lower than the above-described range, the battery capacity may be reduced due to an increase in the volume ratio of the current collector with respect to the negative electrode active material.

### (12) Electrode Density

The structure of an electrode formed from the negative electrode active material is not particularly restricted; however, the density of the negative electrode active material existing on the current collector is preferably 1 g·cm⁻³ or higher, more preferably 1.2 g·cm⁻³ or higher, still more preferably 1.3 g·cm⁻³ or higher, but usually 2.2 g·cm⁻³ or lower, preferably 2.1 g·cm⁻³ or lower, more preferably 2.0 g·cm⁻³ or lower, particularly preferably 1.9 g·cm⁻³ or lower. When the density of the negative electrode active material existing on the current collector is higher than this range, particles of the negative electrode active material may be destructed to cause an increase in the initial irreversible capacity and a reduction in the permeability of the nonaqueous electrolyte solution to the vicinity of the interface between the current collector and the negative electrode active material, as a result of which the high-current-density charge-discharge characteristics may be deteriorated. Meanwhile, when the density of the negative electrode active material is lower than the above-described range, the conductivity between the negative electrode active materials is reduced and the battery resistance is thus increased, as a result of which the capacity per unit volume may be reduced.

### (13) Binder

The binder used for binding the negative electrode active material is not particularly restricted as long as it is a material that is stable against the nonaqueous electrolyte solution and the solvent used in the electrode production.

Specific examples of the binder include: resin-based polymers, such as polyethylene, polypropylene, polyethylene terephthalate, polymethyl methacrylate, aromatic polyamides, cellulose, and nitrocellulose; rubbery polymers, such as SBR (styrene-butadiene rubbers), isoprene rubbers, butadiene rubbers, fluororubbers, NBR (acrylonitrile-butadiene rubbers), and ethylene-propylene rubbers; styrene-butadiene-styrene block copolymers, and hydrogenation products thereof; thermoplastic elastomeric polymers, such as EPDM (ethylene-propylene-diene terpolymers), styrene-ethylene-butadiene-styrene copolymers, styrene-isoprene-styrene block copolymers, and hydrogenation products thereof; soft resinous polymers, such as syndiotactic 1,2-polybutadiene, polyvinyl acetate, ethylene-vinyl acetate copolymers, and propylene-*α*-olefin copolymers; fluorocarbon-based polymers, such as polyvinylidene fluoride, polytetrafluoroethylene, fluorinated polyvinylidene fluoride, and tetrafluoroethylene-ethylene copolymers; and polymer compositions having ionic conductivity for alkali metal ions (particularly lithium ions). Any of these binders may be used singly, or two or more thereof may be used in any combination at any ratio.

The type of the solvent used for the slurry formation is not particularly restricted as long as the solvent is capable of dissolving or dispersing the negative electrode active material and the binder as well as the thickening agent and the conductive material that are used as required, and either an aqueous solvent or an organic solvent may be used.

Examples of the aqueous solvent include water and alcohols, and examples of the organic solvent include N-methylpyrrolidone (NMP), dimethylformamide, dimethylacetamide, methyl ethyl ketone, cyclohexanone, methyl acetate, methyl acrylate, diethyltriamine, *N*,*N*-dimethylaminopropylamine, tetrahydrofuran (THF), toluene, acetone, diethyl ether, dimethylacetamide, hexamethylphosphoramide, dimethyl sulfoxide, benzene, xylene, quinoline, pyridine, methylnaphthalene, and hexane.

Particularly, when an aqueous solvent is used, it is preferred to add a dispersant or the like in combination with the thickening agent and prepare a slurry using a latex such as SBR. Any of the above-described solvents may be used singly, or two or more thereof may be used in any combination at any ratio.

The ratio of the binder with respect to the negative electrode active material is not particularly restricted; however, it is preferably 0.1% by mass or higher, more preferably 0.5% by mass or higher, still more preferably 0.6% by mass or higher, but usually 20% by mass or lower, preferably 15% by mass or lower, more preferably 10% by mass or lower, particularly preferably 8% by mass or lower. When the ratio of the binder with respect to the negative electrode active material is higher than this range, an increase in the ratio of the binder not contributing to the battery capacity may cause a reduction in the battery capacity. Meanwhile, a ratio of lower than the above-described range may lead to a reduced strength of the negative electrode.

Particularly, when the binder contains a rubbery polymer represented by SBR as a main component, the ratio of the binder with respect to the negative electrode active material is usually 0.1% by mass or higher, preferably 0.5% by mass or higher, more preferably 0.6% by mass or higher, but usually 5% by mass or lower, preferably 3% by mass or lower, more preferably 2% by mass or lower.

Further, when the binder contains a fluorocarbon-based polymer represented by polyvinylidene fluoride as a main component, the ratio of the binder with respect to the negative electrode active material is usually 1% by mass or higher, preferably 2% by mass or higher, more preferably 3% by mass or higher, but usually 15% by mass or lower, preferably 10% by mass or lower, more preferably 8% by mass or lower.

A thickening agent is usually used for the purpose of preparing the viscosity of the resulting slurry. The thickening agent is not particularly restricted, and specific examples thereof include carboxymethyl cellulose, methyl cellulose, hydroxymethyl cellulose, ethyl cellulose, polyvinyl alcohol, oxidized starch, phosphorylated starch, casein, and salts thereof. Any of these thickening agents may be used singly, or two or more thereof may be used in any combination at any ratio.

In cases where a thickening agent is used, the ratio thereof with respect to the negative electrode active material is not particularly restricted; however, it is usually 0.1% by mass or higher, preferably 0.5% by mass or higher, more preferably 0.6% by mass or higher, but usually 5% by mass or lower, preferably 3% by mass or lower, more preferably 2% by mass or lower. When the ratio of the thickening agent with respect to the negative electrode active material is lower than this range, the coatability may be markedly reduced. Meanwhile, when this ratio is higher than the above-described range, a reduction in the ratio of the negative electrode active material in the negative electrode active material layer may cause a reduction in the battery capacity and an increase in the resistance between the negative electrode active material particles.

### <A2-3-3. Metal Compound-Based Material, and Constitution, Physical Properties and Preparation Method of Negative Electrode Containing Metal Compound-Based Material>

The metal compound-based material used in the negative electrode active material is not particularly restricted as long as it contains a metal that is alloyable with lithium. The form of the metal compound-based material is also not particularly restricted as long as it is capable of absorbing and releasing metal ions such as lithium ions, and the metal compound-based material may be a simple metal forming a lithium alloy or an alloy thereof, or any compound thereof such as an oxide, a carbide, a nitride, a silicide, a sulfide or a phosphide. Examples of such a metal compound-based material include metal compound-based materials that contain a metal such as Ag, Al, Ba, Bi, Cu, Ga, Ge, In, Ni, Pb, Sb, Si, Sn, Sr, or Zn. Thereamong, the metal compound-based material is preferably a simple metal forming a lithium alloy or an alloy thereof, more preferably a material containing a metal or metalloid element of Group 13 or 14 (i.e. excluding carbon), still more preferably a simple metal of silicon (Si), tin (Sn) or lead (Pb) (hereinafter, these three elements may be referred to as "specific metal elements"), an alloy containing these metal atoms, or a compound of these metals (specific metal elements), still more preferably a simple metal, alloy or compound of Si, or a simple metal, alloy or compound of Sn, particularly preferably Si simple metal or an Si metal oxide. Any of these materials may be used singly, or two or more thereof may be used in any combination at any ratio.

Examples of a negative electrode active material containing at least one atom selected from the specific metal elements include: simple metals of any of the specific metal elements; alloys composed of two or more of the specific metal elements; alloys composed of one or more of the specific metal elements and one or more other metal elements; and compounds containing one or more of the specific metal elements, and composites of these compounds, such as oxides, carbides, nitrides, silicides, sulfides, and phosphides. By using any of these simple metals, alloys and metal compounds as the negative electrode active material, the battery capacity can be increased.

Examples of the negative electrode active material also include compounds in which any of the above-described composite compounds is bound with several elements, such as simple metals, alloys or non-metal elements, in a complex manner. More specifically, for example, with regard to silicon and tin, an alloy thereof with a metal that does not act as a negative electrode can be used. Further, for example, with regard to tin, such a complex compound that contains a combination of five to six elements including tin, a non-silicon metal acting as a negative electrode, a metal not acting as a negative electrode, and a non-metallic element can be used as well.

Among these negative electrode active materials, for example, simple metals of the respective specific metal elements, alloys of two or more of the specific metal elements, and oxides, carbides, nitrides and the like of the specific metal elements are preferred since a large capacity per unit mass can be attained when they are used in a battery, and simple metals, alloys, oxides, carbides, nitrides and the like of silicon and/or tin are particularly preferred from the standpoints of the capacity per unit mass and the environmental load.

Moreover, the following compounds containing silicon and/or tin are also preferred since the use thereof leads to excellent cycle characteristics, although it is inferior to the use of a simple metal or an alloy in terms of the capacity per unit mass:
- "oxides of silicon and/or tin" in which the element ratio of silicon and/or tin with respect to oxygen is usually 0.5 or higher, preferably 0.7 or higher, more preferably 0.9 or higher, but usually 1.5 or lower, preferably 1.3 or lower, more preferably 1.1 or lower;
- "nitrides of silicon and/or tin" in which the element ratio of silicon and/or tin with respect to nitrogen is usually 0.5 or higher, preferably 0.7 or higher, more preferably 0.9 or higher, but usually 1.5 or lower, preferably 1.3 or lower, more preferably 1.1 or lower; and
- "carbides of silicon and/or tin" in which the element ratio of silicon and/or tin with respect to carbon is usually 0.5 or higher, preferably 0.7 or higher, more preferably 0.9 or higher, but usually 1.5 or lower, preferably 1.3 or lower, more preferably 1.1 or lower.

Any of the above-described negative electrode active materials may be used singly, or two or more thereof may be used in any combination at any ratio.

The negative electrode in the nonaqueous electrolyte secondary battery can be produced by any known method. Specifically, examples of a method of producing the negative electrode include: a method of producing a sheet electrode by adding a binder, a conductive material and the like to the above-described negative electrode active material and then directly roll-molding the resulting mixture; and a method of producing a pellet electrode by compression-molding the mixture; however, a method of forming a thin film layer containing the above-described negative electrode active material (negative electrode active material layer) on a current collector for negative electrode (hereinafter, may be referred to as "negative electrode current collector") by means of coating, vapor deposition, sputtering, plating or the like is usually employed. In this case, a binder, a thickening agent, a conductive material, a solvent and the like are added to the above-described negative electrode active material to prepare a slurry, and this slurry is coated and dried onto a negative electrode current collector, after which the resultant is pressed to increase the density, whereby a negative electrode active material layer is formed on the negative electrode current collector.

Examples of the material of the negative electrode current collector include steel, copper alloys, nickel, nickel alloys, and stainless steel. Thereamong, a copper foil is preferred from the standpoints of the ease of processing into a thin film and the cost.

The thickness of the negative electrode current collector is usually 1 µm or greater, preferably 5 µm or greater, but usually 100 µm or less, preferably 50 µm or less. This is because an overly thick negative electrode current collector may cause an excessive reduction in the capacity of the whole battery, while an overly thin negative electrode current collector may be difficult to handle.

The surface of the negative electrode current collector is preferably subjected to a roughening treatment in advance for the purpose of improving the binding with the negative electrode active material layer formed thereon. Examples of a surface roughening method include: blasting; rolling with a surface-roughened roll; mechanical polishing in which the current collector surface is polished with a polishing cloth or paper on which abrasive particles are fixed, a whetstone, an emery buff, or a wire brush equipped with steel wires or the like; electrolytic polishing; and chemical polishing.

The slurry used for the formation of the negative electrode active material layer is usually prepared by adding a binder, a thickening agent and the like to a negative electrode material. It is noted here that the term "negative electrode material" used herein refers to a material obtained by combining a negative electrode active material and a conductive material.

In the negative electrode material, the content of the negative electrode active material is usually 70% by mass or higher, particularly preferably 75% by mass or higher, but usually 97% by mass or less, particularly preferably 95% by mass or less. When the content of the negative electrode active material is excessively low, the capacity of a secondary battery using the resulting negative electrode tends to be insufficient, whereas when the content of the negative electrode active material is excessively high, the resulting negative electrode tends to have an insufficient strength due to a relatively insufficient amount of the binder and the like. In the case of using a combination of two or more negative electrode active materials, the total amount of the negative electrode active materials should satisfy the above-described range.

Examples of the conductive material used in the negative electrode include metal materials, such as copper and nickel; and carbon materials, such as graphite and carbon black. Any of these conductive materials may be used singly, or two or more thereof may be used in any combination at any ratio. Particularly, it is preferred to use a carbon material as the conductive material since the carbon material also acts as an active material. The content of the conductive material in the negative electrode material is usually 3% by mass or higher, particularly preferably 5% by mass or higher, but usually 30% by mass or less, particularly preferably 25% by mass or less. An excessively low content of the conductive material tends to make the conductivity insufficient, while an excessively high content of the conductive material tends to result in a reduction in the battery capacity and strength due to a relatively insufficient amount of the negative electrode active material and the like. In the case of using a combination of two or more conductive materials, the total amount of the conductive materials should satisfy the above-described range.

The binder used in the negative electrode may be any binder as long as it is a material that is stable against the solvent and the electrolyte solution that are used in the electrode production. Examples of the binder include polyvinylidene fluoride, polytetrafluoroethylene, polyethylene, polypropylene, styrene-butadiene rubber, isoprene rubber, butadiene rubber, ethylene-acrylic acid copolymers, and ethylene-methacrylic acid copolymers. Any of these binders may be used singly, or two or more thereof may be used in any combination at any ratio. The content of the binder is usually 0.5 parts by mass or higher, particularly preferably 1 part by mas or higher, but usually 10 parts by mass or less, particularly preferably 8 parts by mass or less, with respect to 100 parts by mass of the negative electrode material. When the content of the binder is excessively low, the strength of the resulting negative electrode tends to be insufficient, whereas when the content of the binder is excessively high, the battery capacity and conductivity tend to be insufficient due to a relatively insufficient amount of the negative electrode active material and the like. In the case of using a combination of two or more binders, the total amount of the binders should satisfy the above-described range.

Examples of the thickening agent used in the negative electrode include carboxymethyl cellulose, methyl cellulose, hydroxymethyl cellulose, ethyl cellulose, polyvinyl alcohol, oxidized starch, phosphorylated starch, and casein. Any of these thickening agents may be used singly, or two or more thereof may be used in any combination at any ratio. The thickening agent may be used as required; however, when used, the content thereof in the negative electrode active material layer is preferably in a range of usually 0.5% by mass to 5% by mass.

The slurry used for the formation of the negative electrode active material layer is prepared by mixing the above-described negative electrode active material with a conductive material, a binder and a thickening agent as required, using an aqueous solvent or an organic solvent as a dispersion medium. Water is usually used as the aqueous solvent; however, a solvent other than water, for example, an alcohol such as ethanol or a cyclic amide such as *N*-methylpyrrolidone, may also be used in combination at a ratio of about 30% by mass or lower with respect to water. Examples of the organic solvent usually include: cyclic amides such as *N*-methylpyrrolidone; open-chain amides such as *N*,*N*-dimethylformamide and *N*,*N*-dimethylacetamide; aromatic hydrocarbons such as anisole, toluene, and xylene; and alcohols such as butanol and cyclohexanol, among which cyclic amides such as *N*-methylpyrrolidone, and open-chain amides such as *N*,*N*-dimethylformamide and *N*,*N*-dimethylacetamide are preferred. Any of these organic solvents may be used singly, or two or more thereof may be used in any combination at any ratio.

The viscosity of the slurry is not particularly restricted as long as the slurry can be coated onto the current collector. The slurry may be prepared as appropriate by modifying the amount of the solvent to be used and the like during the preparation so that such a viscosity that makes the resulting slurry coatable is attained.

The thus obtained slurry is coated and dried onto the above-described negative electrode current collector, and the resultant is subsequently pressed, whereby a negative electrode active material layer is formed. The coating method is not particularly restricted, and any known method can be employed. The drying method is also not particularly restricted, and any known method such as air drying, heat drying, or vacuum drying can be employed.

The structure of an electrode formed from the negative electrode active material in the above-described manner is not particularly restricted; however, the density of the active material existing on the current collector is preferably 1 g·cm⁻³ or higher, more preferably 1.2 g·cm⁻³ or higher, particularly preferably 1.3 g·cm⁻³ or higher, but usually 2.2 g·cm⁻³ or lower, preferably 2.1 g·cm⁻³ or lower, more preferably 2.0 g·cm⁻³ or lower, particularly preferably 1.9 g·cm⁻³ or lower.

When the density of the active material existing on the current collector is higher than this range, particles of the active material may be destructed to cause an increase in the initial irreversible capacity and a reduction in the permeability of the nonaqueous electrolyte solution to the vicinity of the interface between the current collector and the active material, as a result of which the high-current-density charge-discharge characteristics may be deteriorated. Meanwhile, when the density of the active material existing on the current collector is lower than the above-described range, the conductivity between the active materials is reduced and the battery resistance is thus increased, as a result of which the capacity per unit volume may be reduced.

### <A2-3-4. Constitution, Physical Properties, and Preparation Method of Negative Electrode Containing Carbonaceous Material and Metal Compound-Based Material>

In the present embodiment, the negative electrode active material contains a metal compound-based material, and a graphite which is the above-described carbonaceous material. The negative electrode active material containing a metal compound-based material and a carbonaceous material may be a mixture in which a simple metal forming a lithium alloy or an alloy thereof, or any compound thereof such as an oxide, a carbide, a nitride, a silicide, a sulfide or a phosphide, and the carbonaceous material are mixed in a state of mutually independent particles, or may be a composite in which a simple metal forming a lithium alloy or an alloy, or any compound thereof such as an oxide, a carbide, a nitride, a silicide, a sulfide or a phosphide exists on the surface or inside of the carbonaceous material. In the present specification, the "composite" is not particularly restricted as long as it contains a metal compound-based material and a carbonaceous material; however, the metal compound-based material and the carbonaceous material are preferably integrated together by physical and/or chemical bonds. In a more preferred form, the metal compound-based material and the carbonaceous material are in a state where their solid components are dispersed to such an extent that allow them to exist at least both on the composite surface and inside the bulk, and the carbonaceous material exists in a manner to integrate the solid components via physical and/or chemical bonds.

Such a form can be observed by, for example, a method of observing the surfaces of particles under a scanning electron microscope, or a method in which, after embedding particles in a resin to prepare a resin thin section and subsequently cutting out cross-sections of the particles, or after applying a coating film composed of particles to a cross-section polisher to prepare a cross-section of the coating film and subsequently cutting out cross-sections of the particles, the thus obtained particle cross-sections are observed under a scanning electron microscope.

The content of the metal compound-based material with respect to a total amount of the negative electrode active material containing the metal compound-based material and the carbonaceous material is not particularly restricted; however, it is usually 0.1% by mass or higher, preferably 1% by mass or higher, more preferably 1.5% by mass or higher, still more preferably 2% by mass or higher, particularly preferably 3% by mass or higher, but usually 99% by mass or less, preferably 50% by mass or less, more preferably 40% by mass or less, still more preferably 30% by mass or less, particularly preferably 25% by mass or less, most preferably 15% by mass or less. The content of the metal compound-based material is preferably in this range since a sufficient capacity can thereby be obtained.

In the negative electrode active material containing the metal compound-based material and the carbonaceous material, the carbonaceous material preferably satisfies the requirements described above in the section <A2-3-2>. Further, the metal compound-based material desirably satisfies the followings.

As the simple metal forming a lithium alloy or an alloy thereof, any conventionally known simple metal or alloy can be used; however, from the standpoints of the capacity and the cycle life, the simple metal that forms a lithium alloy is preferably, for example, a metal selected from the group consisting of Fe, Co, Sb, Bi, Pb, Ni, Ag, Si, Sn, Al, Zr, Cr, V, Mn, Nb, Mo, Cu, Zn, Ge, In, Ti and the like, or a compound thereof. Further, the metal compound-based material that forms a lithium alloy is preferably a metal compound-based material that contains at least one metal selected from the group consisting of Si, Sn, As, Sb, Al, Zn, and W.

Examples of the "simple metal forming a lithium alloy or an alloy thereof, or any compound thereof such as an oxide, a carbide, a nitride, a silicide, a sulfide or a phosphide" include metal oxides, metal carbides, metal nitrides, metal silicides, and metal phosphides. An alloy composed of two or more metals may be used as well. Thereamong, Si and Si compounds are preferred from the standpoint of increasing the capacity. In the present specification, Si and Si compounds are collectively referred to as "Si compounds". Specific examples of Si compounds include compounds represented by general formulae SiOₓ₁, SiNₓ₁, SiCₓ₁ and SiZₓ₁O_{y1} (wherein, Z represents C or N), among which compounds represented by SiOₓ₁ are preferred. In the above-described general formulae, the value of x1 is not particularly restricted; however, it usually satisfies 0 ≤ x1 < 2. SiOₓ₁ can be obtained using a silicon dioxide (SiO₂) and metal silicon (Si) as raw materials. SiOₓ₁ has a higher theoretical capacity than graphite, and amorphous Si or nano-sized Si crystals facilitate migration of alkali ions such as lithium ions, thereby enabling to attain a high capacity.

In SiOₓ₁, the value of x1 is not particularly restricted; however, it usually satisfies 0 ≤ x1 < 2, and is preferably 0.2 or larger, more preferably 0.4 or larger, still more preferably 0.6 or larger, but preferably 1.8 or smaller, more preferably 1.6 or smaller, still more preferably 1.4 or smaller. When the value of x1 is in this range, a high capacity can be attained and, at the same time, the irreversible capacity attributed to binding between Li and oxygen can be reduced.

Examples of a method for confirming that the metal compound-based material contains a metal alloyable with lithium include identification of a metal particle phase by X-ray diffractometry, a combination of observation of particle structure under an electron microscope and elemental analysis, and elemental analysis with fluorescent X-ray.

The volume-based average particle size (median diameter d50) of the metal compound-based material is not particularly restricted; however, from the standpoint of the cycle life, it is usually 0.01 µm or larger, preferably 0.05 µm or larger, more preferably 0.1 µm or larger, still more preferably 0.3 µm or larger, but usually 10 µm or smaller, preferably 9 µm or smaller, more preferably 8 µm or smaller. When the average particle size (d50) is in this range, an increase in the volume caused by charging and discharging is suppressed, and favorable cycle characteristics can be attained while maintaining the charge-discharge capacity.

The average particle size (d50) can be determined by a laser diffraction-scattering particle size distribution analysis method or the like.

In the negative electrode active material containing the metal compound-based material and the carbonaceous material, the specific surface area of the metal compound-based material, which is determined by a BET method, is not particularly restricted; however, it is usually 0.5 m²/g or larger, preferably 1 m²/g or larger, but usually 60 m²/g or smaller, preferably 40 m²/g. The specific surface area of the metal particles alloyable with Li, which is determined by a BET method, is preferably in this range since it allows the battery to not only have a high charge-discharge efficiency and a large discharge capacity but also show excellent rate characteristics with facilitated migration of lithium in rapid charging and discharging.

In the negative electrode active material containing the metal compound-based material and the carbonaceous material, the oxygen content of the metal compound-based material is not particularly restricted; however, it is usually 0.01% by mass or higher, preferably 0.05% by mass or higher, but usually 8% by mass or less, preferably 5% by mass or less. As for the distribution state of oxygen in the particles, oxygen may exist near the surface or interior of the particles, or may uniformly exist throughout the particles; however, it is particularly preferred that oxygen exist near the surface. When the oxygen content of the metal compound-based material is in the above-described range, an increase in the volume caused by charging and discharging is suppressed because of strong binding between Si and O, so that excellent cycle characteristics are attained, which is preferred.

Further, with regard to the production of the negative electrode of the metal compound-based material used in the negative electrode active material containing the metal compound-based material and the carbonaceous material, the descriptions in the above section <A2-3-1> the carbonaceous material can be applied.

### <A2-3-5. Lithium-Containing Metal Composite Oxide Material, and Constitution, Physical Properties and Preparation Method of Negative Electrode Containing Lithium-Containing Metal Composite Oxide Material>

The lithium-containing metal composite oxide material used as the negative electrode active material is not particularly restricted as long as it is capable of absorbing and releasing lithium ions; however, it is preferably a lithium-containing composite metal oxide material that contains titanium, particularly preferably a composite oxide of lithium and titanium (hereinafter, simply referred to as "lithium-titanium composite oxide"). In other words, it is particularly preferred to incorporate a lithium-titanium composite oxide having a spinel structure into the negative electrode active material for a nonaqueous electrolyte secondary battery, since the output resistance is thereby greatly reduced.

In addition, a lithium-titanium composite oxide in which lithium or titanium is substituted with other metal element, such as at least one element selected from the group consisting of Na, K, Co, Al, Fe, Ti, Mg, Cr, Ga, Cu, Zn and Nb, is also preferred.

It is preferred that the above-described metal oxide be a lithium-titanium composite oxide represented by the following composition formula (4) wherein 0.7 ≤ x1 ≤ 1.5, 1.5 ≤ y1 ≤ 2.3 and 0 ≤ z1 ≤ 1.6, since the structure thereof is stable during doping and dedoping of lithium ions.

Liₓ₁Ti_{y1}M_{z1}O₄ (4)

(wherein, M represents at least one element selected from the group consisting of Na, K, Co, Al, Fe, Ti, Mg, Cr, Ga, Cu, Zn, and Nb).

Among compositions represented by the composition formula (4), those having a structure satisfying one of the followings are preferred from the standpoint of attaining a good balance of battery performance:
(a) 1.2 ≤ x1 ≤ 1.4, 1.5 ≤ y1 ≤ 1.7, and z1 = 0;
(b) 0.9 ≤ x1 ≤ 1.1, 1.9 ≤ y1 ≤ 2.1, and z1 = 0; and
(c) 0.7 ≤ x1 ≤ 0.9, 2.1 ≤ y1 ≤ 2.3, and z1 = 0.

Particularly preferred representative compositions of the above-described compounds are (a) Li_{4/3}Ti_{5/3}O₄, (b) Li₁Ti₂O₄, and (c) Li_{4/5}Ti_{11/5}O₄. Further, one preferred example of a structure wherein z1 ≠ 0 is Li_{4/3} Ti_{4/3} Al_{1/3}O₄.

In addition to the above-described requirements, the lithium-titanium composite oxide preferably satisfies at least one of the below-described characteristics (1) to (13) such as physical properties and shape, and particularly preferably satisfies two or more of the below-described characteristics (1) to (13) at the same time.

### (1) BET Specific Surface Area

The BET specific surface area of the lithium-titanium composite oxide used as a negative electrode active material, which is determined by a BET method, is preferably 0.5 m²·g⁻¹ or larger, more preferably 0.7 m²·g⁻¹ or larger, still more preferably 1.0 m²·g⁻¹ or larger, particularly preferably 1.5 m²·g⁻¹ or larger, but usually 200 m²·g⁻¹ or smaller, preferably 100 m²·g⁻¹ or smaller, more preferably 50 m²·g⁻¹ or smaller, particularly preferably 25 m²·g⁻¹ or smaller.

With the BET specific surface area being smaller than this range, the lithium-titanium composite oxide has a reduced reaction area coming into contact with the nonaqueous electrolyte solution when used as a negative electrode material, and this may lead to an increase in the output resistance. Meanwhile, with the BET specific surface area being larger than the above-described range, since the proportion of the surfaces and edges of crystals of the titanium-containing metal oxide is increased and this causes strain in the crystals, the irreversible capacity is no longer negligible, making it difficult to obtain a preferred battery in some cases.

The determination of the specific surface area by the BET method is performed by a gas-flowing nitrogen adsorption single-point BET method where a sample is preliminary dried at 350°C for 15 minutes in a nitrogen stream, and the specific surface area thereof is subsequently measured using a surface area meter (e.g., a fully automatic surface area analyzer manufactured by Ohkura Riken Co., Ltd.) with a nitrogen-helium mixed gas precisely adjusted to have a relative nitrogen pressure value of 0.3 with respect to the atmospheric pressure. The thus determined specific surface area is defined as the BET specific surface area of the lithium-titanium composite oxide in the present embodiment.

### (2) Volume-Based Average Particle Size

The volume-based average particle size of the lithium-titanium composite oxide (secondary particle size when primary particles are aggregated to form secondary particles) is defined as a volume-based average particle size (median diameter d50) determined by a laser diffraction-scattering method.

The volume-based average particle size of the lithium-titanium composite oxide is usually 0.1 µm or larger, preferably 0.5 µm or larger, more preferably 0.7 µm or larger, but usually 50 µm or smaller, preferably 40 µm or smaller, more preferably 30 µm or smaller, still more preferably 25 µm or smaller.

The volume-based average particle size is measured by dispersing carbon powder in a 0.2%-by-mass aqueous solution (10 mL) of polyoxyethylene (20) sorbitan monolaurate, which is a surfactant, using a laser diffraction-scattering particle size distribution analyzer (e.g., LA-700 manufactured by HORIBA, Ltd.). The median diameter d50 determined by this measurement is defined as the volume-based average particle size of the carbonaceous material of the present embodiment.

When the volume-based average particle size of the lithium-titanium composite oxide is smaller than the above-described range, a large amount of a binder is required in the electrode production, as a result of which the battery capacity may be reduced. Meanwhile, when the volume-based average particle size of the lithium-titanium composite oxide is larger than the above-described range, an uneven coating surface may be generated in the electrode plate formation, which is not desirable for the battery production process.

### (3) Average Primary Particle Size

When primary particles are aggregated to form secondary particles, the average primary particle size of the lithium-titanium composite oxide is usually 0.01 µm or larger, preferably 0.05 µm or larger, more preferably 0.1 µm or larger, still more preferably 0.2 µm or larger, but usually 2 µm or smaller, preferably 1.6 µm or smaller, more preferably 1.3 µm or smaller, still more preferably 1 µm or smaller. When the volume-based average primary particle size is larger than this range, not only it is difficult to form spherical secondary particles but also the powder packing property is adversely affected and the specific surface area is thus greatly reduced; therefore, such a volume-based average primary particle size is highly likely to result in deterioration of the battery performance such as output characteristics. Meanwhile, when the volume-based average primary particle size is smaller than the above-described range, since the growth of crystals is usually insufficient, the performance of the secondary battery such as the reversibility of charging and discharging may be deteriorated.

The primary particle size is determined by observation under a scanning electron microscope (SEM). Specifically, on a micrograph taken at a magnification of, for example, ×10,000 to ×100,000 at which particles are recognizable, the length of the longest section of each primary particle defined by opposing boundaries along a horizontal straight line is measured for arbitrarily selected 50 primary particles, and an average of the thus measured values is calculated, whereby the primary particle size is determined.

### (4) Shape

The particles of the lithium titanium composite oxide may have any conventionally used shape, such as a lump shape, a polyhedral shape, a spherical shape, an ellipsoidal shape, a plate shape, a needle shape or a columnar shape, and particularly, it is preferred that primary particles be aggregated to form secondary particles and that these secondary particles have a spherical or ellipsoidal shape.

Usually, in an electrochemical element, active materials in electrodes expand and shrink in association with charging and discharging of the element; therefore, the resulting stress is likely to cause deterioration, such as destruction of the active materials and breakage of a conductive path. Accordingly, as compared to an active material in the form of only individual primary particles, an active material in a state where primary particles are aggregated to form secondary particles can better inhibit deterioration by relieving the stress caused by the expansion and shrinkage.

In addition, as compared to axially-oriented particles such as plate-shaped particles, spherical or ellipsoidal particles are more preferred since not only they are less oriented during the electrode production and cause less expansion and shrinkage of an electrode during changing and discharging, but also they are more likely to be mixed uniformly with a conductive material in the electrode production.

### (5) Tap Density

The tap density of the lithium-titanium composite oxide is preferably 0.05 g·cm⁻³ or higher, more preferably 0.1 g·cm⁻³ or higher, still more preferably 0.2 g·cm⁻³ or higher, particularly preferably 0.4 g·cm⁻³ or higher, but usually 2.8 g·cm⁻³ or lower, preferably 2.4 g·cm⁻³ or lower, particularly preferably 2 g·cm⁻³ or lower. With the tap density being lower than this range, it is difficult to increase the packing density when the lithium-titanium composite oxide is used as the negative electrode, and the contact area between the particles is reduced; therefore, the resistance between the particles is increased and the output resistance is consequently increased in some cases. Meanwhile, when the tap density is higher than the above-described range, since the amount of voids between the particles in the electrode is excessively small, the flow path of the nonaqueous electrolyte solution is reduced, as a result of which the output resistance may be increased.

As for the measurement of the tap density, after filling a 20-cm³ tapping cell with a sample up to the upper end of the cell by dropping the sample thereto through a sieve having a mesh size of 300 µm, the cell is tapped 1,000 times at a stroke length of 10 mm using a powder density meter (e.g., TAP DENSER manufactured by Seishin Enterprise Co., Ltd.), and the density is calculated from the resulting volume and the mass of the sample. The thus calculated tap density is defined as the tap density of the lithium-titanium composite oxide in the present embodiment.

### (6) Circularity

When the circularity of the lithium-titanium composite oxide is measured in terms of the degree of sphericity, the value thereof preferably falls in the below-described range. It is noted here that the circularity is defined as "Circularity = (Circumferential length of equivalent circle having the same area as projected particle shape)/(actual circumferential length of projected particle shape)", and the lithium-titanium composite oxide is theoretically true-spherical when the circularity is 1.

The circularity of the lithium-titanium composite oxide is preferably as close to being 1 as possible, and the circularity is usually 0.10 or higher, preferably 0.80 or higher, more preferably 0.85 or higher, still more preferably 0.90 or higher. The high-current-density charge-discharge characteristics are improved as the circularity increases. Accordingly, when the circularity is lower than the above-described range, the packing property of the negative electrode active material is deteriorated and the resistance between the particles is increased, as a result of which the short-term high-current-density charge-discharge characteristics may be deteriorated.

The circularity is measured using a flow-type particle image analyzer (e.g., FPIA manufactured by Sysmex Corporation). About 0.2 g of a sample is dispersed in a 0.2%-by-mass aqueous solution (about 50 mL) of polyoxyethylene (20) sorbitan monolaurate, which is a surfactant, and irradiated with 28-kHz ultrasonic waves for 1 minute at an output of 60 W, after which the detection range is designated to be 0.6 to 400 µm, and the measurement is performed for those particles having a particle size in a range of 3 to 40 µm. The thus determined circularity is defined as the circularity of the lithium-titanium composite oxide in the present embodiment.

### (7) Aspect Ratio

The aspect ratio of the lithium-titanium composite oxide is usually 1 or higher, but usually 5 or lower, preferably 4 or lower, more preferably 3 or lower, still more preferably 2 or lower. When the aspect ratio is higher than this range, a uniform coating surface cannot be obtained due to streaking in the electrode plate formation, and this may lead to deterioration of the short-term high-current-density charge-discharge characteristics. It is noted here that the lower limit of this range is a theoretical lower limit value of the aspect ratio of the lithium-titanium composite oxide.

The aspect ratio is measured by observing the particles of the lithium-titanium composite oxide at a magnification under a scanning electron microscope. Fifty particles immobilized on the end surface of a metal having a thickness of 50 µm or less are selected arbitrarily and, for each of the particles observed in a three-dimensional manner, the largest diameter (P') and the smallest diameter (Q') perpendicular to the diameter (P') are measured while rotating and tilting a stage on which the sample is immobilized, after which the average value of P'/Q' is determined. The thus determined aspect ratio (P'/Q') is defined as the aspect ratio of the lithium-titanium composite oxide in the present embodiment.

### (8) Method of Producing Negative Electrode Active Material

A method of producing the lithium-titanium composite oxide is not particularly restricted within a range that does not depart from the gist of the invention according to the present embodiment. Examples thereof include several methods, and a general method of producing an inorganic compound may be employed.

For example, a method of obtaining an active material by homogeneously mixing a titanium raw material substance such as titanium oxide with, as required, a raw material substance of other element and a Li source such as LiOH, Li₂CO₃ or LiNO₃, and subsequently firing the resulting mixture at a high temperature may be employed.

Particularly, for the production of a spherical or ellipsoidal active material, a variety of methods can be considered. One example thereof is a method in which a titanium raw material substance such as titanium oxide and, as required, a raw material substance of other element are dissolved, or pulverized and dispersed in a solvent such as water, the pH of the resulting solution or dispersion is adjusted with stirring to produce and recover a spherical precursor, and this precursor is subsequently dried as required, after which a Li source such as LiOH, Li₂CO₃ or LiNO₃ is added thereto and the resultant is fired at a high temperature to obtain an active material.

Another example is a method in which a titanium raw material substance such as titanium oxide and, as required, a raw material substance of other element are dissolved, or pulverized and dispersed in a solvent such as water, and the resulting solution or dispersion is dried and shaped using a spray drier or the like to produce a spherical or ellipsoidal precursor, after which a Li source such as LiOH, Li₂CO₃ or LiNO₃ is added thereto and the resultant is fired at a high temperature to obtain an active material.

Yet another example is a method in which a titanium raw material substance such as titanium oxide, a Li source such as LiOH, Li₂CO₃ or LiNO₃ and, as required, a raw material substance of other element are dissolved, or pulverized and dispersed in a solvent such as water, and the resulting solution or dispersion is dried and shaped using a spray drier or the like to produce a spherical or ellipsoidal precursor, after which this precursor is fired at a high temperature to obtain an active material.

Further, during these steps, it is possible to allow elements other than Ti, such as Al, Mn, Ti, V, Cr, Mn, Fe, Co, Li, Ni, Cu, Zn, Mg, Ga, Zr, C, Si, Sn and Ag, to exist in the titanium-containing metal oxide structure and/or in the form of being in contact with the titanium-containing oxide. By incorporating these elements, the operating voltage and the capacity of the battery can be controlled.

### (9) Production of Electrode

For the production of an electrode, any known method can be employed. For example, a binder, a solvent and, as required, a thickening agent, a conductive material, a filler and the like are added to the negative electrode active material to prepare a slurry, and this slurry is subsequently coated and dried onto a current collector, followed by pressing of the resultant, whereby a negative electrode can be formed.

The thickness of the negative electrode active material layer on one side immediately before the step of injecting the nonaqueous electrolyte solution in the battery is usually 15 µm or greater, preferably 20 µm or greater, more preferably 30 µm or greater, but usually 150 µm or less, preferably 120 µm or less, more preferably 100 µm or less.

When the thickness of the negative electrode active material layer is greater than this range, the high-current-density charge-discharge characteristics may be deteriorated since the nonaqueous electrolyte solution is unlikely to permeate to the vicinity of the current collector interface. Meanwhile, when the thickness is less than this range, the battery capacity may be reduced due to an increase in the volume ratio of the current collector with respect to the negative electrode active material. The negative electrode active material may be roll-molded into a sheet electrode, or compression-molded into a pellet electrode.

### (10) Current Collector

As the current collector on which the negative electrode active material is retained, any known current collector can be used. Examples of the current collector of the negative electrode include metal materials such as copper, nickel, stainless steel, and nickel-plated steel, among which copper is particularly preferred because of its processability and cost.

When the current collector is a metal material, the current collector may have any shape of, for example, a metal foil, a metal cylinder, a metal coil, a metal sheet, a metal thin film, an expanded metal, a punched metal, and a foamed metal. Thereamong, the current collector is preferably a metal foil film containing copper (Cu) and/or aluminum (Al), more preferably a copper foil or an aluminum foil, still more preferably a rolled copper foil obtained by a rolling method or an electrolytic copper foil obtained by an electrolytic method, either of which can be used as the current collector.

In the case of a copper foil having a thickness of less than 25 µm, a copper alloy (e.g., phosphor bronze, titanium copper, Corson alloy, or Cu-Cr-Zr alloy) that has a higher strength than pure copper can be used. Further, an aluminum foil can be preferably used as the current collector since it has a low specific gravity and thus reduce the battery mass.

In a current collector composed of a copper foil produced by a rolling method, copper crystals are aligned along the rolling direction; therefore, such a current collector is unlikely to be broken even when the negative electrode is tightly rolled up or bent at a sharp angle, and can thus be suitably used in small cylindrical batteries.

An electrolytic copper foil is obtained by, for example, immersing a metallic drum in a nonaqueous electrolyte solution containing copper ions dissolved therein, applying an electric current thereto while rotating the drum so as to allow copper to precipitate on the drum surface, and subsequently peeling off the thus precipitated copper. Copper may be precipitated on the surface of the above-described rolled copper foil by an electrolytic method. One or both sides of the resulting copper foil may be subjected to a roughening treatment or a surface treatment (e.g., a base treatment with chromate, Ti or the like up to a thickness of several nanometers to about 1 µm).

The current collector may have any thickness; however, the thickness is usually 1 µm or greater, preferably 3 µm or greater, more preferably 5 µm or greater, but usually 1 mm or less, preferably 100 µm or less, more preferably 50 µm or less.

The thickness of the current collector is preferably in this range since it makes the coating process easier because of an improved strength, and makes the electrode shape stable.

### (11) Thickness Ratio of Current Collector and Active Material Layer

The thickness ratio of the current collector and the active material layer is not particularly restricted; however, the value of "(Thickness of active material layer on one side immediately before injection of nonaqueous electrolyte solution)/(Thickness of current collector)" is usually 150 or smaller, preferably 20 or smaller, more preferably 10 or smaller, but usually 0.1 or larger, preferably 0.4 or larger, more preferably 1 or larger.

When the thickness ratio of the current collector and the negative electrode active material layer is higher than the above-described range, the current collector may generate heat due to Joule's heat during high-current-density charging/discharging. Meanwhile, when the thickness ratio is lower than the above-described range, the battery capacity may be reduced due to an increase in the volume ratio of the current collector with respect to the negative electrode active material.

### (12) Electrode Density

The structure of an electrode formed from the negative electrode active material is not particularly restricted; however, the density of the active material existing on the current collector is preferably 1 g·cm⁻³ or higher, more preferably 1.2 g·cm⁻³ or higher, still more preferably 1.3 g·cm⁻³ or higher, particularly preferably 1.5 g·cm⁻³ or higher, but preferably 3 g·cm⁻³ or lower, more preferably 2.5 g·cm⁻³ or lower, still more preferably 2.2 g·cm⁻³ or lower, particularly preferably 2 g·cm⁻³ or lower.

When the density of the active material existing on the current collector is higher than this range, the binding between the current collector and the negative electrode active material is weakened, as a result of which the electrode and the active material may be detached. Meanwhile, when the density is lower than the above-described range, the conductivity between the negative electrode active materials is reduced, as a result of which the battery resistance may be increased.

### (13) Binder

The binder used for binding the negative electrode active material is not particularly restricted as long as it is a material that is stable against the nonaqueous electrolyte solution and the solvent used in the electrode production.

Specific examples of the binder include: resin-based polymers, such as polyethylene, polypropylene, polyethylene terephthalate, polymethyl methacrylate, polyimides, aromatic polyamides, cellulose, and nitrocellulose; rubbery polymers, such as SBR (styrene-butadiene rubbers), isoprene rubbers, butadiene rubbers, fluororubbers, NBR (acrylonitrile-butadiene rubbers), and ethylene-propylene rubbers; styrene-butadiene-styrene block copolymers, and hydrogenation products thereof; thermoplastic elastomeric polymers, such as EPDM (ethylene-propylene-diene terpolymers), styrene-ethylene-butadiene-styrene copolymers, styrene-isoprene-styrene block copolymers, and hydrogenation products thereof; soft resinous polymers, such as syndiotactic 1,2-polybutadiene, polyvinyl acetate, ethylene-vinyl acetate copolymers, and propylene-*α*-olefin copolymers; fluorocarbon-based polymers, such as polyvinylidene fluoride, polytetrafluoroethylene, fluorinated polyvinylidene fluoride, and tetrafluoroethylene-ethylene copolymers; and polymer compositions having ionic conductivity for alkali metal ions (particularly lithium ions). Any of these binders may be used singly, or two or more thereof may be used in any combination at any ratio.

The type of the solvent used for the slurry formation is not particularly restricted as long as the solvent is capable of dissolving or dispersing the negative electrode active material and the binder as well as the thickening agent and the conductive material that are used as required, and either an aqueous solvent or an organic solvent may be used.

Examples of the aqueous solvent include water and alcohols, and examples of the organic solvent include *N*-methylpyrrolidone (NMP), dimethylformamide, dimethylacetamide, methyl ethyl ketone, cyclohexanone, methyl acetate, methyl acrylate, diethyltriamine, *N*,*N*-dimethylaminopropylamine, tetrahydrofuran (THF), toluene, acetone, diethyl ether, dimethylacetamide, hexamethylphosphoramide, dimethyl sulfoxide, benzene, xylene, quinoline, pyridine, methylnaphthalene, and hexane. Particularly, when an aqueous solvent is used, it is preferred to add a dispersant or the like in combination with the above-described thickening agent and prepare a slurry using a latex such as SBR. Any of the above-described solvents may be used singly, or two or more thereof may be used in any combination at any ratio.

The ratio of the binder with respect to the negative electrode active material is usually 0.1% by mass or higher, preferably 0.5% by mass or higher, more preferably 0.6% by mass or higher, but usually 20% by mass or lower, preferably 15% by mass or lower, more preferably 10% by mass or lower, still more preferably 8% by mass or lower.

When the ratio of the binder with respect to the negative electrode active material is in this range, not only the ratio of the binder not contributing to the battery capacity is reduced and the battery capacity is thus increased but also the strength of the negative electrode is maintained, which is preferred from the standpoint of the battery production process.

Particularly, when the binder contains a rubbery polymer represented by SBR as a main component, the ratio of the binder with respect to the active material is usually 0.1% by mass or higher, preferably 0.5% by mass or higher, more preferably 0.6% by mass or higher, but usually 5% by mass or lower, preferably 3% by mass or lower, more preferably 2% by mass or lower.

Further, when the binder contains a fluorocarbon-based polymer represented by polyvinylidene fluoride as a main component, the ratio of the binder with respect to the active material is usually 1% by mass or higher, preferably 2% by mass or higher, more preferably 3% by mass or higher, but usually 15% by mass or lower, preferably 10% by mass or lower, more preferably 8% by mass or lower.

A thickening agent is usually used for the purpose of preparing the viscosity of the resulting slurry. The thickening agent is not particularly restricted, and specific examples thereof include carboxymethyl cellulose, methyl cellulose, hydroxymethyl cellulose, ethyl cellulose, polyvinyl alcohol, oxidized starch, phosphorylated starch, casein, and salts thereof. Any of these thickening agents may be used singly, or two or more thereof may be used in any combination at any ratio.

In cases where a thickening agent is used, the ratio thereof with respect to the negative electrode active material is usually 0.1% by mass or higher, preferably 0.5% by mass or higher, more preferably 0.6% by mass or higher, but usually 5% by mass or lower, preferably 3% by mass or lower, more preferably 2% by mass or lower. The ratio of the thickening agent with respect to the negative electrode active material is preferably in this range from the standpoint of the coating property of an adhesive agent, and such a ratio allows the negative electrode active material layer to have a favorable ratio of the active material therein, which is preferred from the standpoints of the battery capacity and the resistance between the negative electrode active material particles.

### <A2-4. Positive Electrode>

The positive electrode for use in the nonaqueous electrolyte secondary battery will now be described.

### <A2-4-1. Positive Electrode Active Material>

First, a positive electrode active material for use in the positive electrode will be described.

### (1) Composition

The positive electrode active material is not particularly restricted as long as it is a transition metal oxide containing at least Ni and Co, in which Ni and Co constitute not less than 50% by mole of transition metals and which is capable of electrochemically absorbing and releasing metal ions, and the positive electrode active material is preferably, for example, a transition metal oxide which is capable of electrochemically absorbing and releasing lithium ions and contains lithium along with at least Ni and Co and in which Ni and Co constitute not less than 50% by mole of transition metals. Ni and Co have a redox potential suitable for the use as positive electrode materials of a secondary battery, and are thus appropriate for high-capacity applications.

In the transition metal component of such a lithium transition metal oxide, Ni and Co are contained as indispensable elements, and examples of other metals include Mn, V, Ti, Cr, Fe, Cu, Al, Mg, Zr and Er, among which Mn, Ti, Fe, Al, Mg and Zr are preferred. Specific examples of the lithium transition metal oxide include LiNi_{0.85}Co_{0.10}Al_{0.05}O₂, LiNi_{0.80}Co_{0.15}Al_{0.05}O₂, LiNi_{0.33}Co_{0.33}Mn_{0.33}O₂, Li_{1.05}Ni_{0.33}Mn_{0.33}Co_{0.33}O₂, LiNi_{0.5}Co_{0.2}Mn_{0.3}O₂, Li_{1.05}Ni_{0.50}Mn_{0.29}Co_{0.21}O₂, LiNi_{0.6}Co_{0.2}Mn_{0.2}O₂, and LiNi_{0.8}Co_{0.1}Mn_{0.1}O₂.

Thereamong, the transition metal oxide is preferably one represented by the following composition formula (5):

Liₐ₁Ni_{b1}Co_{c1}M_{d1}O₂ (5)

(wherein, a1, b1, c1 and d1 represent numerical values of 0.9 ≤ a1 ≤ 1.1, 0.3 ≤ b1 ≤ 0.9, 0.1 ≤ c1 ≤ 0.5 and 0.0 ≤ d1 ≤ 0.5, satisfying 0.5 ≤ b1 + c1 and b1 + c1 + d1 = 1; and M represents at least one element selected from the group consisting of Mn, Al, Mg, Zr, Fe, Ti, and Er).

In the composition formula (5), d1 preferably represents a numerical value of 0.1 ≤ d1 ≤ 0.5.

By controlling the composition ratios of Ni, Co and other metal species as prescribed above, the transition metals are made unlikely to elute out of the positive electrode and, even if they did, Ni and Co would have only a small adverse effect in the nonaqueous secondary battery.

Especially, the transition metal oxide is more preferably one represented by the following composition formula (6):

Liₐ₂Ni_{b2}Co_{c2}M_{d2}O₂ (6)

(wherein, a2, b2, c2 and d2 represent numerical values of 0.9 ≤ a2 ≤ 1.1, 0.5 ≤ b2 ≤ 0.9, 0.1 ≤ c2 ≤ 0.2 and 0.0 ≤ d2 ≤ 0.3, satisfying c2 ≤ b2, 0.7 ≤ b2 + c2, and b2 + c2 + d2 = 1; and M represents at least one element selected from the group consisting of Mn, Al, Mg, Zr, Fe, Ti, and Er).

In the composition formula (6), d2 preferably represents a numerical value of 0.1 ≤ d2 ≤ 0.5.

By allowing the transition metal oxide to contain Ni and Co as main components and controlling the Ni composition ratio to be the same as or higher than the Co composition ratio, a good stability can be attained and a high capacity can be extracted when the transition metal oxide is used as the positive electrode of the nonaqueous secondary battery.

Especially, the transition metal oxide is still more preferably one represented by the following composition formula (7):

Liₐ₃Ni_{b3}Co_{c3}M_{d3}O₂ (7)

(wherein, a3, b3, c3 and d3 represent numerical values of 0.9 ≤ a3 ≤ 1.1, 0.35 ≤ b3 ≤ 0.9, 0.1 ≤ c3 ≤ 0.5 and 0.0 ≤ d3 ≤ 0.5, satisfying c3 < b3, 0.6 ≤ b3 + c3, and b3 + c3 + d3 = 1; and M represents at least one element selected from the group consisting of Mn, Al, Mg, Zr, Fe, Ti, and Er).

In the composition formula (7), d3 preferably represents a numerical value of 0.1 ≤ d3 ≤ 0.5.

Especially, the transition metal oxide is particularly preferably one represented by the following composition formula (8):

Liₐ₄Ni_{b4}Co_{c4}M_{d4}O₂ (8)

(wherein, a4, b4, c4 and d4 represent numerical values of 0.9 ≤ a4 ≤ 1.1, 0.5 ≤ b4 ≤ 0.9, 0.1 ≤ c4 ≤ 0.2 and 0.0 ≤ d4 ≤ 0.3, satisfying c4 < b4, 0.7 ≤ b4 + c4, and b4 + c4 + d4 = 1; and M represents at least one element selected from the group consisting of Mn, Al, Mg, Zr, Fe, Ti, and Er).

In the composition formula (8), d4 preferably represents a numerical value of 0.1 ≤ d4 ≤ 0.3.

By allowing the transition metal compound to have this composition, a particularly high capacity can be extracted when the transition metal oxide is used as the positive electrode of the nonaqueous secondary battery.

Further, two or more of the above-described positive electrode active materials may be used as a mixture. Similarly, at least one of the above-described positive electrode active materials and other positive electrode active material may be used as a mixture as well. Examples of the other positive electrode active material include transition metal oxides that are not mentioned above, transition metal phosphate compounds, transition metal silicate compounds, and transition metal borate compounds. Thereamong, lithium-manganese composite oxides having a spinel structure and lithium-containing transition metal phosphate compounds having an olivine structure are preferred. Specific examples of the lithium-manganese composite oxides having a spinel structure include LiMn₂O₄, LiMn_{1.8}Al_{0.2}O₄, and LiMn_{1.5}Ni_{0.5}O₄. These lithium-manganese composite oxides have the most stable structure and are thus unlikely to release oxygen even during malfunction of the nonaqueous electrolyte secondary battery, providing excellent safety.

The transition metals of the lithium-containing transition metal phosphate compounds are preferably V, Ti, Cr, Mn, Fe, Co, Ni, Cu or the like, and specific examples of such compounds include: iron phosphates, such as LiFePO₄, Li₃Fe₂(PO₄)₃, and LiFeP₂O₇; cobalt phosphates, such as LiCoPO₄; manganese phosphates, such as LiMnPO₄; and these lithium transition metal phosphate compounds in which some of the transition metal atoms contained as a main constituent are substituted with other metal such as Al, Ti, V, Cr, Mn, Fe, Co, Li, Ni, Cu, Zn, Mg, Ga, Zr, Si, Nb, Mo, Sn, or W.

Thereamong, a lithium iron phosphate compound is preferred since iron is not only abundant in terms of resource amount and thus an extremely cheap metal but also hardly hazardous. In other words, among the above-described specific examples, LiFePO₄ can be mentioned as a more preferred specific example.

### (2) Surface Coating

The above-described positive electrode material may be used in the form that a substance having a composition different from that of the substance mainly constituting the positive electrode active material is adhered to the surface (hereinafter, such a substance is referred to as "surface adhering substance" as appropriate). Examples of the surface adhering substance include: oxides, such as aluminum oxide, silicon oxide, titanium oxide, zirconium oxide, magnesium oxide, calcium oxide, boron oxide, antimony oxide, and bismuth oxide; sulfate salts, such as lithium sulfate, sodium sulfate, potassium sulfate, magnesium sulfate, calcium sulfate, and aluminum sulfate; carbonate salts, such as lithium carbonate, calcium carbonate, and magnesium carbonate; and carbon.

The surface adhering substance can be adhered to the surface of the positive electrode active material by, for example, a method in which the surface adhering substance is dissolved or suspended in a solvent and the positive electrode active material is impregnated with the resulting solution or suspension, followed by drying; a method in which a precursor of the surface adhering substance is dissolved or suspended in a solvent, and the resulting solution or suspension is impregnated into the positive electrode active material and then allowed to react by heating or the like; or a method in which a precursor of the positive electrode active material is fired simultaneously with addition of the surface adhering substance thereto. For adhesion of carbon, a method of mechanically adhering a carbonaceous material afterward in the form of activated carbon or the like may be employed as well.

The mass of the surface adhering substance on the surface of the positive electrode active material is preferably 0.1 ppm or more, more preferably 1 ppm or more, still more preferably 10 ppm or more, but preferably 20% or less, more preferably 10% or less, still more preferably 5% or less, with respect to the mass of the positive electrode active material.

By the presence of the surface adhering substance, an oxidation reaction of the nonaqueous electrolyte solution on the surface of the positive electrode active material can be suppressed, so that the battery life can be extended. Further, when the amount of adhering substance is in the above-described range, the effect thereof can be sufficiently expressed, and this makes the resistance unlikely to increase, without inhibiting the movement of lithium ions in and out of the positive electrode active material.

### (3) Shape

The particles of the positive electrode active material particles may have any conventionally used shape, such as a lump shape, a polyhedral shape, a spherical shape, an ellipsoidal shape, a plate shape, a needle shape or a columnar shape. Further, primary particles may be aggregated to form secondary particles that have a spherical or ellipsoidal shape.

### (4) Tap Density

The tap density of the positive electrode active material is preferably 0.5 g·cm⁻³ or higher, more preferably 1.0 g·cm⁻³ or higher, still more preferably 1.5 g·cm⁻³ or higher, but preferably 4.0 g·cm⁻³ or lower, more preferably 3.7 g·cm⁻³ or lower.

By using a metal composite oxide powder having a high tap density, a high-density positive electrode active material layer can be formed. When the tap density of the positive electrode active material is in the above-described range, the amount of a dispersion medium required for the formation of the positive electrode active material layer is appropriate, and the amount of a conductive material and that of a binder are thus optimized; therefore, the packing rate of the positive electrode active material in the resulting positive electrode active material layer is not restricted, and the effect on the battery capacity is reduced.

As for the measurement of the tap density of the positive electrode active material, after filling up a 20-cm³ tapping cell with a sample by dropping the sample thereto through a sieve having a mesh size of 300 µm, the cell is tapped 1,000 times at a stroke length of 10 mm using a powder density meter (e.g., TAP DENSER manufactured by Seishin Enterprise Co., Ltd.), and the density is calculated from the resulting volume and the mass of the sample. The thus calculated tap density is defined as the tap density of the positive electrode active material in the present embodiment.

### (5) Median Diameter d50

The median diameter d50 of the particles of the positive electrode active material particles (secondary particle size when primary particles are aggregated to form secondary particles) is determined using a laser diffraction-scattering particle size distribution analyzer.

The median diameter d50 is preferably 0.1 µm or larger, more preferably 0.5 µm or larger, still more preferably 1 µm or larger, particularly preferably 3 µm or larger, but preferably 30 µm or smaller, more preferably 20 µm or smaller, still more preferably 16 µm or smaller, particularly preferably 15 µm or smaller. When the median diameter d50 is in this range, a high-bulk-density product is likely to be obtained and dispersion of lithium in the particles does not take time; therefore, deterioration of the battery characteristics is unlikely to occur. In addition, streak formation and the like are less likely to occur in the production of a battery positive electrode, i.e. when the active material, a conductive material, a binder and the like are made into a slurry using a solvent and this slurry is applied in a thin film form.

The packing property in the positive electrode production can be further improved by mixing two or more kinds of positive electrode active materials having different median diameters d50 at an arbitrary ratio.

The median diameter d50 of the positive electrode active material is measured after a dispersion of the positive electrode active material is subjected to a 5-minute ultrasonication, and the measurement is performed by a particle size distribution analyzer (e.g., LA-920 manufactured by Horiba, Ltd. Co., Ltd.) using a 0.1%-by-mass aqueous sodium hexametaphosphate solution as a dispersion medium, with a measurement refractive index being set at 1.24.

### (6) Average Primary Particle Size

When primary particles are aggregated to form secondary particles, the average primary particle size of the positive electrode active material is preferably 0.01 µm or larger, more preferably 0.05 µm or larger, still more preferably 0.08 µm or larger, particularly preferably 0.1 µm or larger, but preferably 3 µm or smaller, more preferably 2 µm or smaller, still more preferably 1 µm or smaller, particularly preferably 0.6 µm or smaller. When the average primary particle size is in this range, spherical secondary particles are likely to be formed and an appropriate powder packing property is attained, so that a sufficient specific surface area can be ensured, and deterioration of the battery performance such as output characteristics can thus be suppressed.

The average primary particle size of the positive electrode active material is determined by observation under a scanning electron microscope (SEM). Specifically, on a micrograph taken at a magnification of ×10,000, the length of the longest section of each primary particle defined by opposing boundaries along a horizontal straight line is measured for arbitrarily selected 50 primary particles, and an average of the thus measured values is calculated, whereby the average primary particle size is determined.

### (7) BET Specific Surface Area

The BET specific surface area of the positive electrode active material, which is determined by a BET method, is preferably 0.2 m²·g⁻¹ or larger, more preferably 0.3 m²·g⁻¹ or larger, still more preferably 0.4 m²·g⁻¹ or larger, but preferably 4.0 m²·g⁻¹ or smaller, more preferably 2.5 m²·g⁻¹ or smaller, still more preferably 1.5 m²·g⁻¹ or smaller. When the value of the BET specific surface area is in this range, deterioration of the battery performance is likely to be inhibited. In addition, since a sufficient tap density can be ensured, a good coating property is attained in the formation of the positive electrode active material.

The BET specific surface area of the positive electrode active material is measured using a surface area meter (e.g., a fully automatic surface area analyzer manufactured by Ohkura Riken Co., Ltd.). Specifically, the measurement is performed by a gas-flowing nitrogen adsorption single-point BET method where a sample is preliminary dried at 150°C for 30 minutes in a nitrogen stream, and the specific surface area thereof is subsequently measured using a nitrogen-helium mixed gas precisely adjusted to have a relative nitrogen pressure value of 0.3 with respect to the atmospheric pressure. The thus determined specific surface area is defined as the BET specific surface area of the positive electrode active material in the present embodiment.

### (8) Method of Producing Positive Electrode Active Material

A method of producing the positive electrode active material is not particularly restricted within a range that does not depart from the gist of the invention according to the present embodiment. Examples thereof include several methods, and a general method of producing an inorganic compound may be employed.

Particularly, for the production of a spherical or ellipsoidal active material, a variety of methods can be considered, and one example thereof is a method in which a transition metal raw material substance (e.g., a nitrate salt, a sulfate salt or the like of a transition metal) and, as required, a raw material substance of other element are dissolved, or pulverized and dispersed in a solvent such as water, the pH of the resulting solution or dispersion is adjusted with stirring to produce and recover a spherical precursor, and this precursor is subsequently dried as required, after which a Li source such as LiOH, Li₂CO₃ or LiNO₃ is added thereto and the resultant is fired at a high temperature to obtain an active material.

Another example is a method in which a transition metal raw material substance (e.g., a nitrate salt, a sulfate salt, a hydroxide, an oxide or the like of a transition metal) and, as required, a raw material substance of other element are dissolved, or pulverized and dispersed in a solvent such as water, and the resulting solution or dispersion is dried and shaped using a spray drier or the like to produce a spherical or ellipsoidal precursor, after which a Li source such as LiOH, Li₂CO₃ or LiNO₃ is added thereto and the resultant is fired at a high temperature to obtain an active material.

Yet another example is a method in which a transition metal raw material substance (e.g., a nitrate salt, a sulfate salt, a hydroxide, an oxide or the like of a transition metal), a Li source such as LiOH, Li₂CO₃ or LiNO₃ and, as required, a raw material substance of other element are dissolved, or pulverized and dispersed in a solvent such as water, and the resulting solution or dispersion is dried and shaped using a spray drier or the like to produce a spherical or ellipsoidal precursor, after which this precursor is fired at a high temperature to obtain an active material.

### <A2-4-2. Constitution and Production Method of Positive Electrode>

The constitution of the positive electrode and a method of producing the positive electrode will now be described.

### (Method of Producing Positive Electrode)

The positive electrode is produced by forming a positive electrode active material layer containing particles of the positive electrode active material and a binder on a current collector. Such production of the positive electrode using the positive electrode active material can be carried out by any known method. For example, a positive electrode active material layer is formed on a current collector by dry-mixing the positive electrode active material and a binder with, as required, a conductive material, a thickening agent and the like to prepare a sheet-form mixture and subsequently press-bonding this sheet-form mixture onto a positive electrode current collector, or by dissolving or dispersing these materials in a liquid medium to prepare a slurry and subsequently coating and drying this slurry onto a positive electrode current collector, whereby the positive electrode can be obtained.

The content of the positive electrode active material in the positive electrode active material layer is preferably 60% by mass or higher, more preferably 70% by mass or higher, still more preferably 80% by mass or higher, but preferably 99.9% by mass or less, more preferably 99% by mass or less. When the content of the positive electrode active material is in this range, a sufficient capacitance can be ensured. In addition, the resulting positive electrode has a sufficient strength. A single kind of positive electrode active material powder may be used individually, or two or more kinds of positive electrode active material powder having different compositions or physical properties may be used in any combination at any ratio. When two or more kinds of active materials are used in combination, it is preferred to use the above-described composite oxide containing lithium and manganese as a powder component. In large-sized batteries for automobile applications and the like where a large capacity is required and the active material is to be used in a large amount, cobalt and nickel are not preferred from the cost standpoint since they are not abundant in terms of resource amount and are thus expensive metals; therefore, it is desirable to use manganese, which is a less expensive transition metal, as a main component.

### (Conductive Material)

As the conductive material, any known conductive material can be used. Specific examples thereof include metal materials, such as copper and nickel; and carbonaceous materials, such as graphites (e.g., natural graphites and artificial graphites), carbon blacks (e.g., acetylene black), and amorphous carbon (e.g., needle coke). Any of these conductive materials may be used singly, or two or more thereof may be used in any combination at any ratio.

The content of the conductive material in the positive electrode active material layer is preferably 0.01% by mass or higher, more preferably 0.1% by mass or higher, still more preferably 1% by mass or higher, but preferably 50% by mass or less, more preferably 30% by mass or less, still more preferably 15% by mass or less. When the content of the conductive material is in this range, a sufficient electrical conductivity can be ensured. In addition, a reduction in the battery capacity is likely to be inhibited.

### (Binder)

The binder used for the production of the positive electrode active material layer is not particularly restricted as long as it is a material that is stable against the nonaqueous electrolyte solution and the solvent used in the electrode production.

When the positive electrode is produced by a coating method, the binder is not particular restricted as long as it is a material that can be dissolved or dispersed in the liquid medium used in the electrode production, and specific examples of such a binder include: resin-based polymers, such as polyethylene, polypropylene, polyethylene terephthalate, polymethyl methacrylate, aromatic polyamides, cellulose, and nitrocellulose; rubbery polymers, such as SBR (styrene-butadiene rubbers), NBR (acrylonitrile-butadiene rubbers), fluororubbers, isoprene rubbers, butadiene rubbers, and ethylene-propylene rubbers; thermoplastic elastomeric polymers, such as styrene-butadiene-styrene block copolymers, and hydrogenation products thereof, EPDM (ethylene-propylene-diene terpolymers), styrene-ethylene-butadiene-ethylene copolymers, styrene-isoprene-styrene block copolymers, and hydrogenation products thereof; soft resinous polymers, such as syndiotactic 1,2-polybutadiene, polyvinyl acetate, ethylene-vinyl acetate copolymers, and propylene-*α*-olefin copolymers; fluorocarbon-based polymers, such as polyvinylidene fluoride (PVDF), polytetrafluoroethylene, fluorinated polyvinylidene fluoride, and tetrafluoroethylene-ethylene copolymers; and polymer compositions having ionic conductivity for alkali metal ions (particularly lithium ions). Any of these materials may be used singly, or two or more thereof may be used in any combination at any ratio.

The content of the binder in the positive electrode active material layer is preferably 0.1% by mass or higher, more preferably 1% by mass or higher, still more preferably 3% by mass or higher, but preferably 80% by mass or less, more preferably 60% by mass or less, still more preferably 40% by mass or less, particularly preferably 10% by mass or less. When the ratio of the binder is in this range, the positive electrode active material can be sufficiently retained, and the mechanical strength of the positive electrode can be ensured; therefore, favorable battery performance such as cycle characteristics are attained. This also leads to avoidance of a reduction in the battery capacity and conductivity.

### (Liquid Medium)

The type of the liquid medium used in the preparation of a slurry used for forming a positive electrode active material layer is not particularly restricted as long as it is a solvent that is capable of dissolving or dispersing the positive electrode active material, the conductive material and the binder as well as a thickening agent used as required, and either an aqueous solvent or an organic solvent may be used.

Examples of the aqueous medium include water, and mixed media of alcohol and water. Examples of the organic medium include: aliphatic hydrocarbons, such as hexane; aromatic hydrocarbons, such as benzene, toluene, xylene, and methylnaphthalene; heterocyclic compounds, such as quinoline and pyridine; ketones, such as acetone, methyl ethyl ketone, and cyclohexanone; esters, such as methyl acetate and methyl acrylate; amines, such as diethylenetriamine and *N*,*N*-dimethylaminopropylamine; ethers, such as diethyl ether and tetrahydrofuran (THF); amides, such as *N*-methylpyrrolidone (NMP), dimethylformamide, and dimethylacetamide; and aprotic polar solvents, such as hexamethylphosphoramide and dimethyl sulfoxide. Any of these media may be used singly, or two or more thereof may be used in any combination at any ratio.

### (Thickening Agent)

When an aqueous medium is used as the liquid medium for the formation of a slurry, it is preferred to prepare a slurry using a thickening agent and a latex such as a styrene-butadiene rubber (SBR). The thickening agent is usually used for the purpose of preparing the viscosity of the resulting slurry.

The thickening agent is not particularly restricted as long as it does not markedly limit the effects of the invention according to the present embodiment, and specific examples of the thickening agent include carboxymethyl cellulose, methyl cellulose, hydroxymethyl cellulose, ethyl cellulose, polyvinyl alcohol, oxidized starch, phosphorylated starch, casein, and salts thereof. Any of these thickening agents may be used singly, or two or more thereof may be used in any combination at any ratio.

In cases where a thickening agent is used, the ratio thereof with respect to a total amount of the positive electrode active material and the thickening agent is preferably 0.1% by mass or higher, more preferably 0.5% by mass or higher, still more preferably 0.6% by mass or higher, but preferably 5% by mass or lower, more preferably 3% by mass or lower, still more preferably 2% by mass or lower. When the ratio of the thickening agent is in this range, a good coating property is attained, and the resulting positive electrode material layer has a sufficient ratio of the active material; therefore, problems of a reduction in the battery capacity and an increase in the resistance between the positive electrode active material particles are likely to be avoided.

### (Consolidation)

The positive electrode active material layer obtained by coating and drying the above-described slurry onto a current collector is preferably consolidated by means of hand pressing, roller pressing or the like so as to increase the packing density of the positive electrode active material. The density of the positive electrode active material layer is preferably 1 g·cm⁻³ or higher, more preferably 1.5 g·cm⁻³ or higher, particularly preferably 2 g·cm⁻³ or higher, but preferably 4 g·cm⁻³ or lower, more preferably 3.5 g·cm⁻³ or lower, particularly preferably 3 g·cm⁻³ or lower. When the density of the positive electrode active material layer is in this range, the permeability of the nonaqueous electrolyte solution to the vicinity of the interface between the current collector and the active material is not reduced, so that favorable charge-discharge characteristics are attained particularly at high current densities. In addition, neither a reduction in the conductivity between the active material particles nor an increase in the battery resistance is likely to occur.

### (Current Collector)

The material of the positive electrode current collector is not particularly restricted, and any known material can be used. Specific examples thereof include: metal materials, such as aluminum, stainless steel, nickel-plated steel, titanium, and tantalum; and carbonaceous materials, such as carbon cloth and carbon paper. Thereamong, a metal material, particularly aluminum, is preferred.

When the current collector is a metal material, the current collector may have any shape of, for example, a metal foil, a metal cylinder, a metal coil, a metal sheet, a metal thin film, an expanded metal, a punched metal, and a foamed metal and, when the current collector is a carbonaceous material, examples thereof include a carbon sheet, a carbon thin film, and a carbon cylinder. Thereamong, the current collector is preferably a metal thin film. As appropriate, the current collector may be in the form of a mesh.

The current collector may have any thickness; however, the thickness is preferably 1 µm or greater, more preferably 3 µm or greater, still more preferably 5 µm or greater, but preferably 1 mm or less, more preferably 100 µm or less, still more preferably 50 µm or less. When the thickness of the current collector is in this range; a sufficient strength required as a current collector can be ensured. In addition, the current collector has good ease of handling.

The thickness ratio of the current collector and the positive electrode active material layer is not particularly restricted; however, the value of "(Thickness of active material layer on one side immediately before injection of nonaqueous electrolyte solution)/(Thickness of current collector)" is preferably 150 or smaller, more preferably 20 or smaller, particularly preferably 10 or smaller, but preferably 0.1 or larger, more preferably 0.4 or larger, particularly preferably 1 or larger. When the thickness ratio of the current collector and the positive electrode active material layer is in this range, heat generation by the current collector due to Joule's heat during high-current-density charging/discharging is unlikely to occur. In addition, the volume ratio of the current collector with respect to the positive electrode active material is hardly increased, so that a reduction in the battery capacity can be inhibited.

### (Electrode Area)

From the standpoint of improving the stability under high-output and high-temperature conditions, the positive electrode active material layer preferably has a large area relative to the outer surface area of a battery outer casing. Specifically, the total area of the positive electrode is, in terms of area ratio, preferably 20 times or larger, more preferably 40 times or larger, with respect to the exterior surface area of the nonaqueous electrolyte secondary battery. The "outer surface area of outer casing" refers to, in the case of a closed-bottom prism-shaped casing, a total area calculated from the length, the width and the thickness of a portion of the casing that is filled with a power-generating element, excluding the projecting parts of the terminals. In the case of a closed-bottom cylindrical casing, the "outer surface area of outer casing" refers to a geometric surface area determined by approximation of a portion of the casing that is filled with a power-generating element, excluding the projecting parts of the terminals, to a cylinder. The "the total area of the positive electrode", which is a geometric surface area of a positive electrode mixture layer facing a mixture layer containing the negative electrode active material, refers to a sum of the areas of the respective surfaces in a structure in which positive electrode layer mixture layers are formed on the respective sides via a current collector foil.

### (Discharge Capacity)

When the nonaqueous electrolyte solution is used, the capacitance of the elements of the nonaqueous electrolyte secondary battery that are housed in a single battery casing (the capacitance measured in the course of discharging the battery from a fully-charged state to a discharged state) is preferably 1 ampere hour (Ah) or higher since this leads to an enhanced effect of improving the low-temperature discharge characteristics. Accordingly, the positive electrode plate is designed to have a discharge capacity of preferably 3 Ah, more preferably 4 Ah or higher, but preferably 100 Ah or less, more preferably 70 Ah or less, particularly preferably 50 Ah or less, in a fully-charged state. When the capacitance of the elements of the nonaqueous electrolyte secondary battery that are housed in a single battery casing is in the above-described range, a voltage drop caused by electrode reaction resistance during extraction of a large current is not overly large, so that a reduction in the power efficiency can be inhibited. In addition, since the temperature distribution caused by internal heat generation of the battery during pulse charging and discharging is not excessively wide, phenomena of deterioration in the durability against repeated charging and discharging and a reduction in the heat dissipation efficiency against abrupt heat generation in the event of a defect such as overcharging or internal short-circuiting can be avoided.

### (Thickness of Positive Electrode Plate)

The thickness of the positive electrode plate is not particularly restricted; however, from the standpoint of attaining a high capacity and a high output as well as excellent high-rate characteristics, the thickness of the positive electrode active material layer excluding the thickness of the current collector is preferably 10 µm or greater, more preferably 20 µm or greater, but preferably 200 µm or less, more preferably 100 µm or less, on one side of the current collector.

### <A2-5. Separator>

A separator is usually arranged between the positive electrode and the negative electrode for the purpose of inhibiting a short circuit. In this case, the separator is usually impregnated with the nonaqueous electrolyte solution.

The material and the shape of the separator are not particularly restricted as long as the separator does not markedly impair the effects of the invention according to the present embodiment, and any known material and shape can be employed. Particularly, a separator formed from a material stable against the nonaqueous electrolyte solution, such as a resin, a glass fiber or an inorganic material, can be used, and it is preferred to use a separator in the form of, for example, a porous sheet or a nonwoven fabric that has excellent liquid retainability.

As the material of a resin or glass-fiber separator, for example, polyolefins such as polyethylene and polypropylene, polytetrafluoroethylenes, polyether sulfones, and glass filters can be used. Thereamong, glass filters and polyolefins are preferred, and polyolefins are more preferred. Any of these materials may be used singly, or two or more thereof may be used in any combination at any ratio.

The thickness of the separator may be set arbitrarily; however, it is usually 1 µm or greater, preferably 5 µm or greater, more preferably 10 µm or greater, but usually 50 µm or less, preferably 40 µm or less, more preferably 30 µm or less. When the separator is thinner than this range, the insulation and the mechanical strength may be reduced. Meanwhile, when the separator is thicker than this range, not only the battery performance such as the rate characteristics may be deteriorated, but also the energy density of the nonaqueous electrolyte secondary battery as a whole may be reduced.

In cases where a porous material such as a porous sheet or a nonwoven fabric is used as the separator, the porosity of the separator may be set arbitrarily; however, it is usually 20% or higher, preferably 35% or higher, more preferably 45% or higher, but usually 90% or lower, preferably 85% or lower, more preferably 75% or lower. When the porosity is lower than this range, the membrane resistance is increased, and the rate characteristics thus tend to be deteriorated. Meanwhile, when the porosity is higher than this range, the mechanical strength and the insulation of the separator tend to be reduced.

The average pore size of the separator may also be set arbitrarily; however, it is usually 0.5 µm or smaller, preferably 0.2 µm or smaller, but usually 0.05 µm or larger. When the average pore size is larger than this range, a short circuit is likely to occur. Further, when the average pore size is smaller than this range, the membrane resistance is increased, and this may lead to deterioration of the rate characteristics.

Meanwhile, as the material of an inorganic separator, for example, an oxide such as alumina or silicon dioxide, a nitride such as aluminum nitride or silicon nitride, or a sulfate salt such as barium sulfate or calcium sulfate can be used, and the inorganic separator may have a particulate shape or a fibrous shape.

With regard to the form of the separator, a thin film such as a nonwoven fabric, a woven fabric, or a microporous film may be used. As a thin-film separator, one having a pore size of 0.01 to 1 µm and a thickness of 5 to 50 µm is preferably used. Aside from such an independent thin-film separator, a separator that is formed as, with the use of a resin binder, a composite porous layer containing particles of the above-described inorganic material on the surface layer of the positive electrode and/or the negative electrode, can be used. For example, using a fluorine resin as a binder, a composite porous layer containing alumina particles having a 90% particle size of smaller than 1 µm can be formed as a surface layer on both sides of the positive electrode.

### <A2-6. Battery Design>

### [Electrode Group]

An electrode group may have either a layered structure in which the above-described positive electrode plate and negative electrode plate are layered with the above-described separator being interposed therebetween, or a wound structure in which the above-described positive electrode plate and negative electrode plate are spirally wound with the above-described separator being interposed therebetween. The volume ratio of the electrode group with respect to the internal volume of the battery (this volume ratio is hereinafter referred to as "electrode group occupancy") is usually 40% or higher, preferably 50% or higher, but usually 90% or lower, preferably 80% or lower. When the electrode group occupancy is lower than this range, the battery has a small capacity. Meanwhile, when the electrode group occupancy is higher than this range, since the void space is small, there are cases where an increase in the battery temperature causes swelling of members and increases the vapor pressure of the electrolyte liquid component, as a result of which the internal pressure is increased to deteriorate the various properties of the battery, such as the charging-discharging repeating performance and the high-temperature storage characteristics, and to activate a gas release valve for relieving the internal pressure to the outside.

### [Current Collector Structure]

The current collector structure is not particularly restricted; however, in order to more effectively realize an improvement in the discharge characteristics attributed to the nonaqueous electrolyte solution, it is preferred to adopt a structure that reduces the resistance of wiring and joint parts. By reducing the internal resistance in this manner, the effects of using the nonaqueous electrolyte solution are particularly favorably exerted.

In an electrode group having the above-described layered structure, the metal core portions of the respective electrode layers are preferably bundled and welded to a terminal. When the area of a single electrode is large, the internal resistance is high; therefore, it is also preferred to reduce the resistance by arranging plural terminals in each electrode. In an electrode group having the above-described wound structure, the internal resistance can be reduced by arranging plural lead structures on each of the positive electrode and the negative electrode and bundling them to a terminal.

### [Outer Casing]

The material of the outer casing is not particularly restricted as long as it is a material that is stable against the nonaqueous electrolyte solution to be used. Specifically, a metal such as a nickel-plated steel sheet, stainless steel, aluminum, an aluminum alloy or a magnesium alloy, or a laminated film composed of a resin and an aluminum foil can be used. From the standpoint of weight reduction, it is preferred to use a metal such as aluminum or an aluminum alloy, or a laminated film.

Examples of an outer casing using any of the above-described metals include those having a hermetically sealed structure obtained by welding metal pieces together by laser welding, resistance welding or ultrasonic welding, and those having a caulked structure obtained using the metals via a resin gasket. Examples of an outer casing using the above-described laminated film include those having a hermetically sealed structure obtained by heat-fusing resin layers together. In order to improve the sealing performance, a resin different from the resin used in the laminated film may be interposed between the resin layers. Particularly, in the case of forming a sealed structure by heat-fusing resin layers via a collector terminal, since it involves bonding between a metal and a resin, a polar group-containing resin or a resin modified by introduction of a polar group is preferably used as the resin to be interposed.

### [Protective Element]

Examples of a protective element include a PTC (Positive Temperature Coefficient) element whose resistance increases in the event of abnormal heat generation or excessive current flow, a thermal fuse, a thermistor, and a valve (current cutoff valve) that blocks a current flowing into a circuit in response to a rapid increase in the internal pressure or internal temperature of the battery in the event of abnormal heat generation. The protective element is preferably selected from those that are not activated during normal use at a high current and, from the standpoint of attaining a high output, it is more preferred to design the battery such that neither abnormal heat generation nor thermal runaway occurs even without a protective element.

### [Outer Package]

The nonaqueous electrolyte secondary battery is usually constructed by housing the above-described nonaqueous electrolyte solution, negative electrode, positive electrode, separator and the like in an outer package. This outer package is not restricted, and any known outer package can be employed as long as it does not markedly impair the effects of the invention according to the present embodiment.

Specifically, although the material of the outer package may be selected arbitrarily, for example, nickel-plated iron, stainless steel, aluminum or an alloy thereof, nickel, or titanium is usually used.

The shape of the outer package may also be selected arbitrarily, and the outer package may have any of, for example, a cylindrical shape, a prismatic shape, a laminated shape, a coin shape, and a large-sized shape.

### <B. Second Embodiment>

The second embodiment of the present invention will now be described in detail. The below-described embodiment is merely one example (representative example) of the embodiments of the present invention, and the invention of the present embodiment is not restricted thereto. Further, modifications can be arbitrarily made to carry out the invention of the present embodiment, without departing from the gist of the present embodiment.

The nonaqueous electrolyte solution of the present embodiment is a nonaqueous electrolyte secondary battery including: a positive electrode; a negative electrode; and a nonaqueous electrolyte solution,
wherein the positive electrode contains a metal oxide represented by the following composition formula (14):

Liₐ₁₀₁Ni_{b101}Co_{c101}M_{d101}O₂ (14)

(wherein, a101, b101, c101 and d101 represent numerical values of 0.90 ≤ a101 ≤ 1.10, 0.50 ≤ b101 ≤ 0.98, 0.01 ≤ c101 < 0.50 and 0.01 ≤ d101 < 0.50, satisfying b101 + c101 + d101 = 1; and M represents at least one element selected from the group consisting of Mn, Al, Mg, Zr, Fe, Ti, and Er), and
the nonaqueous electrolyte solution contains a compound represented by the following Formula (C): 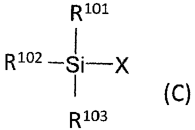 (wherein, R¹⁰¹ to R¹⁰³ each independently represent an alkyl group having 1 to 10 carbon atoms which optionally has a substituent, or an aryl group having 6 to 18 carbon atoms which optionally has a substituent; and X represents hydrogen, an alkenyl group having 2 to 10 carbon atoms, or an alkynyl group having 2 to 10 carbon atoms).

### <B 1. Nonaqueous Electrolyte Solution>

### <B1-1. Compound Represented by Formula (C)>

The nonaqueous electrolyte solution is characterized by containing a compound represented by the following Formula (C):

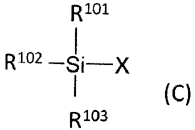

In Formula (C), R¹⁰¹ to R¹⁰³ each independently represent an alkyl group having 1 to 10 carbon atoms which optionally has a substituent, or an aryl group having 6 to 18 carbon atoms which optionally has a substituent; and X represents hydrogen, an alkenyl group having 2 to 10 carbon atoms, or an alkynyl group having 2 to 10 carbon atoms

Examples of the substituent include a cyano group, an isocyanate group, an acyl group (-(C=O)-Rb), an acyloxy group (-O(C=O)-Rb), an alkoxycarbonyl group (-(C=O)O-Rb), a sulfonyl group (-SO₂-Rb), a sulfonyloxy group (-O(SO₂)-Rb), an alkoxysulfonyl group (-(SO₂)-O-Rb), an alkoxycarbonyloxy group (-O-(C=O)-O-Rb), an ether group (-O-Rb), an acryl group, a methacryl group, a halogen (preferably fluorine), and a trifluoromethyl group. Rb represents an alkyl group having 1 to 10 carbon atoms, an alkenyl group having 2 to 10 carbon atoms, or an alkynyl group having 2 to 10 carbon atoms. It is noted here that the number of carbon atoms in each substituent is not included in the number of carbon atoms of the respective R¹⁰¹ to R¹⁰³.

Among these substituents, a cyano group, an isocyanate group, an acyl group (-(C=O)-Rb), an acyloxy group (-O(C=O)-Rb), and an alkoxycarbonyl group (-(C=O)O-Rb) are preferred; a cyano group, an isocyanate group, an acyl group (-(C=O)-Rb), and an alkoxycarbonyl group (-(C=O)O-Rb) are more preferred; a cyano group, an isocyanate group, and an alkoxycarbonyl group (-(C=O)O-Rb) are particularly preferred; and a cyano group is most preferred.

Specific examples of the alkyl group having 1 to 10 carbon atoms, which relates to R¹⁰¹ to R¹⁰³, include a methyl group, an ethyl group, an *n*-propyl group, an iso-propyl group, an *n*-butyl group, a *tert*-butyl group, an *n*-pentyl group, a hexyl group, a heptyl group, an octyl group, a nonyl group, and a decyl group. Thereamong, a methyl group, an ethyl group, an *n*-propyl group, an *n*-butyl group, a *tert*-butyl group, an *n*-pentyl group, and a hexyl group are preferred; a methyl group, an ethyl group, an *n*-propyl group, an *n*-butyl group, a *tert*-butyl group, and an *n*-pentyl group are more preferred; a methyl group, an ethyl group, an *n*-butyl group, and a *tert*-butyl group are still more preferred; and a methyl group, an ethyl group, and a *tert*-butyl group are particularly preferred.

Specific examples of the aryl group having 6 to 18 carbon atoms, which relates to R¹⁰¹ to R¹⁰³, include a phenyl group, a tolyl group, a benzyl group, and a phenethyl group. Thereamong, the aryl group is preferably a phenyl group since this facilitates concentration of the compound (C) onto the surface of the positive electrode active material.

Specific examples of the alkenyl group having 2 to 10 carbon atoms, which relates to X, include a vinyl group, an allyl group, a methallyl group, a 2-butenyl group, a 3-methyl-2-butenyl group, a 3-butenyl group, and a 4-pentenyl group. Thereamong, a vinyl group, an allyl group, a methallyl group, and a 2-butenyl group are preferred; a vinyl group, an allyl group, and a methallyl group are more preferred; and a vinyl group and an allyl group are particularly preferred. When X is any of these alkenyl groups, reaction with alkaline impurities can be controlled in a preferred manner.

Specific examples of the alkynyl group having 2 to 10 carbon atoms, which relates to X, include an ethynyl group, a 2-propynyl group, a 2-butynyl group, a 3-butynyl group, a 4-pentynyl group, and a 5-hexynyl group. Thereamong, an ethynyl group, a 2-propynyl group, a 2-butynyl group, and a 3-butynyl group are preferred; an ethynyl group, a 2-propynyl group, and a 3-butynyl group are more preferred; and an ethynyl group and a 2-propynyl group are particularly preferred. When X is any of these alkynyl groups, reaction with alkaline impurities can be controlled in a preferred manner.

From the standpoint of facilitating concentration of the compound represented by Formula (C) onto the positive electrode active material surface, in Formula (C), R¹⁰¹ to R¹⁰³ are each most preferably a methyl group or an ethyl group. It is not necessarily that all of R¹⁰¹ to R¹⁰³ be methyl groups as long as one of R¹⁰¹ to R¹⁰³ is a methyl group. For example, the following combinations are preferred: (R¹⁰¹, R¹⁰², R¹⁰³) = (a methyl group, a methyl group, an ethyl group), (a methyl group, a methyl group, an *n*-butyl group), (a methyl group, a methyl group, a *tert*-butyl group), (a methyl group, a methyl group, a phenyl group), (a methyl group, an ethyl group, an ethyl group), and (a methyl group, a phenyl group, a phenyl group).

In Formula (C), X is preferably a hydrogen atom, a vinyl group, an allyl group or a methallyl group, more preferably a vinyl group, an allyl group or a methallyl group, still more preferably a vinyl group. Such a compound represented by Formula (C) has an improved reaction activity with alkaline impurities, so that the impurities are inactivated in a preferred manner.

The compound used in the present embodiment is a compound represented by Formula (C), and specific examples thereof include compounds having the following structures:

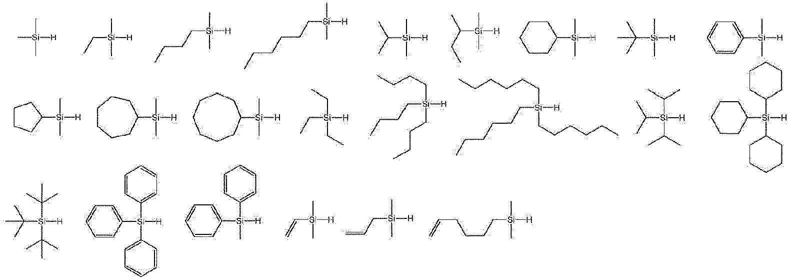

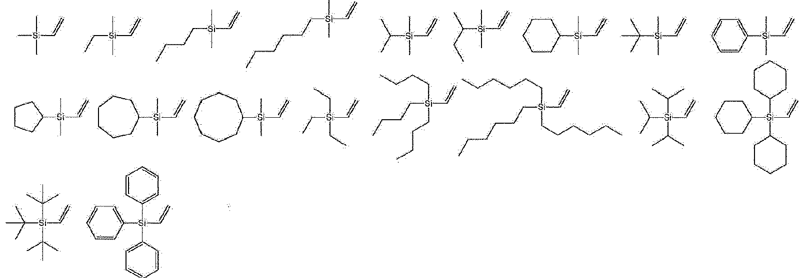

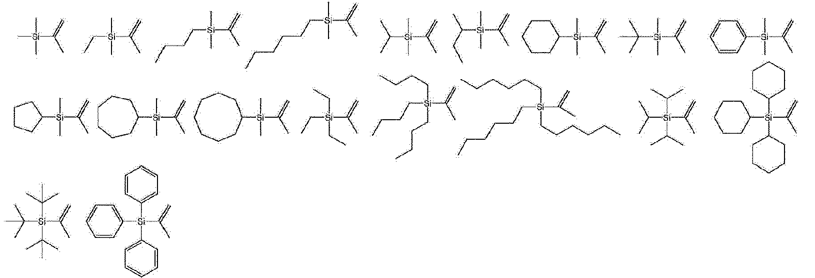

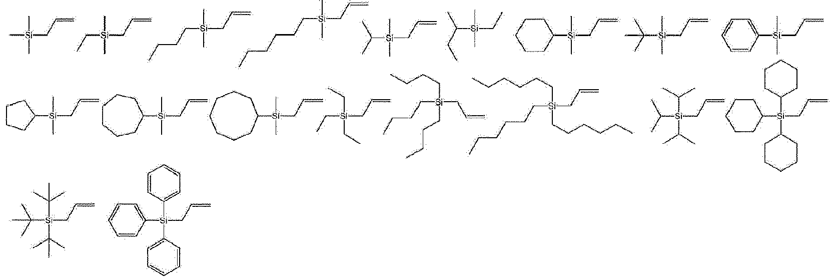

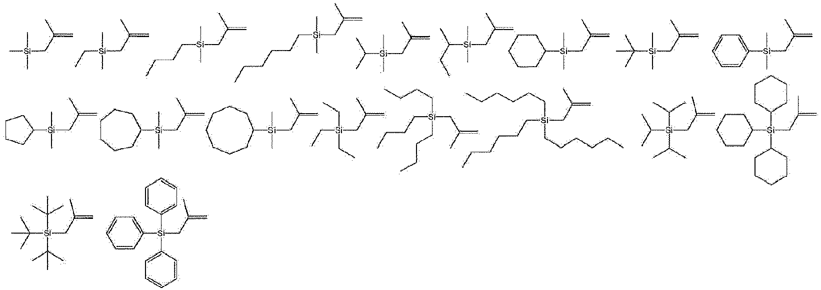

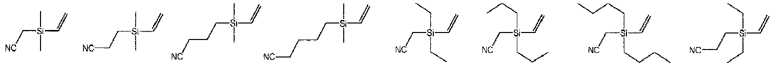

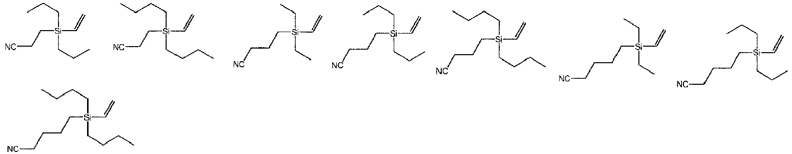

More preferred examples include compounds having the following structures. The compounds having the following structures have a preferable molecular size and thus exhibit a high concentration rate on the positive electrode surface.

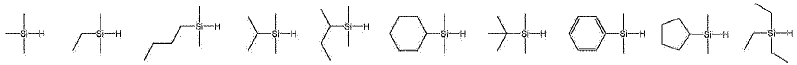

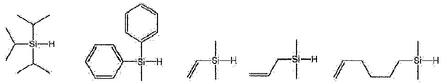

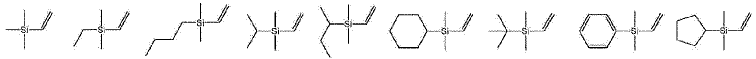

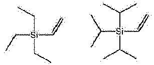

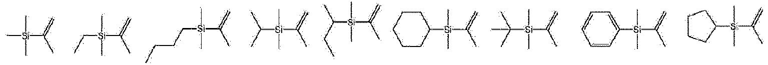

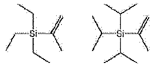

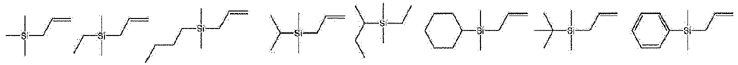

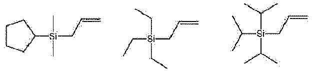

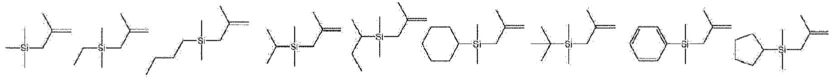

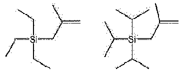

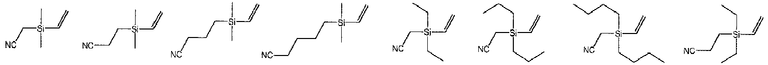

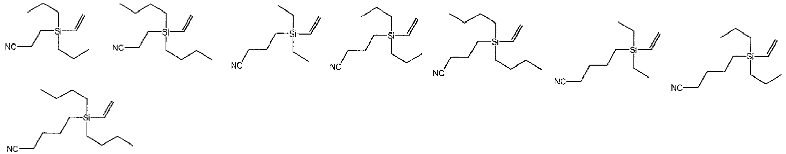

Particularly preferred examples include compounds having the following structures. Reactions of the compounds having the following structures with alkaline impurities proceed in a preferred manner.

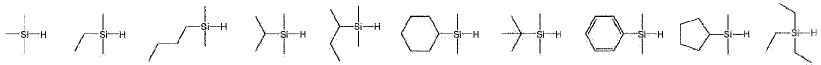

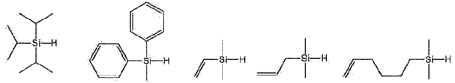

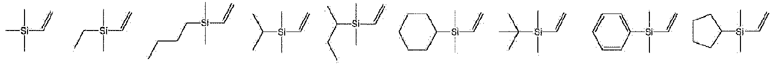

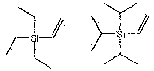

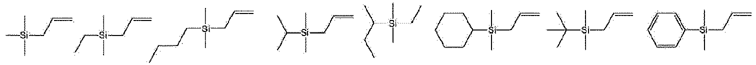

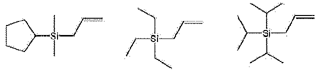

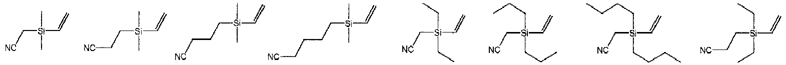

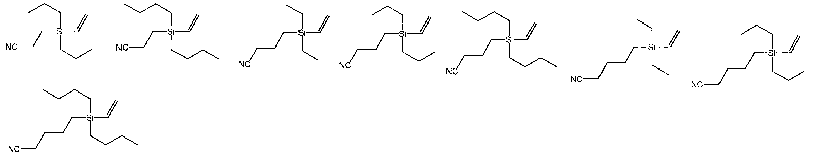

Most preferred examples include compounds having the following structures. Reactions of the compounds having the following structures with alkaline impurities proceed most effectively.

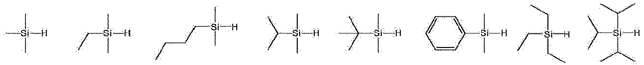

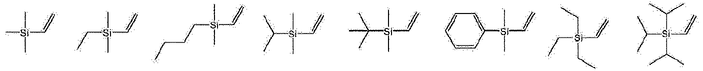

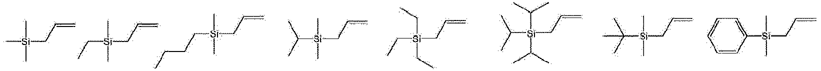

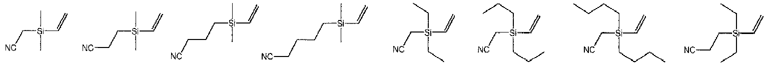

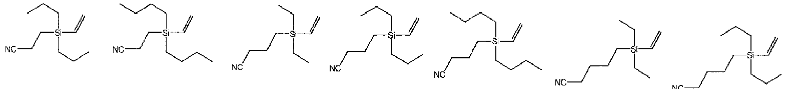

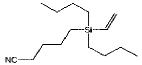

The total content the compound represented by Formula (C) with respect to a total amount of the nonaqueous electrolyte solution is usually 0.001% by mass or greater, preferably 0.01% by mass or greater, more preferably 0.1% by mass or greater, still more preferably 0.2% by mass or greater, but usually 10% by mass or less, preferably 4.5% by mass or less, more preferably 4% by mass or less, still more particularly preferably 3.5% by mass or less, particularly preferably 3.0% by mass or less, most preferably 2.0% by mass or less.

When the total content of the compound represented by Formula (C) with respect to a total amount of the nonaqueous electrolyte solution is in this range, reaction of the compound with alkaline impurities proceeds in a preferred manner, so that gas generation during high-temperature storage is suppressed.

In the nonaqueous electrolyte solution, it is preferred to use at least one selected from the group consisting of the below-described difluorophosphates, fluorosulfonates, and salts having a bis-fluorosulfonylimide structure in addition to the compound represented by Formula (C), since this further suppresses reactions caused by alkaline impurities, so that a battery unlikely to be swollen can be produced.

The mechanism in which the effect of suppressing gas generation during high-temperature storages is attained by incorporating the compound of Formula (C) is presumed as follows.

A transition metal oxide containing Ni as its transition metal is poorly stable in the atmosphere, and alkaline impurities represented by lithium carbonate exist on the surface. The amount of the impurities increases with the ratio of Ni in the transition metal oxide. When such alkaline impurities exist in the battery, the alkaline impurities react with a cyclic or open-chain carbonate in the electrolyte solution during high-temperature storage, causing a ring-opening reaction or a transesterification reaction to proceed. This reaction yields CO₂ gas; therefore, there is a problem that the battery is consequently swollen during the high-temperature storage.

To address this problem, in the present embodiment, a compound represented by Formula (C) is incorporated into the electrolyte solution. The compound represented by Formula (C) has, in its structure, a moiety X showing a high reaction activity with alkaline impurities. It is believed that this allows the compound represented by Formula (C) to inhibit a reaction to take place between alkaline impurities and the electrolyte solution by preferentially reacting with the alkaline impurities during high-temperature storage and to thereby contribute to suppression of gas generation during high-temperature storage.

It is noted here that the oxidation potential of the compound represented by Formula (C) is much lower than those of the electrolyte solution components; therefore, when Ni is not contained as a transition metal, an oxidative decomposition reaction of the compound represented by Formula (C) proceeds preferentially, as a result of which the gas generation during high-temperature storage is increased.

A method of incorporating the compound represented by Formula (C) into the electrolyte solution is not particularly restricted, and examples thereof include a method of directly adding the compound to the electrolyte solution; and a method of generating the compound in the battery or the electrolyte solution.

The "content of the compound represented by Formula (C)" means the content at any one of the time points when a nonaqueous electrolyte solution is produced, when the nonaqueous electrolyte solution is injected into a battery, and when the battery is shipped out as a product.

### <B1-2. Difluorophosphate, Fluorosulfonate, and Salt Having Bis-Fluorosulfonylimide Structure>

The electrolyte solution may further contain at least one compound selected from the group consisting of a difluorophosphate, a fluorosulfonate, and a salt having a bis-fluorosulfonylimide structure.

The content of any of the compounds belonging to the group consisting of these salts is preferably 0.001% by mass to 10% by mass with respect to a total amount of the nonaqueous electrolyte solution.

As for more specific embodiments of these salts, the difluorophosphate, the fluorosulfonate, and the salt having a bis-fluorosulfonylimide structure may each be the same as in the first embodiment.

### <B1-3. Electrolyte>

As an electrolyte, usually, a lithium salt can be used. The lithium salt may be the same as in the first embodiment, and is particularly preferably LiPF₆.

### <B1-4. Nonaqueous Solvent>

A nonaqueous solvent may be the same as in the first embodiment.

### <B1-5. Auxiliary Agent>

An auxiliary agent may be the same as in the first embodiment.

### <B2. Nonaqueous Electrolyte Secondary Battery>

The nonaqueous electrolyte secondary battery includes: a positive electrode that has a current collector and a positive electrode active material layer arranged on the current collector; a negative electrode that has a current collector and a negative electrode active material layer arranged on the current collector and is capable of absorbing and releasing ions; and the above-described nonaqueous electrolyte solution.

### <B2-1. Battery Configuration>

The battery configuration may be the same as in the first embodiment.

### <B2-2. Nonaqueous Electrolyte Solution>

The nonaqueous electrolyte solution may be the same as in the first embodiment.

### <B2-3. Negative Electrode>

The negative electrode may be the same as in the first embodiment.

### <B2-4. Positive Electrode>

The positive electrode may be the same as in the first embodiment, except for the composition of the positive electrode active material.

The positive electrode used in the nonaqueous electrolyte secondary battery will now be described.

### <Positive Electrode Active Material>

First, a positive electrode active material for use in the positive electrode will be described.

### (1) Composition

As the positive electrode in the nonaqueous electrolyte secondary battery, a lithium transition metal oxide represented by the following composition formula (14) is used:

Liₐ₁₀₁Ni_{b101}Co_{c101}M_{d101}O₂ (14)

(wherein, a101, b101, c101 and d101 represent numerical values of 0.90 ≤ a101 ≤ 1.10, 0.50 ≤ b101 ≤ 0.98, 0.01 ≤ c101 < 0.50 and 0.01 ≤ d101 < 0.50, satisfying b101 + c101 + d101 = 1; and M represents at least one element selected from the group consisting of Mn, Al, Mg, Zr, Fe, Ti, and Er).

Preferred specific examples of the lithium transition metal oxide represented by the composition formula (14) include LiNi_{0.85}Co_{0.10}Al_{0.05}O₂, LiNi_{0.80}Co_{0.15}Al_{0.05}O₂, LiNi_{0.5}Co_{0.2}Mn_{0.3}O₂, Li_{1.05}Ni_{0.50}Mn_{0.29}Co_{0.21}O₂, LiNi_{0.6}Co_{0.2}Mn_{0.2}O₂, and LiNi_{0.8}Co_{0.1}Mn_{0.1}O₂.

The transition metal oxide of the composition formula (14) is preferably represented by the following composition formula (15). The reason for this is because it allows the compound represented by Formula (C) to react with alkaline impurities in a preferred manner, and the effect of suppressing gas generation during high-temperature storage is thereby further improved.

Liₐ₁₀₂Ni_{b102}CO_{c102}M_{d102}O₂ (15)

(wherein, a102, b102, c102 and d102 represent numerical values of 0.90 ≤ a102 ≤ 1.10, 0.50 ≤ b102 ≤ 0.90, 0.05 ≤ c102 ≤ 0.30 and 0.05 ≤ d102 ≤ 0.30, satisfying b102 + c102 + d102 = 1; and M represents at least one element selected from the group consisting of Mn, Al, Mg, Zr, Fe, Ti, and Er)

The transition metal oxide of the composition formula (14) is more preferably represented by the following composition formula (16). The reason for this is because it allows the compound represented by Formula (C) to react with alkaline impurities in a more preferred manner, and the effect of suppressing gas generation during high-temperature storage is thereby yet further improved.

Liₐ₁₀₃Ni_{b103}Co_{c103}M_{d103}O₂ (16)

(wherein, a103, b103, c103 and d103 represent numerical values of 0.90 ≤ a103 ≤ 1.10, 0.50 ≤ b103 ≤ 0.80, 0.10 ≤ c103 ≤ 0.30 and 0.10 ≤ d103 ≤ 0.30, satisfying b103 + c103 + d103 = 1; and M represents at least one element selected from the group consisting of Mn, Al, Mg, Zr, Fe, Ti, and Er)

Preferred specific examples of the lithium transition metal oxide represented by the composition formula (16) include LiNi_{0.5}Co_{0.2}Mn_{0.3}O₂, Li_{1.05}Ni_{0.50}Mn_{0.29}Co_{0.21}O₂, LiNi_{0.6}Co_{0.2}Mn_{0.2}O₂, and LiNi_{0.8}Co_{0.1}Mn_{0.1}O₂.

In this composition formula, M is preferably Mn or Al. This improves the structural stability of the transition metal oxide, so that structural deterioration in repeated charging and discharging is suppressed. In the composition formula, M is more preferably Mn.

Further, two or more of the above-described positive electrode active materials may be used as a mixture. Similarly, at least one of the above-described positive electrode active materials and other positive electrode active material may be used as a mixture as well. Examples of the other positive electrode active material include transition metal oxides that are not mentioned above, transition metal phosphate compounds, transition metal silicate compounds, and transition metal borate compounds.

Thereamong, lithium-manganese composite oxides having a spinel structure and lithium-containing transition metal phosphate compounds having an olivine structure are preferred. Specific examples of the lithium-manganese composite oxides having a spinel structure include LiMn₂O₄, LiMn_{1.8}Al_{0.2}O₄, and LiMn_{1.5}Ni_{0.5}O₄. These lithium-manganese composite oxides have the most stable structure and are thus unlikely to release oxygen even during malfunction of the nonaqueous electrolyte secondary battery, providing excellent safety.

The transition metals of the lithium-containing transition metal phosphate compounds are preferably V, Ti, Cr, Mn, Fe, Co, Ni, Cu or the like, and specific examples of such compounds include: iron phosphates, such as LiFePO₄, Li₃Fe₂(PO₄)₃, and LiFeP₂O₇; cobalt phosphates, such as LiCoPO₄; manganese phosphates, such as LiMnPO₄; and these lithium transition metal phosphate compounds in which some of the transition metal atoms contained as a main constituent are substituted with other metal such as Al, Ti, V, Cr, Mn, Fe, Co, Li, Ni, Cu, Zn, Mg, Ga, Zr, Si, Nb, Mo, Sn, or W.

Thereamong, a lithium iron phosphate compound is preferred since iron is not only abundant in terms of resource amount and thus an extremely cheap metal but also hardly hazardous. In other words, among the above-described specific examples, LiFePO₄ can be mentioned as a more preferred specific example.

### <B2-5. Separator>

The separator may be the same as in the first embodiment.

### <B2-6. Battery Design>

The battery design may be the same as in the first embodiment.

### <C. Third Embodiment>

The third embodiment of the present invention will now be described in detail; however, the following descriptions of the requirements are merely examples (representative examples) of the embodiments of the present invention, and the present embodiment is not restricted to the contents specifically described below, and can be carried out with various modifications within the scope of the present embodiment.

The nonaqueous electrolyte solution of the present embodiment is a nonaqueous electrolyte solution for use in an energy device, containing the following (A) and (B):
(A) a compound represented by the following Formula (21), and
(B) a salt that contains an anion having at least one bond selected from an F-P-O bond, an F-S-O bond and an F-S=O bond 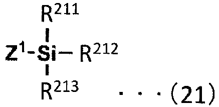 (wherein, R²¹¹, R²¹² and R²¹³ each independently represent an alkyl group having not more than 10 carbon atoms which optionally has a substituent; and Z¹ represents hydrogen or an alkenyl group having not more than 5 carbon atoms).

The above-described anion is preferably one of the following (i) to (vi):

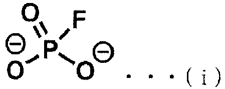

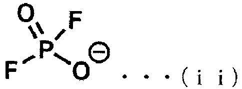

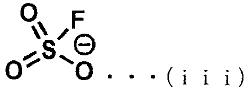

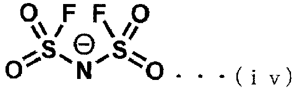

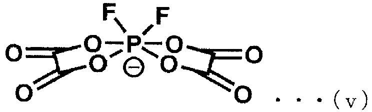

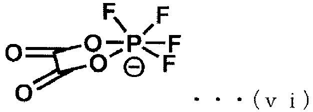

### <C1. Nonaqueous Electrolyte Solution>

The nonaqueous electrolyte solution simultaneously contains: (A) a compound represented by the above-described Formula (21); and (B) a salt that contains an anion having at least one bond selected from an F-P-O bond, an F-S-O bond and an F-S=O bond. The nonaqueous electrolyte solution is obtained by dissolving an electrolyte in a nonaqueous solvent and, therefore, the electrolyte, the nonaqueous solvent, and the components (A) and (B) are described below in the order mentioned.

### <C1-1. Electrolyte>

The electrolyte used in the nonaqueous electrolyte solution is not particularly restricted, and any electrolyte can be employed in accordance with the intended properties of an energy device.

Specific examples of the electrolyte include inorganic lithium salts, such as LiClO₄, LiAsF₆, LiPF₆, LiBF₄, and LiAlF₄; fluorine-containing organic lithium salts, such as LiCF₃SO₃, LiN(CF₃SO₂)₂, LiN(C₂F₅SO₂)₂, LiN(CF₃SO₂)(C₂F₅SO₂), LiN(CF₃SO₂)(C₃F₇SO₂), lithium cyclic 1,2-ethane disulfonylimide, lithium cyclic 1,3-propane disulfonylimide, lithium cyclic 1,2-perfluoroethane disulfonylimide, lithium cyclic 1,3-perfluoropropane disulfonylimide, lithium cyclic 1,4-perfluorobutane disulfonylimide, LiC(CF₃SO₂)₃, LiPF₄(CF₃)₂, LiPF₄(C₂F₅)₂, LiPF₄(CF₃SO₂)₂, LiPF₄(C₂F₅SO₂)₂, LiBF₃(CF₃), LiBF₃(C₂F₅), LiBF₂(CF₃)₂, LiBF₂(C₂F₅)₂, LiBF₂(CF₃SO₂)₂, and LiBF₂(C₂F₅SO₂)₂; and sodium salts and potassium salts, such as KPF₆, NaPF₆, NaBF₄, and CF₃SO₃Na.

Thereamong, lithium salts are preferred; LiPF₆, LiBF₄, LiCF₃SO₃, LiN(CF₃SO₂)₂, LiN(C₂F₅SO₂)₂, and lithium cyclic 1,2-perfluoroethane disulfonylimide are more preferred; LiPF₆, LiBF₄, LiCF₃SO₃, and LiN(CF₃SO₂)₂ are still more preferred; and LiPF₆ is particularly preferred.

Further, the nonaqueous electrolyte solution preferably contains a hexafluorophosphate as the electrolyte. A hexafluorophosphate is preferred since its hexafluorophosphate anion is electrochemically stable, and this can improve the charge-discharge efficiency of an energy device obtained using the nonaqueous electrolyte solution. In addition, the hexafluorophosphate can greatly increase the salt dissociation degree, so that the concentration of ions serving as charge carriers in the electrolyte solution can be increased.

Any of the above-described electrolytes may be used singly, or two or more thereof may be used in any combination at any ratio. Among the above-described electrolytes, it is preferred to use a combination of two kinds of inorganic lithium salts or a combination of an inorganic lithium salt and a fluorine-containing organic lithium salt since gas generation during continuous charging of an energy device or deterioration during high-temperature storage are thereby effectively suppressed.

The use of a combination of LiPF₆ and LiBF₄, or the use of a combination of an inorganic lithium salt, such as LiPF₆ or LiBF₄, and a fluorine-containing organic lithium salt, such as LiCF₃SO₃, LiN(CF₃SO₂)₂ or LiN(C₂F₅SO₂)₂, is particularly preferred.

When LiPF₆ and LiBF₄ are used in combination, the ratio of LiBF₄ with respect to all electrolytes is preferably 0.001% by mass to 20% by mass. When the ratio of LiBF₄ is in this range, an increase in the resistance of the nonaqueous electrolyte solution can be suppressed because of the low dissociation degree of LiBF₄.

Meanwhile, when an inorganic lithium salt, such as LiPF₆ or LiBF₄, and a fluorine-containing organic lithium salt, such as LiCF₃SO₃, LiN(CF₃SO₂)₂ or LiN(C₂F₅SO₂)₂, are used in combination, the ratio of the inorganic lithium salt with respect to all electrolytes is preferably 70% by mass to 99.9% by mass. When the ratio of the inorganic lithium salt is in this range, an increase in the resistance of the nonaqueous electrolyte solution, which is caused by a reduction in the proportion of the nonaqueous solvent in the whole nonaqueous electrolyte solution due to an excessively high ratio of the fluorine-containing organic lithium salt generally having a higher molecular weight than a hexafluorophosphate, can be suppressed.

In the composition of the nonaqueous electrolyte solution in an energy device that is ultimately produced, the electrolyte(s) such as a lithium salt may have any concentration as long as the effects of the invention according to the present embodiment are not markedly impaired; however, the concentration is preferably 0.5 mol/L to 3 mol/L. When the electrolyte concentration is this lower limit or higher, the nonaqueous electrolyte solution is likely to attain a sufficient ionic conductivity, while when the electrolyte concentration is the upper limit or lower, an excessive increase in the viscosity can be avoided. Accordingly, a good ionic conductivity and good energy device performance are likely to be ensured. The concentration of the electrolyte(s) such as a lithium salt is in a range of more preferably 0.6 mol/L or higher, still more preferably 0.8 mol/L or higher, but more preferably 2 mol/L or lower, still more preferably 1.5 mol/L or lower.

### <C1-2. Nonaqueous Solvent>

The nonaqueous solvent contained in the nonaqueous electrolyte solution is not particularly restricted as long as it does not adversely affect the battery characteristics when the battery is used in an energy device; however, the nonaqueous solvent is preferably at least one of the below-described nonaqueous solvents.

The nonaqueous solvent may be, for example, an open-chain carbonate, a cyclic carbonate, an open-chain carboxylic acid ester, a cyclic carboxylic acid ester, an open-chain ether, a cyclic ether, a phosphorus-containing organic solvent, a sulfur-containing organic solvent, or a boron-containing organic solvent.

The type of the open-chain carbonate is not particularly restricted, and examples thereof include dialkyl carbonates. In the dialkyl carbonates, the alkyl groups constituting the respective dialkyl carbonates each have preferably 1 to 5 carbon atoms, more preferably 1 to 4 carbon atoms, particularly preferably 1 to 3 carbon atoms. Specifically, preferred examples of such dialkyl carbonates include dimethyl carbonate, ethyl methyl carbonate, diethyl carbonate, methyl-*n*-propyl carbonate, ethyl-*n*-propyl carbonate, and di-*n*-propyl carbonate.

Thereamong, dimethyl carbonate, ethyl methyl carbonate and diethyl carbonate are more preferred since they have good industrial availability and exhibit favorable properties in an energy device.

Further, a fluorine atom-containing open-chain carbonate (hereinafter, may be simply referred to as "fluorinated open-chain carbonate") can be preferably used as well. The number of fluorine atoms in the fluorinated open-chain carbonate is not particularly restricted as long as it is one or more; however, it is usually 6 or less, preferably 4 or less, more preferably 3 or less. When the fluorinated open-chain carbonate has plural fluorine atoms, the fluorine atoms may be bound to the same carbon, or may be bound to different carbons. Examples of the fluorinated open-chain carbonate include fluorinated dimethyl carbonates, fluorinated ethyl methyl carbonates, and fluorinated diethyl carbonates.

Examples of the fluorinated dimethyl carbonates include fluoromethyl methyl carbonate, difluoromethyl methyl carbonate, trifluoromethyl methyl carbonate, bis(fluoromethyl)carbonate, bis(difluoro)methyl carbonate, and bis(trifluoromethyl)carbonate.

Examples of the fluorinated ethyl methyl carbonates include 2-fluoroethyl methyl carbonate, ethyl fluoromethyl carbonate, 2,2-difluoroethyl methyl carbonate, 2-fluoroethyl fluoromethyl carbonate, ethyl difluoromethyl carbonate, 2,2,2-trifluoroethyl methyl carbonate, 2,2-difluoroethyl fluoromethyl carbonate, 2-fluoroethyl difluoromethyl carbonate, and ethyl trifluoromethyl carbonate.

Examples of the fluorinated diethyl carbonates include ethyl-(2-fluoroethyl)carbonate, ethyl-(2,2-difluoroethyl)carbonate, bis(2-fluoroethyl)carbonate, ethyl-(2,2,2-trifluoroethyl)carbonate, 2,2-difluoroethyl-2'-fluoroethyl carbonate, bis(2,2-difluoroethyl)carbonate, 2,2,2-trifluoroethyl-2'-fluoroethyl carbonate, 2,2,2-trifluoroethyl-2',2'-difluoroethyl carbonate, and bis(2,2,2-trifluoroethyl)carbonate.

These fluorinated open-chain carbonates effectively function not only as nonaqueous solvents but also as the additives described below in <C1-5. Additives>. When a fluorinated open-chain carbonate is used as both a solvent and an additive, there is no clear limit on the amount thereof to be incorporated, and any of the amounts described in the present specification with regard to the nonaqueous solvent and additives can be directly applied.

The type of the above-described cyclic carbonate is not particularly restricted, and examples thereof include alkylene carbonates. In the alkylene carbonates, the number of carbon atoms of the alkylene group constituting each alkylene carbonate is preferably 2 to 6, particularly preferably 2 to 4. Specific examples of such cyclic carbonates include ethylene carbonate, propylene carbonate, and butylene carbonate (2-ethylethylene carbonate, *cis-* and *trans*-2,3-dimethylethylene carbonate).

Thereamong, as the cyclic carbonate, ethylene carbonate and propylene carbonate are preferred, and ethylene carbonate is particularly preferred, since these carbonates have a high dielectric constant and can thus reduce the resistance of a nonaqueous electrolyte energy device.

The type of the above-described open-chain carboxylic acid ester is also not particularly restricted, and examples thereof include methyl acetate, ethyl acetate, *n*-propyl acetate, *i*-propyl acetate, *n*-butyl acetate, *i*-butyl acetate, *t*-butyl acetate, methyl propionate, ethyl propionate, *n*-propyl propionate, *i*-propyl propionate, *n*-butyl propionate, *i*-butyl propionate, *t*-butyl propionate, methyl butyrate, and ethyl butyrate.

Thereamong, methyl acetate, ethyl acetate, methyl propionate, ethyl propionate, methyl butyrate, and ethyl butyrate are preferred since they have good industrial availability and exhibit favorable properties in an energy device.

The type of the above-described cyclic carboxylic acid ester is also not particularly restricted, and examples thereof include *γ*-butyrolactone, *γ*-valerolactone, and *δ*-valerolactone.

Thereamong, *γ*-butyrolactone is preferred since it has good industrial availability and exhibit favorable properties in an energy device.

The type of the above-described open-chain ether is also not particularly restricted, and examples thereof include dimethoxymethane, dimethoxyethane, diethoxymethane, diethoxyethane, ethoxymethoxymethane, and ethoxymethoxyethane.

Thereamong, dimethoxyethane and diethoxyethane are preferred since they have good industrial availability and exhibit favorable properties in an energy device.

The type of the above-described cyclic ether is also not particularly restricted, and examples thereof include tetrahydrofuran, 2-methyltetrahydrofuran, and tetrahydropyran.

The type of the above-described phosphorus-containing organic solvent is also not particularly restricted, and examples thereof include trimethyl phosphate, triethyl phosphate, triphenyl phosphate, tris(2,2,2-trifluoroethyl) phosphate, trimethyl phosphite, triethyl phosphite, triphenyl phosphite, trimethyl phosphine oxide, triethyl phosphine oxide, and triphenyl phosphine oxide.

The type of the above-described sulfur-containing organic solvent is also not particularly restricted, and examples thereof include ethylene sulfite, 1,3-propane sultone, 1,4-butane sultone, methyl methanesulfonate, ethyl methanesulfonate, busulfan, sulfolane, sulfolene, dimethyl sulfone, ethyl methyl sulfone, diphenyl sulfone, methyl phenyl sulfone, dibutyl disulfide, dicyclohexyl disulfide, tetramethyl thiuram monosulfide, *N*,*N*-dimethylmethane sulfonamide, and *N*,*N*-diethylmethane sulfonamide.

The type of the above-described boron-containing organic solvent is also not particularly restricted, and examples thereof include boroxines, such as 2,4,6-trimethyl boroxine and 2,4,6-triethyl boroxine.

Among the above-exemplified nonaqueous solvents, open-chain carbonates, cyclic carbonates, open-chain carboxylic acid esters, and cyclic carboxylic acid esters are preferred because of their good properties in an energy device and, thereamong, ethylene carbonate, propylene carbonate, dimethyl carbonate, ethyl methyl carbonate, diethyl carbonate, 2,2,2-trifluoroethylmethyl carbonate, bis(2,2,2-trifluoroethyl)carbonate, methyl acetate, ethyl acetate, methyl propionate, ethyl propionate, methyl butyrate, ethyl butyrate and *γ*-butyrolactone are more preferably; and ethylene carbonate, propylene carbonate, dimethyl carbonate, ethyl methyl carbonate, diethyl carbonate, 2,2,2-trifluoroethyl methyl carbonate, methyl acetate, ethyl acetate, methyl propionate, ethyl propionate and methyl butyrate are still more preferred.

These nonaqueous solvents may be used singly, or in combination of two or more thereof, and it is preferred to use two or more of the nonaqueous solvents in combination. For example, it is preferred to use a high-dielectric-constant solvent such as a cyclic carbonate in combination with a low-viscosity solvent, such as an open-chain carbonate or an open-chain ester.

One preferred combination of nonaqueous solvents is a combination mainly composed of a cyclic carbonate and an open-chain carbonate. In this combination, the total ratio of the cyclic carbonate and the open-chain carbonate with respect to all nonaqueous solvents is preferably 80% by volume or higher, more preferably 85% by volume or higher, particularly preferably 90% by volume or higher, and the volume ratio of the cyclic carbonate and the open-chain carbonate (total volume of cyclic carbonate:total volume of open-chain carbonate) is preferably 0.5:9.5 to 7:3, more preferably 1:9 to 5:5, still more preferably 1.5:8.5 to 4:6, particularly preferably 2:8 to 3.5:6.5. In an energy device produced using a combination of these nonaqueous solvents, a good balance is attained between the cycle characteristics and the high-temperature storage characteristics (particularly the residual capacity after high-temperature storage and the high-load discharge capacity), which is preferred.

Examples of preferred combinations of a cyclic carbonate and an open-chain carbonate include combinations of ethylene carbonate and an open-chain carbonate(s), such as a combination of ethylene carbonate and dimethyl carbonate, a combination of ethylene carbonate and diethyl carbonate, a combination of ethylene carbonate and ethyl methyl carbonate, a combination of ethylene carbonate, dimethyl carbonate and diethyl carbonate, a combination of ethylene carbonate, dimethyl carbonate and ethyl methyl carbonate, a combination of ethylene carbonate, diethyl carbonate and ethyl methyl carbonate, and a combination of ethylene carbonate, dimethyl carbonate, diethyl carbonate and ethyl methyl carbonate.

A combination in which propylene carbonate is added to any of the above-described combinations of ethylene carbonate and an open-chain carbonate(s) is also preferred. When propylene carbonate is incorporated, as described above, the volume ratio of ethylene carbonate and propylene carbonate is required to be 99:1 to 40:60, and it is preferably 95:5 to 45:55, more preferably 85:15 to 50:50. Further, the amount of propylene carbonate with respect to all nonaqueous solvents is preferably 0.1% by volume to 10% by volume since this enables to attain superior discharge load characteristics while maintaining the properties attributed to the combination of ethylene carbonate and an open-chain carbonate. The amount of the propylene carbonate with respect to all nonaqueous solvents is more preferably 1% by volume, particularly preferably 2% by volume or greater, but more preferably 8% by volume or less, particularly preferably 5% by volume or less.

Among these combinations, ones containing an asymmetric open-chain carbonate as an open-chain carbonate are more preferred, and those containing ethylene carbonate, dimethyl carbonate and ethyl methyl carbonate, those containing ethylene carbonate, diethyl carbonate and ethyl methyl carbonate, those containing ethylene carbonate, dimethyl carbonate, diethyl carbonate and ethyl methyl carbonate, and those further containing propylene carbonate in addition to any of the above-described combinations of carbonates are particularly preferred from the standpoint of attaining a good balance between the cycle characteristics and the discharge load characteristics in an energy device. Especially, ones in which the asymmetric open-chain carbonate is ethyl methyl carbonate, as well as ones in which the alkyl groups constituting the respective dialkyl carbonates have 1 to 2 carbon atoms, are preferred.

Other preferred examples of nonaqueous solvents include solvents containing an open-chain carboxylic acid ester. Particularly, a mixed solvent of the above-described cyclic carbonate and open-chain carbonate, further containing an open-chain carboxylic acid ester is preferred from the standpoint of improving the discharge load characteristics of an energy device and, in this case, the open-chain carboxylic acid ester is particularly preferably methyl acetate, ethyl acetate, methyl propionate, ethyl propionate, methyl butyrate, or ethyl butyrate. The volume of the open-chain carboxylic acid ester with respect to the nonaqueous solvents is preferably 5% by volume or greater, more preferably 8% by volume or greater, particularly preferably 10% by volume or greater, but preferably 50% by volume or less, more preferably 35% by volume or less, particularly preferably 30% by volume or less, especially preferably 25% by volume or less.

### <C1-3. Compound Represented by Formula (21)>

The nonaqueous electrolyte solution contains a compound represented by the following Formula (21) (hereinafter, may be referred to as "specific silane") as an indispensable component. In the nonaqueous electrolyte solution, the specific silane may be used singly, or two or more thereof may be used in any combination at any ratio.

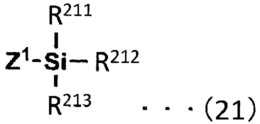

In Formula (21), R²¹¹, R²¹² and R²¹³ each independently represent an alkyl group having not more than 10 carbon atoms which optionally has a substituent; and Z¹ represents hydrogen or an alkenyl group having not more than 5 carbon atoms.

By using a nonaqueous electrolyte solution containing both (A) the specific silane and the below-described (B) salt that contains an anion having at least one bond selected from an F-P-O bond, an F-S-O bond and an F-S=O bond (hereinafter, may be referred to as "specific salt"), the impedance of an energy device after high-temperature storage can be kept low. The action and principle of this effect are not clear; however, the present inventors presume as follows. However, the invention according to the present embodiment should not be restricted by the below-described action and principle.

The specific silane is characterized by having only one moiety that is highly reactive with anions (Z¹-Si moiety in Formula (21)) and thus having an appropriate reactivity. Intrinsically, the specific silane readily forms a bond with fluorine as a characteristic feature of elemental silicon, and an Si-F bond is characterized by being stable.

Meanwhile, the specific salt has a structure in which highly electronegative fluorine atom and oxygen atom are simultaneously bound to a phosphorus atom, or a structure in which a fluorine atom and an oxygen atom are simultaneously bound to a sulfur atom, and the phosphorus atom or the sulfur atom is thus in an extremely electron-deficient state; therefore, the specific salt is presumed to be a compound in which the P-F bond or the S-F bond is easily cleaved. In other words, it is believed that a fluorine ion is likely to be generated when the specific salt is decomposed on an electrode, and that this fluorine ion is likely to form an insulating fluoride with a cation of an electrolyte contained in the nonaqueous electrolyte solution.

In cases where the specific silane and the specific salt are used simultaneously, it is believed that the fluorine ion generated by decomposition of the specific salt reacts with the specific silane. When the fluorine ion does not react with the specific silane, the fluorine ion forms an insulating fluoride with a cation of an electrolyte and the fluoride is consequently deposited as a low-ionic-conductivity layer on the electrode; however, presumably, the formation of such a deposited layer can be suppressed. In addition, the reaction product formed by the fluorine ion and the specific silane is believed to have a surface-activating effect, and it presumably also contributes to an increase in the effective surface area when the electrode is porous.

In the specific silane represented by Formula (21), Z¹ represents hydrogen or an alkenyl group having not more than 5 carbon atoms, and Z¹ is preferably hydrogen, a vinyl group, an allyl group, a 3-butenyl group or a 4-pentenyl group, more preferably hydrogen, a vinyl group, an allyl group or a 3-butenyl group, particularly preferably hydrogen, a vinyl group or an allyl group, most preferably hydrogen. This is because such a silane compound makes it easier to keep the viscosity of the electrolyte solution low, and adverse effects can thereby be minimized.

Further, R²¹¹, R²¹² and R²¹³ each independently represent an alkyl group having not more than 10 carbon atoms which optionally has a substituent, and R²¹¹, R²¹² and R²¹³ are each preferably an alkyl group having not more than 6 carbon atoms, more preferably a methyl group, an ethyl group, an *n*-propyl group or an *i*-propyl group, particularly preferably a methyl group or an ethyl group. This is because, when the specific silane forms a film-form structure on the electrode, it is unlikely to cause steric hindrance and thus contributes to insulation.

Examples of the substituent include a cyano group, an isocyanate group, an acyl group (-(C=O)-Rc), an acyloxy group (-O(C=O)-Rc), an alkoxycarbonyl group (-(C=O)O-Rc), a sulfonyl group (-SO₂-Rc), a sulfonyloxy group (-O(SO₂)-Rc), an alkoxysulfonyl group (-(SO₂)-O-Rc), an alkoxycarbonyloxy group (-O-(C=O)-O-Rc), an ether group (-O-Rc), an acryl group, a methacryl group, a halogen (preferably fluorine), and a trifluoromethyl group. Rc represents an alkyl group having 1 to 10 carbon atoms, an alkenyl group having 2 to 10 carbon atoms, or an alkynyl group having 2 to 10 carbon atoms. It is noted here that the number of carbon atoms in each substituent is not included in the number of carbon atoms of the respective R²¹¹ to R²¹³.

Among these substituents, a cyano group, an isocyanate group, an acyl group (-(C=O)-Rc), an acyloxy group (-O(C=O)-Rc), and an alkoxycarbonyl group (-(C=O)O-Rc) are preferred; a cyano group, an isocyanate group, an acyl group (-(C=O)-Rc), and an alkoxycarbonyl group (-(C=O)O-Rc) are more preferred; a cyano group, an isocyanate group, and an alkoxycarbonyl group (-(C=O)O-Rc) are particularly preferred; and a cyano group is most preferred.

The specific silane of Formula (21) is preferably one represented by the following Formula (22): 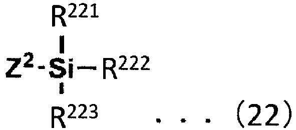 (wherein, R²²¹, R²²² and R²²³ each independently represent an alkyl group having not more than 6 carbon atoms which optionally has a substituent; and Z² represents hydrogen, a vinyl group, or an allyl group).

The molecular weight of the above-described specific silane is preferably not higher than 300, more preferably not higher than 280, particularly preferably not higher than 250, most preferably not higher than 200. When the molecular weight is in this range, the specific active silane has excellent solubility in the nonaqueous solvent constituting the nonaqueous electrolyte solution, and is thus likely to exert an excellent effect more effectively.

Preferred concrete examples of the specific silane represented by Formula (21) include the followings. The following specific silanes are preferred since they have excellent solubility in the nonaqueous electrolyte solution and the productivity of the nonaqueous electrolyte solution is thus likely to be improved.

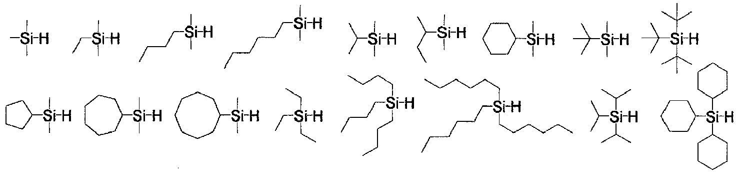

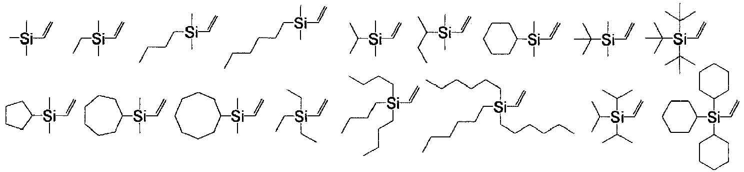

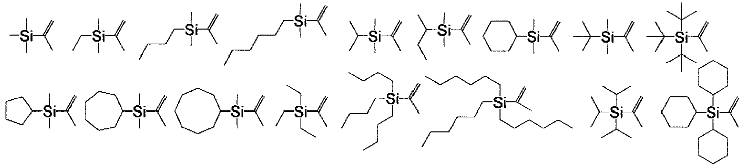

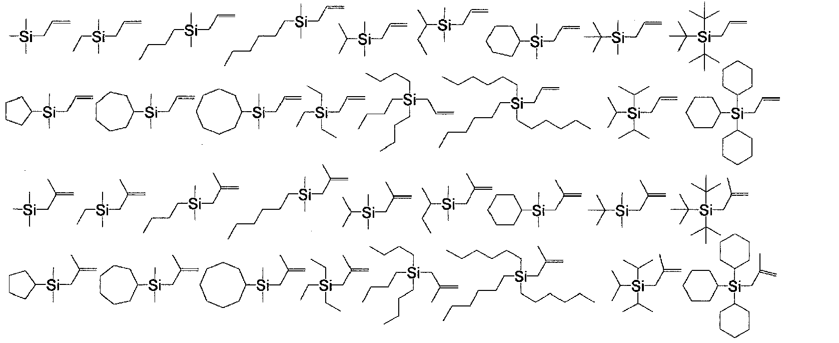

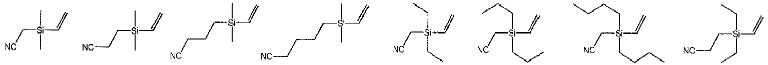

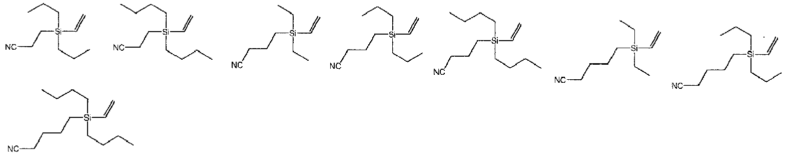

More preferred specific examples include the followings. The following specific silanes are preferred since they each have a favorable molecular size and are thus presumed to be capable of efficiently inducing a desired action.

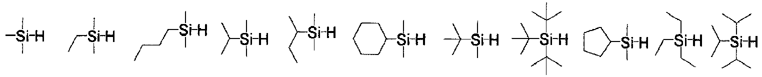

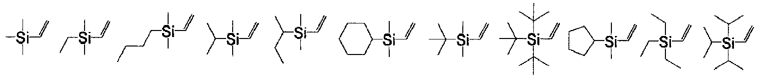

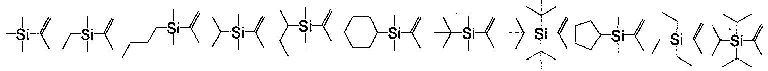

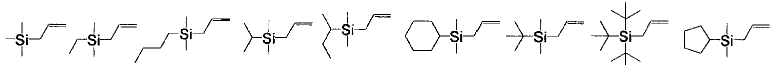

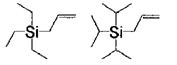

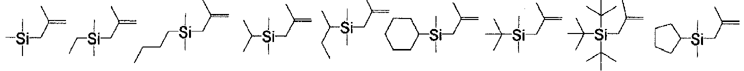

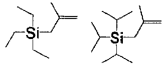

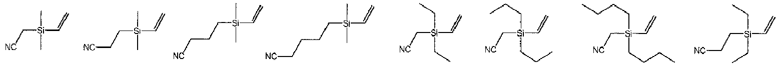

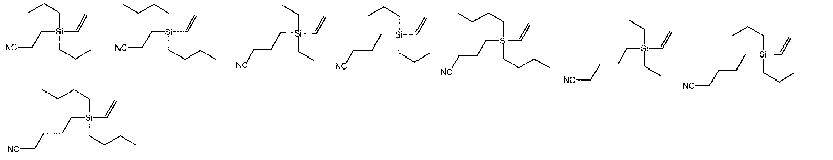

Still more preferred specific examples include the followings. The following specific silanes are preferred since they are presumed to have excellent stability in the electrolyte solution.

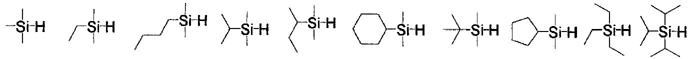

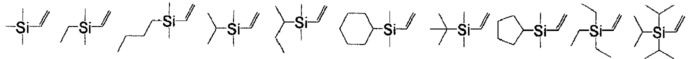

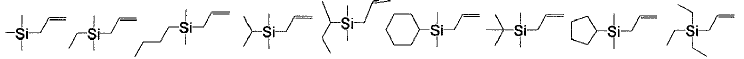

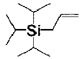

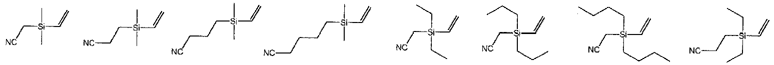

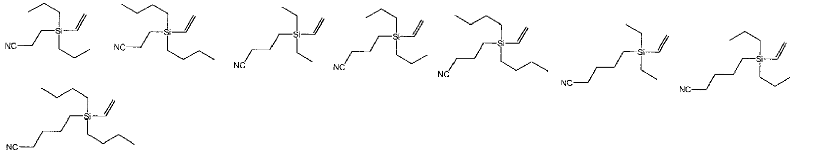

Particularly preferred specific examples include the followings. The following specific silanes are preferred since they have favorable steric hindrance and are thus presumed to be capable of promptly undergoing a desired reaction.

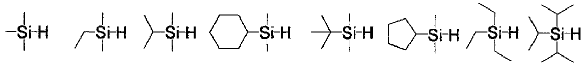

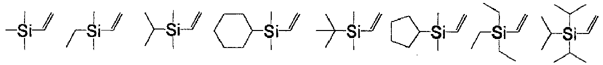

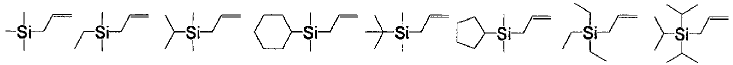

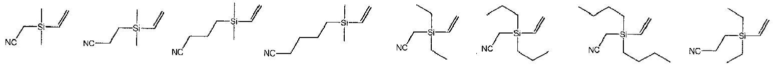

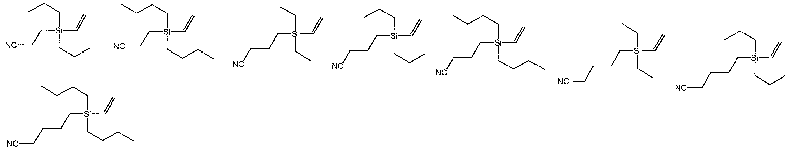

The total content of the specific silane(s) with respect to the whole nonaqueous electrolyte solution is preferably 0.001% by mass or higher, more preferably 0.01% by mass or higher, still more preferably 0.1% by mass or higher, particularly preferably 0.2% by mass or higher, most preferably 0.3% by mass or higher, but preferably 5% by mass or less, more preferably 3% by mass or less, particularly preferably 2% by mass or less, most preferably 1.5% by mass or less. When the concentration of the specific silane(s) is excessively high, the effect thereof is saturated, resulting only in an increase in the cost of the nonaqueous electrolyte solution.

It is noted here that a commercially available silane may be used as the specific silane and, in the case of producing the specific silane, a method thereof is not restricted, and one produced by a known method can be used.

### <C1-4. Salt That Contains Anion Having At Least One Bond Selected From F-P-O bond, F-S-O bond and F-S=O bond>

The nonaqueous electrolyte solution contains, as an indispensable component, a salt that contains an anion having at least one bond selected from an F-P-O bond, an F-S-O bond and an F-S=O bond (specific salt). In the nonaqueous electrolyte solution, the specific salt may be used singly, or two or more thereof may be used in any combination at any ratio.

The total content of the specific salt(s) with respect to the whole nonaqueous electrolyte solution is preferably 0.001% by mass or higher, more preferably 0.01% by mass or higher, still more preferably 0.1% by mass or higher, particularly preferably 0.2% by mass or higher, most preferably 0.3% by mass or higher, but preferably 5% by mass or less, more preferably 3% by mass or less, particularly preferably 2% by mass or less, most preferably 1.5% by mass or less.

Further, an amount of substance of the specific salt is preferably larger than an amount of substance of the specific silane. The amount of substance of the specific salt is more preferably not less than 1.2 times, still more preferably not less than 1.5 times of the amount of substance of the specific silane. This is because it is believed that, by allowing the specific silane to be entirely consumed, an expected side reaction can be prevented from occurring in a device after the long-term use.

The anion contained in the specific salt is an anion having at least one bond selected from an F-P-O bond, an F-S-O bond and an F-S=O bond, preferably an anion having an F-P-O bond or an F-S=O bond, or an anion having an F-P-O bond. By allowing the phosphorus atom or the sulfur atom to be in an electron deficient state more appropriately, the above-described action is made more likely to take place.

Moreover, the valence of the anion of the specific salt is not particularly restricted; however, from the standpoint of the solubility in the nonaqueous electrolyte solution, the anion is preferably monovalent, divalent or trivalent, more preferably monovalent or divalent, particularly preferably monovalent.

Preferred specific examples of the anion of the specific salt include the following anions.

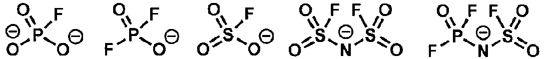

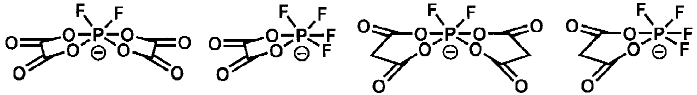

Thereamong, more preferred concrete examples of the specific anion include the following anions.

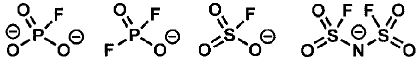

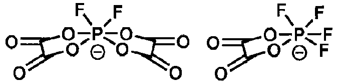

Thereamong, still more preferred concrete examples of the specific anion include the following anions.

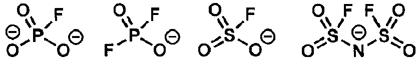

Thereamong, particularly preferred concrete examples of the specific anion include the following anions. The following anions are preferred since they have a small steric hindrance and thus make the above-described action more likely to take place.

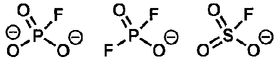

The valence of the cation of the specific salt is not particularly restricted; however, from the standpoint of the solubility in the nonaqueous electrolyte solution, the cation is preferably monovalent, divalent or trivalent, more preferably monovalent or divalent, particularly preferably monovalent.

Specifically, the cation is preferably an alkali metal cation, an alkaline earth metal cation or a quaternary ammonium cation, more preferably an alkali metal cation or a quaternary ammonium cation, particularly preferably an alkali metal cation. Among alkali metal cations, a lithium ion or a sodium ion is preferred, and a lithium ion is most preferred. Among quaternary ammonium cations, a tetramethyl ammonium ion, a tetraethyl ammonium ion, a tetrabutyl ammonium ion or a 1-ethyl-3-methyl imidazolium ion is preferred, and a tetraethyl ammonium ion is particularly preferred.

Preferred examples of the specific salt include the followings.

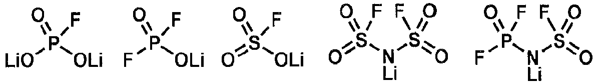

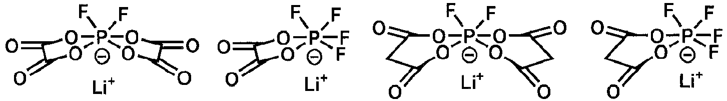

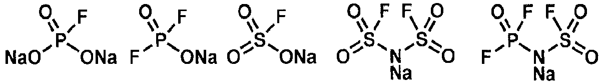

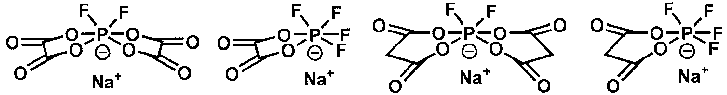

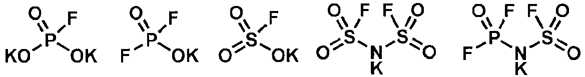

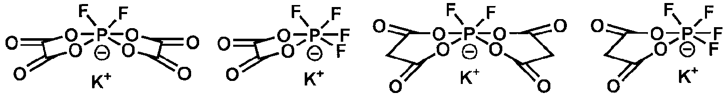

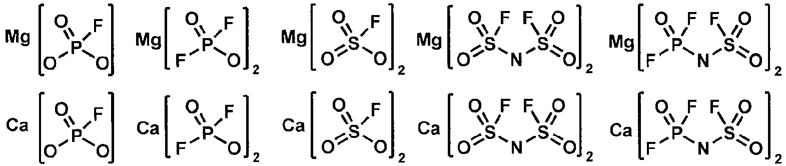

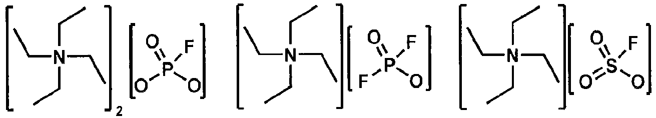

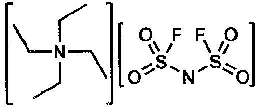

More preferred examples of the specific salt include the followings.

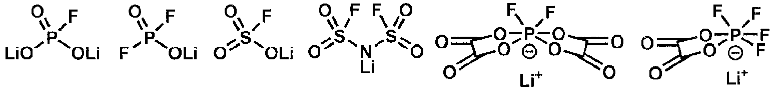

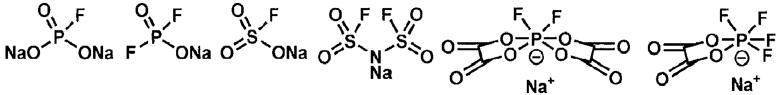

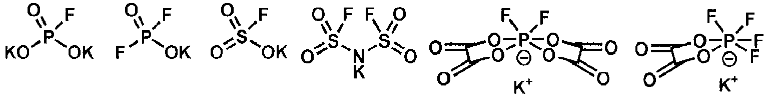

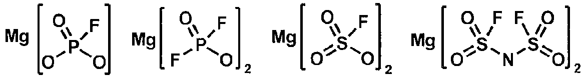

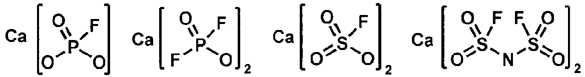

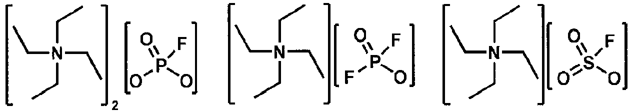

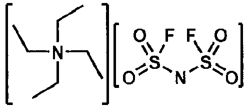

Particularly preferred examples of the specific salt include the followings.

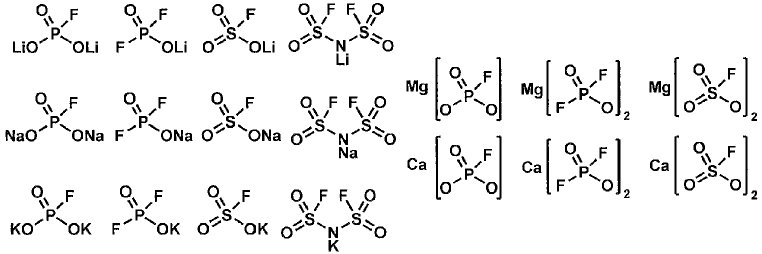

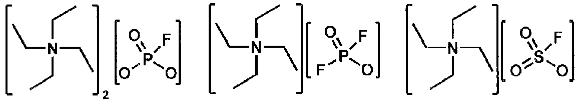

Most preferred examples of the specific salt include the followings. The following salts are preferred since they have excellent anion stability and are capable of efficiently inducing the above-described action.

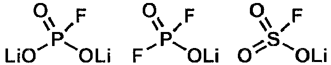

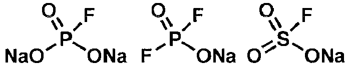

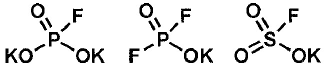

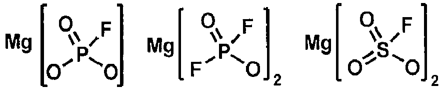

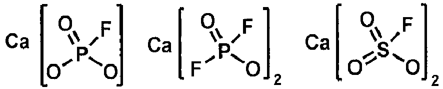

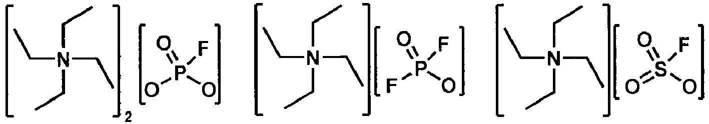

It is noted here that a commercially available salt may be used as the specific salt and, in the case of producing the specific salt, a method thereof is not restricted, and one produced by a known method can be used.

### <C1-5. Additives>

The nonaqueous electrolyte solution may also contain various additives within a range that does not markedly impair the effects of the invention according to the present embodiment. As the additives, any conventionally known additives can be used. Any of such additives may be used singly, or two or more thereof may be used in any combination at any ratio.

Examples of the additives include overcharge inhibitors and auxiliary agents for improving the capacity retention and cycle characteristics after high-temperature storage of an energy device. Thereamong, the nonaqueous electrolyte solution preferably contains, as an auxiliary agent for improving the capacity retention characteristics after high-temperature storage and suppressing an increase in the resistance, at least one compound selected from the group consisting of a fluorine atom-containing cyclic carbonate, a carbon-carbon unsaturated bond-containing cyclic carbonate, and a cyclic sulfonate (hereinafter, these additives may be simply referred to as "specific additives"). The specific additives and other additives are separately described below.

### <C1-5-1. Specific Additives>

All of the specific additives are compounds that are reduced on the negative electrode to form a film-form structure, and the compounds are believed form a film-form structure suitable for an electrode reaction in conjunction with the specific silane and the specific salt.

The molecular weight of each specific additive is not particularly restricted, and each specific additive may have any molecular weight as long as the effects of the invention according to the present embodiment are not markedly impaired; however, it is preferably 50 to 250. When the molecular weight is in this range, the specific additive has good solubility in the nonaqueous electrolyte solution, so that the effect of the addition thereof can be sufficiently expressed.

A method of producing each specific additive is also not particularly restricted, and each specific additive can be produced by selecting any known method. A commercially available one may be used as well.

In the nonaqueous electrolyte solution, any of such specific additives may be incorporated singly, or two or more thereof may be incorporated in any combination at any ratio.

### <C1-5-1-1. Fluorine Atom-Containing Cyclic Carbonate>

Among the specific additives, the fluorine atom-containing cyclic carbonate (hereinafter, may be simply referred to as "fluorinated carbonate") is not particularly restricted as long as it contains a fluorine atom, and any fluorinated carbonate can be used.

The number of fluorine atoms contained in the fluorinated carbonate is also not particularly restricted as long as it is one or more, and it is particularly preferably two or less.

Examples of the fluorinated carbonate include fluoroethylene carbonate and derivatives thereof.

Specific examples of the fluoroethylene carbonate and derivatives thereof include fluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate, and 4,4-difluoro-5,5-dimethylethylene carbonate.

Among these fluorinated carbonates, fluoroethylene carbonate, 4,4-difluoroethylene carbonate, 4,5-difluoroethylene carbonate and 4-(fluoromethyl)-ethylene carbonate are preferred and, particularly, fluoroethylene carbonate can contribute to the formation of a stable film-form structure and is thus most preferably used.

The content of the fluorinated carbonate is not particularly restricted and may be set arbitrarily as long as the effects of the invention according to the present embodiment are not markedly impaired; however, it is preferably 0.001% by mass to 10.0% by mass with respect to the amount of the nonaqueous electrolyte solution.

When the content of the fluorinated carbonate is not lower than this lower limit, the fluorinated carbonate can bring about a sufficient cycle characteristics-improving effect in an energy device. Meanwhile, when the content of the fluorinated carbonate is not higher than the upper limit, an increase in the energy device production cost can be avoided. The content of the fluorinated carbonate is more preferably 0.01% by mass or higher, still more preferably 0.1% by mass or higher, particularly preferably 0.2% by mass or higher, but more preferably 8.0% by mass or less, particularly preferably 6.0% by mass or less.

It is noted here that the fluorinated carbonate effectively functions not only as an additive but also as a solvent described above in the section <1-2>. When the fluorinated carbonate is used as both a solvent and an additive, there is no clear limit on the amount thereof to be incorporated, and any of the above-described amounts can be directly applied.

### <C1-5-1-2. Carbon-Carbon Unsaturated Bond-Containing Cyclic Carbonate>

Among the specific additives, the carbon-carbon unsaturated bond-containing cyclic carbonate (hereinafter, may be simply referred to as "unsaturated carbonate") is not particularly restricted as long as it is a carbonate that has a carbon-carbon unsaturated bond, such as a carbon-carbon double bond or a carbon-carbon triple bond, and any unsaturated carbonate can be used.

Examples of the unsaturated carbonate include vinylene carbonates, and ethylene carbonates substituted with a substituent having a carbon-carbon unsaturated bond.

Specific examples of the vinylene carbonates include vinylene carbonate, methylvinylene carbonate, and 4,5-dimethylvinylene carbonate.

Specific examples of the ethylene carbonates substituted with a substituent having a carbon-carbon unsaturated bond include vinylethylene carbonate, 4,5-divinylethylene carbonate, ethynylethylene carbonate, and propargylethylene carbonate.

Thereamong, vinylene carbonate, vinylethylene carbonate and ethynylethylene carbonate are preferred and, particularly vinylene carbonate can contribute to the formation of a stable film-form structure and is thus more preferably used.

The content of the unsaturated carbonate is not particularly restricted and may be set arbitrarily as long as the effects of the invention according to the present embodiment are not markedly impaired; however, it is preferably 0.001% by mass to 5.0% by mass with respect to the amount of the nonaqueous electrolyte solution.

When the content of the unsaturated carbonate is not lower than this lower limit, the unsaturated carbonate can bring about a sufficient cycle characteristics-improving effect in an energy device. Meanwhile, when the content of the unsaturated carbonate is not higher than the upper limit, an increase in the initial resistance of an energy device can be avoided. The content of the unsaturated carbonate is more preferably 0.01% by mass or higher, still more preferably 0.1% by mass or higher, particularly preferably 0.2% by mass or higher, but more preferably 4.0% by mass or less, still more preferably 3.0% by mass or less, particularly preferably 2.0% by mass or less.

### <C1-5-1-3. Cyclic Sulfonate>

Among the specific additives, the cyclic sulfonate is not particularly restricted, and any cyclic sulfonate can be used.

The cyclic sulfonate may be, for example, a saturated cyclic sulfonate or a unsaturated cyclic sulfonate.

Specific examples of the saturated cyclic sulfonate include 1,3-propane sultone, 1-fluoro-1,3-propane sultone, 2-fluoro-1,3-propane sultone, 3-fluoro-1,3-propane sultone, 1-methyl-1,3-propane sultone, 2-methyl-1,3-propane sultone, 3-methyl-1,3-propane sultone, 1,4-butane sultone, 1-fluoro-1,4-butane sultone, 2-fluoro-1,4-butane sultone, 3-fluoro-1,4-butane sultone, 4-fluoro-1,4-butane sultone, 1-methyl-1,4-butane sultone, 2-methyl-1,4-butane sultone, 3-methyl-1,4-butane sultone, and 4-methyl-1,4-butane sultone.

Specific examples of the unsaturated cyclic sulfonate include 1-propene-1,3-sultone, 2-propene-1,3-sultone, 1-fluoro-1-propene-1,3-sultone, 2-fluoro-1-propene-1,3-sultone, 3 -fluoro-1-propene-1,3-sultone, 1-fluoro-2-propene-1,3-sultone, 2-fluoro-2-propene-1,3-sultone, 3-fluoro-2-propene-1,3-sultone, 1-methyl-1-propene-1,3-sultone, 2-methyl-1-propene-1,3-sultone, 3-methyl-1-propene-1,3-sultone, 1-methyl-2-propene-1,3-sultone, 2-methyl-2-propene-1,3-sultone, 3-methyl-2-propene-1,3-sultone, 1-butene-1,4-sultone, 2-butene-1,4- sultone, 3 -butene-1,4- sultone, 1-fluoro-1-butene-1,4-sultone, 2-fluoro-1-butene-1,4- sultone, 3-fluoro-1-butene-1,4-sultone, 4-fluoro-1-butene-1,4-sultone, 1-fluoro-2-butene-1,4- sultone, 2-fluoro-2-butene-1,4- sultone, 3 -fluoro-2-butene-1,4- sultone, 4-fluoro-2-butene-1,4-sultone, 1-fluoro-3-butene-1,4- sultone, 2-fluoro-3 -butene-1,4- sultone, 3 -fluoro-3 -butene-1,4- sultone, 4-fluoro-3 -butene-1,4- sultone, 1-methyl-1-butene-1,4-sultone, 2-methyl-1-butene-1,4-sultone, 3-methyl-1-butene-1,4-sultone, 4-methyl-1-butene-1,4-sultone, 1-methyl-2-butene-1,4-sultone, 2-methyl-2-butene-1,4-sultone, 3-methyl-2-butene-1,4-sultone, 4-methyl-2-butene-1,4-sultone, 1-methyl-3-butene-1,4-sultone, 2-methyl-3-butene-1,4-sultone, 3-methyl-3-butene-1,4-sultone, and 4-methyl-3-butene-1,4-sultone.

Among the above-exemplified cyclic sulfonates, 1,3-propane sultone, 1-fluoro-1,3-propane sultone, 2-fluoro-1,3-propane sultone, 3-fluoro-1,3-propane sultone, and 1-propene-1,3-sultone can be more preferably used since they are readily available and can contribute to the formation of a stable film-form structure.

The content of the cyclic sulfonate is not particularly restricted, and may be set arbitrarily as long as the effects of the invention according to the present embodiment are not markedly impaired; however, it is 0.001% by mass to 3.0% by mass in 100% by mass of the nonaqueous electrolyte solution.

When the content of the cyclic sulfonate is not lower than this lower limit, the cyclic sulfonate can bring about a sufficient cycle characteristics-improving effect in an energy device. Meanwhile, when the content of the cyclic sulfonate is not higher than the upper limit, an increase in the energy device production cost can be avoided. The content of the cyclic sulfonate is more preferably 0.01% by mass or higher, still more preferably 0.1% by mass or higher, particularly preferably 0.2% by mass or higher, but more preferably 2.5% by mass or less, still more preferably 2.0% by mass or less, particularly preferably 1.8% by mass or less.

### <C1-5-1-4. Preferred Specific Additive>

Among the above-described specific additives, it is preferred to incorporate a fluorine atom-containing cyclic carbonate or a carbon-carbon unsaturated bond-containing cyclic carbonate, and it is more preferred to incorporate both a fluorine atom-containing cyclic carbonate and a carbon-carbon unsaturated bond-containing cyclic carbonate.

### <C1-5-2. Other Additives>

Examples of additives other than the specific additives include overcharge inhibitors and auxiliary agents for improving the capacity retention and cycle characteristics after high-temperature storage.

### <C1-5-2-1. Overcharge Inhibitor>

Specific examples of the overcharge inhibitors include aromatic compounds, for example:
toluene derivatives, such as toluene, xylene, 2-fluorotoluene, 3-fluorotoluene, and 4-fluorotoluene;
unsubstituted or alkyl-substituted biphenyl derivatives, such as biphenyl, 2-methylbiphenyl, 3-methylbiphenyl, and 4-methylbiphenyl;
unsubstituted or alkyl-substituted terphenyl derivatives, such as *o*-terphenyl, *m*-terphenyl, and *p*-terphenyl;
partial hydrogenation products of unsubstituted or alkyl-substituted terphenyl derivatives;
cycloalkylbenzene derivatives, such as cyclopentylbenzene and cyclohexylbenzene;
alkylbenzene derivatives having a tertiary carbon directly bound to the benzene ring, such as cumene, 1,3-diisopropylbenzene and 1,4-diisopropylbenzene;
alkylbenzene derivatives having a quaternary carbon directly bound to the benzene ring, such as *t*-butylbenzene, *t*-amylbenzene, *t*-hexylbenzene, and 1,1,3-trimethyl-3-phenylindane; and
oxygen atom-containing aromatic compounds, such as diphenyl ether and dibenzofuran.

Other specific examples of the overcharge inhibitors include aromatic compounds, for example: partially fluorinated products of the above-described aromatic compounds, such as fluorobenzene, benzotrifluoride, 2-fluorobiphenyl, *o*-cyclohexylfluorobenzene, and *p*-cyclohexylfluorobenzene; and fluorine-containing anisole compounds, such as 2,4-difluoroanisole, 2,5-difluoroanisole, and 1,6-difluoroanisole.

Any of these overcharge inhibitors may be used singly, or two or more thereof may be used in any combination at any ratio. When an arbitrary combination of two or more overcharge inhibitors are used, the above-exemplified compounds belonging to the same classification may be used in combination, or the above-exemplified compounds belonging to different classifications may be used in combination.

When an overcharge inhibitor is incorporated, the amount thereof may be set arbitrarily as long as the effects of the invention according to the present embodiment are not markedly impaired; however, it is preferably in a range of 0.001% by mass to 10% by mass with respect to the whole nonaqueous electrolyte solution (100% by mass).

By allowing the nonaqueous electrolyte solution to contain an overcharge inhibitor within a range that does not markedly impair the effects of the invention according to the present embodiment, the safety of an energy device can be improved such that there would be no problem even if the battery were overcharged in a situation where an overcharge protection circuit does not properly operate due to an incorrect use, a failure of a charging apparatus or the like.

### <C1-5-2-2. Auxiliary Agent>

Specific examples of the auxiliary agents for improving the capacity retention and cycle characteristics after high-temperature storage include the followings:
carbonate compounds other than those corresponding to unsaturated bond-containing carbonates, such as erythritan carbonate and spiro-bis-dimethylene carbonate;
cyclic sulfites, such as ethylene sulfite;
open-chain sulfonates, such as methyl methanesulfonate and busulfan;
cyclic sulfones, such as sulfolane and sulfolene;
open-chain sulfones, such as dimethyl sulfone, diphenyl sulfone, and methyl phenyl sulfone;
sulfides, such as dibutyl disulfide, dicyclohexyl disulfide, and tetramethyl thiuram monosulfide;
sulfur-containing compounds, for example, sulfonamides such as *N,N*-dimethylmethane sulfonamide and *N,N*-diethylmethane sulfonamide;
nitrogen-containing compounds, such as 1-methyl-2-pyrrolidinone, 1-methyl-2-piperidone, 3-methyl-2-oxazolidinone, and 1,3-dimethyl-2-imidazolidinone;
hydrocarbon compounds, such as heptane, octane, and cycloheptane;
triple bond-containing compounds, such as propargyl 2-(diethoxyphosphoryl)acetate, 2-butynyl 2-(diethoxyphosphoryl)acetate, propargyl 2-(methanesulfonyloxy)propionate, propargyl methanesulfonyloxyacetate, lithium ethyl-propargyloxycarbonyl phosphonate, lithium ethyl-2-butynyloxycarbonyl phosphonate, lithium propargyl sulfate, lithium 2-butynyl sulfate, propargyltrimethylsilyl sulfate, 2-butyne-1,4-diyl dimesylate, 2-butyne-1,4-diyl diethanesulfonate, 2-butyne-1,4-diyl diformate, 2-butyne-1,4-diyl diacetate, 2-butyne-1,4-diyl dipropionate, 4-hexadiyne-1,6-diyl dimethanesulfonate, propargyl methanesulfonate, 2-butynyl methanesulfonate, propargyl ethanesulfonate, propargyl vinyl sulfonate, propargyl methyl carbonate, propargyl ethyl carbonate, dipropargyl carbonate, propargyl formate, propargyl acetate, propargyl methacrylate, methyl propargyl oxalate, ethyl propargyl oxalate, and dipropargyl oxalate;
fluorine-containing aromatic compounds, such as fluorobenzene, difluorobenzene, and benzotrifluoride;
dinitrile compounds, such as malononitrile, succinonitrile, glutaronitrile, adiponitrile, pimelonitrile, suberonitrile, azelanitrile, sebaconitrile, undecanedinitrile, and dodecanedinitrile;
polyvalent isocyanate compounds, such as 1,6-diisocyanatohexane, 1,3 -bis(isocyanatomethyl)cyclohexane, 1,3,5-tris(6-isocyanatohexan-1-yl)-1,3,5-triazine-2,4,6(1H,3H,5H)-trione, 2,4,4-trimethylhexamethylene diisocyanate, and 2,2,4-trimethylhexamethylene diisocyanate;
pentafluorophenyl compounds, such as pentafluorophenylmethane sulfonate, pentafluorophenyltrifluoromethane sulfonate, pentafluorophenyl acetate, pentafluorophenyl trifluoroacetate, and methylpentafluorophenyl carbonate; and
sulfuric acid half esters, such as lithium methyl sulfate, lithium ethyl sulfate, sodium methyl sulfate, and sodium ethyl sulfate.

Any of these auxiliary agents may be used singly, or two or more thereof may be used in any combination at any ratio.

When the nonaqueous electrolyte solution contains the above-described auxiliary agent(s), the content thereof may be set arbitrarily as long as the effects of the invention according to the present embodiment are not markedly impaired; however, it is preferably in a range of 0.001% by mass to 10% by mass with respect to the whole nonaqueous electrolyte solution (100% by mass).

### <C1-6. Method of Producing Nonaqueous Electrolyte Solution>

The nonaqueous electrolyte solution can be prepared by dissolving an electrolyte, the specific silane, the specific salt and, as required, the above-described "specific additives", "other additives" and the like, in the above-described nonaqueous solvent.

In the preparation of the nonaqueous electrolyte solution, raw materials of the nonaqueous electrolyte solution, namely an electrolyte such a lithium salt, the specific silane, the nonaqueous solvent, the specific additive(s), other additive(s) and the like, are preferably dehydrated in advance. As for the degree of this dehydration, it is desired that the dehydration is performed to a moisture content of usually 50 ppm or less, preferably 30 ppm or less.

By removing water from the nonaqueous electrolyte solution, for example, electrolysis of water, reaction between water and lithium metal, and hydrolysis of lithium salt are made less likely to occur. The means for performing the dehydration is not particularly restricted and, for example, a drying agent such as a molecular sieve may be used when a liquid such as a nonaqueous solvent is to be dehydrated. Meanwhile, when a solid such as an electrolyte is to be dehydrated, the solid may be dried by heating to a temperature of lower than the temperature at which the solid is decomposed.

### [C2. Energy Device Using Nonaqueous Electrolyte Solution]

An energy device using the nonaqueous electrolyte solution includes: plural electrodes each capable of absorbing or releasing metal ions; and the above-described nonaqueous electrolyte solution. Specific examples of the type of the energy device include primary batteries, secondary batteries, and metal ion capacitors such as lithium ion capacitors. Thereamong, the energy device is preferably a primary battery or a secondary battery, particularly preferably a secondary battery. The nonaqueous electrolyte solution for use in the energy device is preferably a so-called gel electrolyte that is pseudo-solidified with a polymer, a filler or the like. The energy device will now be described below.

### <C2-1. Nonaqueous Electrolyte Secondary Battery>

### <C2-1-1. Battery Configuration>

The nonaqueous electrolyte secondary battery has the same configuration as that of a conventionally known nonaqueous electrolyte secondary battery, except for the nonaqueous electrolyte solution. The nonaqueous electrolyte secondary battery usually has a form in which the positive electrode and the negative electrode are laminated via a porous membrane (separator) impregnated with the nonaqueous electrolyte solution, and these components are housed in a casing (outer package). Accordingly, the shape of the nonaqueous electrolyte secondary battery is not particularly restricted and may be any of, for example, a cylindrical shape, a prismatic shape, a laminated shape, a coin shape, and a large-sized shape.

### <C2-1-2. Nonaqueous Electrolyte Solution>

As the nonaqueous electrolyte solution, the above-described nonaqueous electrolyte solution is used. It is noted here, however, that other nonaqueous electrolyte solution can also be mixed to the nonaqueous electrolyte solution within a range that does not depart from the gist of the invention according to the present embodiment.

### <C2-1-3. Negative Electrode>

The negative electrode active material for use in the negative electrode is not particularly restricted as long as it is capable of electrochemically absorbing and releasing metal ions. Specific examples thereof include carbonaceous materials, metal compound-based materials and lithium-containing metal composite oxide materials, and any of these materials may be used singly, or two or more thereof may be used in any combination.

Thereamong, carbonaceous materials and metal compound-based materials are preferred and, among metal compound-based materials, silicon-containing materials are preferred. Accordingly, as the negative electrode active material, a carbonaceous material and a silicon-containing materials are particularly preferred.

Further, it is also preferred that the negative electrode be the same as in the first embodiment.

### <C2-1-3-1. Carbonaceous Material>

The carbonaceous material used as the negative electrode active material is not particularly restricted; however, it is preferably one selected from the following (A) to (D) from the standpoint of imparting the secondary battery with a good balance of the initial irreversible capacity and the high-current-density charge-discharge characteristics:
(A) natural graphite;
(B) a carbonaceous material obtained by heat-treating an artificial carbonaceous substance and an artificial graphitic substance in a range of 400°C to 3,200°C one or more times;
(C) a carbonaceous material yielding a negative electrode active material layer that is composed of at least two carbonaceous substances different in crystallinity and/or has an interface where the carbonaceous substances different in crystallinity are in contact with each other; and
(D) a carbonaceous material yielding a negative electrode active substancematerial layer that is composed of at least two carbonaceous substances different in orientation and/or has an interface where the carbonaceous substances different in orientation are in contact with each other.

Any of these carbonaceous materials (A) to (D) may be used singly, or two or more thereof may be used in any combination at any ratio.

Specific examples of the artificial carbonaceous substance or the artificial graphitic substance in the above-described (B) include: natural graphite; coal-based coke; petroleum coke; coal-based pitch, petroleum pitch, and oxidation products of these pitches; needle coke, pitch coke, and carbon materials obtained by partial graphitization of these cokes;
pyrolysis products of organic substances, such as furnace black, acetylene black, and pitch-based carbon fibers;
carbonizable organic substances and carbonization products thereof; and
solution-form carbides obtained by dissolving a carbonizable organic substance in a low-molecular-weight organic solvent, such as benzene, toluene, xylene, quinoline, or *n*-hexane.

All of the above-described carbonaceous materials (A) to (D) are conventionally known. The production methods thereof are well-known by those of ordinary skill in the art, and commercially available products of these materials can be purchases as well.

### <C2-1-3-2. Metal Compound-Based Material>

The metal compound-based material used as the negative electrode active material is not particularly restricted as long as it contains a metal that is alloyable with lithium. The form of the metal compound-based material is also not particularly restricted as long as it is capable of absorbing and releasing metal ions such as lithium ions, and the metal compound-based material may be a simple metal forming an alloy with lithium or an alloy thereof, or any compound thereof such as an oxide, a carbide, a nitride, a silicide, a sulfide or a phosphide. Examples of such a metal compound include compounds that contain a metal such as Ag, Al, Ba, Bi, Cu, Ga, Ge, In, Ni, Pb, Sb, Si, Sn, Sr, or Zn. Thereamong, the metal compound-based material is preferably a simple metal forming an alloy with lithium or an alloy thereof, more preferably a material containing a metal or metalloid element of the periodic table Group 13 or 14 (i.e. excluding carbon; a metal and a metalloid are collectively referred to as "metal"), still more preferably a simple metal of silicon (Si), tin (Sn) or lead (Pb) (hereinafter, these three elements may be referred to as "SSP metal elements"), an alloy containing these metal atoms, or a compound of these metals (SSP metal elements), most preferably silicon. Any of these materials may be used singly, or two or more thereof may be used in any combination at any ratio.

### <C2-1-3-3. Lithium-Containing Metal Composite Oxide Material>

The lithium-containing metal composite oxide material used as the negative electrode active material is not particularly restricted as long as it is capable of absorbing and releasing lithium ions; however, it is preferably a lithium-containing composite metal oxide material that contains titanium, particularly preferably a composite oxide of lithium and titanium (hereinafter, may be simply referred to as "lithium-titanium composite oxide"). In other words, it is particularly preferred to incorporate a lithium-titanium composite oxide having a spinel structure into the negative electrode active material for a lithium-ion nonaqueous electrolyte secondary battery, since the output resistance of the secondary battery is thereby greatly reduced.

In addition, a lithium-titanium composite oxide in which lithium or titanium is substituted with other metal element, such as at least one element selected from the group consisting of Na, K, Co, Al, Fe, Ti, Mg, Cr, Ga, Cu, Zn and Nb, is also preferred.

Examples of a lithium-titanium composite oxide preferred as the negative electrode active material include lithium-titanium composite oxides represented by the following composition formula (23):

LiₓTi_{y}M_{z}O₄ (23)

(wherein, M represents at least one element selected from the group consisting of Na, K, Co, Al, Fe, Ti, Mg, Cr, Ga, Cu, Zn, and Nb; and 0.7 ≤ x200 ≤ 1.5, 1.5 ≤ y200 ≤ 2.3 and 0 ≤ z200 ≤ 1.6 are preferably satisfied since this makes the structure stable during doping and dedoping of lithium ions).

### <C2-1-3-4. Constitution, Physical Properties, and Preparation Method of Negative Electrode>

With regard to the negative electrode containing the above-described active material material, a method of producing the electrode, and a current collector, known technical constitutions can be employed; however, it is desired that one or more of the following items (I) to (VI) be satisfied at the same time.

### (I) Production of Negative Electrode

For the production of the negative electrode, any known method can be employed as long as it does not markedly limit the effects of the invention according to the present embodiment. For example, a binder, a solvent and, as required, a thickening agent, a conductive material, a filler and the like are added to the negative electrode active material to prepare a negative electrode-forming material in the form of a slurry, and this slurry is subsequently coated and dried onto a current collector, followed by pressing of the resultant, whereby a negative electrode active material layer can be formed.

### (II) Current Collector

As the current collector on which the negative electrode active material is retained, any known current collector can be used. Examples of the current collector of the negative electrode include metal materials such as aluminum, copper, nickel, stainless steel, and nickel-plated steel, among which copper is particularly preferred because of its processability and cost.

When the current collector is a metal material, the current collector may have any shape of, for example, a metal foil, a metal cylinder, a metal coil, a metal sheet, a metal thin film, an expanded metal, a punched metal, and a foamed metal. Thereamong, the current collector is preferably a metal thin film, more preferably a copper foil, still more preferably a rolled copper foil obtained by a rolling method or an electrolytic copper foil obtained by an electrolytic method.

### (III) Thickness Ratio of Current Collector and Negative Electrode Active Material Layer

The thickness ratio of the current collector and the negative electrode active material layer is not particularly restricted; however, the value of "(Thickness of negative electrode active material layer on one side immediately before injection of nonaqueous electrolyte solution)/(Thickness of current collector)" is preferably 150 or smaller, more preferably 20 or smaller, particularly preferably 10 or smaller, but preferably 0.1 or larger, more preferably 0.4 or larger, particularly preferably 1 or larger.

When the thickness ratio of the current collector and the negative electrode active material layer is higher than the above-described range, the current collector may generate heat due to Joule's heat during high-current-density charging/discharging of the secondary battery. Meanwhile, when the thickness ratio is lower than the above-described range, the capacity of the secondary battery may be reduced due to an increase in the volume ratio of the current collector with respect to the negative electrode active material.

### (IV) Electrode Density

The structure of an electrode formed from the negative electrode active material is not particularly restricted, and the density of the negative electrode active material existing on the current collector is preferably 1 g·cm⁻³ or higher, more preferably 1.2 g·cm⁻³ or higher, still more preferably 1.3 g·cm⁻³ or higher, but preferably 4 g·cm⁻³ or lower, more preferably 3 g·cm⁻³ or lower, still more preferably 2.5 g·cm⁻³ or lower, particularly preferably 1.7 g·cm⁻³ or lower. When the density of the negative electrode active material existing on the current collector is higher than this range, particles of the negative electrode active material are unlikely to be destructed; therefore, an increase in the initial irreversible capacity of the secondary battery as well as deterioration of the high-current-density charge-discharge characteristics, which is caused by a reduction in the permeability of the nonaqueous electrolyte solution to the vicinity of the interface between the current collector and the negative electrode active material, are likely to be inhibited. In addition, since conductivity between the negative electrode active materials can be ensured, the battery resistance is not increased, so that the capacity per unit volume can be secured.

### (V) Binder, Solvent, etc.

The slurry used for the formation of a negative electrode active material layer is usually prepared by mixing a binder, a thickening agent and the like with a solvent, and adding the resulting mixture to the negative electrode active material.

The binder used for binding the negative electrode active material is not particularly restricted as long as it is a material that is stable against the nonaqueous electrolyte solution and the solvent used in the electrode production.

Specific examples of the binder include:
resin-based polymers, such as polyethylene, polypropylene, polyethylene terephthalate, polymethyl methacrylate, aromatic polyamides, cellulose, and nitrocellulose;
rubbery polymers, such as SBR (styrene-butadiene rubbers), isoprene rubbers, butadiene rubbers, fluororubbers, NBR (acrylonitrile-butadiene rubbers), and ethylene-propylene rubbers;
thermoplastic elastomeric polymers, such as styrene-butadiene-styrene block copolymers, and hydrogenation products thereof, EPDM (ethylene-propylene-diene terpolymers), styrene-ethylene-butadiene-styrene copolymers, styrene-isoprene-styrene block copolymers, and hydrogenation products thereof;
soft resinous polymers, such as syndiotactic 1,2-polybutadiene, polyvinyl acetate, ethylene-vinyl acetate copolymers, and propylene-*α*-olefin copolymers;
fluorocarbon-based polymers, such as polyvinylidene fluoride, polytetrafluoroethylene, fluorinated polyvinylidene fluoride, and tetrafluoroethylene-ethylene copolymers; and
polymer compositions having ionic conductivity for alkali metal ions (particularly lithium ions).

Any of these binders may be used singly, or two or more thereof may be used in any combination at any ratio.

The type of the solvent used for the slurry formation is not particularly restricted as long as the solvent is capable of dissolving or dispersing the negative electrode active material and the binder as well as the thickening agent and the conductive material that are used as required, and either an aqueous solvent or an organic solvent may be used.

Examples of the aqueous solvent include water and alcohols, and examples of the organic solvent include *N*-methylpyrrolidone (NMP), dimethylformamide, dimethylacetamide, methyl ethyl ketone, cyclohexanone, methyl acetate, methyl acrylate, diethyltriamine, *N,N*-dimethylaminopropylamine, tetrahydrofuran (THF), toluene, acetone, diethyl ether, dimethylacetamide, hexamethylphosphoramide, dimethyl sulfoxide, benzene, xylene, quinoline, pyridine, methylnaphthalene, and hexane.

Particularly, when an aqueous solvent is used, it is preferred to add a dispersant or the like in combination with the thickening agent and prepare a slurry using a latex such as SBR.

Any of the above-described solvents may be used singly, or two or more thereof may be used in any combination at any ratio.

The ratio of the binder with respect to 100 parts by mass of the negative electrode active material is preferably 0.1 parts by mass or higher, more preferably 0.5 parts by mass or higher, still more preferably 0.6 parts by mass or higher, but preferably 20 parts by mass or lower, more preferably 15 parts by mass or lower, still more preferably 10 parts by mass or lower, particularly preferably 8 parts by mass or lower. When the ratio of the binder with respect to the negative electrode active material is in this range, since the ratio of the binder not contributing to the battery capacity is not increased, the battery capacity is unlikely to be reduced. In addition, a reduction in the strength of the negative electrode is unlikely to occur.

Particularly, when the slurry, which is a negative electrode-forming material, contains a rubbery polymer represented by SBR as a main component, the ratio of the binder with respect to 100 parts by mass of the negative electrode active material is preferably 0.1 parts by mass or higher, more preferably 0.5 parts by mass or higher, still more preferably 0.6 parts by mass or higher, but preferably 5 parts by mass or lower, more preferably 3 parts by mass or lower, still more preferably 2 parts by mass or lower.

Further, when the slurry contains a fluorocarbon-based polymer represented by polyvinylidene fluoride as a main component, the ratio of the binder with respect to 100 parts by mass of the negative electrode active material is preferably 1 part by mass or higher, more preferably 2 parts by mass or higher, still more preferably 3 parts by mass or higher, but preferably 15 parts by mass or lower, more preferably 10 parts by mass or lower, still more preferably 8 parts by mass or lower.

A thickening agent is usually used for the purpose of adjusting the viscosity of the slurry. The thickening agent is not particularly restricted, and specific examples thereof include carboxymethyl cellulose, methyl cellulose, hydroxymethyl cellulose, ethyl cellulose, polyvinyl alcohol, oxidized starch, phosphorylated starch, casein, and salts thereof. Any of these thickening agents may be used singly, or two or more thereof may be used in any combination at any ratio.

In cases where a thickening agent is used, the ratio thereof with respect to 100 parts by mass of the negative electrode active material is usually 0.1 parts by mass or higher, preferably 0.5 parts by mass or higher, more preferably 0.6 parts by mass or higher, but usually 5 parts by mass or lower, preferably 3 parts by mass or lower, more preferably 2 parts by mass or lower. When the ratio of the thickening agent with respect to the negative electrode active material is in this range, the slurry has good coatability. In addition, since the ratio of the negative electrode active material in the negative electrode active material layer is appropriate, problems of a reduction in the battery capacity and an increase in the resistance between the negative electrode active material particles are unlikely to occur.

### (VI) Area of Negative Electrode Plate

The area of the negative electrode plate is not particularly restricted; however, the negative electrode plate is preferably designed to be slightly larger than the opposing positive electrode plate such that the positive electrode plate does not extend outward beyond the negative electrode plate. Further, from the standpoints of improving the cycle life in repeated charging and discharging of the secondary battery and suppressing deterioration caused by high-temperature storage, the area of the negative electrode plate is preferably as close to that of the positive electrode as possible since this leads to an increase in the ratio of the electrode that works more uniformly and effectively, and the battery characteristics are thereby improved. Particularly, when the secondary battery is used at a high current, such a design of the negative electrode plate area is important.

### <C2-1-4. Positive Electrode>

The positive electrode used in the nonaqueous electrolyte secondary battery will now be described.

### <C2-1-4-1. Positive Electrode Active Material>

First, a positive electrode active material for use in the positive electrode will be described.

### (1) Composition

The positive electrode active material is not particularly restricted as long as it is capable of electrochemically absorbing and releasing metal ions; however, the positive electrode active material is preferably, for example, a material that is capable of electrochemically absorbing and releasing lithium ions and contains lithium and at least one transition metal. Specific examples thereof include lithium-transition metal composite oxides, lithium-containing transition metal phosphate compounds, lithium-containing transition metal silicate compounds, and lithium-containing transition metal borate compounds.

As the transition metals of the lithium-transition metal composite oxides, for example, V, Ti, Cr, Mn, Fe, Co, Ni and Cu are preferred, and specific examples of the composite oxides include: lithium-cobalt composite oxides, such as LiCoO₂; lithium-nickel composite oxides, such as LiNiO₂; lithium-manganese composite oxides, such as LiMnO₂, LiMn₂O₄ and Li₂MnO₄; and these lithium-transition metal composite oxides in which some of the transition metal atoms contained as a main constituent are substituted with other metal such as Al, Ti, V, Cr, Mn, Fe, Co, Li, Ni, Cu, Zn, Mg, Ga, Zr, Si, Nb, Mo, Sn, or W.

Specific examples of such substituted lithium-transition metal composite oxides include LiNi_{0.5}Mn_{0.5}O₂, LiNi_{0.85}Co_{0.10}Al_{0.05}O₂, LiNi_{0.33}Co_{0.33}Mn_{0.33}O₂, LiMn₂O₄, LiMn_{1.8}Al_{0.2}O₄, Li_{1.1}Mn_{1.9}Al_{0.1}O₄, and LiMn_{1.5}Ni_{0.5}O₄.

Thereamong, composite oxides containing lithium, nickel and cobalt are more preferred. This is because a composite oxide containing cobalt and nickel can increase the capacity when the battery is used at the same potential.

On the other hand, in large-sized batteries for automobile applications and the like where a large capacity is required and the active material is to be used in a large amount, cobalt is not preferred from the cost standpoint since it is not abundant in terms of resource amount and is thus an expensive metal; therefore, it is desirable to use manganese, which is a less expensive transition metal, as a main component. In other words, a lithium-nickel-cobalt-manganese composite oxide is particularly preferred.

In view of the stability as a compound and the acquisition cost based on the ease of production, lithium-manganese composite oxides having a spinel structure are also preferred. In other words, among the above-described specific examples, for example, LiMn₂O₄, LiMn_{1.8}Al_{0.2}O₄, Li_{1.1}Mn_{1.9}Al_{0.1}O₄, and LiMn_{1.5}Ni_{0.5}O₄ can be mentioned as preferred specific examples.

As the transition metals of the above-described lithium-containing transition metal phosphate compounds, for example, V, Ti, Cr, Mn, Fe, Co, Ni and Cu are preferred, and specific examples of the phosphate compounds include: iron phosphates, such as LiFePO₄, Li₃Fe₂(PO₄)₃, and LiFeP₂O₇; cobalt phosphates, such as LiCoPO₄; manganese phosphates, such as LiMnPO₄; and these lithium-containing transition metal phosphate compounds in which some of the transition metal atoms contained as a main constituent are substituted with other metal such as Al, Ti, V, Cr, Mn, Fe, Co, Li, Ni, Cu, Zn, Mg, Ga, Zr, Si, Nb, Mo, Sn, or W.

As the transition metals of the above-described lithium-containing transition metal silicate compounds, for example, V, Ti, Cr, Mn, Fe, Co, Ni and Cu are preferred, and specific examples of the silicate compounds include: iron silicates, such as Li₂FeSiO₄; cobalt silicates, such as Li₂CoSiO₄; and these lithium-containing transition metal silicate compounds in which some of the transition metal atoms contained as a main constituent are substituted with other metal such as Al, Ti, V, Cr, Mn, Fe, Co, Li, Ni, Cu, Zn, Mg, Ga, Zr, Si, Nb, Mo, Sn, or W.

As the transition metals of the above-described lithium-containing transition metal borate compounds, for example, V, Ti, Cr, Mn, Fe, Co, Ni and Cu are preferred, and specific examples of the borate compounds include: iron borates, such as LiFeBO₃; cobalt borates, such as LiCoBO₃; and these lithium-containing transition metal borate compounds in which some of the transition metal atoms contained as a main constituent are substituted with other metal such as Al, Ti, V, Cr, Mn, Fe, Co, Li, Ni, Cu, Zn, Mg, Ga, Zr, Si, Nb, Mo, Sn, or W.

Further, it is also preferred that the positive electrode active material be the same as in the second embodiment.

### (2) Method of Producing Positive Electrode Active Material

A method of producing the positive electrode active material is not particularly restricted within a range that does not depart from the gist of the invention according to the present embodiment. Examples thereof include several methods, and a general method of producing an inorganic compound may be employed.

Particularly, for the production of a spherical or ellipsoidal active material, a variety of methods can be considered. One example thereof is a method in which a transition metal raw material substance (e.g., a nitrate salt or sulfate salt of a transition metal) and, as required, a raw material substance of other element are dissolved, or pulverized and dispersed in a solvent such as water, the pH of the resulting solution or dispersion is adjusted with stirring to produce and recover a spherical precursor, and this precursor is subsequently dried as required, after which a Li source such as LiOH, Li₂CO₃ or LiNO₃ is added thereto and the resultant is fired at a high temperature to obtain an active material.

Another example is a method in which a transition metal raw material substance (e.g., a nitrate salt, a sulfate salt, a hydroxide, an oxide or the like of a transition metal) and, as required, a raw material substance of other element are dissolved, or pulverized and dispersed in a solvent such as water, and the resulting solution or dispersion is dried and shaped using a spray drier or the like to produce a spherical or ellipsoidal precursor, after which a Li source such as LiOH, Li₂CO₃ or LiNO₃ is added thereto and the resultant is fired at a high temperature to obtain an active material.

Yet another example is a method in which a transition metal raw material substance (e.g., a nitrate salt, a sulfate salt, a hydroxide, an oxide or the like of a transition metal), a Li source such as LiOH, Li₂CO₃ or LiNO₃ and, as required, a raw material substance of other element are dissolved, or pulverized and dispersed in a solvent such as water, and the resulting solution or dispersion is dried and shaped using a spray drier or the like to produce a spherical or ellipsoidal precursor, after which this precursor is fired at a high temperature to obtain an active material.

### <C2-1-4-2. Constitution and Production Method of Positive Electrode>

The constitution of the positive electrode and a method of producing the positive electrode will now be described.

### (Method of Producing Positive Electrode)

The positive electrode is produced by forming a positive electrode active material layer containing particles of the positive electrode active material and a binder on a current collector. Such production of the positive electrode using the positive electrode active material can be carried out by any known method. For example, a positive electrode active material layer is formed on a current collector by dry-mixing the positive electrode active material and a binder with, as required, a conductive material, a thickening agent and the like to prepare a sheet-form mixture and subsequently press-bonding this sheet-form mixture onto a positive electrode current collector, or by dissolving or dispersing these materials in a liquid medium to prepare a slurry and subsequently coating and drying this slurry onto a positive electrode current collector, whereby the positive electrode can be obtained.

The content of the positive electrode active material in the positive electrode active material layer is preferably 60% by mass or higher, more preferably 70% by mass or higher, still more preferably 80% by mass or higher, but preferably 99.9% by mass or less, more preferably 99% by mass or less. When the content of the positive electrode active material is in this range, a sufficient capacitance can be ensured. In addition, the resulting positive electrode has a sufficient strength. A single kind of positive electrode active material powder may be used individually, or two or more kinds of positive electrode active material powder having different compositions or physical properties may be used in any combination at any ratio. When two or more kinds of active materials are used in combination, it is preferred to use the above-described composite oxide containing lithium and manganese as a powder component. As described above, in large-sized batteries for automobile applications and the like where a large capacity is required and the active material is to be used in a large amount, cobalt and nickel are not preferred from the cost standpoint since they are not abundant in terms of resource amount and are thus expensive metals; therefore, it is desirable to use manganese, which is a less expensive transition metal, as a main component.

### (Conductive Material)

As the conductive material, any known conductive material can be used. Specific examples thereof include metal materials, such as copper and nickel; and carbonaceous materials, such as graphites (e.g., natural graphites and artificial graphites), carbon blacks (e.g., acetylene black), and amorphous carbon (e.g., needle coke). Any of these conductive materials may be used singly, or two or more thereof may be used in any combination at any ratio.

The content of the conductive material in the positive electrode active material layer is preferably 0.01% by mass or higher, more preferably 0.1% by mass or higher, still more preferably 1% by mass or higher, but preferably 50% by mass or less, more preferably 30% by mass or less, still more preferably 15% by mass or less. When the content of the conductive material is in this range, a sufficient electrical conductivity can be ensured. In addition, a reduction in the battery capacity is likely to be inhibited.

### (Binder)

The binder used for the production of the positive electrode active material layer is not particularly restricted as long as it is a material that is stable against the nonaqueous electrolyte solution and the solvent used in the electrode production.

When the positive electrode is produced by a coating method, the binder is not particular restricted as long as it is a material that can be dissolved or dispersed in the liquid medium used in the electrode production, and specific examples of such a binder include:
resin-based polymers, such as polyethylene, polypropylene, polyethylene terephthalate, polymethyl methacrylate, aromatic polyamides, cellulose, and nitrocellulose;
rubbery polymers, such as SBR (styrene-butadiene rubbers), NBR (acrylonitrile-butadiene rubbers), fluororubbers, isoprene rubbers, butadiene rubbers, and ethylene-propylene rubbers;
thermoplastic elastomeric polymers, such as styrene-butadiene-styrene block copolymers, and hydrogenation products thereof, EPDM (ethylene-propylene-diene terpolymers), styrene-ethylene-butadiene-ethylene copolymers, styrene-isoprene-styrene block copolymers, and hydrogenation products thereof;
soft resinous polymers, such as syndiotactic 1,2-polybutadiene, polyvinyl acetate, ethylene-vinyl acetate copolymers, and propylene-*α*-olefin copolymers;
fluorocarbon-based polymers, such as polyvinylidene fluoride (PVDF), polytetrafluoroethylene, fluorinated polyvinylidene fluoride, and tetrafluoroethylene-ethylene copolymers; and
polymer compositions having ionic conductivity for alkali metal ions (particularly lithium ions).

Any of these materials may be used singly, or two or more thereof may be used in any combination at any ratio.

The content of the binder in the positive electrode active material layer is preferably 0.1% by mass or higher, more preferably 1% by mass or higher, still more preferably 3% by mass or higher, but preferably 80% by mass or less, more preferably 60% by mass or less, still more preferably 40% by mass or less, particularly preferably 10% by mass or less. When the ratio of the binder is in this range, the positive electrode active material can be sufficiently retained, and the mechanical strength of the positive electrode can be ensured; therefore, favorable battery performance such as cycle characteristics are attained. This also leads to avoidance of a reduction in the battery capacity and conductivity.

### (Liquid Medium)

The type of the liquid medium used in the preparation of a slurry used for forming a positive electrode active material layer is not particularly restricted as long as it is a solvent that is capable of dissolving or dispersing the positive electrode active material, the conductive material and the binder as well as a thickening agent used as required, and either an aqueous solvent or an organic solvent may be used.

Examples of the aqueous medium include water, and mixed media of alcohol and water. Examples of the organic medium include:
aliphatic hydrocarbons, such as hexane;
aromatic hydrocarbons, such as benzene, toluene, xylene, and methylnaphthalene;
heterocyclic compounds, such as quinoline and pyridine;
ketones, such as acetone, methyl ethyl ketone, and cyclohexanone;
esters, such as methyl acetate and methyl acrylate;
amines, such as diethylenetriamine and *N,N*-dimethylaminopropylamine;
ethers, such as diethyl ether and tetrahydrofuran (THF);
amides, such as *N*-methylpyrrolidone (NMP), dimethylformamide, and dimethylacetamide;
and aprotic polar solvents, such as hexamethylphosphoramide and dimethyl sulfoxide.

Any of these media may be used singly, or two or more thereof may be used in any combination at any ratio.

### (Thickening Agent)

When an aqueous medium is used as the liquid medium for the formation of a slurry, it is preferred to prepare a slurry using a thickening agent and a latex such as a styrene-butadiene rubber (SBR). The thickening agent is usually used for the purpose of preparing the viscosity of the resulting slurry.

The thickening agent is not particularly restricted as long as it does not markedly limit the effects of the invention according to the present embodiment, and specific examples of the thickening agent include carboxymethyl cellulose, methyl cellulose, hydroxymethyl cellulose, ethyl cellulose, polyvinyl alcohol, oxidized starch, phosphorylated starch, casein, and salts thereof. Any of these thickening agents may be used singly, or two or more thereof may be used in any combination at any ratio.

In cases where a thickening agent is used, the ratio thereof with respect to a total mass of the positive electrode active material and the thickening agent is preferably 0.1% by mass or higher, more preferably 0.5% by mass or higher, still more preferably 0.6% by mass or higher, but preferably 5% by mass or lower, more preferably 3% by mass or lower, still more preferably 2% by mass or lower. When the ratio of the thickening agent is in this range, a good coating property is attained, and the resulting positive electrode material layer has a sufficient ratio of the active material; therefore, problems of a reduction in the capacity of the secondary battery and an increase in the resistance between the positive electrode active material particles are likely to be avoided.

### (Consolidation)

The positive electrode active material layer obtained by coating and drying the above-described slurry onto a current collector is preferably consolidated by means of hand pressing, roller pressing or the like so as to increase the packing density of the positive electrode active material. The density of the positive electrode active material layer is preferably 1 g·cm⁻³ or higher, more preferably 1.5 g·cm⁻³ or higher, particularly preferably 2 g·cm⁻³ or higher, but preferably 4 g·cm⁻³ or lower, more preferably 3.5 g·cm⁻³ or lower, particularly preferably 3 g·cm⁻³ or lower.

When the density of the positive electrode active material layer is in this range, the permeability of the nonaqueous electrolyte solution to the vicinity of the interface between the current collector and the active material is not reduced, so that favorable charge-discharge characteristics of the secondary battery are attained particularly at high current densities. In addition, neither a reduction in the conductivity between the active materials nor an increase in the battery resistance is likely to occur.

### (Current Collector)

The material of the positive electrode current collector is not particularly restricted, and any known material can be used. Specific examples thereof include: metal materials, such as aluminum, stainless steel, nickel-plated steel, titanium, and tantalum; and carbonaceous materials, such as carbon cloth and carbon paper. Thereamong, a metal material, particularly aluminum, is preferred.

When the current collector is a metal material, the current collector may have any shape of, for example, a metal foil, a metal cylinder, a metal coil, a metal sheet, a metal thin film, an expanded metal, a punched metal, and a foamed metal and, when the current collector is a carbonaceous material, examples thereof include a carbon sheet, a carbon thin film, and a carbon cylinder. Thereamong, the current collector is preferably a metal thin film. As appropriate, the current collector may be in the form of a mesh.

The current collector may have any thickness; however, the thickness is preferably 1 µm or greater, more preferably 3 µm or greater, still more preferably 5 µm or greater, but preferably 1 mm or less, more preferably 100 µm or less, still more preferably 50 µm or less. When the thickness of the current collector is in this range; a sufficient strength required as a current collector can be ensured. In addition, the current collector has good ease of handling.

The thickness ratio of the current collector and the positive electrode active material layer is not particularly restricted; however, the value of "(Thickness of active material layer on one side immediately before injection of nonaqueous electrolyte solution)/(Thickness of current collector)" is preferably 150 or smaller, more preferably 20 or smaller, particularly preferably 10 or smaller, but preferably 0.1 or larger, more preferably 0.4 or larger, particularly preferably 1 or larger.

When the thickness ratio of the current collector and the positive electrode active material layer is in this range, heat generation by the current collector due to Joule's heat during high-current-density charging/discharging of the secondary battery is unlikely to occur. In addition, the volume ratio of the current collector with respect to the positive electrode active material is hardly increased, so that a reduction in the battery capacity can be inhibited.

### (Electrode Area)

From the standpoint of improving the stability under high-output and high-temperature conditions, the positive electrode active material layer preferably has a large area relative to the outer surface area of a battery outer casing. Specifically, the total area of the positive electrode is, in terms of area ratio, preferably 20 times or larger, more preferably 40 times or larger, with respect to the exterior surface area of the nonaqueous electrolyte secondary battery. The "outer surface area of outer casing" refers to, in the case of a closed-bottom prism-shaped casing, a total area calculated from the length, the width and the thickness of a portion of the casing that is filled with a power-generating element, excluding the projecting parts of the terminals. In the case of a closed-bottom cylindrical casing, the "outer surface area of outer casing" refers to a geometric surface area determined by approximation of a portion of the casing that is filled with a power-generating element, excluding the projecting parts of the terminals, to a cylinder. The "the total area of the positive electrode", which is a geometric surface area of a positive electrode mixture layer facing a mixture layer containing the negative electrode active material, refers to a sum of the areas of the respective surfaces in a structure in which positive electrode layer mixture layers are formed on the respective sides via a current collector foil.

### (Discharge Capacity)

When the nonaqueous electrolyte solution is used, the capacitance of the elements of the nonaqueous electrolyte secondary battery that are housed in a single battery casing (the capacitance measured in the course of discharging the battery from a fully-charged state to a discharged state) is preferably 1 ampere hour (Ah) or higher since this leads to an enhanced effect of improving the low-temperature discharge characteristics. Accordingly, the positive electrode plate is designed to have a discharge capacity of preferably 3 Ah (ampere hour), more preferably 4 Ah or higher, but preferably 20 Ah or less, more preferably 10 Ah or less, in a fully-charged state.

When the discharge capacity is in this range, a voltage drop caused by electrode reaction resistance during extraction of a large current is not overly large, so that a reduction in the power efficiency can be inhibited. In addition, since the temperature distribution caused by internal heat generation of the battery during pulse charging and discharging is not excessively wide, phenomena of deterioration in the durability against repeated charging and discharging and a reduction in the heat dissipation efficiency against abrupt heat generation in the event of a defect such as overcharging or internal short-circuiting can be avoided.

### (Thickness of Positive Electrode Plate)

The thickness of the positive electrode plate is not particularly restricted; however, from the standpoint of attaining a high capacity and a high output as well as excellent rate characteristics, the thickness of the positive electrode active material layer excluding the thickness of the current collector is preferably 10 µm or greater, more preferably 20 µm or greater, but preferably 200 µm or less, more preferably 100 µm or less, on one side of the current collector.

### <C2-1-5. Separator>

In the nonaqueous electrolyte secondary battery, a separator is usually arranged between the positive electrode and the negative electrode for the purpose of inhibiting a short circuit. In this case, the separator is usually impregnated with the nonaqueous electrolyte solution.

The material and the shape of the separator are not particularly restricted as long as the separator does not markedly impair the effects of the invention according to the present embodiment, and any known material and shape can be employed. Particularly, a separator formed from a material stable against the nonaqueous electrolyte solution, such as a resin, a glass fiber or an inorganic material, can be used, and it is preferred to use a separator in the form of, for example, a porous sheet or a nonwoven fabric that has excellent liquid retainability.

As the material of a resin or glass-fiber separator, for example, polyolefins such as polyethylene and polypropylene, aramid resins, polytetrafluoroethylenes, polyether sulfones, and glass filters can be used. Thereamong, polyolefins and glass filters are preferred, and polyolefins are more preferred. Any of these materials may be used singly, or two or more thereof may be used in any combination at any ratio.

The thickness of the separator may be set arbitrarily; however, it is preferably 1 µm or greater, more preferably 5 µm or greater, still more preferably 10 µm or greater, but preferably 50 µm or less, more preferably 40 µm or less, still more preferably 30 µm or less. When the thickness of the separator is in this range, good insulation and mechanical strength are attained. In addition, not only deterioration of the battery performance such as the rate characteristics but also a reduction in the energy density of the nonaqueous electrolyte secondary battery as a whole can be inhibited.

In cases where a porous material such as a porous sheet or a nonwoven fabric is used as the separator, the porosity of the separator may be set arbitrarily; however, it is preferably 20% or higher, more preferably 35% or higher, still more preferably 45% or higher, but preferably 90% or lower, more preferably 85% or lower, still more preferably 75% or lower. When the porosity is in this range, the membrane resistance is prevented from being excessively high, so that deterioration of the rate characteristics of the secondary battery can be suppressed. In addition, since the separator has an appropriate mechanical strength, a reduction in the insulation can be suppressed as well.

The average pore size of the separator may also be set arbitrarily; however, it is preferably 0.5 µm or smaller, more preferably 0.2 µm or smaller, but preferably 0.05 µm or larger. When the average pore size is in this range, a short circuit is unlikely to occur. In addition, the membrane resistance is prevented from being excessively high, so that deterioration of the rate characteristics of the secondary battery can be inhibited.

Meanwhile, as the material of an inorganic separator, for example, an oxide such as alumina or silicon dioxide, a nitride such as aluminum nitride or silicon nitride, or a sulfate such as barium sulfate or calcium sulfate can be used, and the inorganic separator may have a particulate shape or a fibrous shape.

With regard to the form of the separator, a thin film such as a nonwoven fabric, a woven fabric, or a microporous film may be used. As a thin-film separator, one having an average pore size of 0.01 to 1 µm and a thickness of 5 to 50 µm is preferably used. Aside from such an independent thin-film separator, a separator that is formed as, with the use of a resin binder, a composite porous layer containing particles of the above-described inorganic material on the surface layer of the positive electrode and/or the negative electrode, can be used. For example, on both sides of the positive electrode, a porous layer may be formed using alumina particles having a 90% particle size of smaller than 1 µm along with a fluorine resin as a binder.

### <C2-1-6. Battery Design>

### (Electrode Group)

An electrode group may have either a layered structure in which the above-described positive electrode plate and negative electrode plate are layered with the above-described separator being interposed therebetween, or a wound structure in which the above-described positive electrode plate and negative electrode plate are spirally wound with the above-described separator being interposed therebetween. The volume ratio of the electrode group with respect to the internal volume of the battery (this volume ratio is hereinafter referred to as "electrode group occupancy") is preferably 40% or higher, more preferably 50% or higher, but preferably 95% or lower, more preferably 90% or lower. When the electrode group occupancy is in this range, the battery capacity is unlikely to be reduced. In addition, an appropriate amount of void space can be ensured; therefore, an increase in the internal pressure, which is caused by swelling of members and an increase in the vapor pressure of the liquid component of the nonaqueous electrolyte solution due to an increase in the battery temperature, as well as the resulting deterioration of the various properties of the secondary battery, such as the charging-discharging repeating performance and the high-temperature storage characteristics, and activation of a gas release valve used for relieving the internal pressure to the outside, can be avoided.

### (Current Collector Structure)

The current collector structure is not particularly restricted; however, in order to more effectively realize an improvement in the discharge characteristics attributed to the nonaqueous electrolyte solution, it is preferred to adopt a structure that reduces the resistance of wiring and joint parts. By reducing the internal resistance in this manner, the effects of using the nonaqueous electrolyte solution are particularly favorably exerted.

In an electrode group having the above-described layered structure, the metal core portions of the respective electrode layers are preferably bundled and welded to a terminal. When the area of a single electrode is large, the internal resistance is high; therefore, it is also preferred to reduce the resistance by arranging plural terminals in each electrode. In an electrode group having the above-described wound structure, the internal resistance can be reduced by arranging plural lead structures on each of the positive electrode and the negative electrode and bundling them to a terminal.

### (Protective Element)

Examples of a protective element include a PTC (Positive Temperature Coefficient) thermistor whose resistance increases in the event of abnormal heat generation or excessive current flow, a thermal fuse, and a valve (current cutoff valve) that blocks a current flowing into a circuit in response to a rapid increase in the internal pressure or internal temperature of the battery in the event of abnormal heat generation. The protective element is preferably selected from those that are not activated during normal use at a high current, and it is more preferred to design the battery such that neither abnormal heat generation nor thermal runaway occurs even without a protective element.

### (Outer Package)

The nonaqueous electrolyte secondary battery is usually constructed by housing the above-described nonaqueous electrolyte solution, negative electrode, positive electrode, separator and the like in an outer package (outer casing). This outer package is not restricted, and any known outer package can be employed as long as it does not markedly impair the effects of the invention according to the present embodiment.

The material of the outer casing is not particularly restricted as long as it is a material that is stable against the nonaqueous electrolyte solution to be used. Specifically, a metal such as a nickel-plated steel sheet, stainless steel, aluminum, an aluminum alloy, a magnesium alloy, nickel or titanium, or a laminated film composed of a resin and an aluminum foil can be used. From the standpoint of weight reduction, it is preferred to use a metal such as aluminum or an aluminum alloy, or a laminated film.

Examples of an outer casing using any of the above-described metals include those having a hermetically sealed structure obtained by welding metal pieces together by laser welding, resistance welding or ultrasonic welding, and those having a caulked structure obtained using the metals via a resin gasket. Examples of an outer casing using the above-described laminated film include those having a hermetically sealed structure obtained by heat-fusing resin layers together. In order to improve the sealing performance, a resin different from the resin used in the laminated film may be interposed between the resin layers. Particularly, in the case of forming a sealed structure by heat-fusing resin layers via a collector terminal, since it involves bonding between a metal and a resin, a polar group-containing resin or a resin modified by introduction of a polar group is preferably used as the resin to be interposed.

The shape of the outer casing may be selected arbitrarily, and the outer casing may have any of, for example, a cylindrical shape, a prismatic shape, a laminated shape, a coin shape, and a large-sized shape.

### <C2-2. Nonaqueous Electrolyte Primary Battery>

A material capable of absorbing metal ions is used as a positive electrode, while a material capable of releasing metal ions is used as a negative electrode. As a material of the positive electrode, a transition metal oxide such as fluorinated graphite or manganese dioxide is preferred. As a material of the negative electrode, a simple metal such as zinc or lithium is preferred. As a nonaqueous electrolyte solution, the above-described nonaqueous electrolyte solution is used.

### <C2-3. Metal Ion Capacitor>

A material capable of forming an electric double layer is used as a positive electrode, while a material capable of absorbing and releasing metal ions is used as a negative electrode. As a material of the positive electrode, activated carbon is preferred. Further, as a material of the negative electrode, a carbonaceous material is preferred. As a nonaqueous electrolyte solution, the above-described nonaqueous electrolyte solution is used.

### <C2-4. Electric Double Layer Capacitor>

A material capable of forming an electric double layer is used as electrodes. As a material of the electrodes, activated carbon is preferred. As a nonaqueous electrolyte solution, the above-described nonaqueous electrolyte solution is used.

### EXAMPLES

### [Experiment A]

The present invention will now be described more concretely by way of Examples and Reference Examples; however, the present invention is not restricted thereto within the gist of the present invention.

Compounds used in Examples and Comparative Examples are shown below.

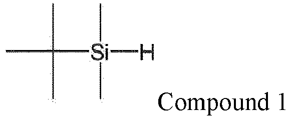

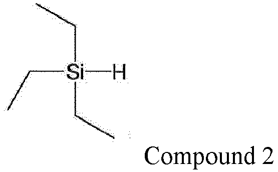

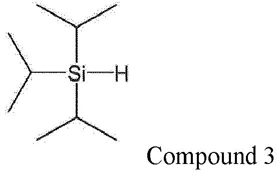

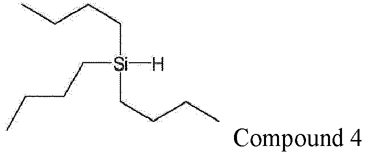

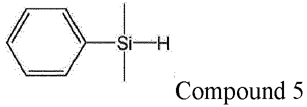

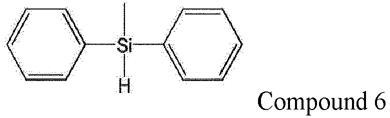

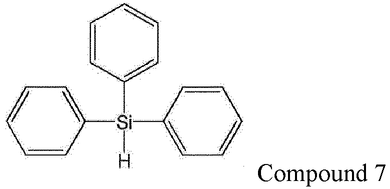

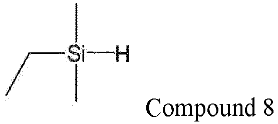

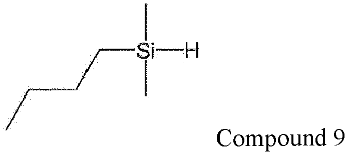

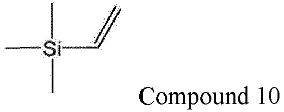

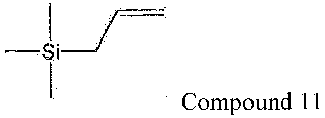

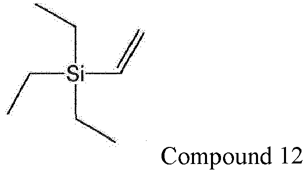

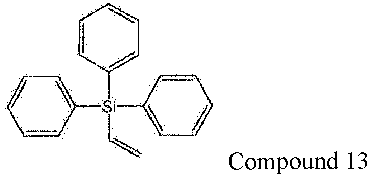

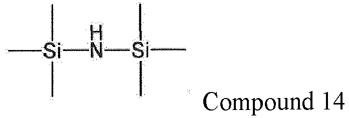

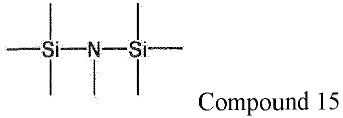

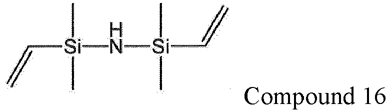

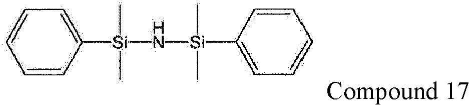

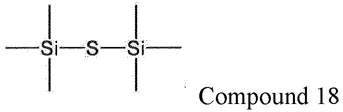

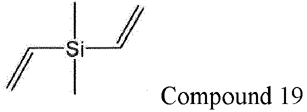

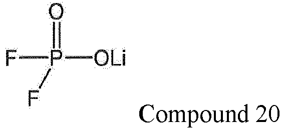

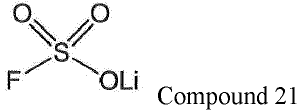

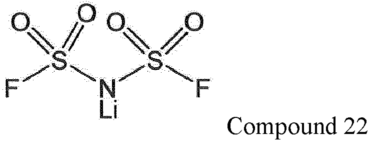

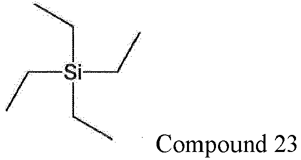

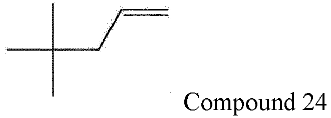

### <Examples A1-1 to A1-22 and Comparative Examples A1-1 to A1-4>

### [Production of Positive Electrode]

Using a disperser, a slurry was prepared by mixing 85% by mass of lithium-nickel-manganese-cobalt composite oxide (NMC) as a positive electrode active material, 10% by mass of acetylene black as a conductive material and 5% by mass of polyvinylidene fluoride (PVDF) as a binder in an *N*-methylpyrrolidone solvent. Both sides of a 21 µm-thick aluminum foil were uniformly coated with this slurry, and this aluminum foil was subsequently dried and then pressed to obtain a positive electrode.

### [Production of Negative Electrode]

In 2,000 g of flake graphite having an average particle size of 35 µm, 50 g of Si fine particles having an average particle size of 0.2 µm was dispersed, and the resulting dispersion was loaded to a hybridization system (manufactured by Nara Machinery Co., Ltd.) and circulated or retained in the system for 180 seconds at a rotor rotation speed of 7,000 rpm, whereby the dispersion was treated to obtain a composite of Si and graphite particles. The thus obtained composite was mixed with coal-tar pitch, which was used as an organic compound yielding a carbonaceous material such that the post-firing coverage would be 7.5%, and the resulting mixture was kneaded and dispersed using a twin-screw kneader. The thus obtained dispersion was introduced to a firing furnace and fired in a nitrogen atmosphere at 1,000°C for 3 hours. The thus obtained fired product was pulverized using a hammer mill and then passed through a sieve (45 µm) to prepare a negative electrode active material. In accordance with the above-described respective methods, the elemental silicon content, the average particle size (d50), the tap density and the specific surface area were measured to be 2.0% by mass, 20 µm, 1.0 g/cm³ and 7.2 m²/g, respectively.

Negative electrode active materials 1 to 3 having the respective Si contents shown in Table 1 were prepared in the same manner as described above. The negative electrode active material 1 is the above-prepared negative electrode active material itself. The Si content represents the mass concentration (% by mass) of the Si fine particles with respect to a total amount (100% by mass) of the Si fine particles and the graphite particles.

**Table 1**

| | Si content (% by weight) | Average particles size (d50, µm) | Tap density (g/cm³) | Specific surface area (m²/g) |
|---|---|---|---|---|
| Negative electrode active material 1 | 2.0 | 20 | 1.0 | 7.2 |
| Negative electrode active material 2 | 12.0 | 17 | 1.1 | 6.3 |
| Negative electrode active material 3 | 17.0 | 20 | 1.1 | 8.1 |

To each of the thus obtained negative electrode active materials, an aqueous dispersion of sodium carboxymethyl cellulose (concentration of sodium carboxymethyl cellulose = 1% by mass) and an aqueous dispersion of styrene-butadiene rubber (concentration of styrene-butadiene rubber = 50% by mass) were added as a thickening agent and a binder, respectively, and these materials were mixed using a disperser to prepare a slurry. The thus obtained slurry was uniformly coated and dried onto one side of a 10 µm-thick copper foil, and this copper foil was subsequently pressed to obtain a negative electrode. It is noted here that this production was carried out such that the dried negative electrode had a mass ratio (negative electrode active material: sodium carboxymethyl cellulose:styrene-butadiene rubber) of 97.5:1.5:1.

### [Preparation of Nonaqueous Electrolyte Solutions]

Under a dry argon atmosphere, thoroughly dried LiPF₆ was dissolved at 1.2 mol/L (in terms of the concentration in the resulting nonaqueous electrolyte solution) in a mixture of ethylene carbonate (EC) and diethyl carbonate (DEC) (volume ratio = 3:7), and 2.0% by mass of vinylene carbonate (VC) was further added to the resultant to prepare an electrolyte solution (hereinafter, referred to as "reference electrolyte solution 1"). In Examples A1-1 to A1-22 and Comparative Examples A1-1 to A1-4, nonaqueous electrolyte solutions were prepared by adding the respective compounds 1 to 24 to the reference electrolyte solution 1 at the ratios shown in Table 2 below. It is noted here that the nonaqueous electrolyte solution of Comparative Example A1-1 is the reference electrolyte solution 1 itself. The electrolyte solutions were prepared by adding the respective compounds to the reference electrolyte solution 1 at the ratios shown in Table 2 below. In Table 2, "Content (% by mass)" indicates the concentration in 100% by mass of each nonaqueous electrolyte solution.

### [Production of Nonaqueous Electrolyte Secondary Batteries]

A battery element was prepared by laminating the above-obtained positive electrode and negative electrode along with a polyethylene separator in the order of the negative electrode, the separator, and the positive electrode. This battery element was inserted into a pouch made of a laminated film obtained by coating both sides of an aluminum sheet (thickness: 40 µm) with a resin layer, with the terminals of the positive and negative electrodes protruding out of the pouch. Thereafter, each of the above-prepared electrolyte solutions was injected into the pouch, and the pouch was subsequently vacuum-sealed, whereby a laminate-type battery was produced.

### <Evaluation of Nonaqueous Electrolyte Secondary Batteries>

### [High-Temperature Cycle Test]

In a 25°C thermostat chamber, each nonaqueous electrolyte secondary battery of laminate-type cell was subjected to constant current-constant voltage (CC-CV) charging up to 4.0 V at a current equivalent to 0.05 C. Then, the nonaqueous electrolyte secondary battery was discharged to 2.5 V at 0.05 C. After subsequently being CC-CV charged to 4.0 V at 0.2 C, the nonaqueous electrolyte secondary battery was discharged to 2.5 V at 0.2 C and again CC-CV charged to 4.2 V at 0.2 C, after which the nonaqueous electrolyte secondary battery was discharged to 2.5 V at 0.2 C and thereby stabilized. Thereafter, the nonaqueous electrolyte secondary battery was CC-CV charged to 4.3 V at 0.2 C and then discharged to 2.5 V at 0.2 C, whereby initial conditioning was completed.

The thickness of the battery subjected to the initial conditioning was measured, and the cell was then subjected to 100 charging-discharging cycles, each of which consisted of CC-CV charging to 4.2 V at 0.5 C and subsequent discharging to 2.5 V at a constant current of 0.5 C, in a 45°C thermostat chamber. Thereafter, the thickness of the battery was measured in the same manner as in the measurement of the thickness after the initial conditioning so as to determine the thickness change, and the change in the electrode thickness of the battery caused by the charging-discharging cycles was defined as "battery swelling". Table 2 below shows the values of the battery swelling, taking the battery swelling in Comparative Example A1-1 as 100.

**Table 2**

| | Electrolyte solution | Compound | Content (% by weight) | Compound | Content (% by weight) | Si content (% by weight) | | |
|---|---|---|---|---|---|---|---|---|
| | | | | | | 2 | 12 | 17 |
| | | | | | | Battery swelling (%) | | |
| Example A1-1 | | 1 | 2.0 | - | - | 61 | 57 | 27 |
| Example A1-2 | | 2 | 2.0 | - | - | 64 | 61 | 37 |
| Example A1-3 | | 3 | 2.0 | - | - | 70 | - | - |
| Example A1-4 | | 4 | 2.0 | - | - | 85 | - | - |
| Example A1-5 | | 5 | 2.0 | - | - | 44 | - | - |
| Example A1-6 | | 6 | 2.0 | - | - | 62 | - | - |
| Example A1-7 | | 7 | 2.0 | - | - | 76 | - | - |
| Example A1-8 | | 8 | 2.0 | - | - | 39 | - | - |
| Example A1-9 | | 9 | 2.0 | - | - | 34 | - | - |
| Example A1-10 | | 10 | 2.0 | - | - | 56 | 54 | 25 |
| Example A1-11 | | 11 | 2.0 | - | - | 42 | - | - |
| Example A1-12 | | 12 | 2.0 | - | - | 64 | - | - |
| Example A1-13 | | 13 | 2.0 | - | - | 73 | - | - |
| Example A1-14 | 1.2M LiPF₆ EC/DEC = 3/7 + 2.0% VC | 14 | 2.0 | - | - | 83 | - | - |
| Example A1-15 | | 15 | 2.0 | - | - | 44 | - | - |
| Example A1-16 | | 16 | 2.0 | - | - | 67 | - | - |
| Example A1-17 | | 17 | 2.0 | - | - | 70 | - | - |
| Example A1-18 | | 18 | 2.0 | - | - | 15 | - | - |
| Example A1-19 | | 2 | 2.0 | 20 | 1.0 | - | 59 | - |
| Example A1-20 | | 10 | 2.0 | 20 | 1.0 | - | 38 | - |
| Example A1-21 | | 10 | 2.0 | 21 | 2.0 | - | 50 | - |
| Example A1-22 | | 10 | 2.0 | 22 | 3.0 | - | 48 | - |
| Comparative Example A1-1 | | - | - | - | - | 100 | 100 | 100 |
| Comparative Example A1-2 | | 19 | 2.0 | - | - | 84 | - | - |
| Comparative Example A1-3 | | 23 | 2.0 | - | - | 100 | - | - |
| Comparative Example A1-4 | | 24 | 2.0 | - | - | 100 | - | - |

As clearly seen from Table 2, the battery swelling was more favorably suppressed in the batteries produced in Examples A1-1 to A1-18 than in the battery produced in Comparative Example A1-1. In addition, since the battery swelling was further suppressed by using the compound 2 or 10 in combination with the specific salt, such combinations were confirmed to have a prominent synergistic effect (Examples A1-19 to A1-22).

Moreover, those compounds other than the compounds represented by Formula (A) or (B) (Comparative Examples A1-2 to A1-4) were not confirmed to have an effect of suppressing the battery swelling; therefore, it was found that the battery swelling caused by charging and discharging can be favorably suppressed by using a compound represented by Formula (A) or (B) in combination with a negative electrode active material that contains a metal alloyable with Li particles, and graphite particles.

### <Examples A2-1 to A2-3 and Comparative Example A2-1>

### [Production of Positive Electrode]

A positive electrode was produced in the same manner as in Example A1.

### [Production of Negative Electrode]

To a negative electrode active material (graphite: SiO = 90:10; mass ratio), an aqueous dispersion of sodium carboxymethyl cellulose (concentration of sodium carboxymethyl cellulose = 1% by mass) and an aqueous dispersion of styrene-butadiene rubber (concentration of styrene-butadiene rubber = 50% by mass) were added as a thickening agent and a binder, respectively, and these materials were mixed using a disperser to prepare a slurry. The thus obtained slurry was uniformly coated and dried onto one side of a 10 µm-thick copper foil, and this copper foil was subsequently pressed to obtain a negative electrode. It is noted here that this production was carried out such that the dried negative electrode had a mass ratio (negative electrode active material: sodium carboxymethyl cellulose: styrene-butadiene rubber) of 97.5:1.5:1.

### [Preparation of Nonaqueous Electrolyte Solutions]

The reference electrolyte solution 1 used in Example A1 was used. In Examples A2-1 to A2-3, nonaqueous electrolyte solutions were prepared by adding the respective compounds to the whole reference electrolyte solution 1 at the ratios shown in Table 3 below. The nonaqueous electrolyte solution of Comparative Example A2-1 is the reference electrolyte solution 1 itself.

### [Production of Nonaqueous Electrolyte Secondary Batteries (Laminate-Type)]

The above-obtained positive electrode and negative electrode were laminated along with a polyolefin separator in the order of the negative electrode, the separator, and the positive electrode. The thus obtained battery element was wrapped in an aluminum laminate film, and each of the above-prepared nonaqueous electrolyte solutions was injected thereto, followed by vacuum-sealing, whereby a sheet-form nonaqueous electrolyte secondary battery was produced.

### <Evaluation of Nonaqueous Electrolyte Secondary Batteries>

### [High-Temperature Cycle Test]

In a 25°C thermostat chamber, each nonaqueous electrolyte secondary battery of laminate-type cell was subjected to constant current-constant voltage (CC-CV) charging up to 4.0 V at a current equivalent to 0.05 C. Then, the nonaqueous electrolyte secondary battery was discharged to 2.5 V at 0.05 C. After subsequently being CC-CV charged to 4.0 V at 0.2 C, the nonaqueous electrolyte secondary battery was discharged to 2.5 V at 0.2 C and again CC-CV charged to 4.2 V at 0.2 C, after which the nonaqueous electrolyte secondary battery was discharged to 2.5 V at 0.2 C and thereby stabilized. Thereafter, the nonaqueous electrolyte secondary battery was CC-CV charged to 4.3 V at 0.2 C and then discharged to 2.5 V at 0.2 C, whereby initial conditioning was completed.

The thickness of the battery subjected to the initial conditioning was measured, and the cell was then subjected to 100 charging-discharging cycles, each of which consisted of CC-CV charging to 4.2 V at 0.5 C and subsequent discharging to 2.5 V at a constant current of 0.5 C, in a 45°C thermostat chamber. Thereafter, the thickness of the battery was measured in the same manner as in the measurement of the thickness after the initial conditioning so as to determine the thickness change, and the change in the electrode thickness of the battery caused by the charging-discharging cycles was defined as "battery swelling". Table 3 below shows the values of the battery swelling, taking the battery swelling in Comparative Example A2-1 as 100.

**Table 3**

| | Electrolyte solution | Compound | Content (% by weight) | SiO content (% bv weight) |
|---|---|---|---|---|
| | | | | 10 |
| | | | | Batterv swelling (%) |
| Example A2-1 | 1.2M LiPF6 EC/DEC = 3/7 +2.0% VC | 1 | 2.0 | 20 |
| Example A2-2 | | 2 | 2.0 | 20 |
| Example A2-3 | | 10 | 2.0 | 20 |
| Comparative Example A2-1 | | - | - | 100 |

As apparent from Table 3, the battery swelling was more favorably suppressed in the batteries produced in Examples A2-1 to A2-3 than in the battery produced in Comparative Example A2-1. Therefore, it was found that the battery swelling caused by charging and discharging can be favorably suppressed by using a compound represented by Formula (A) or (B) in combination with a negative electrode active material that contains a metal alloyable with Li particles, and graphite particles.

### <Comparative Examples A3-1 to A3-4>

### [Production of Positive Electrode]

The same positive electrode as that of Example A1 was used.

### [Production of Negative Electrodes]

### (Negative electrode in which Si fine particles have a mass concentration of 0% by mass with respect to a total amount of Si fine particles and graphite particles (100% by mass))

To 97.5 parts by mass of a negative electrode active material, an aqueous dispersion of sodium carboxymethyl cellulose (concentration of sodium carboxymethyl cellulose = 1% by mass) and an aqueous dispersion of styrene-butadiene rubber (concentration of styrene-butadiene rubber = 50% by mass) were added as a thickening agent and a binder, respectively, and these materials were mixed using a disperser to prepare a slurry. The thus obtained slurry was uniformly coated and dried onto one side of a 10 µm-thick copper foil, and this copper foil was subsequently pressed to obtain a negative electrode. It is noted here that this production was carried out such that the dried negative electrode had a mass ratio (natural graphite:sodium carboxymethyl cellulose:styrene-butadiene rubber) of 97.5:1.5:1. (Negative electrode in which Si fine particles have a mass concentration of 100% by mass with respect to a total amount of Si fine particles and graphite particles (100% by mass))

A silicon powder used as a negative electrode active material was mixed with a binder, and an *N*-methylpyrrolidone solution was added thereto, after which the resultant was mixed into the form of a slurry using a disperser. The thus obtained slurry was uniformly coated onto a 20 µm-thick copper foil used as a negative electrode current collector, and this copper foil was subsequently cut out such that the active material had a size of 30 mm in width and 40 mm in length, whereby a negative electrode was produced. This negative electrode was used after being dried under reduced pressure for 12 hours at 60°C.

### [Preparation of Nonaqueous Electrolyte Solutions]

The reference electrolyte solution 1 used in Example A1 was used. In Comparative Examples A3-1 to A3-4, nonaqueous electrolyte solutions were prepared by adding the respective compounds to the whole reference electrolyte solution 1 at the ratios shown in Table 4 below. It is noted here that the nonaqueous electrolyte solution of Comparative Example A3-4 is the reference electrolyte solution 1 itself.

### [Production of Nonaqueous Electrolyte Secondary Batteries (Laminate-Type)]

The above-obtained positive electrode and negative electrode were laminated along with a polyolefin separator in the order of the negative electrode, the separator, and the positive electrode. The thus obtained battery element was wrapped in an aluminum laminate film, and the below-described electrolyte solution was injected thereto, followed by vacuum-sealing, whereby a sheet-form nonaqueous electrolyte secondary battery was produced.

### <Evaluation of Nonaqueous Electrolyte Secondary Batteries>

### [High-Temperature Cycle Test]

In a 25°C thermostat chamber, each nonaqueous electrolyte secondary battery of laminate-type cell was subjected to constant current-constant voltage (CC-CV) charging up to 4.0 V at a current equivalent to 0.05 C. Then, the nonaqueous electrolyte secondary battery was discharged to 2.5 V at 0.05 C. After subsequently being CC-CV charged to 4.0 V at 0.2 C, the nonaqueous electrolyte secondary battery was discharged to 2.5 V at 0.2 C and again CC-CV charged to 4.2 V at 0.2 C, after which the nonaqueous electrolyte secondary battery was discharged to 2.5 V at 0.2 C and thereby stabilized. Thereafter, the nonaqueous electrolyte secondary battery was CC-CV charged to 4.3 V at 0.2 C and then discharged to 2.5 V at 0.2 C, whereby initial conditioning was completed.

The thickness of the battery subjected to the initial conditioning was measured, and the cell was then subjected to 100 charging-discharging cycles, each of which consisted of CC-CV charging to 4.2 V at 0.5 C and subsequent discharging to 2.5 V at a constant current of 0.5 C, in a 45°C thermostat chamber. Thereafter, the thickness of the battery was measured in the same manner as in the measurement of the thickness after the initial conditioning so as to determine the thickness change, and the change in the electrode thickness of the battery caused by the charging-discharging cycles was defined as "battery swelling". Table 4 below shows the values of the battery swelling, taking the battery swelling in Comparative Example A3-4 as 100.

**Table 4**

| | Electrolyte solution | Compound | Content (% by weight) | SiO content (% bv weight) | |
|---|---|---|---|---|---|
| | | | | 0 | 100 |
| | | | | Battery sw | elling (%) |
| Comparative Example A3-1 | 1.2M LiPF6 EC/DEC = 3/7 +2.0% VC | 1 | 2.0 | 100 | 88 |
| Comparative Example A3-2 | | 2 | 2.0 | 100 | - |
| Comparative Example A3-3 | | 10 | 2.0 | 100 | 80 |
| Comparative Example A3-4 | | - | - | 100 | 100 |

As apparent from Table 4, it is seen that an effect of suppressing the battery swelling was not confirmed in the batteries produced using the respective electrolyte solutions containing a compound represented by Formula (A) (Comparative Examples A3-1 to A3-3), and the battery of Comparative Example A3-4. Accordingly, it can be said that a combination of a compound represented by Formula (A) or (B) with a material other than a negative electrode active material containing a metal alloyable with Li particles and graphite particles cannot suppress the battery swelling caused by charging and discharging.

### [Experiment B]

The present invention will now be described more concretely by way of Examples and Comparative Examples; however, the present invention is not restricted thereto within the gist of the present invention.

Compounds used in Examples and Comparative Examples are shown below.

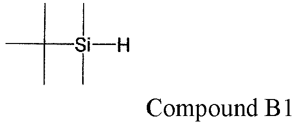

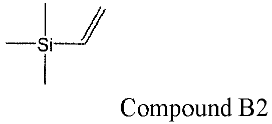

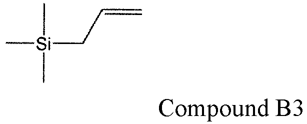

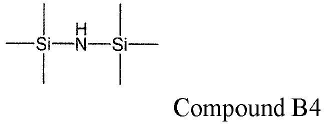

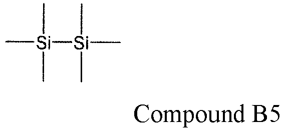

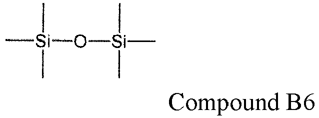

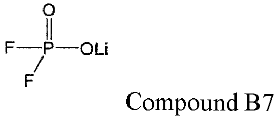

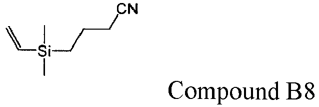

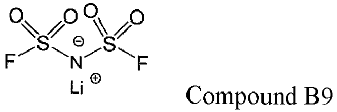

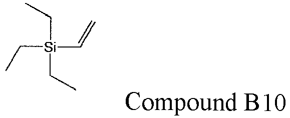

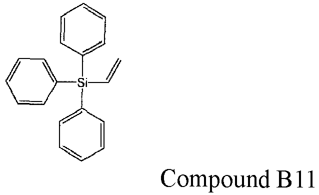

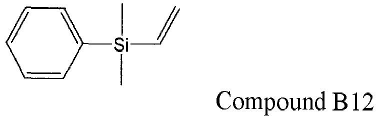

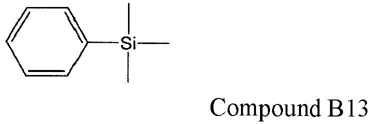

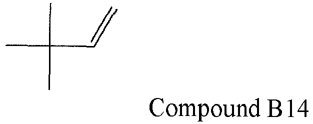

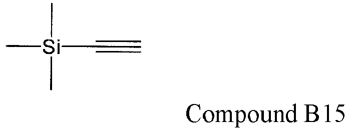

### <Examples B1-1 to B1-10 and Comparative Examples B1-1 to B1-6>

### [Production of Positive Electrode]

Using a disperser, a slurry was prepared by mixing 90 parts by mass of lithium-nickel-cobalt-manganese composite oxide (Li_{1.0}Ni_{0.5}Co_{0.2}Mn_{0.3}O₂) as a positive electrode active material, 7 parts by mass of acetylene black as a conductive material and 3 parts by mass of polyvinylidene fluoride (PVDF) as a binder in an *N*-methylpyrrolidone solvent. Both sides of a 15 µm-thick aluminum foil were uniformly coated with this slurry, and this aluminum foil was subsequently dried and then pressed to obtain a positive electrode.

### [Production of Negative Electrode]

To 98 parts by mass of natural graphite, 1 part by mass of an aqueous dispersion of sodium carboxymethyl cellulose (concentration of sodium carboxymethyl cellulose = 1% by mass) and 1 part by mass of an aqueous dispersion of styrene-butadiene rubber (concentration of styrene-butadiene rubber = 50% by mass) were added as a thickening agent and a binder, respectively, and these materials were mixed using a disperser to prepare a slurry. The thus obtained slurry was coated and dried onto a 10 µm-thick copper foil, and this copper foil was subsequently pressed to obtain a negative electrode.

### [Preparation of Nonaqueous Electrolyte Solutions]

Under a dry argon atmosphere, thoroughly dried LiPF₆ was dissolved at 1.2 mol/L (in terms of the concentration in the resulting nonaqueous electrolyte solution) in a mixture of ethylene carbonate (EC), ethyl methyl carbonate(EMC) and diethyl carbonate (DEC) (volume ratio = 3:4:3) (the thus obtained solution is hereinafter referred to as "reference electrolyte solution 1"). To this reference electrolyte solution 1, vinylene carbonate (VC) and monofluoroethylene carbonate (FEC) were each further added in an amount of 2.0% by mass (in terms of the concentration in the resulting nonaqueous electrolyte solution) (the thus obtained solution is hereinafter referred to as "reference electrolyte solution 2"). To the thus obtained reference electrolyte solution 1 or 2, the respective compounds shown in Table 5 below were added as additives to prepare nonaqueous electrolyte solutions. It is noted here that the nonaqueous electrolyte solutions of Comparative Examples B1-1 and B1-2 are the reference electrolyte solutions 1 and 2 themselves, respectively. In Table 5, "Content (% by mass)" indicates the content based on 100% by mass of the reference electrolyte solution 1.

### [Production of Nonaqueous Electrolyte Secondary Batteries]

A battery element was prepared by laminating the above-obtained positive electrode and negative electrode along with a polyethylene separator in the order of the negative electrode, the separator, and the positive electrode. This battery element was inserted into a pouch made of a laminated film obtained by coating both sides of an aluminum sheet (thickness: 40 µm) with a resin layer, with the terminals of the positive and negative electrodes protruding out of the pouch. Thereafter, each of the above-prepared nonaqueous electrolyte solutions was injected into the pouch, and the pouch was subsequently vacuum-sealed, whereby a laminate-type nonaqueous electrolyte secondary battery was produced.

### <Evaluation of Nonaqueous Electrolyte Secondary Batteries>

### [Initial Conditioning]

In a 25°C thermostat chamber, each nonaqueous electrolyte secondary battery produced by the above-described method was charged for 6 hours at a constant current equivalent to 0.05 C (" 1 C" means the current value at which charging or discharging of the battery requires one hour; the same applies below) and then discharged to 3.0 V at 0.2 C. Subsequently, the nonaqueous electrolyte secondary battery was subjected to constant current-constant voltage charging (hereinafter, referred to as "CC-CV charging") up to 4.1 V at 0.2 C. The nonaqueous electrolyte secondary battery was then maintained at 45°C for 72 hours to perform aging, after which the nonaqueous electrolyte secondary battery was discharged to 3.0 V at 0.2 C and thereby stabilized. Thereafter, the nonaqueous electrolyte secondary battery was CC-CV charged to 4.2 V at 0.2 C and then discharged to 3.0 V at 0.2 C, whereby initial conditioning was completed.

### [Charged Storage Test]

After the initial conditioning, the nonaqueous electrolyte secondary battery was again CC-CV charged to 4.2 V at 0.2C and subsequently stored at a high temperature of 60°C for two weeks. Thereafter, the nonaqueous electrolyte secondary battery was thoroughly cooled and then immersed in an ethanol bath to measure the volume. The amount of generated gas was determined from the volume change before and after the storage test, and this was defined as "amount of gas generated during charged storage". Table 5 below shows the ratios of the amount of gas generated during charged storage, taking the amount determined in Comparative Examples B1-1 and B1-2 as 100.

**Table 5**

| | Electrolyte solution | Additive 1 | | Additive 2 | | Amount of gas generated during charged storage |
|---|---|---|---|---|---|---|
| | | Compound | Content (% by mass) | Compound | Content (% by mass) | |
| Example B1-1 | Reference electrolyte solution 1 | Compound B2 | 1.0 | - | - | 62 |
| Example B1-2 | | Compound B3 | 1.0 | - | - | 64 |
| Comparative Example B1-1 | | - | - | - | - | 100 |
| Example B1-3 | Reference electrolyte solution 2 | Compound B2 | 0.5 | - | - | 84 |
| Example B1-4 | | | 1.0 | - | - | 56 |
| Example B1-5 | | Compound B3 | 0.5 | - | - | 85 |
| Example B1-6 | | | 1.0 | - | - | 66 |
| Example B1-7 | | Compound B1 | 1.0 | - | - | 85 |
| Example B1-8 | | Compound B8 | 0.5 | - | - | 61 |
| Example B1-9 | | Compound B8 | 0.5 | Compound B7 | 0.5 | 41 |
| Example B1-10 | | Compound B2 | 1.0 | Compound B9 | 1.0 | 55 |
| Comparative Example B1-2 | | - | - | - | - | 100 |
| Comparative Example B1-3 | | Compound B4 | 1.0 | - | - | 111 |
| Comparative Example B1-4 | | Compound B5 | 1.0 | - | - | 107 |
| Comparative Example B1-5 | | Compound B6 | 1.0 | - | - | 132 |
| Comparative Example B1-6 | | Compound B7 | 0.5 | - | - | 93 |

As apparent from Table 5, it is seen that, as compared to the nonaqueous electrolyte secondary batteries produced in Comparative Examples B1-1 to B1-6, the amount of gas generated during high-temperature storage was reduced in the nonaqueous electrolyte secondary batteries produced in Examples B1-1 to B1-10.

In other words, it is seen that, as compared to the nonaqueous electrolyte solutions containing the respective silicon compounds of B4 to B6, those nonaqueous electrolyte solutions containing the respective silicon compounds B1 to B3 and B8 represented by Formula (C) can greatly reduce the amount of gas generated during high-temperature storage of a nonaqueous electrolyte secondary battery.

### <Examples B2-1 to B2-6 and Comparative Examples B2-1 to B2-3>

### [Production of Positive Electrode]

Using a disperser, a slurry was prepared by mixing 94 parts by mass of lithium-nickel-cobalt-manganese composite oxide (Li_{1.0}Ni_{0.6}Co_{0.2}Mn_{0.2}O₂) as a positive electrode active material, 3 parts by mass of acetylene black as a conductive material and 3 parts by mass of PVDF as a binder in an *N*-methylpyrrolidone solvent. Both sides of a 15 µm-thick aluminum foil were uniformly coated with this slurry, and this aluminum foil was subsequently dried and then pressed to obtain a positive electrode.

### [Production of Negative Electrode]

A negative electrode was produced in the same manner as in Example B1-1.

### [Preparation of Nonaqueous Electrolyte Solutions]

Under a dry argon atmosphere, thoroughly dried LiPF₆ was dissolved at 1.2 mol/L (in terms of the concentration in the resulting nonaqueous electrolyte solution) in a mixture of EC, EMC and dimethyl carbonate (DMC) (volume ratio = 2:4:4). To the resultant, VC and the compound B7 were each further added in an amount of 1.0% by mass (in terms of the concentration in the resulting nonaqueous electrolyte solution) (the thus obtained solution is hereinafter referred to as "reference electrolyte solution 3"). To the thus obtained reference electrolyte solution 3, the respective compounds shown in Table 6 below were added as additives to prepare nonaqueous electrolyte solutions. It is noted here that the nonaqueous electrolyte solution of Comparative Example 2-1 is the reference electrolyte solution 3 itself. In Table 6, "Content (% by mass)" indicates the content based on 100% by mass of the reference electrolyte solution 3.

### [Production of Nonaqueous Electrolyte Secondary Batteries]

A battery element was prepared by laminating the above-obtained positive electrode and negative electrode along with a polyethylene separator in the order of the negative electrode, the separator, and the positive electrode. This battery element was inserted into a pouch made of a laminated film obtained by coating both sides of an aluminum sheet (thickness: 40 µm) with a resin layer, with the terminals of the positive and negative electrodes protruding out of the pouch. Thereafter, each of the above-prepared nonaqueous electrolyte solutions was injected into the pouch, and the pouch was subsequently vacuum-sealed, whereby a laminate-type nonaqueous electrolyte secondary battery was produced.

### <Evaluation of Nonaqueous Electrolyte Secondary Batteries>

### [Initial Conditioning]

In a 25°C thermostat chamber, each nonaqueous electrolyte secondary battery produced by the above-described method was charged for 6 hours at a constant current equivalent to 0.05 C, and the nonaqueous electrolyte secondary battery was subsequently maintained at 45°C for 72 hours to perform aging. Then, the nonaqueous electrolyte secondary battery was discharged to 2.8 V at 0.2 C and thereby stabilized. Thereafter, the nonaqueous electrolyte secondary battery was CC-CV charged to 4.3 V at 0.2 C and then discharged to 2.8 V at 0.2 C, whereby initial conditioning was completed.

### [Charged Storage Test]

After the initial conditioning, the nonaqueous electrolyte secondary battery was again CC-CV charged to 4.3 V at 0.2C and subsequently stored at a high temperature of 60°C for two weeks. Thereafter, the nonaqueous electrolyte secondary battery was thoroughly cooled and then immersed in an ethanol bath to measure the volume. The amount of generated gas was determined from the volume change before and after the storage test, and this was defined as "amount of gas generated during charged storage". Table 6 below shows the ratios of the amount of gas generated during charged storage, taking the amount determined in Comparative Example B2-1 as 100.

**Table 6**

| | Electrolyte solution | Additive | | Amount of gas generated during charged storage |
|---|---|---|---|---|
| | | Compound | Content (% by mass) | |
| Example B2-1 | Reference electrolyte solution 3 | Compound B2 | 1.0 | 71 |
| Example B2-2 | | Compound B3 | 1.0 | 85 |
| Example B2-3 | | Compound B10 | 1.4 | 83 |
| Example B2-4 | | Compound B11 | 1.0 | 81 |
| Example B2-5 | | Compound B12 | 1.0 | 83 |
| Example B2-6 | | Compound B15 | 1.0 | 87 |
| Comparative Example B2-1 | | - | - | 100 |
| Comparative Example B2-2 | | Compound B13 | 1.5 | 97 |
| Comparative Example B2-3 | | Compound B14 | 1.0 | 186 |

As apparent from Table 6, it is seen that, similarly to the result of Example B1, the nonaqueous electrolyte solutions containing a silicon compound represented by Formula (C) and difluorophosphate (compound B7) greatly reduced the amount of gas generated during high-temperature storage of the respective nonaqueous electrolyte secondary batteries. In addition, it is seen that these nonaqueous electrolyte solutions had a superior effect of suppressing gas generation as compared to the nonaqueous electrolyte solutions containing the compound B13 or B14 other than the compound represented by Formula (C).

### <Comparative Examples B3-1 and B3-2>

### [Production of Positive Electrode]

Using a disperser, a slurry was prepared by mixing 97 parts by mass of lithium cobaltate (LiCoO₂) as a positive electrode active material, 1.5 parts by mass of acetylene black as a conductive material and 1.5 parts by mass of polyvinylidene fluoride (PVDF) as a binder in an *N*-methylpyrrolidone solvent. Both sides of a 15 µm-thick aluminum foil were uniformly coated with this slurry, and this aluminum foil was subsequently dried and then pressed to obtain a positive electrode.

### [Production of Negative Electrode]

A negative electrode was produced in the same manner as in Example B1-1.

### [Preparation of Nonaqueous Electrolyte Solution]

To the reference electrolyte solution 2 prepared in Example B1-1, the compound shown in Table 7 below was added as an additive to prepare a nonaqueous electrolyte solution. It is noted here that the nonaqueous electrolyte solution of Comparative Example C3-1 is the reference electrolyte solution 2 itself. In Table 7, "Content (% by mass)" indicates the content based on 100% by mass of the reference electrolyte solution 1.

### [Production of Nonaqueous Electrolyte Secondary Batteries]

Laminate-type nonaqueous electrolyte secondary batteries were produced in the same manner as in Example B1-1, except that the above-obtained respective nonaqueous electrolyte solutions and positive electrode were used.

### <Evaluation of Nonaqueous Electrolyte Secondary Batteries>

### [Initial Conditioning]

Initial conditioning of each nonaqueous electrolyte secondary battery was performed in the same manner as in Example B1-1.

### [Charged Storage Test]

A charged storage test was conducted in the same manner as in Example B1-1. Table 7 below shows the ratios of the amount of gas generated during charged storage, taking the amount determined in Comparative Examples B3-1 as 100.

**Table 7**

| | Electrolyte solution | Additive | Content (% by mass) | Amount of gas generated during charged storage |
|---|---|---|---|---|
| Comparative Example B3-1 | Reference electrolyte solution 2 | - | - | 100 |
| Comparative Example B3-2 | | Compound B3 | 1.0 | 303 |

As apparent from Table 7, it is seen that the use of a positive electrode of an active material other than the one represented by the composition formula (14) in combination with a compound represented by Formula (C) resulted in an increase in the amount of gas generated during high-temperature storage.

In other words, it is seen that the amount of gas generated during high-temperature storage of a nonaqueous electrolyte secondary battery can be greatly reduced only when a Ni-containing active material represented by the composition formula (14) is used in combination with and a compound represented by Formula (C).

### <Comparative Examples B4-1 to 4-3>

### [Production of Positive Electrode]

Using a disperser, a slurry was prepared by mixing 85 parts by mass of lithium-nickel-cobalt-manganese composite oxide (Li_{1.0}Ni_{0.33}Co_{0.33}Mn_{0.33}O₂) as a positive electrode active material, 10 parts by mass of acetylene black as a conductive material and 5 parts by mass of polyvinylidene fluoride (PVDF) as a binder in an *N*-methylpyrrolidone solvent. Both sides of a 15 µm-thick aluminum foil were uniformly coated with this slurry, and this aluminum foil was subsequently dried and then pressed to obtain a positive electrode.

### [Production of Negative Electrode]

A negative electrode was produced in the same manner as in Example B1-1.

### [Preparation of Nonaqueous Electrolyte Solutions]

To the reference electrolyte solution 2 prepared in Example B1-1, the respective compounds shown in Table 8 below were added as additives to prepare nonaqueous electrolyte solutions. It is noted here that the nonaqueous electrolyte solution of Comparative Example B4-1 is the reference electrolyte solution 2 itself. In Table 8, "Content (% by mass)" indicates the content based on 100% by mass of the reference electrolyte solution 2.

### [Production of Nonaqueous Electrolyte Secondary Batteries]

Laminate-type nonaqueous electrolyte secondary batteries were produced in the same manner as in Example B1-1, except that the above-obtained respective nonaqueous electrolyte solutions and positive electrode were used.

### <Evaluation of Nonaqueous Electrolyte Secondary Batteries>

### [Initial Conditioning]

Initial conditioning of each nonaqueous electrolyte secondary battery was performed in the same manner as in Example B1-1.

### [Charged Storage Test]

A charged storage test was conducted in the same manner as in Example B1-1. Table 8 below shows the ratios of the amount of gas generated during charged storage, taking the amount determined in Comparative Examples B4-1 as 100.

**Table 8**

| | Electrolyte solution | Additive | | Amount of gas generated during charged storage |
|---|---|---|---|---|
| | | Compound | Content (% by mass) | |
| Comparative Example B4-1 | Reference electrolyte solution 2 | - | - | 100 |
| Comparative Example B4-2 | | Compound B2 | 0.5 | 117 |
| Comparative Example B4-3 | | Compound B3 | 0.5 | 113 |

As apparent from Table 8, it is seen that the use of a positive electrode of an active material other than the one represented by the composition formula (14) in combination with a compound represented by Formula (C) rather increases the amount of gas generated during high-temperature storage.

### [Experiment C]

The present invention will now be described more concretely by way of Examples and Comparative Examples; however, the present invention is not restricted thereto within the gist of the present invention.

Compounds that were used as constituents of nonaqueous electrolyte solutions in Examples and Comparative Examples are shown in Table 9. The following compounds are hereinafter denoted as "LiDFP", "FOPL", "LiFS", "FSIL", "HBS", "TES", and "TMVS".

**Table 9**

| **Compound** | Nominal designation |
|---|---|
| 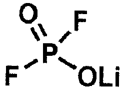 | LiDFP |
| 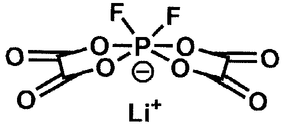 | FOPL |
| 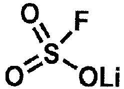 | LiFS |
| 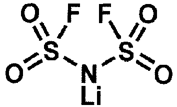 | FSIL |
| 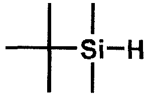 | HBS |
| 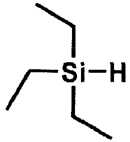 | TES |
| 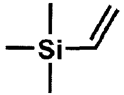 | TMVS |
| 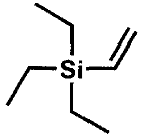 | TEVS |

### <<Examples C1-1 to C1-5 and Comparative Examples C1-1 to C1-7>>

### [Production of Nonaqueous Electrolyte Secondary Batteries]

### <Preparation of Nonaqueous Electrolyte Solution>

### [Example C1-1]

Under a dry argon atmosphere, thoroughly dried LiPF₆ was dissolved at a concentration of 1 mol/L (in terms of the concentration in the resulting nonaqueous electrolyte solution) in a mixture of ethylene carbonate, dimethyl carbonate and ethyl methyl carbonate (volume ratio = 3:3:4), and LiDFP and HBS were further added to the resultant in an amount of 0.72% by mass and 0.46% by mass, respectively (is terms of the concentration in the resulting nonaqueous electrolyte solution), to prepare a nonaqueous electrolyte solution. A nonaqueous electrolyte secondary battery was produced by the below-described method using the thus obtained nonaqueous electrolyte solution, and the below-described evaluations were conducted.

### [Example C1-2]

A nonaqueous electrolyte secondary battery was produced in the same manner as in Example C1-1, except that HBS was not dissolved and TES was instead dissolved in an amount of 0.72% by mass, and the below-described evaluations were conducted.

### [Example C1-3]

A nonaqueous electrolyte secondary battery was produced in the same manner as in Example C1-1, except that neither LiDFP nor HBS was dissolved and FOPL and TES were instead dissolved in an amount of 0.72% by mass each, and the below-described evaluations were conducted.

### [Example C1-4]

A nonaqueous electrolyte secondary battery was produced in the same manner as in Example C1-1, except that neither LiDFP nor HBS was dissolved and LiFS and TES were instead dissolved in an amount of 0.72% by mass each, and the below-described evaluations were conducted.

### [Example C1-5]

A nonaqueous electrolyte secondary battery was produced in the same manner as in Example C1-1, except that neither LiDFP nor HBS was dissolved and FSIL and TES were instead dissolved in an amount of 0.36% by mass and 0.72% by mass, respectively, and the below-described evaluations were conducted.

### [Comparative Example C1-1]

A nonaqueous electrolyte secondary battery was produced in the same manner as in Example C1-1, except that neither LiDFP nor HBS was dissolved, and the below-described evaluations were conducted.

### [Comparative Example C1-2]

A nonaqueous electrolyte secondary battery was produced in the same manner as in Example C1-1, except that HBS was not dissolved, and the below-described evaluations were conducted.

### [Comparative Example C1-3]

A nonaqueous electrolyte secondary battery was produced in the same manner as in Example C1-1, except that neither LiDFP nor HBS was dissolved and FOPL was instead dissolved in an amount of 0.72% by mass, and the below-described evaluations were conducted.

### [Comparative Example C1-4]

A nonaqueous electrolyte secondary battery was produced in the same manner as in Example C1-1, except that neither LiDFP nor HBS was dissolved and LiFS was instead dissolved in an amount of 0.72% by mass, and the below-described evaluations were conducted.

### [Comparative Example C1-5]

A nonaqueous electrolyte secondary battery was produced in the same manner as in Example C1-1, except that neither LiDFP nor HBS was dissolved and FSIL was instead dissolved in an amount of 0.36% by mass, and the below-described evaluations were conducted.

### [Comparative Example 1-6]

A nonaqueous electrolyte secondary battery was produced in the same manner as in Example C1-1, except that LiDFP was not dissolved, and the below-described evaluations were conducted.

### [Comparative Example 1-7]

A nonaqueous electrolyte secondary battery was produced in the same manner as in Example C1-1, except that neither LiDFP nor HBS was dissolved and TES was instead dissolved in an amount of 0.72% by mass, and the below-described evaluations were conducted.

### <Production of Positive Electrode>

A slurry was prepared by mixing 85 parts by mass of lithium-nickel-manganese-cobalt composite oxide (Li_{1.05}Ni_{0.033}Mn_{0.33}Co_{0.33}O₂) as a positive electrode active material, 10 parts by mass of carbon black as a conductive material and 5 parts by mass of polyvinylidene fluoride (PVDF) as a binder in an *N*-methyl-2-pyrrolidone solvent. A 15 µm-thick aluminum foil were uniformly coated with this slurry, and this aluminum foil was subsequently dried and then roll-pressed to obtain a positive electrode.

### <Production of Negative Electrode>

To 98 parts by mass of graphite powder, 100 parts by mass of an aqueous dispersion of sodium carboxymethyl cellulose (concentration of sodium carboxymethyl cellulose = 1% by mass) and 2 parts by mass of an aqueous dispersion of styrene-butadiene rubber (concentration of styrene-butadiene rubber = 50% by mass) were added as a thickening agent and a binder, respectively, and these materials were mixed using a disperser to prepare a slurry. The thus obtained slurry was uniformly coated and dried onto a 10 µm-thick copper foil, and this copper foil was subsequently roll-pressed to obtain a negative electrode.

### <Production of Nonaqueous Electrolyte Secondary Batteries>

The above-obtained positive electrode and negative electrode were laminated along with a polyolefin separator in the order of the negative electrode, the separator, and the positive electrode. The thus obtained battery element was wrapped in an aluminum laminate film, and each of the nonaqueous electrolyte solutions of Examples and Comparative Examples was injected thereto, followed by vacuum-sealing, whereby a sheet-form nonaqueous electrolyte secondary battery was produced.

### [Evaluation of Nonaqueous Electrolyte Secondary Batteries]

### • Initial Charging and Discharging

In a 25°C thermostat chamber, each secondary battery produced by the above-described method was subjected to constant current-constant voltage charging up to 4.2 V at 0.2 C (a current value at which the rated capacity based on the hourly discharge capacity is discharged in one hour is defined as 1 C; the same applies below), and then discharged to 2.5 V at 0.2 C. The discharge capacity in this process was defined as "tentative initial capacity". Subsequently, after being subjected to constant current-constant voltage charging up to 4.1 V at 0.2 C, the secondary battery was maintained at 60°C for 12 hours to perform aging, after which the secondary battery was discharged to 2.5 V at 25°C and 0.2 C. Thereafter, the secondary battery was further subjected to constant current-constant voltage charging up to 4.2 V at 0.2 C and then discharged to 2.5 V at 0.2 C. The discharge capacity in this process was defined as "initial capacity". In this manner, the nonaqueous electrolyte secondary battery was stabilized.

### • Measurement of Alternating-Current Impedance

In a 25°C thermostat chamber, the thus stabilized nonaqueous electrolyte secondary battery was subjected to constant current-constant voltage charging up to 3.7 V at 0.2 C, and the alternating-current impedance was subsequently measured at 25°C. The absolute value of the impedance measured at 2 Hz was defined as "initial impedance" of the battery. Thereafter, the battery was further subjected to constant current-constant voltage charging up to 4.2 V at 0.3 C and thereby brought into a fully-charged state.

### • 4-Week Storage Test

The nonaqueous electrolyte secondary battery in a fully-charged state was left to stand in a 60°C thermostat chamber for one week. Subsequently, at 25°C, the battery was subjected to constant current-constant voltage charging up to 4.2 V at 0.3 C and thereby brought into a fully-charged state, after which the battery was again left to stand in a 60°C thermostat chamber for one week. Thereafter, at 25°C, the battery was further subjected to constant current-constant voltage charging up to 4.2 V at 0.3 C and thereby brought into a fully-charged state, after which the battery was once again left to stand in a 60°C thermostat chamber for two weeks, as a result of which the battery was left to stand at 60°C for a total of four weeks.

### • Measurement of Alternating-Current Impedance

After the storage test, at 25°C, the nonaqueous electrolyte secondary battery was discharged to 2.5 V at 0.3 C, subjected to constant current-constant voltage charging up to 4.2 V, discharged to 2.5 V at 0.3 C, further subjected to constant current-constant voltage charging up to 4.2 V at 0.3 C, and then again discharged to 2.5 V at 0.3 C, whereby the nonaqueous electrolyte secondary battery was stabilized.

In a 25°C thermostat chamber, the thus stabilized nonaqueous electrolyte secondary battery was subjected to constant current-constant voltage charging up to 3.7 V at 0.2 C, and the alternating-current impedance was subsequently measured at 25°C. The absolute value of the impedance measured at 2 Hz was defined as "impedance after 4 weeks" of the battery.

The values of increase in the impedance during the 4-week storage test, which were calculated by {(Impedance after 4 weeks) - (Initial impedance)/(Initial impedance)} and normalized with the value of Comparative Example C1-1, are shown in Table 10 below.

**Table 10**

| No. | Content in nonaqueous electrolyte solution (% by mass) | | | | | | Increase in impedance after 4 weeks |
|---|---|---|---|---|---|---|---|
| | LiDFP | FOPL | LiFS | FSIL | HBS | TES | |
| Example C1-1 | 0.72 | - | - | - | 0.46 | 0.72 | 67.7% |
| Example C1-2 | 0.72 | - | - | - | - | 0.72 | 68.0% |
| Example C1-3 | - | 0.72 | - | - | - | 0.72 | 67.6% |
| Example C1-4 | - | - | 0.72 | - | - | 0.72 | 59.3% |
| Example C1-5 | - | - | - | 0.36 | - | 0.72 | 82.7% |
| Comparative Example C1-1 | - | - | - | - | - | - | 100.0% |
| Comparative Example C1-2 | 0.72 | - | - | - | - | - | 69.7% |
| Comparative Example C1-3 | - | 0.72 | - | - | - | - | 76.8% |
| Comparative Example C1-4 | - | - | 0.72 | - | - | - | 70.7% |
| Comparative Example C1-5 | - | - | - | 0.36 | - | - | 98.6% |
| Comparative Example C1-6 | - | - | - | - | 0.46 | - | 105.3% |
| Comparative Example C1-7 | - | - | - | - | - | 0.72 | 111.4% |

As clearly seen from Table 10, the use of the specific silanes by themselves exaggerated the increase in impedance during the 4-week period; however, as compared to the cases where each specific silane was used alone, an astonishing effect of further reducing the increase in impedance during the 4-week period was exerted in those cases where each specific silane was used simultaneously with a specific salt.

The values of generated irreversible capacity, which were calculated by ((Tentative initial capacity) - (Initial capacity)) and normalized with the value of Comparative Example C1-1, are shown in Table 11 below.

**Table 11**

| No. | Content in nonaq | | ueous electrolyte solution (% by mass) | | | | Generated irreversible capacity |
|---|---|---|---|---|---|---|---|
| | LiDFP | FOPL | LiFS | FSIL | HBS | TES | |
| Example C1-1 | 0.72 | - | - | - | 0.46 | 0.72 | 69.7% |
| Example C1-2 | 0.72 | - | - | - | - | 0.72 | 71.6% |
| Example C1-4 | - | - | 0.72 | - | - | 0.72 | 89.0% |
| Comparative Example C1-1 | - | - | - | - | - | - | 100.0% |
| Comparative Example C1-2 | 0.72 | - | - | - | - | - | 88.9% |
| Comparative Example C1-4 | - | - | 0.72 | - | - | - | 140.6% |
| Comparative Example C1-6 | - | - | - | - | 0.46 | - | 125.9% |
| Comparative Example C1-7 | - | - | - | - | - | 0.72 | 119.9% |

With regard to the generated irreversible capacity as well, the use of the specific silanes by themselves resulted in an increase in the generated irreversible capacity; however, an astonishing effect of reducing the generated irreversible capacity was exerted in those cases where each specific silane was used simultaneously with LiDFP or LiFS.

### <<Examples C2-1 to C2-6 and Comparative Examples C2-1 to C2-7>>

### [Production of Nonaqueous Electrolyte Secondary Batteries]

### <Preparation of Nonaqueous Electrolyte Solutions>

Under a dry argon atmosphere, thoroughly dried LiPF₆ was dissolved at a concentration of 1.2 mol/L (in terms of the concentration in the resulting nonaqueous electrolyte solution) in a mixture of ethylene carbonate, ethyl methyl carbonate and diethyl carbonate (volume ratio = 3:4:3), and vinylene carbonate (VC) and monofluoroethylene carbonate (FEC) were each further added in an amount of 2.0% by mass (in terms of the concentration in the resulting nonaqueous electrolyte solution) to prepare a nonaqueous electrolyte solution (this is hereinafter referred to as "reference electrolyte solution 1"). The compounds shown in Table 12 below were added to the whole reference electrolyte solution 1 at the respective ratios to prepare electrolyte solutions. It is noted here that the electrolyte solution of Comparative Example 1-1 is the reference electrolyte solution 1 itself. In Table 12, "Content (% by mass)" indicates the content in 100% by mass of each nonaqueous electrolyte solution. Nonaqueous electrolyte secondary batteries were produced by the below-described method using the thus obtained respective nonaqueous electrolyte solutions, and the below-described evaluations were conducted.

### <Production of Positive Electrode>

A slurry was prepared by mixing 97 parts by mass of lithium cobaltate (LiCoO₂) as a positive electrode active material, 1.5 parts by mass of acetylene black as a conductive material and 1.5 parts by mass of polyvinylidene fluoride (PVDF) as a binder in an *N*-methyl-2-pyrrolidone solvent. Both sides of a 15 µm-thick aluminum foil were uniformly coated with this slurry, and this aluminum foil was subsequently dried and then roll-pressed to obtain a positive electrode.

### <Production of Negative Electrode>

To 98 parts by mass of graphite powder, 100 parts by mass of an aqueous dispersion of sodium carboxymethyl cellulose (concentration of sodium carboxymethyl cellulose = 1% by mass) and 2 parts by mass of an aqueous dispersion of styrene-butadiene rubber (concentration of styrene-butadiene rubber = 50% by mass) were added as a thickening agent and a binder, respectively, and these materials were mixed using a disperser to prepare a slurry. The thus obtained slurry was uniformly coated and dried onto a 10 µm-thick copper foil, and this copper foil was subsequently roll-pressed to obtain a negative electrode.

### <Production of Nonaqueous Electrolyte Secondary Batteries>

The above-obtained positive electrode and negative electrode were laminated along with a polyolefin separator in the order of the negative electrode, the separator, the positive electrode, the separator, and the negative electrode. The thus obtained battery element was wrapped in an aluminum laminate film, and each of the nonaqueous electrolyte solutions of Examples and Comparative Examples was injected thereto, followed by vacuum-sealing, whereby a sheet-form nonaqueous electrolyte secondary battery was produced.

### [Evaluation of Nonaqueous Electrolyte Secondary Batteries]

### • Initial Charging and Discharging

In a 25°C thermostat chamber, each secondary battery produced by the above-described method was charged for 6 hours at a constant current equivalent to 0.05 C and then discharged to 3.0 V at 0.2 C. Subsequently, after being subjected to constant current-constant voltage charging up to 4.1 V, the secondary battery was maintained at 45°C for 72 hours to perform aging, after which the secondary battery was discharged to 3.0 V at 0.2 C. The irreversible capacity measured in this process {(Charge capacity before aging) - (Discharge capacity after aging)} was defined as "aging loss". In this manner, the nonaqueous electrolyte secondary battery was stabilized.

### • Measurement of Alternating-Current Impedance

In a 25°C thermostat chamber, the thus stabilized nonaqueous electrolyte secondary battery was subjected to constant current-constant voltage charging up to 3.75 V at 0.2 C, and the alternating-current impedance was subsequently measured at 0°C. The absolute value of the impedance measured at 50 mHz was defined as "initial impedance" of the battery. Thereafter, the battery was further subjected to constant current-constant voltage charging up to 4.2 V at 0.2 C and then discharged to 3.0 V at 0.2C and at 1.0 C. In this process, the ratio between the capacity at 0.2 C and the capacity at 1.0 C {(Capacity at 1.0 C)/(Capacity at 0.2 C)} was defined as "high-rate discharge capacity"

### • High-Temperature Storage Test

The nonaqueous electrolyte secondary battery, which had been subjected to constant current-constant voltage charging up to 4.2 V at 0.2 C and thereby brought into a fully-charged state, was left to stand in a 60°C thermostat chamber for 14 days. Thereafter, the secondary battery was discharged to 3.0 V at 25°C and 0.2 C.

### • Measurement of Alternating-Current Impedance

After the storage test, in a 25°C thermostat chamber, the nonaqueous electrolyte secondary battery was subjected to constant current-constant voltage charging up to 3.75 V at 0.2 C, and the alternating-current impedance was subsequently measured at 0°C. The absolute value of the impedance measured at 50 mHz was defined as "impedance after 2 weeks" of the battery.

The values of the aging loss and the values of the high-rate discharge capacity, as well as the values of increase in the impedance during the 2-week storage test that were calculated by {(Impedance after 2 weeks) - (Initial impedance)/(Initial impedance)}, all of which values were normalized with the respective values of Comparative Example 2-1, are shown in Table 12 below.

**Table 12**

| No. | Content in nonaqueous electrolyte solution (% by mass) | | | | | | | Aging loss | High-rate discharge capacity | Increase in impedance after 2 weeks |
|---|---|---|---|---|---|---|---|---|---|---|
| | VC | FEC | TMVS | TEVS | LiDFP | LiFS | FSIL | | | |
| Example C2-1 | 2.0 | 2.0 | 1.0 | - | 0.5 | - | - | 92% | 100.3% | 28.2% |
| Example C2-2 | 2.0 | 2.0 | 1.0 | - | - | 1.0 | - | 91% | 100.8% | 26.6% |
| Example C2-3 | 2.0 | 2.0 | 1.0 | - | - | - | 1.0 | 94% | 100.3% | 21.3% |
| Example C2-4 | 2.0 | 2.0 | 1.0 | - | - | - | 5.0 | 92% | 100.2% | 16.6% |
| Example C2-5 | 2.0 | 2.0 | - | 1.0 | 0.5 | - | - | 94% | 100.2% | 27.5% |
| Example C2-6 | 2.0 | 2.0 | - | 1.0 | - | - | 5.0 | 98% | 100.0% | 19.0% |
| Comparative Example C2-1 | 2.0 | 2.0 | - | - | - | - | - | 100% | 100.0% | 100.0% |
| Comparative Example C2-2 | 2.0 | 2.0 | 1.0 | - | - | - | - | 106% | 100.1% | 40.4% |
| Comparative Example C2-3 | 2.0 | 2.0 | - | - | 0.5 | - | - | 102% | 99.8% | 93.4% |
| Comparative Example C2-4 | 2.0 | 2.0 | - | - | - | 1.0 | - | 103% | 99.8% | 100.3% |
| Comparative Example C2-5 | 2.0 | 2.0 | - | - | - | - | 1.0 | 102% | 99.5% | 116.6% |
| Comparative Example C2-6 | 2.0 | 2.0 | - | - | - | - | 5.0 | 108% | 98.7% | 87.5% |
| Comparative Example C2-7 | 2.0 | 2.0 | - | 1.0 | - | - | - | 105% | 99.6% | 71.8% |

As clearly seen from Table 12, in those cases where a specific silane and a specific salt were used simultaneously in the nonaqueous electrolyte solution containing VC and FEC, an astonishing effect of reducing the increase in impedance during the 2-week period was exerted in such an extent that could not be estimated from the behavior observed in the cases where the specific silane and the specific salt were each used by itself.

With regard to the aging loss as well, the use of the specific silanes by themselves resulted in an increase in the aging loss; however, an astonishing effect of reducing the aging loss was exerted when each specific silane was used simultaneously with a specific salt.

Moreover, with regard to the high-rate discharge capacity as well, an astonishing effect of increasing the high-rate discharge capacity was exerted when each specific salt, which reduces the high-rate discharge capacity when used alone, was used simultaneously with a specific silane.

### INDUSTRIAL APPLICABILITY

The nonaqueous electrolyte solutions according to the first and the second embodiments of the present invention can not only reduce the amount of gas generated during high-temperature storage of a nonaqueous electrolyte secondary battery but also improve the battery swelling caused by repeated charging and discharging; therefore, these nonaqueous electrolyte solutions are useful for laminate-type batteries. In addition, according to the nonaqueous electrolyte solution of the third embodiment, an energy device that hardly shows deterioration of its properties can be provided; therefore, this electrolyte solution can be suitably utilized in a variety of fields, such as electronic equipments in which an energy device is used.

Moreover, these nonaqueous electrolyte solutions and a nonaqueous electrolyte secondary battery containing any of them can be used in a variety of known applications where a nonaqueous electrolyte secondary battery is used. Specific examples thereof include laptop computers, stylus computers, portable computers, electronic book players, mobile phones, portable fax machines, portable copiers, portable printers, portable audio players, small camcorders, headphone stereos, video cameras, liquid crystal TVs, handy cleaners, portable CD players, mini-disc players, transceivers, electronic organizers, calculators, memory cards, portable tape recorders, radios, back-up power supplies, motors, automobiles, motorcycles, motor bikes, bicycles, lighting equipment, toys, gaming machines, watches, power tools, strobe lights, cameras, household backup power sources, backup power sources for commercial use, load leveling power sources, power sources for storing natural energy, and lithium ion capacitors.

## Claims

1. A nonaqueous electrolyte solution for use in a nonaqueous electrolyte secondary battery comprising a positive electrode capable of absorbing and releasing metal ions; a negative electrode which is capable of absorbing and releasing metal ions and comprises a negative electrode active material that contains a metal compound-based material containing a metal alloyable with Li, and a graphite; and a nonaqueous electrolyte solution containing a nonaqueous solvent and an electrolyte dissolved in the nonaqueous solvent,
wherein the nonaqueous electrolyte solution comprises at least one compound represented by the following Formula (A) or (B): 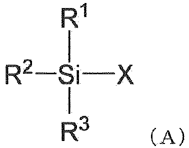 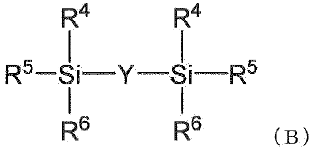 wherein, in Formula (A), R¹ to R³ each independently represent an alkyl group having 1 to 10 carbon atoms which optionally has a substituent, or an aryl group having 6 to 18 carbon atoms which optionally has a substituent, and X represents hydrogen, or an alkenyl or alkynyl group having 1 to 10 carbon atoms; and
in Formula (B), R⁴ to R⁶ each independently represent a hydrocarbon group having 1 to 20 carbon atoms which optionally has a substituent, Y represents S, NH or NR⁷, and R⁷ represents a hydrocarbon group having 1 to 20 carbon atoms.

2. The nonaqueous electrolyte solution according to claim 1, wherein the metal compound-based material containing a metal alloyable with Li comprises at least one metal selected from the group consisting of Si, Sn, As, Sb, Al, Zn, and W.

3. The nonaqueous electrolyte solution according to claim 1 or 2, wherein the metal compound-based material containing a metal alloyable with Li is Si or Si metal oxide.

4. The nonaqueous electrolyte solution according to any one of claims 1 to 3, wherein the negative electrode active material that contains a metal compound-based material containing a metal alloyable with Li, and a graphite is a composite and/or a mixture of the metal compound-based material and the graphite.

5. The nonaqueous electrolyte solution according to any one of claims 1 to 4, wherein the content of the metal compound-based material containing a metal alloyable with Li is 0.1 to 25% by mass with respect to a total amount of the negative electrode active material that contains the metal compound-based material containing a metal alloyable with Li, and a graphite.

6. The nonaqueous electrolyte solution according to any one of claims 1 to 5, wherein
in Formula (A), R¹ to R³ are each independently a methyl group, an ethyl group or a tert-butyl group, which optionally has a substituent, and X is hydrogen, a vinyl group or an allyl group, and
in Formula (B), R⁴ to R⁶ are each a hydrocarbon group having 1 to 20 carbon atoms which optionally has a substituent, and Y is S.

7. The nonaqueous electrolyte solution according to any one of claims 1 to 6, wherein the nonaqueous electrolyte solution further comprises at least one compound selected from the group consisting of a difluorophosphate, a fluorosulfonate, and a salt having a bis-fluorosulfonylimide structure.

8. The nonaqueous electrolyte solution according to claim 7, wherein the content of the at least one compound selected from the group consisting of a difluorophosphate, a fluorosulfonate, and a salt having a bis-fluorosulfonylimide structure is 0.001% by mass to 10% by mass with respect to a total amount of the nonaqueous electrolyte solution.

9. The nonaqueous electrolyte solution according to any one of claims 1 to 8, wherein the positive electrode comprises a transition metal oxide which is capable of absorbing and releasing metal ions and contains at least Ni and Co, and in which Ni and Co constitute not less than 50% by mole of transition metals.

10. The nonaqueous electrolyte solution according to claim 9, wherein the transition metal oxide is represented by the following composition formula (5):
Liₐ₁Ni_{b1}CO_{c1}M_{d1}O₂ (5)
wherein, a1, b1, c1 and d1 represent numerical values of 0.9 ≤ a1 ≤ 1.1, 0.3 ≤ b1 ≤ 0.9, 0.1 ≤ c1 ≤ 0.5 and 0.0 ≤ d1 ≤ 0.5, satisfying 0.5 ≤ b1 + c1 and b1 + c1 + d1 = 1; and M represents at least one element selected from the group consisting of Mn, Al, Mg, Zr, Fe, Ti, and Er.

11. The nonaqueous electrolyte solution according to claim 9 or 10, wherein the transition metal oxide is represented by the following composition formula (6):
Liₐ₂Ni_{b2}Co_{c2}M_{d2}O₂ (6)
wherein, a2, b2, c2 and d2 represent numerical values of 0.9 ≤ a2 ≤ 1.1, 0.5 ≤ b2 ≤ 0.9, 0.1 ≤ c2 ≤ 0.2 and 0.0 ≤ d2 ≤ 0.3, satisfying c2 ≤ b2, 0.7 ≤ b2 + c2, and b2 + c2 + d2 = 1; and M represents at least one element selected from the group consisting of Mn, Al, Mg, Zr, Fe, Ti, and Er.

12. A nonaqueous electrolyte secondary battery comprising, at least:
a positive electrode capable of absorbing and releasing metal ions;
a negative electrode which is capable of absorbing and releasing metal ions and comprises a negative electrode active material that contains a metal compound-based material containing a metal alloyable with Li, and a graphite; and
a nonaqueous electrolyte solution containing a nonaqueous solvent and an electrolyte dissolved in the nonaqueous solvent,
wherein the nonaqueous electrolyte solution is the nonaqueous electrolyte solution according to any one of claims 1 to 11.

13. A nonaqueous electrolyte secondary battery comprising:
a positive electrode;
a negative electrode; and
a nonaqueous electrolyte solution,
wherein
the positive electrode comprises a metal oxide represented by the following composition formula (14):
Liₐ₁₀₁Ni_{b101}Coc₁₀₁M_{d101}O₂ (14)
wherein, a101, b101, c101 and d101 represent numerical values of 0.90 ≤ a101 ≤ 1.10, 0.50 ≤ b101 ≤ 0.98, 0.01 ≤ c101 < 0.50 and 0.01 ≤ d101 < 0.50, satisfying b101 + c101 + d101 = 1; and M represents at least one element selected from the group consisting of Mn, Al, Mg, Zr, Fe, Ti, and Er, and
the nonaqueous electrolyte solution comprises a compound represented by the following Formula (C): 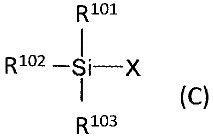 wherein, R¹⁰¹ to R¹⁰³ each independently represent an alkyl group having 1 to 10 carbon atoms which optionally has a substituent, or an aryl group having 6 to 18 carbon atoms which optionally has a substituent; and X represents hydrogen, an alkenyl group having 2 to 10 carbon atoms, or an alkynyl group having 2 to 10 carbon atoms.

14. The nonaqueous electrolyte secondary battery according to claim 13, wherein the positive electrode comprises a metal oxide represented by the following composition formula (15):
Liₐ₁₀₂Ni_{b102}Co_{c102}M_{d102}O₂ (15)
wherein, a102, b102, c102 and d102 represent numerical values of 0.90 ≤ a102 ≤ 1.10, 0.50 ≤ b102 ≤ 0.90, 0.05 ≤ c102 ≤ 0.30 and 0.05 ≤ d102 ≤ 0.30, satisfying b102 + c102 + d102 = 1; and M represents at least one element selected from the group consisting of Mn, Al, Mg, Zr, Fe, Ti, and Er.

15. The nonaqueous electrolyte secondary battery according to claim 13 or 14, wherein the content of the compound represented by Formula (C) is 0.001% by mass to 10% by mass with respect to a total amount of the nonaqueous electrolyte solution.

16. The nonaqueous electrolyte secondary battery according to any one of claims 13 to 15, wherein X in Formula (C) is a vinyl group, an allyl group, or a methallyl group.

17. The nonaqueous electrolyte secondary battery according to claim 16, wherein X in Formula (C) is a vinyl group.

18. The nonaqueous electrolyte secondary battery according to any one of claims 13 to 17, wherein the nonaqueous electrolyte solution further comprises at least one compound selected from the group consisting of a difluorophosphate, a fluorosulfonate, and a salt having a bis-fluorosulfonylimide structure.

19. The nonaqueous electrolyte secondary battery according to claim 18, wherein the content of all compounds belonging to the group consisting of the difluorophosphate, the fluorosulfonate, and the salt having a bis-fluorosulfonylimide structure is 0.001% by mass to 10% by mass with respect to a total amount of the nonaqueous electrolyte solution.

20. A nonaqueous electrolyte solution comprising the following (A) and (B):
(A) a compound represented by the following Formula (21), and
(B) a salt that contains an anion having at least one bond selected from an F-P-O bond, an F-S-O bond, and an F-S=O bond: 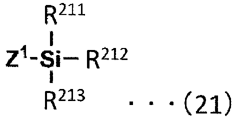 wherein, R²¹¹, R²¹² and R²¹³ each independently represent an alkyl group having not more than 10 carbon atoms which optionally has a substituent; and Z¹ represents hydrogen or an alkenyl group having not more than 5 carbon atoms.

21. The nonaqueous electrolyte solution according to claim 20, wherein the anion is one of the following (i) to (vi):

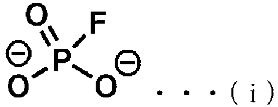

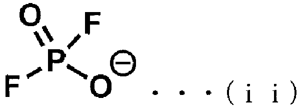

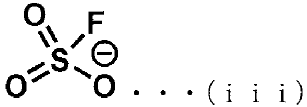

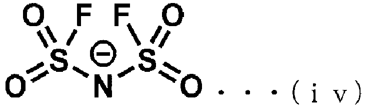

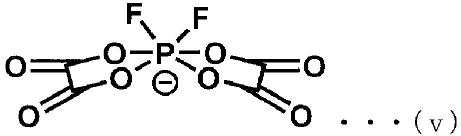

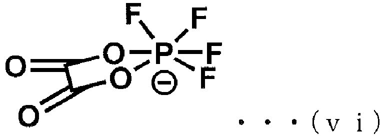

22. The nonaqueous electrolyte solution according to claim 20 or 21, wherein the compound represented by Formula (21) is a compound represented by the following Formula (22): 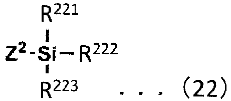 wherein, R²²¹, R²²² and R²²³ each independently represent an alkyl group having not more than 6 carbon atoms which optionally has a substituent; and Z² represents hydrogen, a vinyl group, or an allyl group.

23. The nonaqueous electrolyte solution according to any one of claims 20 to 22, wherein the content of the (A) is 0.001% by mass to 5% by mass with respect to a total amount of the nonaqueous electrolyte solution.

24. The nonaqueous electrolyte solution according to any one of claims 20 to 23, wherein the content of the (B) is 0.001% by mass to 5% by mass with respect to a total amount of the nonaqueous electrolyte solution.

25. The nonaqueous electrolyte solution according to any one of claims 20 to 24, wherein an amount of substance of the (B) is higher than an amount of substance of the (A).

26. The nonaqueous electrolyte solution according to any one of claims 20 to 25, further comprising a fluorine atom-containing cyclic carbonate, a carbon-carbon unsaturated bond-containing cyclic carbonate, and a cyclic sulfonate.

27. An energy device, comprising the nonaqueous electrolyte solution according to any one of claims 20 to 26.
